# EUROPEAN PATENT APPLICATION

(11) **EP 4 542 298 A1**
(43) Date of publication of application: **23.04.2025**
(21) Application number: 23827404.7
(22) Date of filing: 02.06.2023
(51) Int. Cl.: G03B 5/04, G03B 13/36, G03B 3/10, H02K 41/035, G03B 5/00, G03B 17/17, G03B 17/12

(54) **REFLECTIVE MEMBER DRIVING DEVICE, CAMERA DEVICE, AND OPTICAL INSTRUMENT**

(30) Priority: 20.06.2022 KR 20220075203; 29.06.2022 KR 20220079616; 08.07.2022 KR 20220084366
(71) Applicant: LG INNOTEK CO. LTD, Gangseo-gu Seoul 07796 (KR)
(72) Inventor: LEE, Sung Guk, Seoul 07796 (KR)
(74) Representative: DREISS Patentanwälte PartG mbB
(86) International application number: PCT/KR2023/007573
(87) International publication number: WO 2023/249284

(57) **Abstract**

The present embodiment relates to a reflective member driving device comprising: a housing; a holder being disposed inside the housing; a reflective member being disposed in the holder; a moving plate being disposed between the housing and the holder; a coil and a magnet for moving the holder against the housing; and an elastic member connecting the housing and the holder, wherein the moving plate is disposed in a first portion of the housing, and wherein the elastic member is disposed at an opposite side of the moving plate with respect to the first portion of the housing and is directly coupled to the holder.

## Description

### [Technical Field]

The present embodiment relates to a reflective member driving device, a camera device, and an optical apparatus.

### [Background Art]

A camera device is a device that photographs a picture or video of a subject and is installed in an optical apparatus such as a smartphone, a drone, a vehicle, and the like.

In recent camera devices, in order to improve the quality of images in recent camera devices, optical image stabilization (OIS) function that compensates for image shaking caused by user movement, auto focus (AF) function that automatically adjusts the distance between the image sensor and the lens to align the focal length of the lens, and zoom function that increases or decreases the magnification of a distant subject through a zoom lens are being required

In addition, there are large restrictions on space for arranging camera actuators according to the needs of ultra-slim and subminiature camera modules, and the camera module itself comprising a lens or lens and image sensor may be difficult to ensure sufficient space for tilting or moving for the operation of OIS or the like. In addition, it is desirable for a high-pixel camera to increase the size of a lens in order to increase the amount of light being received, but there may be a limit to increasing the size of the lens due to the space occupied by the actuator.

In addition, since an additional magnet or the like is disposed to maintain the position of the reflective member, problems such as magnetic field interference and difficulty in reducing weight exist.

(Patent Literature 1) KR 10-2018-0096073 A

### [Detailed Description of the Invention]

### [Technical Subject]

A first embodiment of the present invention is to provide a reflective member driving device in which an OIS function is implemented through the tilting of the reflective member.

Furthermore, it is intended to provide a reflective member driving device that maintains a moving plate in contact between a fixing unit and a moving unit through an elastic member.

A second embodiment of the present invention is to provide a camera actuator and a camera device that provide both a driving force and a suction force with one magnet.

In addition, the present invention may provide a camera actuator and a camera device in which the lubricating member is prevented from moving to the tilting guide unit due to a collision.

A second embodiment of the present invention is to provide a camera actuator applicable to ultra-slim, subminiature, and high-resolution cameras.

A third embodiment of the present invention provides an actuator capable of reducing power consumption for OIS driving and enhancing the performance of OIS driving, a camera device comprising the same, and an optical apparatus.

The problem to be solved in the embodiment is not limited thereto, and it can be said that the solution to the problem described below or the purpose or effect that can be grasped from the embodiment is also comprised.

### [Technical Solution]

A reflective member driving device according to the present embodiment comprises: a housing; a holder being disposed inside the housing; a reflective member being disposed in the holder; a moving plate being disposed between the housing and the holder; a coil and a magnet for moving the holder against the housing; and an elastic member connecting the housing and the holder, wherein the moving plate may be pressed between the holder and the housing by the elastic member.

A reflective member driving device according to a first embodiment of the present invention comprises: a housing; a holder being disposed inside the housing; a reflective member being disposed in the holder; a moving plate being disposed between the housing and the holder; a coil and a magnet for moving the holder against the housing; and an elastic member connecting the housing and the holder, wherein the moving plate is disposed in a first portion of the housing, and wherein the elastic member is disposed at an opposite side of the moving plate with respect to the first portion of the housing and may be directly coupled to the holder.

The housing comprises a first surface facing a first direction, the holder comprises a protruding portion being protruded in the first direction, and the elastic member may be coupled to the first surface of the housing and the protruding portion of the holder.

The protruding portion of the holder may be protruded to an opposite side of the moving plate with respect to the first portion of the housing.

The elastic member comprises: an outer portion being coupled to the housing; an inner portion being coupled to the holder; and a connecting portion connecting the outer portion and the inner portion, wherein an optical axis of the light incident on the reflective member is a first optical axis, wherein an optical axis of the light emitted from the reflective member is a second optical axis, and wherein the inner portion may be disposed at a more inner side than the outer portion at a cross section cut by an imaginary plane comprising the first optical axis and the second optical axis.

In the cross section, the inner portion may be disposed at a more outer side than the moving plate.

The housing comprises a hole penetrating the housing in the first direction, and the protruding portion of the holder may pass through the hole of the housing.

The protruding portion of the holder comprises a first protruding portion being disposed at one side of the first portion of the housing and a second protruding portion being disposed at the other side of the first portion of the housing, and the elastic member may be coupled to the first protruding portion and the second protruding portion, respectively.

The first protruding portion of the holder comprises a first surface facing the first direction and a protrusion being formed on the first surface of the first protruding portion, and the elastic member may comprise a hole being coupled with the protrusion.

The protrusion of the first protruding portion of the holder comprises a first protrusion and a second protrusion being spaced apart from each other, wherein the elastic member may comprise a first portion being coupled to the first protrusion, a second portion being coupled to the second protrusion, and a third portion connecting the first portion and the second portion.

The first protruding portion may comprise a portion being overlapped with the first portion of the housing in a direction in which the first protruding portion faces the second protruding portion.

The elastic member may pull the holder in the first direction.

The reflective member driving device comprises a substrate in which the coil is disposed, the housing comprises a first housing in which the substrate is disposed and a second housing comprising the first portion of the housing, and the second housing is formed as a separate member from the first housing and may be coupled to the first housing.

A reflective member driving device according to a first embodiment of the present invention comprises: a housing; a holder being disposed inside the housing; a reflective member being disposed in the holder; a moving plate being disposed between the housing and the holder; a coil and a magnet for moving the holder against the housing; and an elastic member connecting the housing and the holder, wherein the housing comprises a first surface facing a first direction, wherein the holder comprises a protruding portion protruding more than the moving plate in the first directioin, and wherein the elastic member is coupled with the first surface of the housing and the protruding portion of the holder.

A reflective member driving device according a the first embodiment of the present invention comprises: a housing; a holder being disposed inside the housing; a reflective member being disposed in the holder; a moving plate being disposed between the housing and the holder; a coil and a magnet for moving the holder against the housing; and an elastic member connecting the housing and the holder, wherein the holder comprises two protruding portions, wherein the moving plate is disposed between the two protruding portions, and wherein the elastic member may connect the two protruding portions of the holder and the housing.

The housing may comprise a hole through which the two protruding portions of the holder pass.

A camera device according to a first embodiment of the present invention may comprise: a printed circuit board; an image sensor being disposed on the printed circuit board; the reflective member driving device; and a lens being disposed in an optical path formed by the reflective member of the reflective member driving device and the image sensor.

An optical apparatus according to a first embodiment of the present invention may comprise: a main body; the camera device being disposed in the main body; and a display being disposed on the main body and outputting any one or more of a video and an image photographed by the camera device.

A camera actuator according to a second embodiment of the present invention comprises: a housing; a mover comprising a holder and an optical member being disposed in the holder; a driving unit comprising a magnet and a coil for moving the mover; a tilting guide unit being disposed between the housing and the mover; and a yoke portion being disposed adjacent to the magnet and not being overlapped with the tilting guide unit.

The yoke part may be disposed outside the tilting guide unit.

The yoke part may be positioned between the tilting guide unit and the magnet.

The magnet comprises a first magnet and a second magnet facing each other, and a third magnet positioned between the first magnet and the second magnet, wherein the coils comprises a first coil and a second coil facing each other, and a third coil positioned between the first coil and the second coil, and wherein the yoke part may comprise a first yoke corresponding to the first magnet and a second yoke corresponding to the second magnet.

The first yoke is overlapped with the first magnet along an optical axis but is not overlapped with the first coil along the optical axis, and the second yoke is overlapped with the second magnet along an optical axis but may not be overlapped with the second coil along the optical axis.

The first magnet and the second magnet are symmetrically disposed inside the holder, and the first yoke and the second yoke may be symmetrically disposed with respect to the holder.

The center of each of the first yoke and the second yoke may correspond to the center of each of the first magnet and the second magnet.

The first magnet and the first yoke may be disposed between the first coil and the optical member, and the second magnet and the second yoke may be disposed between the second coil and the optical member.

The first yoke and the second yoke may be disposed outside the optical member.

The first yoke and the second yoke may not be overlapped with the optical member in an optical axis direction.

A camera device according to a third embodiment of the present invention comprises: a housing; a holder being disposed inside the housing; an optical member being disposed inside the holder; a driving plate being disposed between the housing and the holder; an elastic member comprising one end coupled to the housing and the other end coupled to the holder; and a driving unit for tilting the holder, wherein the elastic member comprises at least a portion passing through the driving plate.

The driving plate may comprise an opening through which at least a portion of the elastic member passes.

The housing may comprise a first groove being formed in a side portion, the holder may comprise a second groove being formed on a side surface facing the side portion of the housing, one end of the elastic member is inserted into the first groove, and the other end of the elastic member may be inserted into the second groove.

The one end of the elastic member is coupled to the first groove and the other end of the elastic member may be coupled to the second groove by an adhesive.

The housing may comprise a protruding portion being protruded from the side portion of the housing toward the side surface of the holder, and the first groove may be formed in the protruding portion of the housing.

The housing may comprise a groove being formed in a side portion of the housing, and the actuator may comprise a ball member being disposed between the driving plate and the groove of the housing. The ball member may be in contact with the driving plate and the groove of the housing.

The housing may comprise a guide groove being disposed between an upper end of the side portion of the housing and the groove of the housing. The housing may comprise a partition wall formed between the bottom of the groove of the housing and the bottom of the guide groove.

The housing may comprise a protruding portion being protruded from the side portion of the housing and being disposed at an upper side of the driving plate. The elastic member may be a coil spring. The coil spring may comprise a plurality of coil springs being spaced apart from each other.

The actuator may comprise a ball member being disposed between the driving plate and the housing, and the housing may comprise a partition wall being disposed between the ball member and an upper surface of the housing.

An actuator according to another embodiment comprises: a housing comprising a first side portion, a second side portion, and a third side portion being disposed between the first side portion and the second side portion; a holder being disposed inside the housing; an optical member being disposed inside the holder; a magnet being disposed inside the holder; a coil being disposed in a first side portion of the housing to face the magnet and tilting the holder by interaction with the magnet; a driving plate being disposed between the third side portion of the housing and the holder; and an elastic member connecting the third side portion of the housing and the holder, wherein the separation distance between the elastic member and the center of the driving plate is smaller than the separation distance between the elastic member and the coil.

The separation distance between the elastic member and the reference line is smaller than the separation distance between the reference line and the coil, and the baseline may be a straight line parallel to the direction toward the driving plate from the third side portion of the housing and passing through the center of the driving plate.

An actuator according to another embodiment comprises: a housing comprising a first side portion, a second side portion, and a third side portion being disposed between the first side portion and the second side portion; a holder being disposed inside the housing; an optical member being disposed inside the holder; a magnet being disposed in the holder; a coil being disposed in a first side portion of the housing to face the magnet and tilting the holder by interaction with the magnet; a driving plate being disposed between the third side portion of the housing and the holder; and an elastic member comprising one end being coupled to the third side portion of the housing and the other end being coupled to the holder, wherein the driving plate comprises a penetrating hole through which at least a portion of the elastic member passes. The elastic member may be a coil spring.

An actuator according to another embodiment comprises: a housing comprising a first side portion, a second side portion, and a third side portion being disposed between the first side portion and the second side portion; a holder being disposed inside the housing; an optical member being disposed inside the holder; a magnet being disposed in the holder; a coil being disposed in a first side portion of the housing to face the magnet and tilting the holder by interaction with the magnet; a driving plate being disposed between the third side portion of the housing and the holder; a coil spring comprising one end being coupled to the third side portion of the housing and the other end being coupled to the side surface of the holder; and a ball member being disposed between the driving plate and the third side portion of the housing, wherein the housing comprises a groove formed in the side portion of the housing, wherein at least a portion of the ball member is disposed inside the groove of the housing, and wherein the housing comprises a guide groove being formed between an upper end of the side portion of the housing and the groove of the housing.

A camera device according to a third embodiment of the present invention comprises a first actuator and a second actuator, wherein the first actuator performs an auto focusing or zoom function, wherein the second actuator performs an optical image stabilizer (OIS) function, and wherein the second actuator is an actuator according to the embodiment.

### [Advantageous Effects]

Through a first embodiment of the present invention, it is possible to provide a two-axis tilt implementation structure for a reflective member.

In addition, a reflective member driving device having a minimized length in an optical axis direction of the image sensor can be provided.

In addition, a more stable holding force can be realized compared to the comparative example in which a magnet is used to keep the moving plate in contact between the fixed part and the moving unit. Furthermore, a cost reduction effect can be expected due to a reduction in the number of parts compared to the comparative example. In addition, driving performance can be enhanced by improving tolerance due to a decrease in the number of parts compared to the comparative example.

According to the second embodiment of the present invention, it is possible to implement a camera actuator and a camera device that provide both a driving force and a suction force with one magnet.

In addition, the present invention can implement a camera actuator and a camera device in which the lubricating member is prevented from moving to the tilting guide unit due to collision.

In addition, the present invention can implement a camera actuator applicable to ultra-slim, subminiature, and high-resolution cameras.

In the third embodiment of the present invention, power consumption for OIS driving can be reduced and performance of OIS driving can be enhanced by disposing the elastic member away from the OIS coil, which is a source of electromagnetic force, and arranging it close to the rotation axis for OIS driving.

The various yet beneficial advantages and effects of the present invention are not limited to the above descriptions, and will be more easily understood in the process of describing specific embodiments of the present invention.

### [Brief Description of Drawings]

FIG. 1 is a perspective view of a camera device according to a first embodiment of the present invention.
FIG. 2 is a bottom perspective view of a camera device according to a first embodiment of the present invention.
FIG. 3 is a plan view of a camera device according to a first embodiment of the present invention.
FIG. 4 is a cross-sectional view viewed from A-A in FIG. 3.
FIG. 5 is an exploded perspective view of a camera device according to a first embodiment of the present invention.
FIG. 6 is a perspective view of a reflective member driving device according to a first embodiment of the present invention.
FIG. 7 is a perspective view of a reflective member driving device according to a first embodiment of the present invention viewed from a direction different from that of FIG. 6.
FIG. 8 is an exploded perspective view of a reflective member driving device according to a first embodiment of the present invention.
FIG. 9 is an exploded perspective view of a reflective member driving device according to a first embodiment of the present invention.
FIGS. 10 and 11 are diagrams for explaining a structure related to a moving plate of a reflective member driving device according to a first embodiment of the present invention.
FIG. 12 is a perspective view of some components of a reflective member driving device according to a first embodiment of the present invention.
FIG. 13 is an exploded perspective view illustrating the disassembled reflective member driving device of FIG. 12.
FIG. 14 is a cross-sectional view of a reflective member driving device according to a first embodiment of the present invention.
FIG. 15 is a front view of a reflective member driving device according to a first embodiment of the present invention.
FIG. 16 is a front view of a reflective member driving device according to a modified example.
FIG. 17 is a perspective view illustrating a fixing part of a reflective member driving device according to a first embodiment of the present invention.
FIG. 18 is a perspective view of the reflective member driving device of FIG. 17 viewed from another direction.
FIG. 19 is a perspective view of the reflective member driving device of FIG. 18 viewed from a different direction without the second substrate.
FIG. 20 is a perspective view of the reflective member driving device of FIG. 19 viewed from another direction.
FIG. 21 is a plan view of the reflective member driving device in the state of FIG. 19.
FIG. 22 is an exploded perspective view illustrating an exploded view of a first housing and a second housing of a reflective member driving device according to a first embodiment of the present invention.
FIG. 23 is a perspective view illustrating a moving unit of a reflective member driving device according to a first embodiment of the present invention.
FIG. 24 is a perspective view of a reflective member driving device of FIG. 23 viewed from another direction.
FIG. 25 is a plan view illustrating a driving unit of a reflective member driving device according to a first embodiment of the present invention.
FIG. 26 is a front view illustrating a driving device of a reflective member driving device according to a first embodiment of the present invention.
FIGS. 27 to 29 are views for explaining the tilt of a reflective member driving device according to a first embodiment of the present invention about an X-axis.
FIGS. 30 to 32 are views for explaining the tilt of a reflective member driving device according to a first embodiment of the present invention about a Y-axis.
FIG. 33 is a perspective view of a lens driving device according to a first embodiment of the present invention.
FIG. 34 is a perspective view of a lens driving device according to a first embodiment of the present invention, in which some components are omitted.
FIG. 35 is a perspective view of a lens driving device in the state illustrated in FIG. 34 viewed from another direction.
FIG. 36 is a perspective view of a lens driving device according to a first embodiment of the present invention, in which some components are omitted.
FIG. 37 is a perspective view of a state in which components such as a substrate and a coil are omitted in a lens driving device according to a first embodiment of the present invention.
FIG. 38 is a perspective view of a lens driving device illustrated in FIG. 37, in which the first lens and related components are omitted.
FIG. 39 is a perspective view and a partial enlarged view of a part of a lens driving device according to a first embodiment of the present invention.
FIG. 40 is a view for explaining the arrangement structure of a coil and a sensor of a lens driving device according to a first embodiment of the present invention.
FIG. 41 is a perspective view of a state in which the second housing is omitted in the lens driving device illustrated in FIG. 37.
FIG. 42 is a perspective view of a state in which a guide rail is omitted from the lens driving device illustrated in FIG. 41.
FIG. 43 is an enlarged view of a part of a lens driving device according to a first embodiment of the present invention.
FIG. 44 is a perspective view of a first moving unit and a second moving unit and related components of a lens driving device according to a first embodiment of the present invention.
FIG. 45 is a perspective view of a second moving unit and related components of a lens driving device according to a first embodiment of the present invention.
FIG. 46 is an exploded perspective view of a lens driving device according to a first embodiment of the present invention.
FIG. 47 is a perspective view of a second housing of a lens driving device according to a first embodiment of the present invention.
FIGS. 48 and 49 are exploded perspective views of some components of a lens driving device according to a first embodiment of the present invention.
FIG. 50 is a cross-sectional view of a lens driving device according to a first embodiment of the present invention.
FIGS. 51 to 53 are diagrams for explaining implementation of a zoom function and an autofocus function of a lens driving device according to a first embodiment of the present invention.
FIG. 54 is a perspective view of some components of a camera device according to a first embodiment of the present invention.
FIG. 55 is an exploded perspective view of an image sensor, a filter, and related components of a camera device according to a first embodiment of the present invention.
FIG. 56 is a perspective view of an optical apparatus according to a first embodiment of the present invention.
FIG. 57 is a perspective view of a camera module according to a second embodiment of the present invention;
FIG. 58 is an exploded perspective view of a camera module according to a second embodiment of the present invention;
FIG. 59 is a view viewed from **A-A'** in FIG. 57;
FIG. 60 is a perspective view of a first camera actuator according to a second embodiment of the present invention;
FIG. 61 is an exploded perspective view of a first camera actuator according to a second embodiment of the present invention;
FIG. 62 is a perspective view of a first housing in a first camera actuator according to a second embodiment of the present invention;
FIG. 63 is a side view of a first housing in a first camera actuator according to a second embodiment of the present invention;
FIG. 64 is a cross-sectional view viewed from **M-M'** in FIG. 63;
FIG. 65 is a cross-sectional view viewed from **N-N'** in FIG. 63;
FIG. 66 is a perspective view of an optical member of a first camera actuator according to a second embodiment of the present invention;
FIG. 67 is a perspective view of a holder according to a second embodiment of the present invention;
FIG. 68 is a side view of a holder according to a second embodiment of the present invention;
FIG. 69 is another side view of a holder according to a second embodiment of the present invention;
FIG. 70 is a bottom view of a holder according to a second embodiment of the present invention;
FIG. 71 is another side view of a holder according to a second embodiment of the present invention;
FIG. 72 is a perspective view of a tilting guide unit of a first camera actuator according to a second embodiment of the present invention;
FIG. 73 is a perspective view in a direction different from that of FIG. 72;
FIG. 74 is a cross-sectional view viewed from **F-F'** in FIG. 72;
FIG. 75 is a perspective view of a first camera actuator according to a second embodiment of the present invention;
FIG. 76a is a view viewed from **B-B'** in FIG. 75;
FIG. 76b is a plan view of some components of a first camera actuator;
FIG. 76c is a side view of a portion of a first camera actuator;
FIG. 77 is a view viewed from **O-O'** in FIG. 76a;
FIG. 78 is a view viewed from **P-P'** in FIG. 76a;
FIG. 79 is a view viewed from **C-C'** in FIG. 75;
FIG. 80 is a diagram illustrating a first driving unit of a first camera actuator according to a second embodiment of the present invention;
FIG. 81 is a perspective view of a first camera actuator according to a second embodiment of the present invention;
FIG. 82 is a view viewed from **D-D'** in FIG. 81;
FIG. 83 is a perspective view of a first camera actuator according to a second embodiment of the present invention;
FIG. 84 is a view viewed from **E-E'** in FIG. 83;
FIG. 85 is a perspective view of a second camera actuator according to a second embodiment of the present invention;
FIG. 86 is an exploded perspective view of a second camera actuator according to a second embodiment of the present invention;
FIG. 87 is a cross-sectional view viewed from **E-E'** in FIG. 85;
FIG. 88 is a perspective view of a mobile terminal to which a camera module according to a second embodiment of the present invention is applied; and
FIG. 89 is a perspective view of a vehicle to which a camera module according to a second embodiment of the present invention is applied.
FIG. 90 is a perspective view of a camera device according to a third embodiment of the present invention.
FIG. 91 is an exploded perspective view of a camera device of FIG. 90.
FIG. 92 is a cross-sectional view of a camera device in the direction **A-B** of FIG. 90.
FIG. 93 is a perspective view of the second actuator illustrated in FIG. 90.
FIG. 94 is an exploded perspective view of a second actuator.
FIG. 95a is a front perspective view of a holder of FIG. 94.
FIG. 95b is a rear perspective view of a holder.
FIG. 95c is a bottom perspective view of a holder.
FIG. 96 is an exploded perspective view of a holder, driving plate, and elastic member.
FIG. 97a is a first perspective view of the driving plate.
FIG. 97b is a second perspective view of a driving plate.
FIG. 98a is a perspective view of a holder, an optical member, a driving plate, and a rolling member.
FIG. 98b is a perspective view of an elastic member coupled to the holder of FIG. 98a.
FIG. 99a is a first perspective view of a housing;
FIG. 99b is a second perspective view of a housing.
FIG. 100a is a perspective view of a housing, a circuit board, a coil, a position sensor, an elastic member, a driving plate, and a rolling member.
FIG. 100b is a perspective view of the driving plate of FIG. 100a coupled to a housing;
FIG. 101 is a diagram for explaining the movement of the driving plate and the electromagnetic force according to the interaction between the magnets and the first to third coil units.
FIG. 102a is a cross-sectional view of a second actuator in the **C-D** direction of FIG. 93.
FIG. 102b is a cross-sectional view of a second actuator in the **E-F** direction of FIG. 93.
FIG. 103a is an enlarged view of a part of a housing, a rolling member, and an elastic member.
FIG. 103b is a partially enlarged view of a second actuator.
FIGS. 104a to 104d are views for explaining the assembly sequence of a second actuator.
FIG. 105 illustrates arrangement of elastic units according to another embodiment.
FIG. 106 illustrates the arrangement of other elastic members in another embodiment.
FIG. 107 is a cross-sectional view for explaining a relationship between an arrangement position of an elastic member and an OIS driving force according to a third embodiment of the present invention.
FIG. 108 illustrates an elastic member according to another embodiment.
FIG. 109 is a perspective view of a first actuator and an image sensing unit according to a third embodiment of the present invention.
FIG. 110a is a first separated perspective view of a first actuator and the image sensing unit of FIG. 109.
FIG. 110b is a second separated perspective view of a first actuator and an image sensing unit of FIG. 109.
FIG. 111a is a cross-sectional view at line **a-b** in a first actuator and an image sensing unit of FIG. 109.
FIG. 111b is a cross-sectional view at line **c-d** in a first actuator and an image sensing unit of FIG. 109.
FIG. 112 is an exploded perspective view of a first actuator;
FIG. 113a is an exploded perspective view of a second housing.
FIG. 113b is a perspective view of a body of a second housing;
FIG. 114a is a first perspective view of first and second guide units and a lens part.
FIG. 114b is a second perspective view of first and second guide units and a lens part.
FIG. 115 is an exploded perspective view of first and second magnets and a lens unit.
FIG. 116 is a functional block diagram of a camera device according to a third embodiment of the present invention.
FIG. 117 is a perspective view of a portable terminal according to a third embodiment of the present invention.
FIG. 118 illustrates a configuration diagram of a portable terminal illustrated in FIG. 117.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or arranged in "on (above)" or "below (under)" of each component, "on (above)" or "below (under)" means that it comprises not only the case where the two components are directly in contact with, but also the case where one or more other components are formed or arranged between the two components. In addition, when expressed as "on (above)" or "below (under)", the meaning of not only an upward direction but also a downward direction with respect to one component may be comprised.

Hereinafter, a reflective member driving device according to a first embodiment of the present invention will be described with reference to the drawings.

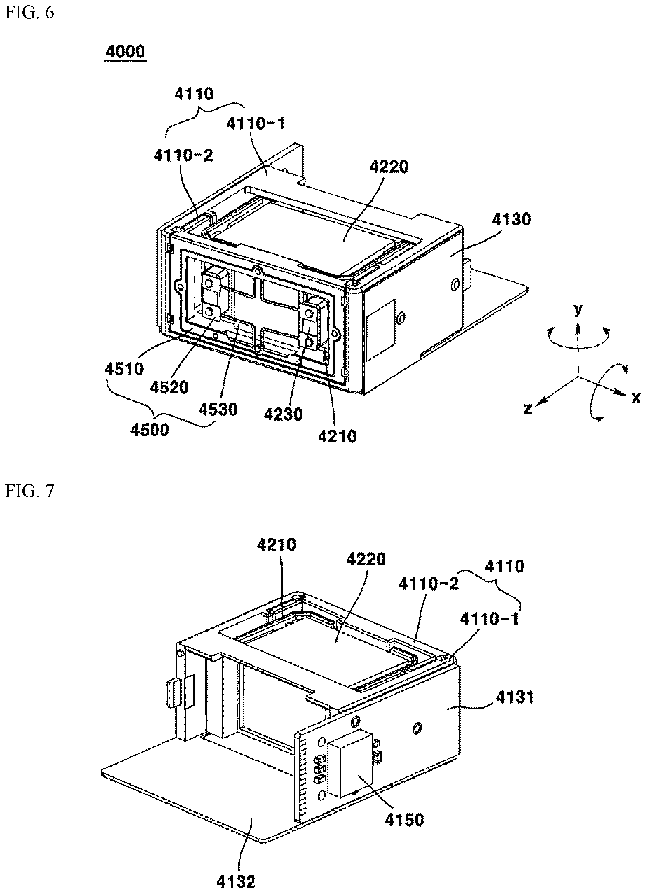

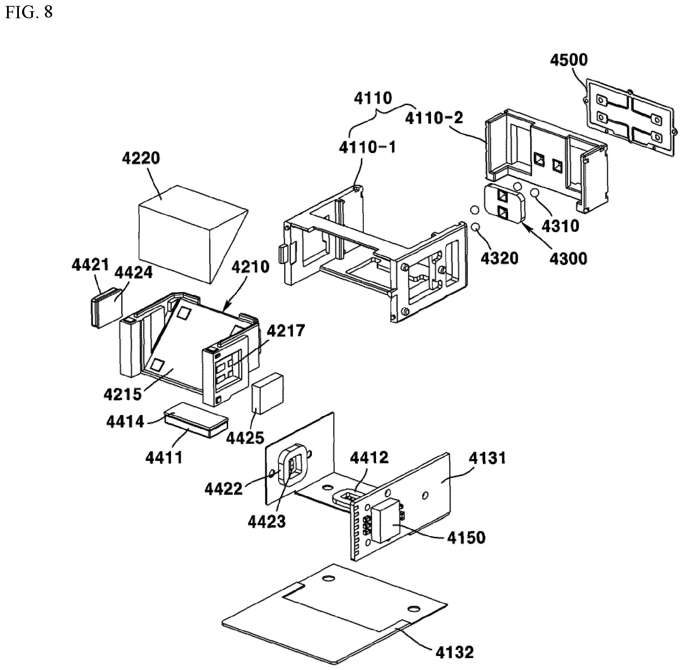

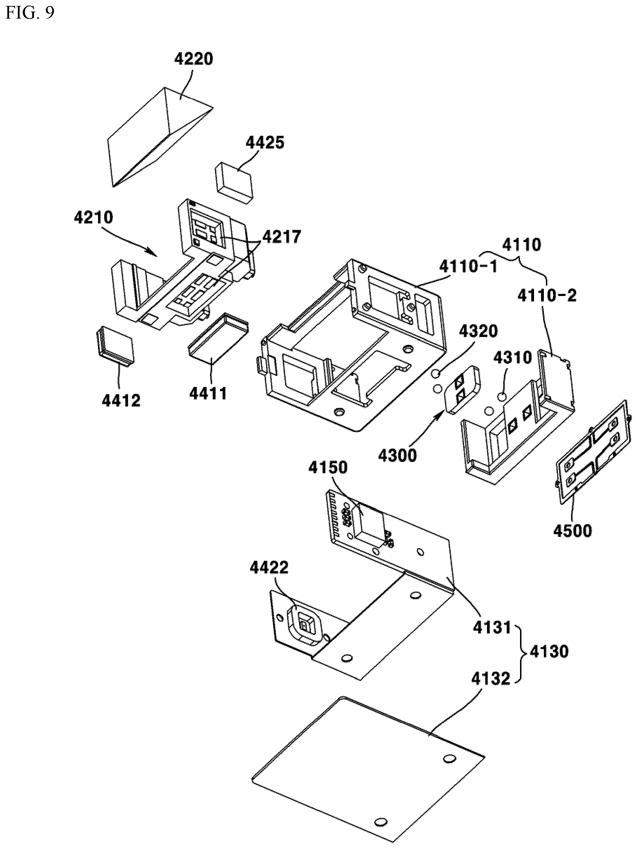

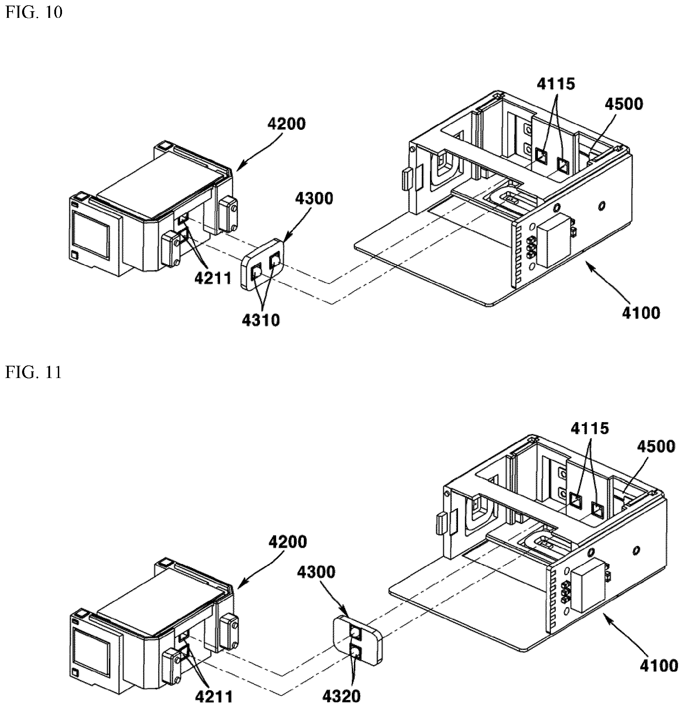

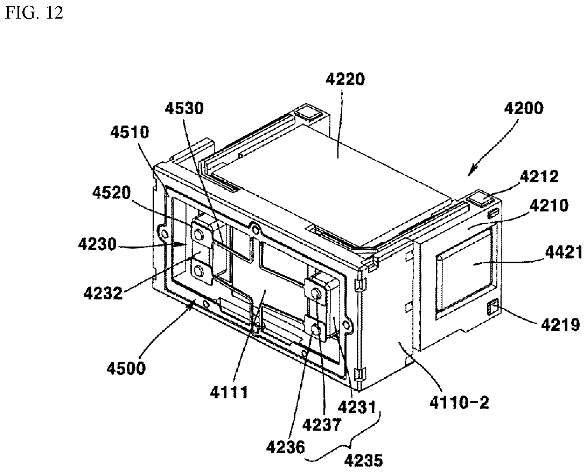

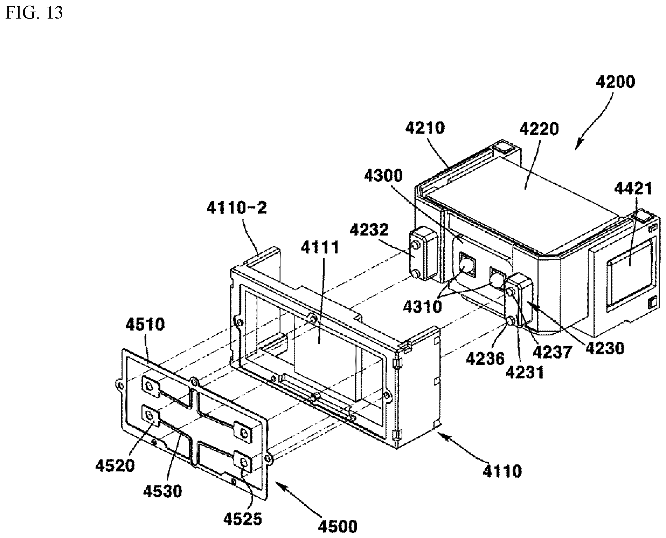

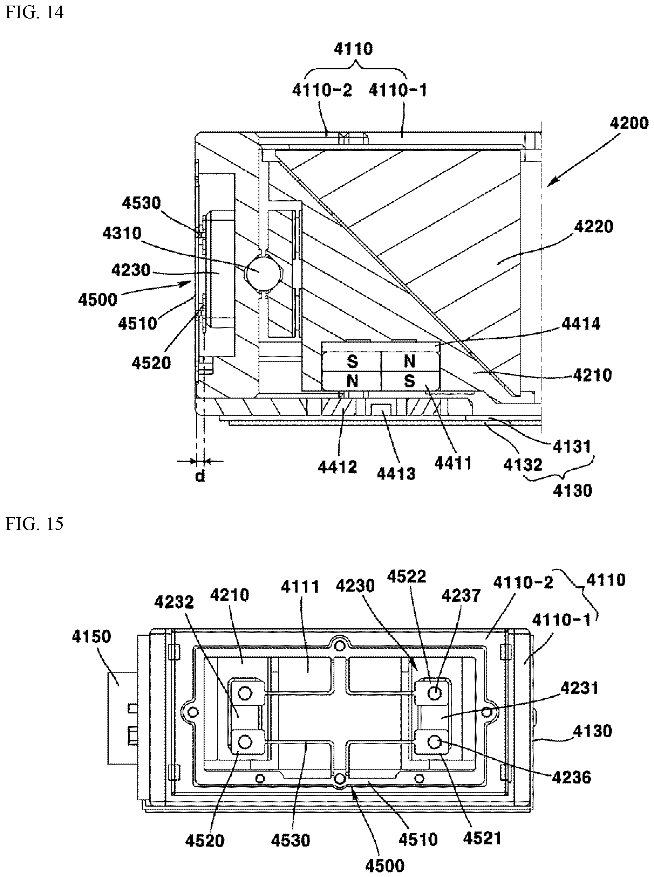

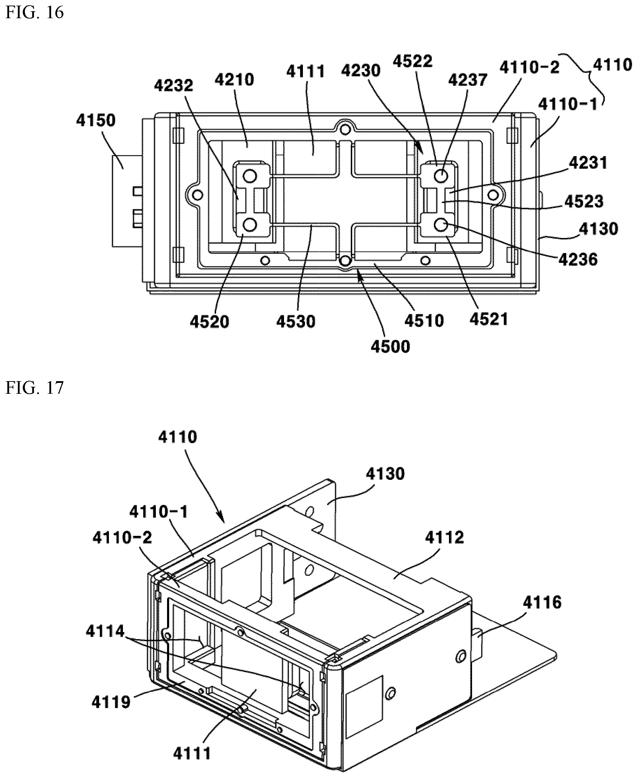

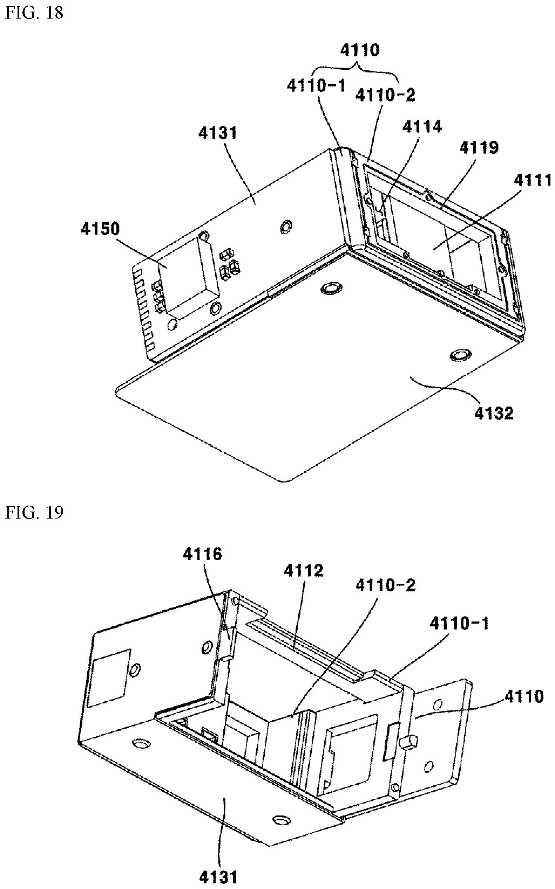

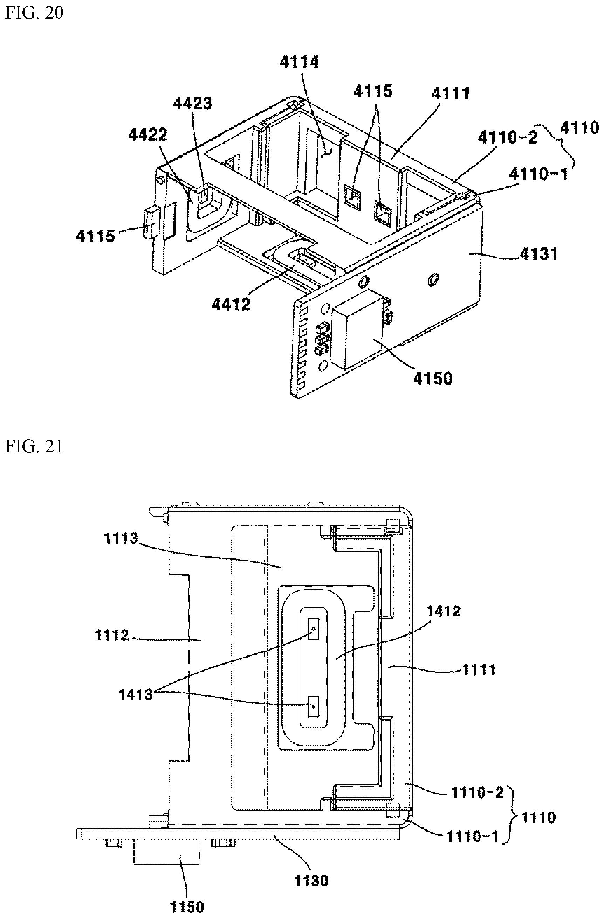

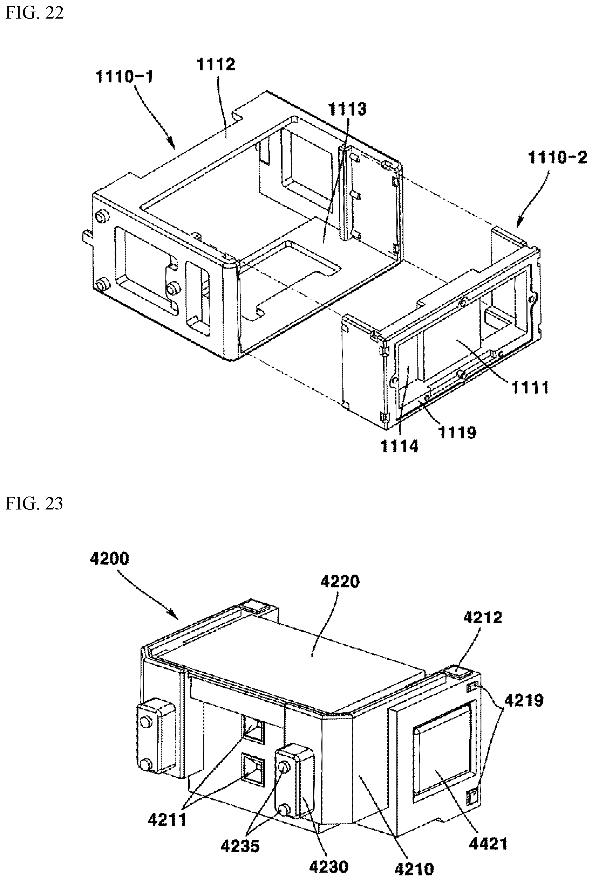

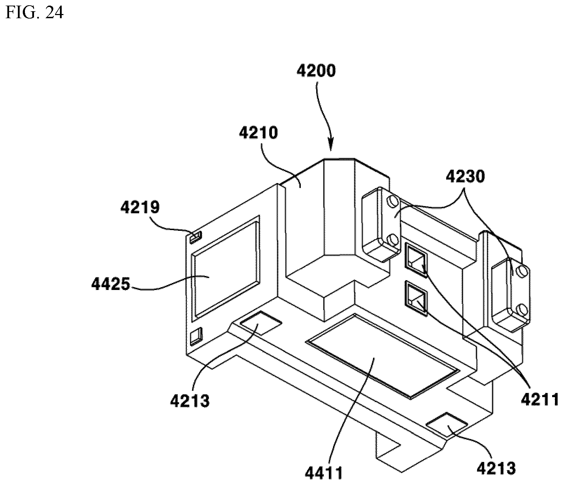

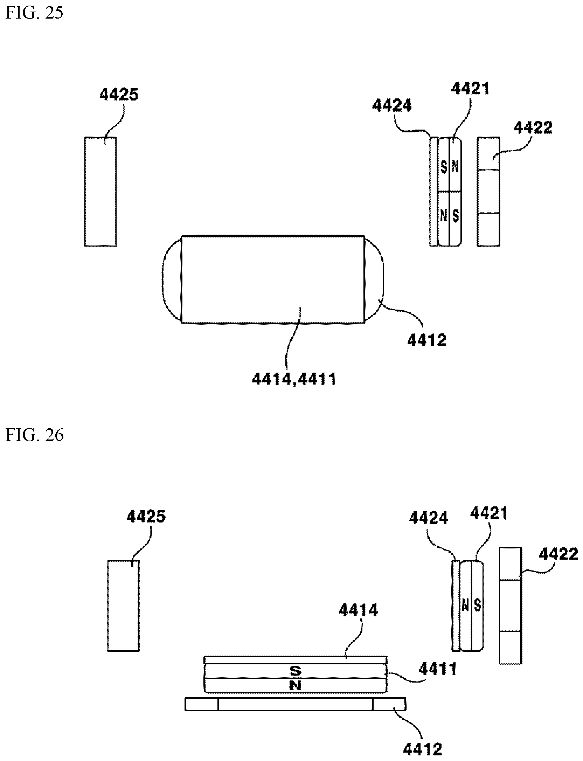

FIG. 6 is a perspective view of a reflective member driving device according to a first embodiment of the present invention; FIG. 7 is a perspective view of a reflective member driving device according to a first embodiment of the present invention viewed from a direction different from that of FIG. 6; FIG. 8 is an exploded perspective view of a reflective member driving device according to a first embodiment of the present invention; FIG. 9 is an exploded perspective view of a reflective member driving device according to a first embodiment of the present invention; FIGS. 10 and 11 are diagrams for explaining a structure related to a moving plate of a reflective member driving device according to a first embodiment of the present invention; FIG. 12 is a perspective view of some components of a reflective member driving device according to a first embodiment of the present invention; FIG. 13 is an exploded perspective view illustrating the disassembled reflective member driving device of FIG. 12; FIG. 14 is a cross-sectional view of a reflective member driving device according to a first embodiment of the present invention; FIG. 15 is a front view of a reflective member driving device according to a first embodiment of the present invention; FIG. 16 is a front view of a reflective member driving device according to a modified example; FIG. 17 is a perspective view illustrating a fixing part of a reflective member driving device according to a first embodiment of the present invention; FIG. 18 is a perspective view of the reflective member driving device of FIG. 17 viewed from another direction; FIG. 19 is a perspective view of the reflective member driving device of FIG. 18 viewed from a different direction without the second substrate; FIG. 20 is a perspective view of the reflective member driving device of FIG. 19 viewed from another direction; FIG. 21 is a plan view of the reflective member driving device in the state of FIG. 19; FIG. 22 is an exploded perspective view illustrating an exploded view of a first housing and a second housing of a reflective member driving device according to a first embodiment of the present invention; FIG. 23 is a perspective view illustrating a moving unit of a reflective member driving device according to a first embodiment of the present invention; FIG. 24 is a perspective view of a reflective member driving device of FIG. 23 viewed from another direction; FIG. 25 is a plan view illustrating a driving unit of a reflective member driving device according to a first embodiment of the present invention; and FIG. 26 is a front view illustrating a driving device of a reflective member driving device according to a first embodiment of the present invention.

The reflective member driving device **4000** may perform optical image stabilization (OIS) function. The reflective member driving device **4000** may perform a hand shake correction function. The reflective member driving device **4000** may move the reflective member **4220.** The reflective member driving device **4000** may tilt the reflective member **4220.** The reflective member driving device **4000** may tilt the reflective member **4220** about two axes. The reflective member driving device **4000** may tilt the reflective member **4220** around an X-axis and a Y-axis. The X-axis and Y-axis may be perpendicular to each other. The reflective member driving device **4000** may be a reflective member actuator. The reflective member driving device **4000** may be an OIS actuator. The reflective member driving device **4000** may be an OIS driving device. The reflective member driving device **4000** may be a prism driving device.

The reflective member driving device **4000** may comprise a fixing unit **4100.** The fixing unit **4100** may be a relatively fixed part when the moving unit **4200** moves. The fixing unit **4100** may accommodate at least a part of the moving unit **4200.** The fixing unit **4100** may be disposed outside the moving unit **4200.**

The reflective member driving device **4000** may comprise a housing **4110.** The fixing unit **410** may comprise a housing **4110.** The housing **4110** may be disposed outside a holder **4210.** The housing **4110** may accommodate at least a portion of the holder **4210.** The housing **4110** may comprise an opening or a hole for securing a path of light in an upper plate and one of a side plates. The housing **4110** may comprise an upper plate, a lower plate, and a plurality of side plates.

The housing **4110** may comprise a first housing **4110-1.** A substrate **4130** may be disposed in the first housing **4110-1.** The housing **4110** may comprise a second housing **4110-2.** The second housing **4110-2** may comprise a first portion **4111** of the housing **4110.** The second housing **4110-2** may be formed as a separate member from the first housing **4110-1.** The second housing **4110-2** may be coupled to the first housing **4110-1.** The second housing **4110-2** may be disposed in the first housing **4110-1.** The second housing **4110-2** may be fixed to the first housing **4110-1.** The second housing **4110-2** may be coupled to the first housing **4110-1** with an adhesive.

The housing **4110** may comprise a first portion **4111.** The first portion **4111** may be formed in a side plate of the housing **4110.** A moving plate **4300** may be disposed in the first portion **4111.** The first portion **4111** may be disposed between the holder **4210** and an elastic member **4500.** A moving plate **4300** may be disposed in one side of the first portion **4111** and an elastic member **4500** may be disposed in the other side of the first portion **4111.**

The housing **4110** may comprise a second portion **4112.** The second portion **4112** may be disposed above holder **4210.** The second portion **4112** may come into contact with the holder **4210** when the holder **4210** moves upward. The second portion **4112** may be overlapped with the holder **4210** in a moving direction of the holder **4210.** The second portion **4112** may be an upper plate of the housing **4110.**

The housing **4110** may comprise a third portion **4113.** The third portion **4113** may be disposed below the holder **4210.** The third portion **4113** may come into contact with the holder **4210** when the holder **4210** moves downward. The third portion **4113** may be overlapped with the holder **4210** in a moving direction. The third portion **4113** may be a lower plate of the housing **4110.**

The housing **4110** may comprise a hole **4114.** The hole **4114** may be a protruding portion passage hole. The hole **4114** may be formed in a side plate of the housing **4110.** The hole **4114** may be formed in the first portion **4111** of the housing **4110.** A protruding portion **4230** of the holder **4210** may be disposed in the hole **4114.** The protruding portion **4230** of the holder **4210** may be disposed to pass through the hole **4114.** The hole **4114** may be formed to be larger than a moving space of the protruding portion **4230** of the holder **4210** so as not to interfere with the protruding portion **4230** of the holder **4210.** The hole **4114** may penetrate through the housing **4110** in a first direction.

The housing **4110** may comprise a groove **4115.** The groove **4115** may be a first protrusion accommodating groove for the moving plate. A first ball **4310** of the moving plate **4300** may be disposed in the groove **4115.** The groove **4115** may accommodate at least a portion of the first ball **4310** of the moving plate **4300.** The groove **4115** may arrest the movement of the first ball **4310** of the moving plate **4300** except rotation. The groove **4115** may comprise an inclined surface being in contact with the first ball **4310** of the moving plate **4300.** The inclined surface may comprise a plurality of inclined surfaces.

The groove **4115** may comprise a first groove. The first groove may be a 4-point contact groove. The first groove may be in contact with one of the two first balls **4310** of the moving plate **4300** at four points. Through this, the first groove of the housing **4110** may arrest the movement in four directions except for the rotation of protrusion of one of the first balls **4310** of the moving plate **4300.**

The groove **4115** may comprise a second groove. The second groove may be a two-point contact groove. The second groove may be in contact with the other one of the two first balls **4310** of the moving plate **4300** at two points. Through this, the second groove of the housing **4110** can arrest the movement of one protrusion of the other one among the first balls **4310** of the moving plate **4300** in two directions. For example, the second groove of the housing **4110** may arrest the movement of the first ball **4310** of the moving plate **4300** in a left-to-right direction and may not arrest the movement in an up-and-down direction.

The housing **4110** may comprise a protruding portion **4116.** The protruding portion **4116** may be coupled to a lens driving device **5000.** The protruding portion **4116** may be formed in a side plate of the housing **4110.** The protruding portion **4116** may be formed in a side of the housing **4110** facing the lens driving device **5000.** The protruding portion **4116** may comprise a trapezoidal cross section. The protruding portion **4116** may be coupled to the housing **5110** of the lens driving device **5000.** The protruding portion **4116** may be inserted into a first groove **5111** of the housing **5110** of the lens driving device **5000.** The protruding portion **4116** may be coupled to the housing **5110** of the lens driving device **5000** by an adhesive.

The housing **4110** may comprise a groove **4119.** The groove **4119** may be an elastic member accommodating groove. An elastic member **4500** may be disposed in the groove **4119.** An outer portion **4510** of the elastic member **4500** may be disposed in the groove **4119.** The groove **4119** may be concavely formed in an outer surface of the housing **4110.** The recessed depth of the groove **4119** may be greater than the thickness of the elastic member **4500.** A protrusion being coupled to the outer portion **4510** of the elastic member **4500** may be formed in the groove **4119.** The outer portion **4510** of the elastic member **4500** may comprise a hole being coupled with a protrusion formed in the groove **4119** of the housing **4110.**

The reflective member driving device **4000** may comprise a substrate **4130.** The fixing unit **4100** may comprise a substrate **4130.** The substrate **4130** may be a flexible printed circuit board (FPCB). The substrate **4130** may be a flexible printed circuit board. A substrate **4130** may be disposed in the housing **4110.** Coils **4412** and **4422** may be disposed on the substrate **4130.** Sensors **4413** and **4423** may be disposed on the substrate **4130.** The substrate **4130** may be electrically connected to a substrate **6700.** A driver IC **4170** may be disposed on the substrate **4130.** A gyro sensor **4150** may be disposed on the substrate **4130.** The substrate **4130** may be disposed to cover the lower surface and both side surfaces of the housing **4110.** The substrate **4130** may comprise a shape bent twice.

The substrate **4130** may comprise a flexible substrate **4131.** Coils **4412** and **4422** may be disposed on the flexible substrate **4131.** The flexible substrate **4131** may be disposed between the housing **4110** and a SUS **4132.** The flexible substrate **4131** may comprise a shape bent at least twice.

The substrate **4130** may comprise a SUS **4132.** The reflective member driving device **4000** may comprise a SUS **4132.** The fixing unit **4100** may comprise a SUS **4132.** The SUS **4132** may be disposed on the substrate **4130.** The SUS **4132** may be disposed on a lower surface of the substrate **4130.** The SUS **4132** may reinforce the strength of the substrate **4130.** However, as a modified embodiment, a separate substrate may be disposed instead of the SUS **4132.**

The reflective member driving device **4000** may comprise a gyro sensor **4150.** The fixing unit **4100** may comprise a gyro sensor **4150.** The gyro sensor **4150** may detect shaking of the camera device **4010.** The shaking detected by the gyro sensor **4150** may be offset through the handshake correction function. The gyro sensor **4150** may be disposed on the substrate **4130.** The gyro sensor **4150** may be disposed on an outer surface of the substrate **4130.**

The reflective member driving device **4000** may comprise a plate. The fixing unit 4100 may comprise a plate. A plate may be disposed to cover the opened portion of the housing **4110.** The plate may be disposed to close the opened front of the housing **4110.** The plate may be formed of a metal plate material.

The reflective member driving device **4000** may comprise a driver IC **4170.** The fixing unit **4100** may comprise a driver IC **4170.** The driver IC **4170** may be disposed on the substrate **4130.** The driver IC **4170** may be electrically connected to the first coil **4412** and the second coil **4422.** The driver IC **4170** may supply current to the first coil **4412** and the second coil **4422.** The driver IC **4170** may control at least one of voltage and current being applied to each of the first coil **4412** and the second coil **4422.** The driver IC **4170** may be electrically connected to the sensors **4413** and **4423.** The driver IC **4170** may feedback-control the voltage and current being applied to the first coil **4412** and the second coil **4422** through the position of the reflective member **4220** detected by the sensors **4413** and **4423.**

The reflective member driving device **4000** may comprise a moving unit **4200.** The moving unit **4200** may move against the fixing unit **4100.** The moving unit **4200** may be tilted with respect to the fixing unit **4100.** The moving unit **4200** may be disposed inside the fixing unit **4100.** At least a portion of the moving unit **4200** may be spaced apart from the fixing unit **4100.** The moving unit **4200** may come into contact with the fixing unit **4100** when moving. Or, in an initial state, the moving unit **4200** may come into contact with the fixing unit **4100.**

The reflective member driving device **4000** may comprise a holder **4210.** The moving unit **4200** may comprise a holder **4210.** The holder **4210** may be disposed inside the housing **4110.** The holder **4210** is movable against the housing **4110.** The holder **4210** can be tilted with respect to housing **4110.** At least a portion of the holder **4210** may be spaced apart from the housing **4110.** The holder **4210** may come into contact with the housing **4110.** The holder **4210** may come into contact with the housing **4110** when moving. Or, the holder **4210** may come into contact with the housing **4110** in an initial state.

The holder **4210** may comprise a groove **4211.** The groove **4211** may be a second protrusion accommodating groove of the moving plate. The second ball **4320** of the moving plate **4300** may be disposed in the groove **4211.** The groove **4211** may accommodate at least a portion of the moving plate **4300.** The groove **4211** may arrest the movement of a second ball **4320** of the moving plate **4300** except rotation. The groove **4211** may comprise an inclined surface being in contact with the second ball **4320** of the moving plate **4300.** The inclined surface may comprise a plurality of inclined surfaces.

The groove **4211** may comprise a first groove. The first groove may be a 4-point contact groove. The first groove may be in contact with one of the two second balls **4320** of the moving plate **4300** at four points. Through this, the first groove of the holder **4210** can arrest the movement in four directions except for the rotation of protrusion of one of the second balls **4320** of the moving plate **4300.**

The groove **4211** may comprise a second groove. The second groove may be a two-point contact groove. The second groove may be in contact with the other one of the two second balls **4320** of the moving plate **4300** at two points. Through this, the second groove of the holder **4210** can arrest the movement in two directions of the protrusion of the other one of the second balls **4320** of the moving plate **4300.** For example, the second groove of the holder **4210** may arrest the movement of the second ball **4320** of the moving plate **4300** in an up-and-down direction and may not arrest the movement in a left-to-right direction.

The holder **4210** may comprise a first protrusion **4212.** The first protrusion **4212** may be an upper stopper. The first protrusion **4212** may be formed in an upper surface of the holder **4210.** The first protrusion **4212** may be protruded from an upper surface of the holder **4210.** The first protrusion **4212** may be in contact with the housing **4110** when the holder **4210** moves upward. The first protrusion **4212** may be in contact with the second portion **4112** of the housing **4110** when the holder **4210** moves upward.

The holder **4210** may comprise a second protrusion **4213.** The second protrusion **4213** may be a lower stopper. The second protrusion **4213** may be formed in a lower surface of the holder **4210.** The second protrusion **4213** may be protruded from a lower surface of the holder **4210.** The second protrusion **4213** may be in contact with the housing **4110** when the holder **4210** moves downward. The second protrusion **4213** may be in contact with the third portion **4113** of the housing **4110** when the holder **4210** moves downward.

The holder **4210** may comprise an adhesive accommodating groove **4214.** The adhesive accommodating groove **4214** may accommodate an adhesive fixing the reflective member **4220** to the holder **4210.** An adhesive accommodating groove **4214** may be formed in a surface in contact with the reflective member **4220.** The adhesive may be disposed in the accommodating groove **4214.**

The holder **4210** may comprise a groove **4215.** The groove **4215** may be a separation space being provided between the groove **4215** and the reflective member **4220.** The groove **4215** may be formed in a surface being in contact with the reflective member **4220.** The contact area between the reflective member **4220** and the holder **4210** may be reduced by the groove **4215.**

The holder **4210** may comprise a groove **4216.** The groove **4216** may be a weight loss groove. The groove **4216** may be formed in the central portion of the holder **4210.** The weight of the holder **4210** may be reduced by the groove **4216.**

The holder **4210** may comprise a magnet accommodating groove **4217.** Driving magnets **4411** and **4421** may be disposed in the magnet accommodating groove **4217.** The magnet accommodating groove **4217** may be formed in a shape corresponding to the driving magnets **4411** and **4421.** A magnet accommodating groove **4217** may be formed in a lower surface and both side surfaces of the holder **4210.** The magnet accommodating groove **4217** may comprise a plurality of magnet accommodating grooves. The magnet accommodating groove **4217** may comprise a first magnet accommodating groove accommodating the first driving magnet **4411** and the yoke **4414.** The magnet accommodating groove **4217** may comprise a second magnet accommodating groove accommodating the second driving magnet **4421** and the yoke **4424.**

The holder **4210** may comprise a lateral stopper **4219.** The lateral stopper **4219** may be formed at both side surfaces of the holder **4210.** The lateral stopper **4219** may be protruded from the side surface of the holder **4210.** The lateral stopper **4219** may come into contact with the housing **4110** when the holder **4210** moves laterally. The lateral stopper **4219** may come into contact with the side plate of the housing **4110** when the holder **4210** moves laterally.

The reflective member driving device **4000** may comprise a reflective member **4220.** The moving unit **4200** may comprise a reflective member **4220.** A reflective member **4220** may be disposed in the holder **4210.** A reflective member **4220** may be disposed inside the holder **4210.** The reflective member **4220** may be coupled to the holder **4210.** The reflective member **4220** may be fixed to the holder **4210.** The reflective member **4220** may be fixed to the holder **4210** by an adhesive. The reflective member **4220** may move integrally with the holder **4210.** The reflective member **4220** may change the path of light. The reflective member **4220** may reflect light. The reflective member **4220** may comprise a prism. The reflective member **4220** may comprise a mirror. The reflective member **4220** may be formed in a triangular prism shape. The angle between a path of light incident on the reflective member **4220** and a path of light being emitted may be 90 degrees.

The reflective member driving device **4000** may comprise a protruding portion **4230.** The moving unit **4200** may comprise a protruding portion **4230.** The holder **4210** may comprise a protruding portion **4230.** The protruding portion **4230** may be protruded from the holder **4210** in a first direction. The protruding portion **4230** may be protruded from a first surface of the holder **4210** facing a first direction. The protruding portion **4230** may be protruded forward. The protruding portion **4230** may be protruded outward. The protruding portion **4230** may be protruded toward the first portion **4111** of the housing **4110.** The protruding portion **4230** may be protruded to the opposite side of the moving plate **4300** with respect to the first portion **4111** of the housing **4110.** The protruding portion **4230** may be protruded more than the moving plate **4300** in a first direction. The protruding portion **4230** of the holder **4210** may pass through the hole **4114** of the housing **4110.** The protruding portion **4230** may be protruded toward the elastic member **4500.** The protruding portion **4230** may be coupled to the elastic member **4500.** The protruding portion **4230** may be coupled to an inner portion **4520** of the elastic member **4500.**

The protruding portion **4230** may comprise a first protruding portion **4231** and a second protruding portion **4232.** The first protruding portion **4231** may be disposed at one side of the first portion **4111** of the housing **4110.** The second protruding portion **4232** may be disposed at the other side of the first portion **4111** of the housing **4110.** The elastic member **4500** may be coupled to the first protruding portion **4231.** The elastic member **4500** may be coupled to the second protruding portion **4232.** The elastic member **4500** may be coupled to each of the first protruding portion **4231** and the second protruding portion **4232.**

In a direction in which the first protruding portion **4231** faces the second protruding portion **4232,** the first protruding portion **4231** may comprise a portion being overlapped with the first portion **4111** of the housing **4110.** In a direction in which the second protruding portion **4232** faces the first protruding portion **4231,** the second protruding portion **4232** may comprise a portion being overlapped with the first portion **4111** of the housing **4110.** The first protruding portion **4231,** the first portion **4111** of the housing **4110,** and the second protruding portion **4232** may be overlapped with one another in one direction. That is, the first protruding portion **4231,** the first portion **4111** of the housing **4110,** and the second protruding portion **4232** may be disposed on an imaginary straight line.

The holder **4210** may comprise a protrusion **4235.** The protruding portion **4230** of the holder **4210** may comprise a protrusion **4235.** The first protruding portion **4231** of the holder **4210** may comprise a protrusion **4235.** The second protruding portion **4232** of the holder **4210** may comprise a protrusion **4235.** The first protruding portion **4231** of the holder **4210** may comprise a first surface facing a first direction. At this time, the first direction may be an outward direction. The first protruding portion **4231** may comprise a protrusion **4235** being formed at a first surface of the first protruding portion **4231.**

The protrusion **4235** may comprise a plurality of protrusions. The protrusion **4235** may comprise a plurality of protrusions being spaced apart from each other. The protrusion **4235** may comprise two protrusions. The protrusions **4235** may be formed on each of the first protruding portion **4231** and the second protruding portion **4232.** The protrusion **4235** may comprise a first protrusion **4236** and a second protrusion **4237.** The first protrusion **4236** and the second protrusion **4237** may be spaced apart from each other.

The reflective member driving device **4000** may comprise a moving plate **4300.** The moving plate **4300** may be disposed between the housing **4110** and the holder **4210.** The moving plate **4300** may guide the movement of the holder **4210** against the housing **4110.** The moving plate **4300** may provide a tilt center of the holder **4210.** That is, the holder **4210** may be tilted about the moving plate **4300.** One side of the moving plate **4300** may be disposed in the holder **4210** and the other side may be disposed in the housing **4110.** The moving plate **4300** may be in contact with the holder **4210** and the housing **4110.** The moving plate **4300** may be disposed in the first portion **4111** of the housing **4110.**

The moving plate **4300** may comprise a first ball **4310.** The first ball **4310** may be disposed in the housing **4110.** The first ball **4310** may be disposed in the moving plate **4300.** The first ball **4310** may be disposed between the housing **4110** and the moving plate **4300.** The first ball **4310** may come into contact with the housing **4110.** The first ball **4310** may come into contact with the moving plate **4300.** The first ball **4310** may be disposed in the groove **4115** of the housing **4110.** The first ball **4310** may be disposed in the groove of the moving plate **4300.** The first ball **4310** may provide a first axis tilt center for the holder **4210.** The first ball **4310** may provide an X-axis tilt center for the holder **4210.** The first ball **4310** may comprise two first balls. The two first balls may be spaced apart in an X-axis direction. The two first balls may be disposed on an X-axis. The holder **4210** may be tilted about the first ball **4310** of the moving plate **4300** by the first driving unit. The holder **4210** may be tilted in an up-and-down direction with respect to the first ball **4310** of the moving plate **4300** by the first driving unit.

The first ball **4310** may be formed as a protrusion being integrally formed with the moving plate **4300** in a modified embodiment. At this time, the first ball **4310** may be a first protrusion.

The moving plate **4300** may comprise a second ball **4320.** The second ball **4320** may be disposed in the holder **4210.** The second ball **4320** may be disposed in the moving plate **4300.** The second ball **4320** may be disposed between the holder **4210** and the moving plate **4300.** The second ball **4320** may come into contact with the holder **4210.** The second ball **4320** may be in contact with the moving plate **4300.** The second ball **4320** may be disposed in the groove **4211** of the holder **4210.** The second ball **4320** may be disposed in the groove of the moving plate **4300.** The second ball **4320** may provide a second axis tilt center perpendicular to the first axis for the holder **4210.** The second ball **4320** may provide a Y-axis tilt center with respect to the holder **4210.** The second ball **4320** may comprise two second balls. The two second balls may be spaced apart in a Y-axis direction. The two second balls may be disposed on a Y-axis. The holder **4210** may be tilted about the second ball **4320** of the moving plate .**4300** by the second driving unit. The holder **4210** may be tilted in a left-to-right direction about the second ball **4320** of the moving plate **4300** as the center by the second driving unit.

The second ball **4320** may be formed as a protrusion being integrally formed with the moving plate **4300** in a modified embodiment. At this time, the second ball **4320** may be a second protrusion.

As a modified embodiment, the first ball **4310** of the moving plate **4300** provides a Y-axis tilt center to the holder **4210** and the second ball **4320** of the moving plate **4300** may provide an X-axis tilt center.

The reflective member driving device **4000** may comprise a driving unit. The driving unit may move the moving unit **4200** against the fixing unit **4100.** The driving unit may tilt the moving unit **4200** against the fixing unit **4100.** The driving unit may comprise a coil and a magnet. The driving unit may move the moving unit **4200** through electromagnetic interaction. As a modified embodiment, the driving unit may comprise a shape memory alloy (SMA). The driving unit may move the holder **4210** against the housing **4110.** The coil and driving magnet may move the holder **4210** against the housing **4110.**

The reflective member driving device **4000** may comprise a driving magnet. A driving magnet may be disposed in the holder **4210.** A driving magnet may be disposed at an outer surface of the holder **4210.** The driving magnet may be fixed to the holder **4210.** The driving magnet may be fixed to the holder **4210** by an adhesive. The driving magnet may face the coil. The driving magnet may be disposed to face the coil. The driving magnet may be disposed at a position corresponding to the coil. The driving magnet may be in electromagnetic interaction with the coil. The driving magnet may be a 4 pole magnetized magnet. That is, each driving magnet may comprise two N poles and two S poles.

The driving magnet may comprise a plurality of magnets. The driving magnet may comprise a first driving magnet **4411** that tilts the reflective member **4220** about a first axis. The driving magnet may comprise a second driving magnet **4421** that tilts the reflective member **4220** about a second axis perpendicular to the first axis.

The reflective member driving device **4000** may comprise a coil. The coil may be in electromagnetic interaction with the driving magnet. The coil may be disposed on the substrate **4130.** The coil may be disposed in the housing **4110.**

The coil may comprise a first coil **4412** facing the first driving magnet **4411.** The coil may comprise a second coil **4422** facing the second driving magnet **4421.**

The driving unit may comprise a first driving unit. The first driving unit may tilt the moving unit **4200** against the fixing unit **4100** about a first axis. The first driving unit may tilt the moving unit **4200** against the fixing unit **4100** about an X-axis. The first driving unit may comprise a coil and a magnet. The first driving unit may move the moving unit **4200** through electromagnetic interaction. As a modified embodiment, the first driving unit may comprise a shape memory alloy (SMA).

The first driving unit may comprise a first driving magnet **4411.** The first driving magnet **4411** may be disposed in the holder **4210.** The first driving magnet **4411** may be disposed at a lower surface of the holder **4210.** The first driving magnet **4411** may be fixed to the holder **4210.** The first driving magnet **4411** may be fixed to the holder **4210** by an adhesive. The first driving magnet **4411** may move integrally with the holder **4210.** The first driving magnet **4411** may be disposed to face the first coil **4412.** The first driving magnet **4411** may face the first coil **4412.** The first driving magnet **4411** may be disposed at a position corresponding to the first coil **4412.** The first driving magnet **4411** may interact with the first coil **4412.** The first driving magnet **4411** may interact with the first coil **4412** electromagnetically.

The first driving unit may comprise a first coil **4412.** The first coil **4412** may be disposed on the substrate **4130.** The first coil **4412** may be disposed in the housing **4110.** The first coil **4412** may be disposed below the holder **4210.** When a current is applied to the first coil **4412,** an electromagnetic field is formed around the first coil **4412** and can interact with the first driving magnet **4411.**

The reflective member driving device **4000** may comprise a first sensor **4413.** The first sensor **4413** may comprise a Hall sensor. The first sensor **4413** may detect the first driving magnet **4411.** The first sensor **4413** may detect the magnetic force of the first driving magnet **4411.** The first sensor **4413** may detect the position of the holder **4210.** The first sensor **4413** may detect the position of the reflective member **4220.** The first sensor **4413** may detect an amount of tilt of the holder **4210** about an X-axis. The first sensor **4413** may detect a tilt of the reflective member **4220** about a first axis.

The reflective member driving device **4000** may comprise a yoke **4414.** The yoke **4414** may be disposed between the first driving magnet **4411** and the holder **4210.** The yoke **4414** may be formed in a shape corresponding to that of the first driving magnet **4411.** The yoke **4414** may increase the interaction force between the first driving magnet **4411** and the first coil **4412.**

The driving unit may comprise a second driving unit. The second driving unit may tilt the moving unit **4200** about a second axis with respect to the fixing unit **4100.** The second driving unit may tilt the moving unit **4200** about a Y-axis with respect to the fixing unit **4100.** The second driving unit may comprise a coil and a magnet. The second driving unit may move the moving unit **4200** through electromagnetic interaction. As a modified embodiment, the second actuator may comprise a shape memory alloy (SMA).

The second driving unit may comprise a second driving magnet **4421.** The second driving magnet **4421** may be disposed in the holder **4210.** The second driving magnet **4421** may be disposed at both side surfaces of the holder **4210.** The second driving magnet **4421** may be fixed to the holder **4210.** The second driving magnet **4421** may be fixed to the holder **4210** by an adhesive. The second driving magnet **4421** may move integrally with the holder **4210.** The second driving magnet **4421** may be disposed to face the second coil **4422.** The second driving magnet **4421** may face the second coil **4422.** The second driving magnet **4421** may be disposed at a position corresponding to the second coil **4422.** The second driving magnet **4421** may interact with the second coil **4422.** The second driving magnet **4421** may interact with the second coil **4422** electromagnetically.

In a first embodiment of the present invention, the second driving magnet **4421** may be formed as a single magnet. However, as a modified embodiment, the second driving magnet **4421** may comprise two magnets being spaced apart from each other. The two magnets may be symmetrically disposed at an opposite side with respect to the reflective member **4220.**

The second driving unit may comprise a second coil **4422.** The second coil **4422** may be disposed on the substrate **4130.** The second coil **4422** may be disposed in the housing **4110.** The second coil **4422** may be disposed at both sides of the holder **4210.** When a current is applied to the second coil **4422,** an electromagnetic field is formed around the second coil **4422** and can interact with the second driving magnet **4421.**

In a first embodiment of the present invention, the second coil **4422** may be formed as one coil. However, as a modified embodiment, the second coil **4422** may comprise two coils being spaced apart from each other. The two coils may be symmetrically disposed at an opposite side with respect to the reflective member **4220.** The two coils may be disposed to electromagnetically interact with the two magnets, respectively. Meanwhile, the two coils may be electrically connected to each other.

The reflective member driving device **4000** may comprise a second sensor **4423.** The second sensor **4423** may comprise a Hall sensor. The second sensor **4423** may detect the second driving magnet **4421.** The second sensor **4423** may detect the magnetic force of the second driving magnet **4421.** The second sensor **4423** may detect the position of the holder **4210.** The second sensor **4423** may detect the position of the reflective member **4220.** The second sensor **4423** may detect the amount of tilt of the holder **4210** about a Y-axis. The second sensor **4423** may detect tilt of the reflective member **4220** about a second axis.

The reflective member driving device **4000** may comprise a yoke **4424.** The yoke **4424** may be disposed between the second driving magnet **4421** and the holder **4210.** The yoke **4424** may be formed in a shape corresponding to that of the second driving magnet **4421.** The yoke **4424** may increase the interaction force between the second driving magnet **4421** and the second coil **4422.**

The reflective member driving device **4000** may comprise a dummy member **4425.** The dummy member **4425** may be a weight member. The dummy member **4425** may be disposed at an opposite side of the second driving magnet **4421.** The dummy member **4425** may be disposed to correspond to the second driving magnet **4421.** The dummy member **4425** may have a weight corresponding to that of the second driving magnet **4421.** The dummy member **4425** may have weaker magnetism than the second driving magnet **4421.** The dummy member **4425** may be non-magnetic. The dummy member **4425** may comprise a portion that is non-magnetic or has weaker magnetism than the second driving magnet **4421.** The dummy member **4425** may be formed with a corresponding weight to balance with the second driving magnet **4421** and disposed at an opposite side of the second driving magnet **4421.** The dummy member **4425** may be disposed in the holder **4210.**

In a first embodiment of the present invention, the dummy member **4425** may be disposed to improve bending in left and right driving. More specifically, in order to improve the bending of the left and right driving of the holder **4210,** one of the two second driving magnets **4421** may be omitted and a dummy member **4425** may be disposed in its place. The dummy member **4425** may be a balance weight.

As a modified embodiment, the dummy member **4425** may be omitted and an additional second driving magnet **4421** may be disposed. At this time, a second coil **4422** facing the second driving magnet **4421** may be additionally disposed.

The reflective member driving device **4000** may comprise an elastic member **4500.** The elastic member **4500** may be a back spring. The elastic member **4500** may pull the holder **4210** with the restoring force of the spring. The housing **4110** and the holder **4210** may be coupled by an elastic member **4500.** In addition, the moving plate **4300** may be pressed by the elastic member **4500.** The first embodiment of the present invention is a structure using a spring, and can implement a more stable holding force than magnet magnetic force.

The elastic member **4500** may connect the housing **4110** and the holder **4210.** The elastic member **4500** may elastically connect the housing **4110** and the holder **4210.** The holder **4210** may be movably disposed in the housing **4110** by the elastic member **4500.** The elastic member **4500** may be disposed at an opposite side of the moving plate **4300** with respect to the first portion **4111** of the housing **4110.**

The elastic member **4500** may be directly coupled to the holder **4210.** The elastic member **4500** may be coupled to a first surface of the housing **4110** facing a first direction. The elastic member **4500** may be coupled to the protruding portion **4230** of the holder **4210.** The elastic member **4500** may be coupled to the protruding portion 4230 being protruded in a first direction of the holder **4210.** The elastic member **4500** may pull the holder **4210** in a first direction. The elastic member **4500** may pull the holder **4210** so that the moving plate **4300** is not separated between the housing **4110** and the holder **4210.** At least a portion of the elastic member **4500** may have elasticity. The elastic member **4500** may comprise a portion having elasticity. The elastic member **4500** may be a leaf spring. The elastic member **4500** may comprise a fixing unit being coupled to the housing **4110** and the holder **4210** and a leg part connecting the two fixing units. The leg part may have elasticity.

A first embodiment of the present invention may comprise a structure for generating a holding force in the reflective member driving device **4000.** In a comparative example, the holding force may be created using the magnetic force of the magnet. In a first embodiment of the present invention, the holding force can be created using the elasticity of the elastic member **4500** instead of the magnet. The holder **4210** may be maintained in a state of pressing the moving plate **4300** by the elastic member **4500.** In a first embodiment of the present invention, in an initial state in which the holder **4210** does not move by the elastic member **4500,** the moving plate **4300** may remain in contact with the holder **4210** and the housing **4110.** Furthermore, even when the holder **4210** is moved by the elastic member **4500,** the moving plate **4300** may maintain contact with the holder **4210** and the housing **4110.** Through this, the moving plate **4300** may guide the movement of the holder **4210.**

The elastic member **4500** may comprise an outer portion **4510.** The outer portion **4510** may be coupled to the housing **4110.** The outer portion **4510** may be disposed in the housing **4110.** The outer portion **4510** may be fixed to the housing **4110.** The outer portion **4510** may be attached to the housing **4110** with an adhesive. The outer portion **4510** may be disposed at an outer surface of the housing **4110.** The outer portion **4510** may be disposed in the groove **4119** of the housing **4110.** The distance between the outer portion **4510** and an image sensor **6400** may be longer than the distance between the inner portion **4520** and the image sensor **6400.**

The elastic member **4500** may comprise an inner portion **4520.** The inner portion **4520** may be coupled to the holder **4210.** The inner portion **4520** may be disposed in the holder **4210.** The inner portion **4520** may be fixed to the holder **4210.** The inner portion **4520** may be attached to the holder **4210** with an adhesive. The inner portion **4520** may be coupled to the protruding portion **4230** of the holder **4210.** The inner portion **4520** may be disposed in the protruding portion **4230** of the holder **4210.** The inner portion **4520** may be fixed to the protruding portion **4230** of the holder **4210.** The inner portion **4520** may be attached to the protruding portion **4230** of the holder **4210** with an adhesive. The inner portion **4520** may be coupled to an end of the protruding portion **4230** of the holder **4210.** The inner portion **4520** may be coupled to an outer surface of the protruding portion **4230** of the holder **4210.**

The inner portion **4520** may comprise a plurality of inner portions. The plurality of inner portions may comprise four inner portions. The four inner portions may be spaced apart from one another. The four inner portions may be disposed on one virtual plane. All four inner portions may be disposed in parallel.

An optical axis of light incident on the reflective member **4220** may be a first optical axis. An optical axis of light emitted from the reflective member **4220** may be a second optical axis. In a cross section cut by an imaginary plane comprising the first optical axis and the second optical axis, the inner portion **4520** may be disposed at a more inner side than the outer portion **4510.** More specifically, in a cross section cut by an imaginary plane comprising the first optical axis and the second optical axis, the inner portion **4520** may be disposed inside the outer portion **4510** by a first distance (see d in FIG. 14). Through this, an outward preload may be applied to the holder **4525** coupled to the inner portion **4520.** In cross section, the inner portion **4520** may be disposed at a more outer side than the moving plate **4300.**

The elastic member **4500** may comprise a hole **4525.** An inner portion **4520** of the elastic member **4500** may comprise a hole **4525.** The hole **4525** may be coupled with the protrusion **4525** of the protruding portion **4230** of the holder **4210.** The hole **4525** may be formed in a shape corresponding to the protrusion **4525** of the protruding portion **4230** of the holder **4210.**

The elastic member **4500** may comprise a first portion **4521.** The inner portion **4520** of the elastic member **4500** may comprise a first portion **4521.** The first portion **4521** may be coupled with the first protrusion **4236.**

The elastic member **4500** may comprise a second portion **4522.** The inner portion **4520** of the elastic member **4500** may comprise a second portion **4522.** The second portion **4522** may be coupled with the second protrusion **4237.**

In a modified embodiment as illustrated in FIG. 16, the elastic member **4500** may comprise a third portion **4523.** The inner portion **4520** of the elastic member **4500** may comprise a third portion **4523.** The third portion **4523** may connect the first portion **4521** and the second portion **4522.**

The elastic member **4500** may comprise a connecting portion **4530.** The connecting portion **4530** may be an elastic portion. The connecting portion **4530** may be a leg part. The connecting portion **4530** may connect the outer portion **4510** and the inner portion **4520.** The connecting portion **4530** may have elasticity. The connecting portion **4530** may elastically connect the outer portion **4510** and the inner portion **4520.** The connecting portion **4530** may comprise a shape bent at least once.

The connecting portion **4530** may comprise a plurality of connecting portions. The plurality of connecting portions may be formed in a number corresponding to the plurality of inner portions. The plurality of connecting portions may comprise four connecting portions. The four connecting portions may connect one outer portion and four inner portions. The four outer portions may be spaced apart from one another. The four outer portions may have the same shape or symmetrical shapes.

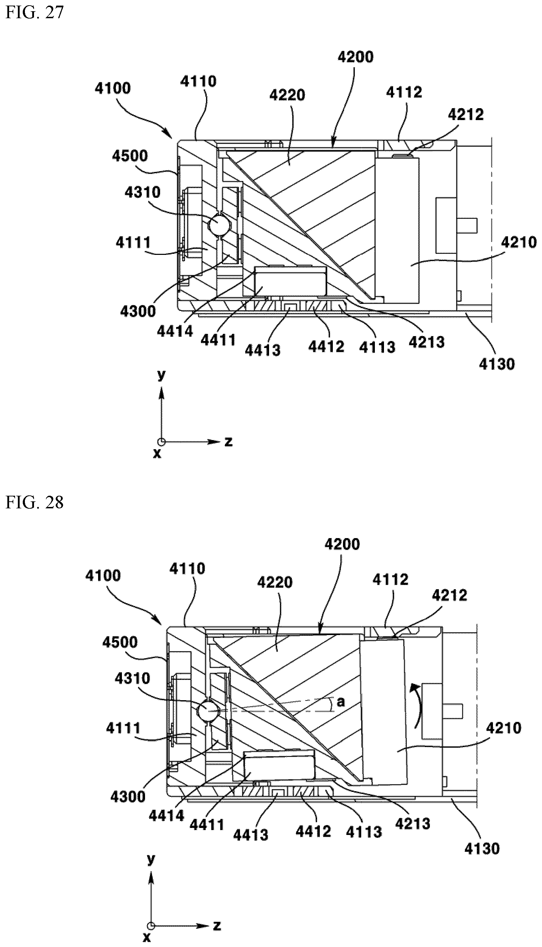

FIGS. 27 to 29 are views for explaining the tilt of a reflective member driving device according to a first embodiment of the present invention about an X-axis.

In a first embodiment of the present invention, the holder **4210** may be disposed between an upper plate and a lower plate of the housing **4110** in an initial state in which current is not supplied to the first driving unit. At this time, the holder **4210** may be spaced apart from both the upper plate and the lower plate of the housing **4110** (see FIG. 27).

At this time, when a current in the first direction is applied to the first coil **4412,** the holder **4210** may tilt upward about the first ball **4310** of the moving plate **4300** by the electromagnetic interaction between the first coil **4412** and the first driving magnet **4411** (see a in FIG. 28).

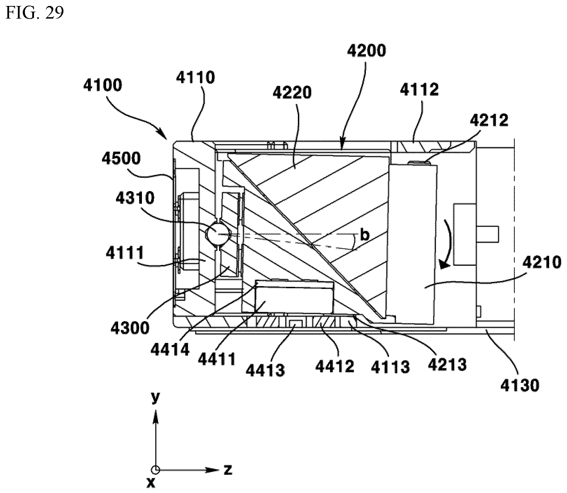

Meanwhile, when a current in a second direction opposite to the first direction is applied to the first coil **4412,** the holder **4210** may tilt downward about the first ball **4310** of the moving plate **4300** by the electromagnetic interaction between the first coil **4412** and the first driving magnet **4411** (see **b** in FIG. 29).

That is, current is selectively applied to the first coil **4412** in both directions so that the holder **4210** may be tilted in an up-and-down direction about an X-axis with respect to the housing **4110.** At this time, since the reflective member **4220** is also tilted along with the holder **4210,** the optical path is changed so that shaking detected by the gyro sensor **4150** can be offset.

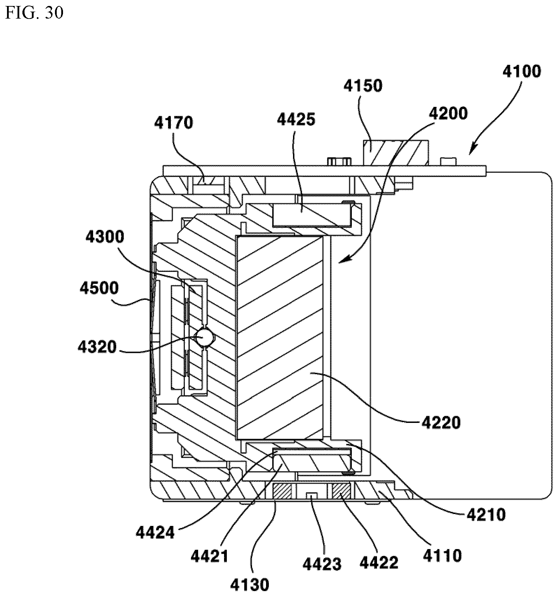

FIGS. 30 to 32 are views for explaining the tilt of a reflective member driving device according to a first embodiment of the present invention about a Y-axis.

In a first embodiment of the present invention, the holder **4210** may be disposed between both side plates of the housing **4110** in an initial state in which current is not supplied to the second driving unit. At this time, the holder **4210** may be spaced apart from both side plates of the housing **4110** (see FIG. 30).

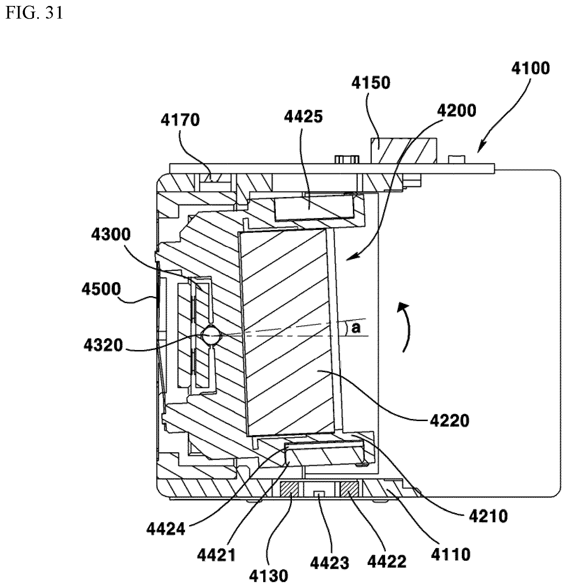

At this time, when the current in a first direction is applied to the second coil **4422,** the holder **4210** may be tilted to one side about the second ball **4320** of the moving plate **4300** by the electromagnetic interaction between the second coil **4422** and the second driving magnet **4421** (see a in FIG. 31).

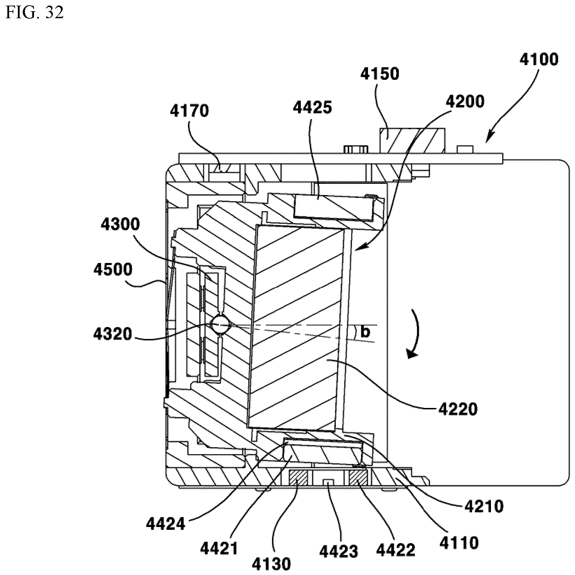

Meanwhile, when a current in a second direction opposite to a first direction is applied to the second coil **4422,** the holder **4210** may be tilted to the other side about the second ball **4320** of the moving plate **4300** by the electromagnetic interaction between the second coil **4422** and the second driving magnet **4421** (see **b** in FIG. 32).

That is, as a current is selectively applied to the second coil **4422** in both directions, the holder **4210** may be tilted in a left-to-right direction against the housing **4110** about a Y-axis. At this time, since the reflective member **4220** is also tilted along with the holder **4210,** the optical path is changed so that shaking detected by the gyro sensor **4150** can be offset.

In a first embodiment of the present invention, hand shake correction may be performed for X-axis tilt and Y-axis tilt, that is, 2-axis tilt.

Hereinafter, a lens driving device according to a first embodiment of the present invention will be described with reference to the drawings.

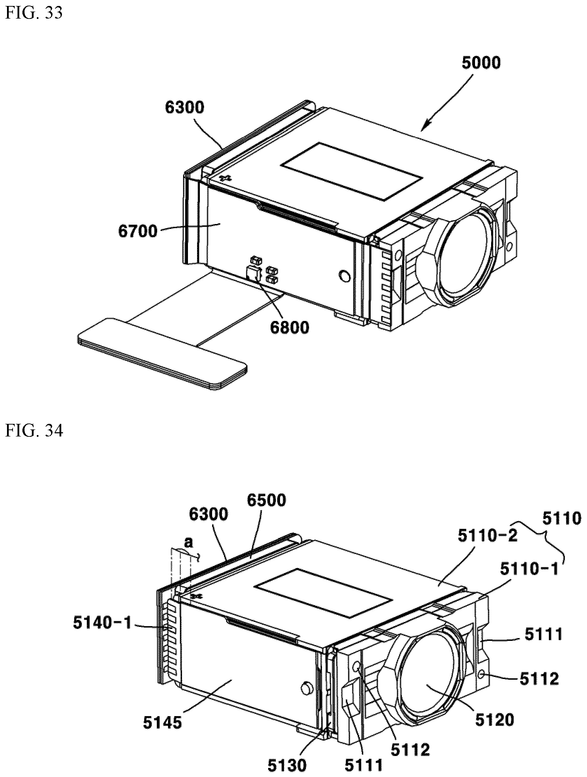

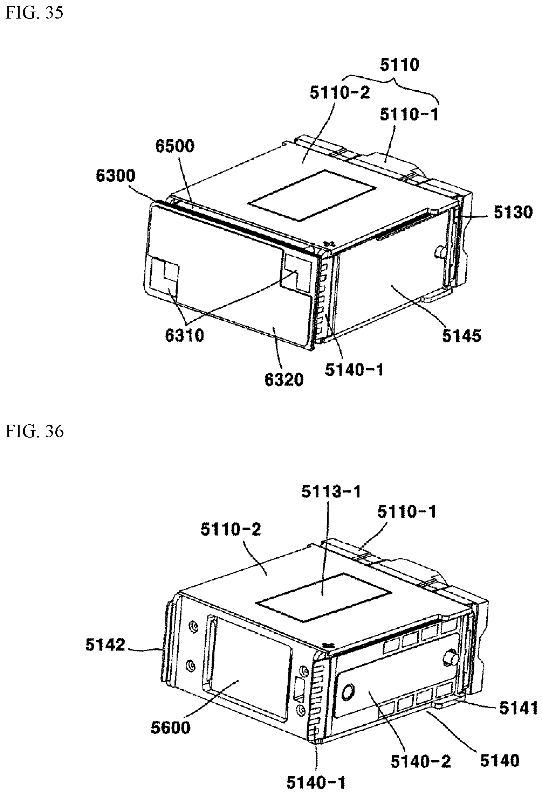

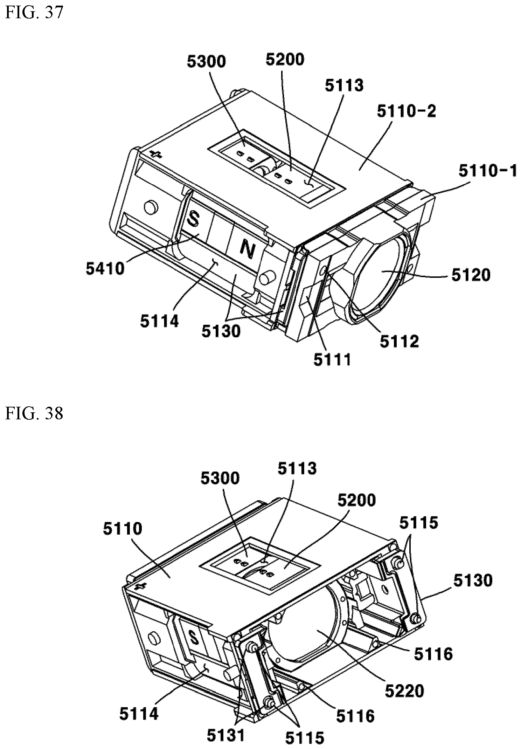

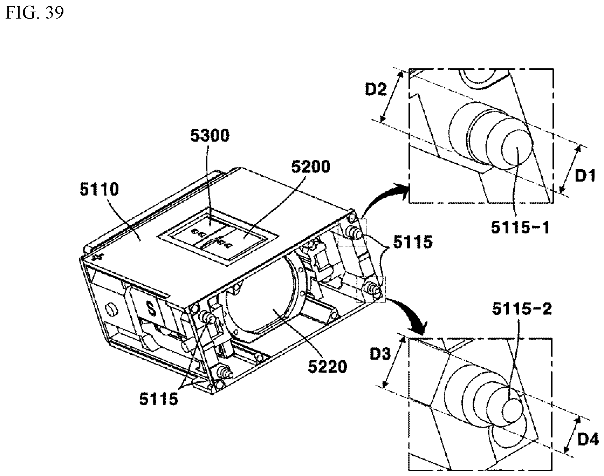

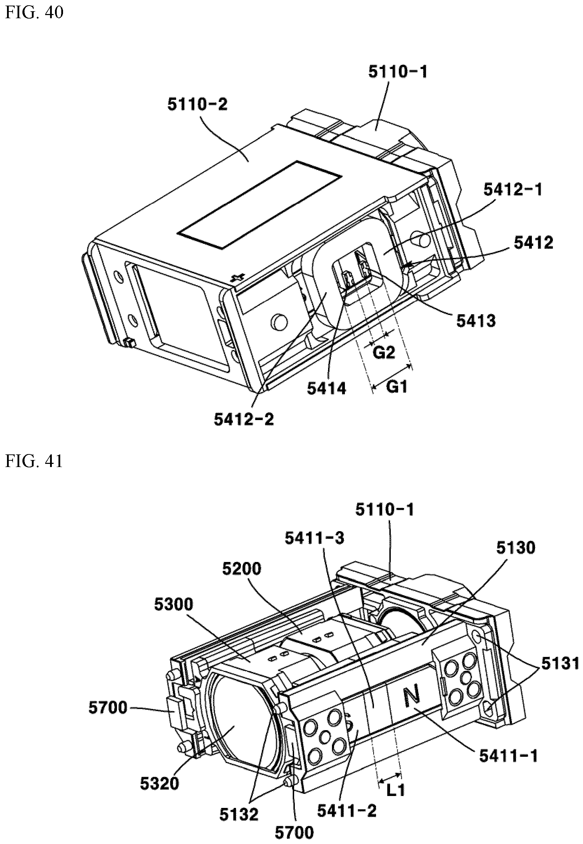

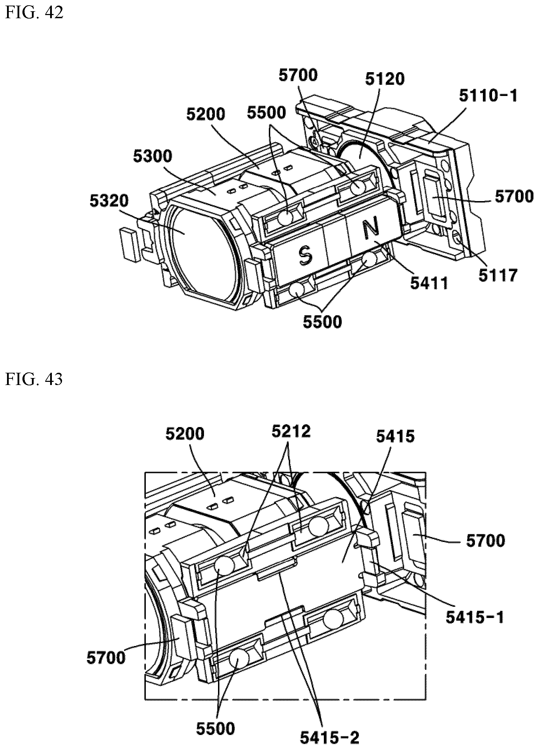

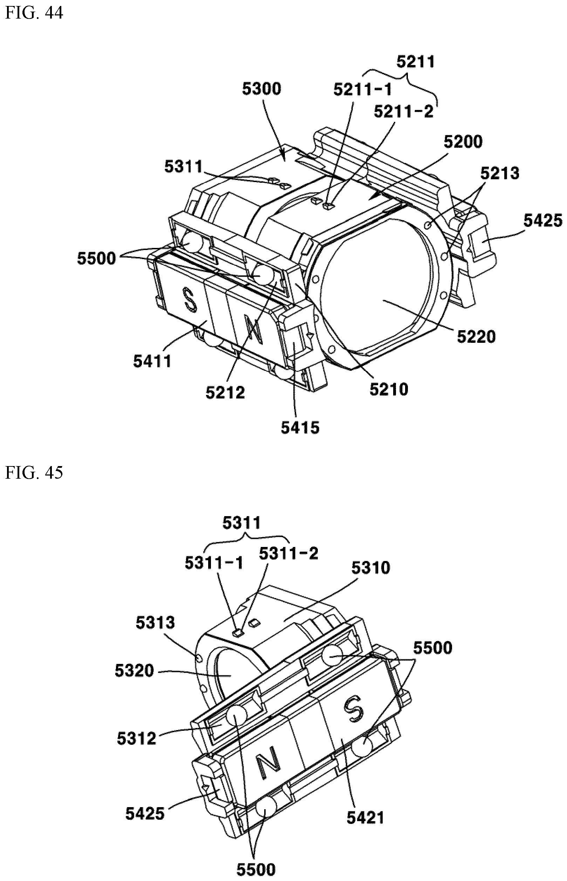

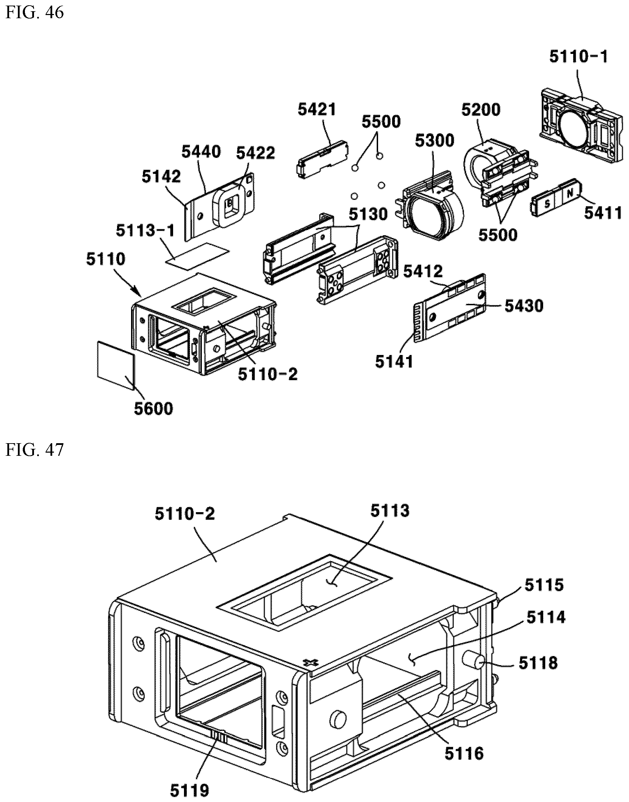

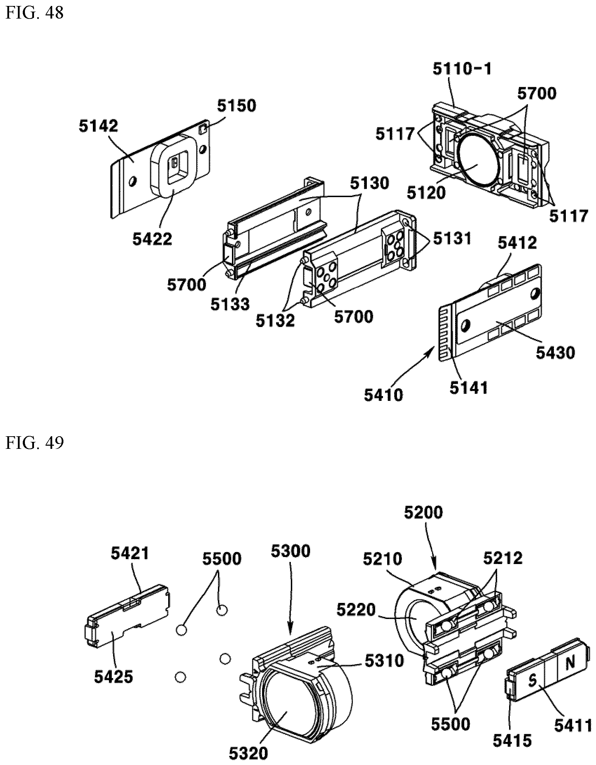

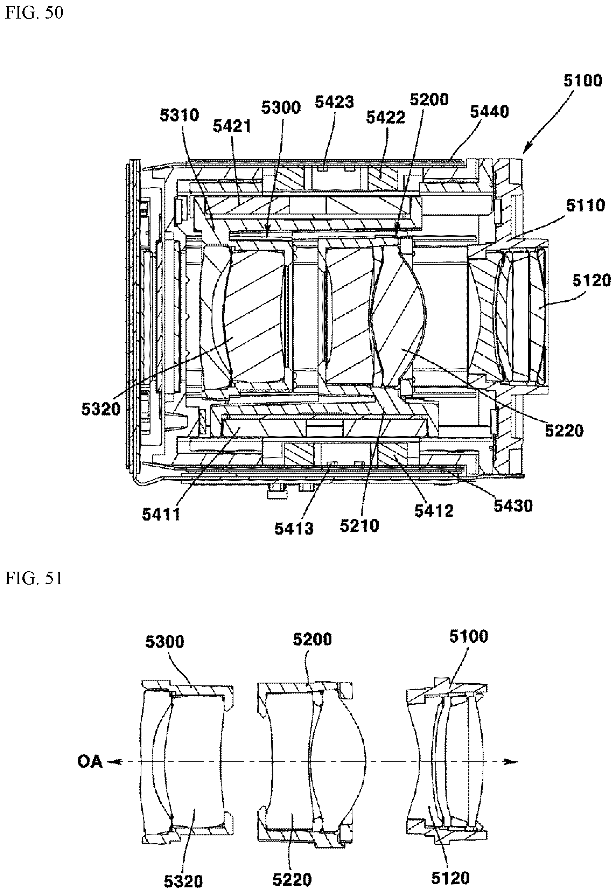

FIG. 33 is a perspective view of a lens driving device according to a first embodiment of the present invention; FIG. 34 is a perspective view of a lens driving device according to a first embodiment of the present invention, in which some components are omitted; FIG. 35 is a perspective view of a lens driving device in the state illustrated in FIG. 34 viewed from another direction; FIG. 36 is a perspective view of a lens driving device according to a first embodiment of the present invention, in which some components are omitted; FIG. 37 is a perspective view of a state in which components such as a substrate and a coil are omitted in a lens driving device according to a first embodiment of the present invention; FIG. 38 is a perspective view of a lens driving device illustrated in FIG. 37, in which the first lens and related components are omitted; FIG. 39 is a perspective view and a partial enlarged view of a part of a lens driving device according to a first embodiment of the present invention; FIG. 40 is a view for explaining the arrangement structure of a coil and a sensor of a lens driving device according to a first embodiment of the present invention; FIG. 41 is a perspective view of a state in which the second housing is omitted in the lens driving device illustrated in FIG. 37; FIG. 42 is a perspective view of a state in which a guide rail is omitted from the lens driving device illustrated in FIG. 41; FIG. 43 is an enlarged view of a part of a lens driving device according to a first embodiment of the present invention; FIG. 44 is a perspective view of a first moving unit and a second moving unit and related components of a lens driving device according to a first embodiment of the present invention; FIG. 45 is a perspective view of a second moving unit and related components of a lens driving device according to a first embodiment of the present invention; FIG. 46 is an exploded perspective view of a lens driving device according to a first embodiment of the present invention; FIG. 47 is a perspective view of a second housing of a lens driving device according to a first embodiment of the present invention; FIGS. 48 and 49 are exploded perspective views of some components of a lens driving device according to a first embodiment of the present invention; and FIG. 50 is a cross-sectional view of a lens driving device according to a first embodiment of the present invention.

The lens driving device **5000** may perform a zoom function. The lens driving device **5000** may perform a continuous zoom function. The lens driving device **5000** may perform an auto focus (AF) function. The lens driving device **5000** may move a lens. The lens driving device **5000** may move a lens along an optical axis. The lens driving device **5000** may move lenses formed in a plurality of groups by group. The lens driving device **5000** may move the second group lenses. The lens driving device **5000** may move the third group lenses. The lens driving device **5000** may be a lens actuator. The lens driving device **5000** may be an AF actuator. The lens driving device **5000** may be a zoom actuator. The lens driving device **5000** may comprise a voice coil motor (VCM).

The lens driving device **5000** may comprise a lens. Or, the lens may be described as a component of the camera device **4010** rather than a component of the lens driving device **5000.** The lens may be disposed in an optical path formed by the reflective member **4220** of the reflective member driving device **4000** and the image sensor **6400.** A lens may comprise a plurality of lenses. A plurality of lenses may form a plurality of groups. Lenses may form three groups. The lens may comprise first to third group lenses. A first group lens, a second group lens, and a third group lens may be sequentially disposed between the reflective member **4220** and the image sensor **6400.** The first group lens may comprise a first lens **5120.** The second group lens may comprise a second lens **5220.** The third group lens may comprise a third lens **5320.**

The lens driving device **5000** may comprise a fixing unit **5100.** The fixing unit **5100** may be a relatively fixed part when the first moving unit **5200** and the second moving unit **5300** move.

The lens driving device **5000** may comprise a housing **5110.** The fixing unit **5100** may comprise a housing **5110.** The housing **5110** may be disposed outside the first holder **5210** and the second holder **5310.** The housing **5110** may accommodate at least a portion of the first holder **5210** and the second holder **5310.** The housing **5110** may comprise a front plate, a rear plate, and a plurality of connecting plates. At this time, the front plate may be referred to as an upper plate, the rear plate may be referred to as a lower plate, and the connecting plate may be referred to as a side plate.

The housing **5110** may comprise a first housing **5110-1.** The first housing **5110-1** may form a front plate of the housing **5110.** The first housing **5110-1** may be coupled to the first lens **5120.** The first housing **5110-1** may be a cover. The first housing **5110-1** may be coupled to the reflective member driving device **4000.** A first lens **5120** may be fixed to the first housing **5110-1.**

The housing **5110** may comprise a second housing **5110-2.** The second housing **5110-2** may form a rear plate and a connecting plate of the housing **5110.** The second housing **5110-2** may be opened forward. The first housing **5110-1** may be coupled to the front of the second housing **5110-2.** A portion of the guide rail **5130** may be disposed between the first housing **5110-1** and the second housing **5110-2.**

The housing **5110** may comprise a first groove **5111.** The first groove **5111** may be coupled to the protruding portion **4116** of the housing **4110** of the reflective member driving device **4000.** The first groove **5111** may be formed in a shape corresponding to the protruding portion **4116** of the reflective member driving device **4000.** An adhesive for coupling the reflective member driving device **4000** to the lens driving device **5000** may be disposed in the first groove **5111.**

The housing **5110** may comprise a second groove **5112.** The second groove **5112** may be coupled to the protrusion **4117** of the housing **4110** of the reflective member driving device **4000.** A protrusion **4117** of the reflective member driving device **4000** may be inserted into the second groove **5112.** The second groove **5112** may be formed in a shape corresponding to the protrusion **4117** of the reflective member driving device **4000.** An adhesive for coupling the reflective member driving device **4000** to the lens driving device **5000** may be disposed in the second groove **5112.**

The housing **5110** may comprise a first hole **5113.** The first hole **5113** may expose the protrusion **5211** of the first holder **5210** and the protrusion **5311** of the second holder **5310.** The first hole **5113** may be formed in the connecting plate of the housing **5110.** In the testing phase of manufacturing, it can be confirmed whether the lens driving device **5000** is normally operating by checking the protrusion **5211** of the first holder **5210** being exposed through the first hole **5113** and the protrusion **5311** of the second holder **5310.**

The housing **5110** may comprise a plate **5113-1.** The plate **5113-1** may cover the first hole **5113.** The plate **5113-1** may be disposed in the first hole **5113** to close the first hole **5113.**

The housing **5110** may comprise a second hole **5114.** The second hole **5114** may be a coil accommodating hole in which the first coil **5412** and the second coil **5422** are disposed. A first coil **5412** and a second coil **5422** may be disposed in the second hole **5114.** The second hole **5114** may be larger than the first coil **5412** and the second coil **5422.**

The housing **5110** may comprise a protrusion **5115.** The protrusion **5115** may be formed in the second housing **5110-2.** The protrusion **5115** may be formed by a two-step protrusion. The protrusion **5115** may be coupled with the guide rail **5130.** The protrusion **5115** may be coupled with the first housing **5110-1.** The guide rail **5130** may be coupled to the large-diameter portion of the protrusion **5115** and the first housing **5110-1** may be coupled to the small-diameter portion of the protrusion **5115.**

The protrusion **5115** may comprise a first protrusion **5115-1.** The first protrusion **5115-1** may comprise a first portion having a first diameter **D2** and a second portion being protruded from the first portion and having a second diameter **D1.** The protrusion **5115** may comprise a second protrusion **5115-2.** The second protrusion **5115-2** may comprise a third portion having a third diameter **D3** and a fourth portion being protruded from the third portion and having a fourth diameter **D4.** At this time, the fourth diameter **D4** may be smaller than the second diameter **D1.** Through this, the first protrusion **5115-1** may be more tightly coupled to the first housing **5110-1** than the second protrusion **5115-2.**

The housing **5110** may comprise a guide protrusion **5116.** The guide protrusion **5116** may be formed on an inner surface of the housing **5110.** The guide protrusion **5116** may be formed in a shape corresponding to the shape of at least a portion of the first holder **5210** and the second holder **5310.** Through this, the guide protrusion **5116** may guide the movement of the first holder **5210** and the second holder **5310** in an optical axis direction. At this time, the optical axis direction may be a Z-axis direction perpendicular to the X-axis and the Y-axis. The guide protrusion **5116** may be disposed in an optical axis direction. The guide protrusion **5116** may be extended in an optical axis direction.

The housing **5110** may comprise a groove **5117.** The groove **5117** may be formed in the first housing **5110-1.** The groove **5117** of the first housing **5110-1** may be coupled with the protrusion **5115** of the second housing **5110-2.**

The housing **5110** may comprise a protrusion **5118.** The protrusion **5118** may be coupled with the substrate **5140.** The protrusion **5118** may be inserted into a groove in the substrate **5140.** The protrusion **5118** may be formed in a size and shape corresponding to the groove of the substrate **5140.**

The housing **5110** may comprise a vent hole **5119.** The vent hole **5119** may be formed in the rear plate of the housing **5110.** The vent hole **5119** may form a gap between the housing **5110** and a dummy glass **5600.** Air may flow into the gap between the housing **5110** and the dummy glass **5600.** Through the vent hole **5119,** the gas being generated during the curing process of the adhesive can escape.

The lens driving device **5000** may comprise a first lens **5120.** Or, the first lens **5120** may be described as a component of the camera device **4010** rather than a component of the lens driving device **5000.** The fixing unit **5100** may comprise a first lens **5120.** The first lens **5120** may be disposed on an optical axis. The first lens **5120** may be disposed between the reflective member **4220** and the image sensor **6400.** The first lens **5120** may be disposed between the reflective member **4220** and the second lens **5220.** The first lens **5120** may be disposed inside the first housing **5110-1.** The first lens **5120** may be fixed to the first housing **5110-1.** The first lens **5120** may remain fixed even when the second lens **5220** and the third lens **5320** move.

The first lens **5120** may be a first group lens. The first lens **5120** may comprise a plurality of lenses. The first lens **5120** may comprise three lenses.

The lens driving device **5000** may comprise a guide rail **5130.** The fixing unit **5100** may comprise a guide rail **5130.** The guide rail **5130** may be coupled between the first housing **5110-1** and the second housing **5110-2.** The guide rail **5130** may guide the movement of the first holder **5210** and the second holder **5310.** The rail **5130** may guide the first holder **5210** and the second holder **5310** to move in an optical axis direction. The guide rail **5130** may comprise a rail being disposed in an optical axis direction. The guide rail **5130** may comprise a rail being extended in an optical axis direction. The guide rail **5130** may comprise a rail being formed wherein the ball **5500** rolls thereon.

The lens driving device **5000** may comprise a substrate **5140.** The fixing unit **5100** may comprise a substrate **5140.** The substrate **5140** may be disposed on both side surfaces of the housing **5110.** The substrate **5140** may be an FPCB. A first coil **5412** and a second coil **5422** may be disposed on the substrate **5140.**

The substrate **5140** may comprise a first region **5140-1.** The first region **5140-1** may be formed at an end of the substrate **5140.** A terminal may be disposed in the first region **5140-1.** The substrate **5140** may comprise a second region **5140-2.** The first region **5140-1** of the substrate **5140** may be bent inward with respect to the second region **5140-2.** Through this, it is possible to minimize the size of the printed circuit board **6300** while securing an arrangement region for soldering that connects the terminal of the board **5140** and the printed circuit board **6300.** The first region **5140-1** may form an obtuse angle with the second region **5140-2.**

The substrate **5140** may comprise a first substrate **5141.** The first substrate **5141** may be disposed at one side of the housing **5110.** A first coil **5412** may be disposed on the first substrate **5141.** First and second Hall sensors **5413** and **5414** may be disposed on the first substrate **5141.**

The substrate **5140** may comprise a second substrate **5142.** The second substrate **5142** may be disposed on the other side of the housing **5110.** The second substrate **5142** may be disposed at an opposite side of the first substrate **5141.** A second coil **5422** may be disposed on the second substrate **5142.** Third and fourth Hall sensors **5423** and **5424** may be disposed on the second substrate **5142.**

The lens driving device **5000** may comprise a SUS **5145.** The SUS **5145** may be disposed on substrate **5140.** The SUS **5145** may reinforce the strength of the substrate **5140.** The SUS **5145** may dissipate heat generated from the substrate **5140.**

The lens driving device **5000** may comprise an EEPROM **5150.** The EEPROM **5150** may be electrically connected to the first coil **5412** and the second coil **5422.** The EEPROM **5150** may be used to control currents being applied to the first coil **5412** and the second coil **5422** before connecting the lens driving device **5000** to the driver IC **6900** in the manufacturing process. That is, the EEPROM **5150** may be used to test whether the lens driving device **5000** normally operates. The EEPROM **5150** may be disposed on an inner surface of the substrate **5140.**

The lens driving device **5000** may comprise a first moving unit **5200.** The first moving unit **5200** may move against the fixing unit **5100.** At least a portion of the first moving unit **5200** may be disposed between the fixing unit **5100** and the second moving unit **5300.** The first moving unit **5200** may move between the fixing unit **5100** and the second moving unit **5300.**

The lens driving device **5000** may comprise a first holder **5210.** The first moving unit **5200** may comprise a first holder **5210.** The first holder **5210** may be disposed inside the housing **5110.** The first holder **5210** may move against the housing **5110.** At least a portion of the first holder **5210** may be spaced apart from the housing **5110.** The first holder **5210** may be in contact with the housing **5110.** The first holder **5210** may come into contact with the housing **5110** when moving. Or, the first holder **5210** may be in contact with the housing **5110** in an initial state.

The first holder **5210** may comprise a protrusion **5211.** The protrusion **5211** may be a test protrusion. The protrusion **5211** may be formed on an outer surface of the first holder **5210.** The protrusion **5211** may be protruded from the first holder **5210.** The protrusion **5211** may be visible from the outside through the first hole **5113** of the housing **5110.** The protrusion **5211** may be used when testing whether the lens driving device **5000** normally operates. The protrusion **5211** may comprise a flat surface **5211-1** and an inclined surface **5211-2.**

The first holder **5210** may comprise a rail groove **5212.** A ball **5500** may be disposed in the rail groove **5212.** In the rail groove **5212,** the ball **5500** can roll. The rail groove **5212** and the ball **5500** may be in contact with each other at two points. The rail grooves **5212** may be disposed in an optical axis direction. The rail groove **5212** may be extended in an optical axis direction.

The rail groove **5212** may comprise a plurality of rail grooves. The rail groove **5212** may comprise four rail grooves. The rail groove **5212** may comprise first to fourth rail grooves. One or more balls **5500** may be disposed in each of the plurality of rail grooves **5212.**

The first holder **5210** may comprise a protrusion **5213.** The protrusion **5213** may be formed on a surface of the first holder **5210** facing the first housing **5110-1.** The protrusion **5213** may come into contact with the first housing **5110-1** when the first holder **5210** moves in a direction being closer to the first housing **5110-1.** At this time, compared to the case where the protrusion **5213** is omitted, when the protrusion **5213** is formed, the contact area between the first holder **5210** and the first housing **5110-1** can be reduced. Through this, shock and noise being generated due to the contact between the first holder **5210** and the first housing **5110-1** can be minimized.

The lens driving device **5000** may comprise a second lens **5220.** Or, the second lens **5220** may be described as a component of the camera device **4010** rather than a component of the lens driving device **5000.** The first moving unit **5200** may comprise a second lens **5220.** The second lens **5220** may be disposed in an optical axis. The second lens **5220** may be disposed between the reflective member **4220** and the image sensor **6400.** The second lens **5220** may be disposed between the first lens **5120** and the third lens **5320.** The second lens **5220** may be disposed inside the first holder **5210.** The second lens **5220** may be coupled to the first holder **5210.** The second lens **5220** may be fixed to the first holder **5210.** The second lens **5220** may move against the first lens **5120.** The second lens **5220** may move separately from the third lens **5320.**

The second lens **5220** may be a second group lens. The second lens **5220** may comprise a plurality of lenses. The second lens **5220** may comprise two lenses.

The lens driving device **5000** may comprise a second moving unit **5300.** The second moving unit **5300** may move against the fixing unit **5100.** The second moving unit **5300** may move separately from the first moving unit **5200.** The second moving unit **5300** may be disposed at a rear side of the first moving unit **5200.** The second moving unit **5300** may move in directions approaching and away from the first moving unit **5200.**

The lens driving device **5000** may comprise a second holder **5310.** The second moving unit **5300** may comprise a second holder **5310.** The second holder **5310** may be disposed inside the housing **5110.** The second holder **5310** may move against the housing **5110.** At least a portion of the second holder **5310** may be spaced apart from the housing **5110.** The second holder **5310** may come into contact with the housing **5110.** The second holder **5310** may come into contact with the housing **5110** when moving. Or, the second holder **5310** may come into contact with the housing **5110** in an initial state. The second holder **5310** may be in contact with the first holder **5210.** The second holder **5310** may be spaced apart from the first holder **5210.** The second holder **5310** may come into contact with the first holder **5210** when moving. Or, the second holder **5310** may be in contact with the first holder **5210** in an initial state.

The second holder **5310** may comprise a protrusion **5311.** The protrusion **5311** may be a test protrusion. The protrusion **5311** may be formed on an outer surface of the second holder **5310.** The protrusion **5311** may be protruded from the second holder **5310.** The protrusion **5311** may be visible from the outside through the first hole **5113** of the housing **5110.** The protrusion **5311** may be used when testing whether the lens driving device **5000** normally operates. The protrusion **5311** may comprise a flat surface **5311-1** and an inclined surface **5311-2.**

The second holder **5310** may comprise a rail groove **5312.** A ball **5500** may be disposed in the rail groove **5312.** In the rail groove **5312,** the ball **5500** may roll. The rail groove **5312** and the ball **5500** may be in contact with each other at two points. The rail groove **5312** may be disposed in an optical axis direction. The rail groove **5312** may be extended in an optical axis direction.

The rail groove **5312** may comprise a plurality of rail grooves. The rail groove **5312** may comprise four rail grooves. The rail groove **5312** may comprise first to fourth rail grooves. One or more balls **5500** may be disposed in each of the plurality of rail grooves **5312.**

The second holder **5310** may comprise a protrusion **5313.** The protrusion **5313** may be formed on a surface of the second holder **5310** facing the first holder **5210.** The protrusion **5313** may come into contact with the first holder **5210** when the second holder **5310** moves in a direction being closer to the first holder **5210.** At this time, compared to the case where the protrusion **5313** is omitted, the contact area between the second holder **5310** and the first holder **5210** can be reduced when the protrusion **5313** is formed. Through this, shock and noise being generated due to contact between the second holder **5310** and the first holder **5210** can be minimized.

The lens driving device **5000** may comprise a third lens **5320.** Or, the third lens **5320** may be described as a component of the camera device **4010** rather than a component of the lens driving device **5000.** The second moving unit **5300** may comprise a third lens **5320.** The third lens **5320** may be disposed on an optical axis. The third lens **5320** may be disposed between the reflective member **4220** and the image sensor **6400.** The third lens **5320** may be disposed between the second lens **5220** and the image sensor **6400.** The third lens **5320** may be disposed inside the second holder **5310.** The third lens **5320** may be coupled to the second holder **5310.** The third lens **5320** may be fixed to the second holder **5310.** The third lens **5320** may move against the first lens **5120.** The third lens **5320** may move separately from the second lens **5220.**

The third lens **5320** may be a third group lens. The third lens **5320** may comprise a plurality of lenses. The third lens **5320** may comprise two lenses.

The lens driving device **5000** may comprise a driving unit **5400.** The driving unit **5400** may move at least some of the plurality of lenses. The driving unit **5400** may move the first moving unit **5200** and the second moving unit **5300** against the fixing unit **5100.** The driving unit **5400** may comprise a coil and a magnet. The driving unit **5400** may move the first moving unit **5200** and the second moving unit **5300** through electromagnetic interaction. As a modified embodiment, the driver **5400** may comprise a shape memory alloy.

The driving unit **5400** may comprise a first driving unit **5410.** The first driving unit **5410** may move the first moving unit **5200** against the fixing unit **5100.** The first driving unit **5410** may move the first moving unit **5200** against the second moving unit **5300.** The first driving unit **5410** may be used to drive a zoom function. Or, the first driving unit **5410** may be used to drive an auto focus function.

The first driving unit **5410** may comprise a first driving magnet **5411.** The first driving magnet **5411** may be disposed in the first holder **5210.** The first driving magnet **5411** may be disposed on a side surface of the first holder **5210.** The first driving magnet **5411** may be coupled to the first holder **5210.** The first driving magnet **5411** may be fixed to the first holder **5210.** The first driving magnet **5411** may be fixed to the first holder **5210** by an adhesive. The first driving magnet **5411** may move integrally with the first holder **5210.** The first driving magnet **5411** may face the first coil **5412.** The first driving magnet **5411** may face the first coil **5412.** The first driving magnet **5411** may be disposed at a position corresponding to the first coil **5412.** The first driving magnet **5411** may interact with the first coil **5412.** The first driving magnet **5411** may interact with the first coil **5412** electromagnetically.

The first driving magnet **5411** may comprise a first magnet portion **5411-1.** The first magnet portion **5411-1** may have a first polarity. The first driving magnet **5411** may comprise a second magnet portion **5411-2.** The second magnet portion **5411-2** may have a second polarity different from the first polarity. At this time, the first polarity may be an N pole and the second polarity may be an S pole. Conversely, the first polarity may be an S pole and the second polarity may be an N pole.

The first driving magnet **5411** may comprise a neutral portion **5411-3.** The neutral portion **5411-3** may be disposed between the first magnet portion **5411-1** and the second magnet portion **5411-2.** The neutral portion **5411-3** may have a neutral polarity. The neutral portion **5411-3** may be a non-magnetized portion.

The first driving unit **5410** may comprise a first coil **5412.** The first coil **5412** may be disposed on the substrate **5140.** The first coil **5412** may be disposed on the first substrate **5141.** The first coil **5412** may be disposed in the housing **5110.** The first coil **5412** may be disposed outside the first holder **5210.** When a current is applied to the first coil **5412,** an electromagnetic field is formed around the first coil **5412** and can interact with the first driving magnet **5411.**

As a modified embodiment, the first coil **5412** may be disposed in the first holder **5210** and the first driving magnet **5411** may be disposed in the housing **5110.**

The first coil **5412** may be formed in a ring shape. The first coil **5412** may be formed as a square ring or a circular ring. Even when the first coil **5412** is formed in a square ring shape, the corner portion may be formed to be curved. The first coil **5412** may comprise a first portion **5412-1** and a second portion **5412-2** having a gap **G1** therebetween. First and second Hall sensors **5413** and **5414** may be disposed in the gap **G1** of the first coil **5412.**

The lens driving device **5000** may comprise a Hall sensor. The Hall sensor may detect the first driving magnet **5411.** The Hall sensor may comprise a plurality of Hall sensors. The Hall sensor may comprise a first Hall sensor **5413** and a second Hall sensor **5414.** The first Hall sensor **5413** and the second Hall sensor **5414** may be spaced apart from each other. The first Hall sensor **5413** and the second Hall sensor **5414** may be spaced apart such that a gap **G2** is formed therebetween. The first Hall sensor **5413** and the second Hall sensor **5414** may detect the first driving magnet **5411.** The first Hall sensor **5413** and the second Hall sensor **5414** may detect the magnetic force of the first driving magnet **5411.** The first Hall sensor **5413** and the second Hall sensor **5414** may detect the position of the first holder **5210.** The first Hall sensor **5413** and the second Hall sensor **5414** may detect the position of the second lens **5220.**

The lens driving device **5000** may comprise a yoke **5415.** The yoke **5415** may be disposed between the first driving magnet **5411** and the first holder **5210.** The yoke **5415** may be formed in a shape corresponding to that of the first driving magnet **5411.** The yoke **5415** may increase the interaction force between the first driving magnet **5411** and the first coil **5412.**

The yoke **5415** may comprise an extended portion **5415-1.** The extended portion **5415-1** may cover the front side surface and the rear side surface of the first driving magnet **5411.** The yoke **5415** may comprise a groove **5415-2.** The groove **5415-2** may be formed in the central portion of the body of the yoke **5415.**

The driving unit **5400** may comprise a second driving unit **5420.** The second driving unit **5420** may move the second moving unit **5300** against the fixing unit **5100.** The second driving unit **5420** may move the second moving unit **5300** against the first moving unit **5200.** The second driving unit **5420** may be used to drive an auto focus function. Or, the second driving unit **5420** may be used to drive a zoom function.

The second driving unit **5420** may comprise a second driving magnet **5421.** The second driving magnet **5421** may be disposed in the second holder **5310.** The second driving magnet **5421** may be disposed on a side surface of the second holder **5310.** The second driving magnet **5421** may be coupled to the second holder **5310.** The second driving magnet **5421** may be fixed to the second holder **5310.** The second driving magnet **5421** may be fixed to the second holder **5310** by an adhesive. The second driving magnet **5421** may move integrally with the second holder **5310.** The second driving magnet **5421** may face the second coil **5422.** The second driving magnet **5421** may face the second coil **5422.** The second driving magnet **5421** may be disposed at a position corresponding to the second coil **5422.** The second driving magnet **5421** may interact with the second coil **5422.** The second driving magnet **5421** may interact with the second coil **5422** electromagnetically.

The second driving unit **5420** may comprise a second coil **5422.** The second coil **5422** may be disposed on the substrate **5140.** The second coil **5422** may be disposed on the second substrate **5142.** The second coil **5422** may be disposed in the housing **5110.** The second coil **5422** may be disposed outside the second holder **5310.** When a current is applied to the second coil **5422,** an electromagnetic field is formed around the second coil **5422** and can interact with the second driving magnet **5421.**

As a modified embodiment, the second coil **5422** may be disposed in the second holder **5310** and the second driving magnet **5421** may be disposed in the housing **5110.**

The lens driving device **5000** may comprise a Hall sensor. The Hall sensor may detect the second driving magnet **5421.** The Hall sensor may comprise a plurality of Hall sensors. The Hall sensor may comprise a third Hall sensor **5423** and a fourth Hall sensor **5424.** The third Hall sensor **5423** and the fourth Hall sensor **5424** may be spaced apart from each other. The third Hall sensor **5423** and the fourth Hall sensor **5424** may be spaced apart such that a gap **G2** is formed therebetween. The third Hall sensor **5423** and the fourth Hall sensor **5424** may detect the second driving magnet **5421.** The third Hall sensor **5423** and the fourth Hall sensor **5424** may detect the magnetic force of the second driving magnet **5421.** The third Hall sensor **5423** and the fourth Hall sensor **5424** may detect the position of the second holder **5310.** The third Hall sensor **5423** and the fourth Hall sensor **5424** may detect the position of the third lens **5320.**

The lens driving device **5000** may comprise a yoke **5425.** The yoke **5425** may be disposed between the second driving magnet **5421** and the second holder **5310.** The yoke **5425** may be formed in a shape corresponding to that of the second driving magnet **5421.** The yoke **5425** may increase the interaction force between the second driving magnet **5421** and the second coil **5422.**

The lens driving device **5000** may comprise a first yoke **5430.** The first yoke **5430** may be disposed so that an attractive force acts between the first driving magnet **5411** and the first yoke **5430.** The first yoke **5430** may be disposed in the housing **5110.** The first yoke **5430** may be disposed on the substrate **5140.** The first yoke **5430** may be disposed on the first substrate **5141.** The first holder **5210** may press the ball **5500** toward the guide rail **5130** by the attractive force between the first driving magnet **5411** and the first yoke **5430.** That is, the ball **5500** can be maintained between the first holder **5210** and the guide rail **5130** without being separated by the attractive force between the first driving magnet **5411** and the first yoke **5430.**

The lens driving device **5000** may comprise a second yoke **5440.** The second yoke **5440** may be disposed so that attractive force acts between the second driving magnet **5421** and the second yoke **5440.** The second yoke **5440** may be disposed in the housing **5110.** The second yoke **5440** may be disposed on the substrate **5140.** The second yoke **5440** may be disposed on the second substrate **5142.** The second holder **5310** may press the ball **5500** toward the guide rail **5130** by the attractive force between the second driving magnet **5421** and the second yoke **5440.** That is, the ball **5500** can be maintained between the second holder **5310** and the guide rail **5130** without being separated by the attractive force between the second driving magnet **5421** and the second yoke **5440.**

The lens driving device **5000** may comprise a ball **5500.** The ball **5500** may guide the movement of the first holder **5210.** The ball **5500** may be disposed between the first holder **5210** and the guide rail **5130.** The ball **5500** may guide the movement of the second holder **5310.** The ball **5500** may be disposed between the second holder **5310** and the guide rail **5130.** The ball **5500** may be formed in a spherical shape. The ball **5500** may roll the rail groove **5212** of the first holder **5210** and the rail **5133** of the guide rail **5130.** The ball **5500** may move in an optical axis direction between the rail groove **5212** of the first holder **5210** and the rail **5133** of the guide rail **5130.** The ball **5500** may roll the rail groove **5312** of the second holder **5310** and the rail **5133** of the guide rail **5130.** The ball **5500** may move in an optical axis direction between the rail groove **5312** of the second holder **5310** and the rail **5133** of the guide rail **5130.** The ball **5500** may comprise a plurality of balls. A total of 8 balls **5500** may be provided: 4 balls in the first holder **5210** and 4 balls in the second holder **5310.**

The lens driving device **5000** may comprise a dummy glass **5600.** The dummy glass **5600** may be disposed in the housing **5110.** The dummy glass **5600** may close the rear opening of the housing **5110.** The dummy glass **5600** may be transparent to allow light to pass therethrough.

The lens driving device **5000** may comprise a Poron **5700.** The Poron **5700** may be a shock absorbing member. The Poron **5700** can minimize shock and noise being generated by the movement of the first holder **5210** and the second holder **5310.** The Poron **5700** may be disposed at a portion where the first holder **5210** collides with the housing **5110.** The Poron **5700** may be disposed at a portion where the second holder **5310** collides with the housing **5110.**

FIGS. 51 to 53 are diagrams for explaining implementation of a zoom function and an autofocus function of a lens driving device according to a first embodiment of the present invention.

In a first embodiment of the present invention, in an initial state in which current is not supplied to the driving unit **5400,** the first lens **5120,** the second lens **5220,** and the third lens **5320** may be disposed while being aligned on an optical axis **OA** (see FIG. 51).

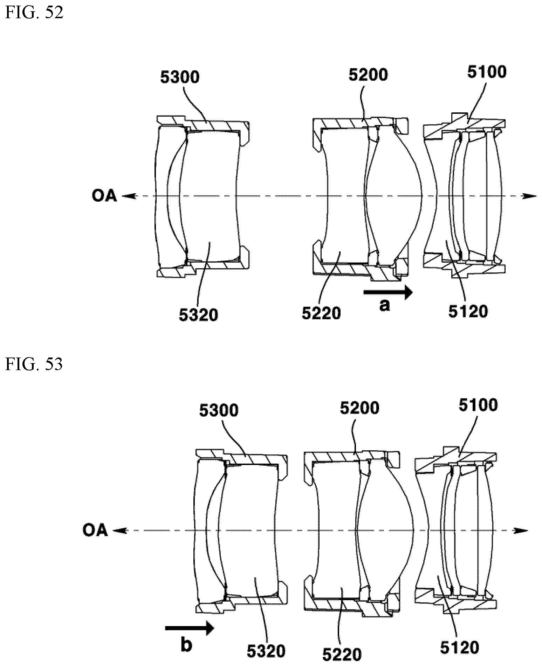

At this time, when a current is applied to the first coil **5412,** the second lens **5220** may move along an optical axis **OA** due to electromagnetic interaction between the first coil **5412** and the first driving magnet **5411.** (See a in FIG. 52). As the second lens **5220** moves while the first lens **5120** is fixed, a zoom function may be performed. When a current in a first direction is applied to the first coil **5412,** the second lens **5220** may move in a direction closer to the first lens **5120.** When a second direction opposite to the first direction is applied to the first coil **5412,** the second lens **5220** may move in a direction away from the first lens **5120.**

Meanwhile, when a current is applied to the second coil **5422,** the third lens **5320** may move along an optical axis **OA** due to electromagnetic interaction between the second coil **5422** and the second driving magnet **5421** (See **b** in FIG. 53). An auto focus (AF) function may be performed by the relative movement of the third lens **5320** against the first lens **5120** and the second lens **5220.** When current in a first direction is applied to the second coil **5422,** the third lens **5320** may move in a direction getting closer to the first lens **5120.** When a second direction opposite to the first direction is applied to the second coil **5422,** the third lens **5320** may move in a direction getting away from the first lens **5120.**

Hereinafter, a camera device according to a first embodiment of the present invention will be described with reference to the drawings.

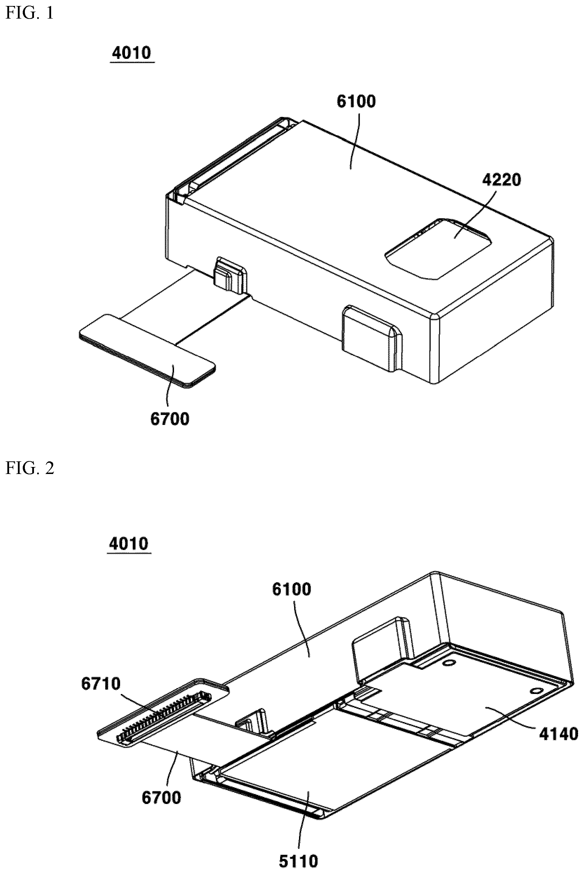

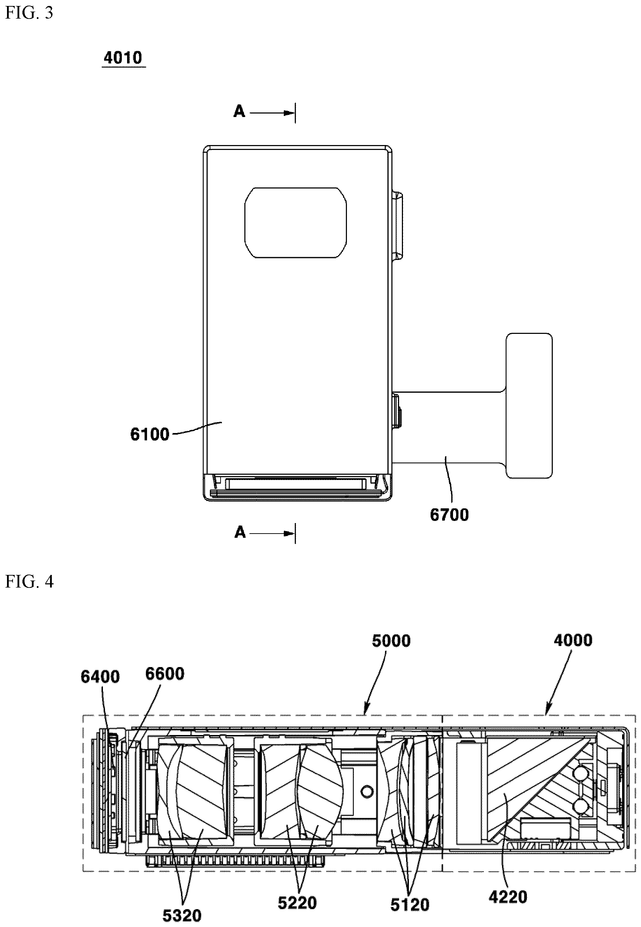

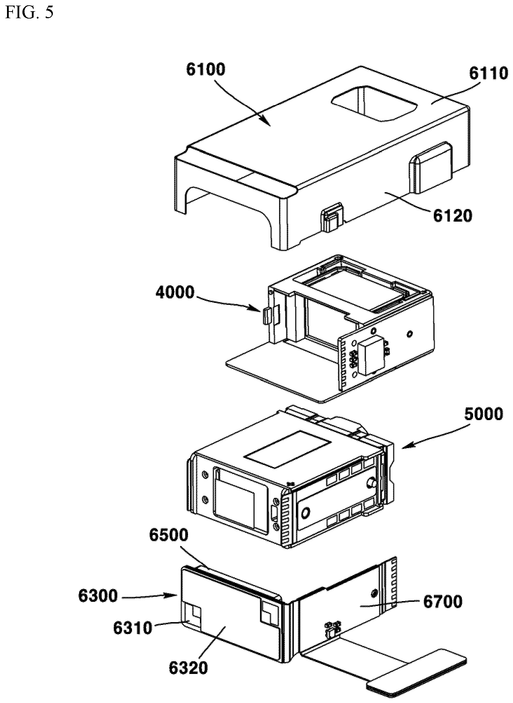

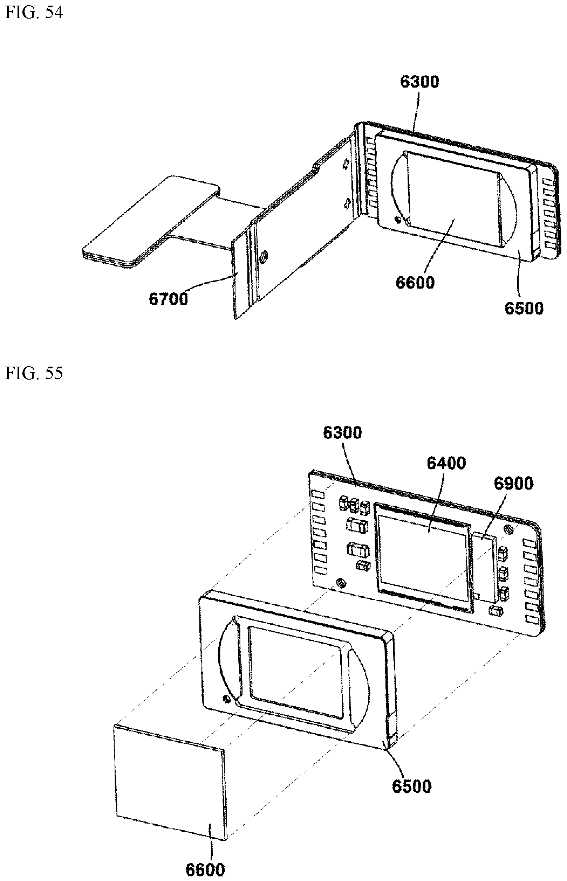

FIG. 1 is a perspective view of a camera device according to a first embodiment of the present invention; FIG. 2 is a bottom perspective view of a camera device according to a first embodiment of the present invention; FIG. 3 is a plan view of a camera device according to a first embodiment of the present invention; FIG. 4 is a cross-sectional view viewed from **A-A** in FIG. 3; FIG. 5 is an exploded perspective view of a camera device according to a first embodiment of the present invention. FIG. 54 is a perspective view of some components of a camera device according to a first embodiment of the present invention; and FIG. 55 is an exploded perspective view of an image sensor, a filter, and related components of a camera device according to a first embodiment of the present invention.

The camera device **4010** may comprise a cover member **6100.** The cover member **6100** may be a 'cover can' or a 'shield can'. The cover member **6100** may be disposed to cover the reflective member driving device **4000** and the lens driving device **5000.** The cover member **6100** may be disposed outside the reflective member driving device **4000** and the lens driving device **5000.** The cover member **6100** may cover the reflective member driving device **4000** and the lens driving device **5000.** The cover member **6100** may accommodate the reflective member driving device **4000** and the lens driving device **5000.** The cover member **6100** may be formed of a metal material. The cover member **6100** may block electromagnetic interference (EMI).

The cover member **6100** may comprise an upper plate **6110.** The upper plate **6110** may comprise an opening or hole. Light may be incident through the opening or hole of the upper plate **6110.** The opening or hole of the upper plate **6110** may be formed at a position corresponding to that of the reflective member **4220.**

The cover member **6100** may comprise a side plate **6120.** The side plate **6120** may comprise a plurality of side plates. The side plate **6120** may comprise four side plates. The side plate **6120** may comprise first to fourth side plates. The side plate **6120** may comprise first and second side plates being disposed opposite to each other, and third and fourth side plates being disposed opposite to each other.

The camera device **4010** may comprise a printed circuit board **6300** (PCB). The printed circuit board **6300** may be a substrate or a circuit board. A sensor base **6500** may be disposed on the printed circuit board **6300.** The printed circuit board **6300** may be electrically connected to the reflective member driving device **4000** and the lens driving device **5000.** The printed circuit board **6300** may comprise various circuits, elements, and control units to convert an image formed by the image sensor **6400** into an electrical signal and transmit the converted electrical signal to an external device.

The printed circuit board **6300** may comprise a marking portion **6310.** The marking portion **6310** may be disposed on a rear surface of the printed circuit board **6300.**

The camera device **4010** may comprise a SUS **6320.** The SUS **6320** may be disposed on a rear surface of the printed circuit board **6300.** The SUS **6320** may reinforce the strength of the printed circuit board **6300.** The SUS **6320** may dissipate heat being generated in the printed circuit board **6300.**

The camera device **4010** may comprise an image sensor **6400.** The image sensor **6400** may be disposed on the printed circuit board **6300.** Light passing through the lens and the filter **6600** may be incident on the image sensor **6400** to form an image. The image sensor **6400** may be electrically connected to the printed circuit board **6300.** For example, the image sensor **6400** may be coupled to the printed circuit board **6300** by surface mounting technology (SMT). As another example, the image sensor **6400** may be coupled to the printed circuit board **6300** by flip chip technology. The image sensor **6400** may be disposed such that an optical axis coincides with a lens. An optical axis of the image sensor **6400** and an optical axis of the lens may be aligned. The image sensor **6400** may convert light irradiated onto an effective image area of the image sensor **6400** into an electrical signal. The image sensor **6400** may comprise one or more among a charge coupled device (CCD), a metal oxide semi-conductor (MOS), a CPD, and a CID.

The camera device **4010** may comprise a sensor base **6500.** The sensor base **6500** may be disposed on the printed circuit board **6300.** A filter **6600** may be disposed on the sensor base **6500.** An opening may be formed in a portion of the sensor base **6500** where the filter **6600** is disposed so that light passing through the filter **6600** may be incident to the image sensor **6400.**

The camera device **4010** may comprise a filter **6600.** The filter **6600** may block light of a specific frequency band from entering the image sensor **6400** from light passing through the lens. The filter **6600** may be disposed between the lens and the image sensor **6400.** A filter **6600** may be disposed on the sensor base **6500.** The filter **6600** may comprise an infrared filter. The infrared filter may block light of an infrared region from being incident on the image sensor **6400.**

The camera device **4010** may comprise a substrate **6700.** The substrate **6700** may be connected to the printed circuit board **6300.** The substrate **6700** may be extended from the printed circuit board **6300.** The substrate **6700** may comprise terminals being electrically connected to the reflective member driving device **4000.** The substrate **6700** may comprise an extended portion being extended outward.

The camera device **4010** may comprise a connector **6710.** The connector **6710** may be disposed on the substrate **6700.** The connector **6710** may be disposed on a lower surface of an extended portion of the board **6700.** For example, the connector **6710** may be connected to a power supply unit of a smart phone.

The camera device **4010** may comprise a temperature sensor **6800.** The temperature sensor **6800** may detect temperature. The temperature detected by the temperature sensor **6800** may be used for more accurate control of any one or more among a handshake correction function, an auto focus function, and a zoom function.

The camera device **4010** may comprise a driver IC **6900.** The driver IC **6900** may be electrically connected to the lens driving device **5000.** The driver IC **6900** can be described as one component of the lens driving device **5000.** The driver IC **6900** may be electrically connected to the first coil **5412** and the second coil **5422** of the lens driving device **5000.** The driver IC **6900** may supply current to the first coil **5412** and the second coil **5422** of the lens driving device **5000.** The driver IC **6900** may control at least any one of voltage or current applied to each of the first coil **5412** and the second coil **5422** of the lens driving device **5000.** The driver IC **6900** may be electrically connected to the Hall sensors **5413, 5414, 5423,** and **5424.** The driver IC **6900** may perform the feedback control of the voltage and current applied to the first coil **5412** and the second coil **5422** through the positions of the second lens **5220** and the third lens **5320** detected by the Hall sensors **5413, 5414, 5423,** and **5424.**

Hereinafter, an optical apparatus according to a first embodiment of the present invention will be described with reference to the drawings.

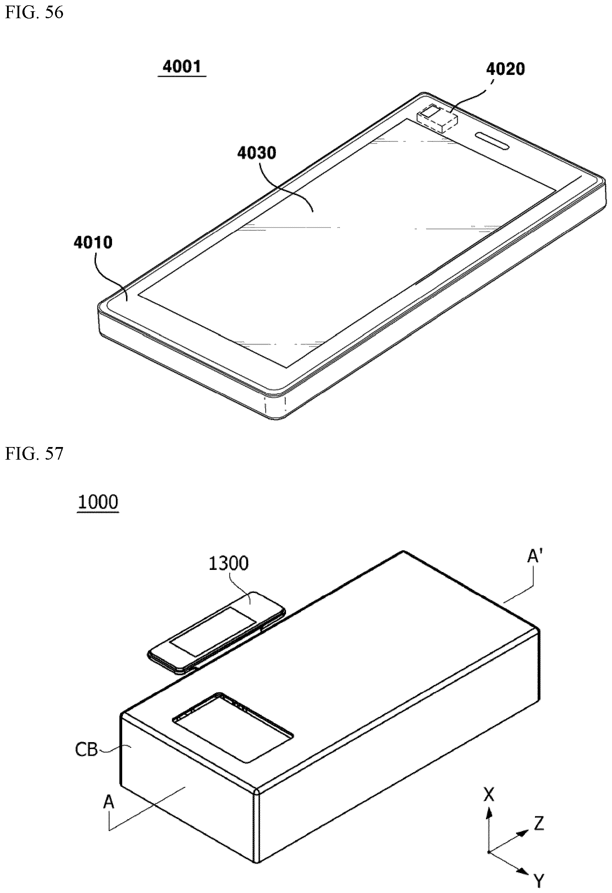

FIG. 56 is a perspective view of an optical apparatus according to a first embodiment of the present invention.

The optical apparatus **4001** may comprise any one or more among a mobile phone, mobile phone, portable terminal, mobile terminal, smart phone, smart pad, portable smart device, digital camera, laptop computer, digital broadcasting terminal, personal digital assistants (PDA), portable multimedia player (PMP), and navigation. The optical apparatus **4001** may comprise any device for photographing images or photos.

The optical apparatus **4001** may comprise a main body **4020.** The optical apparatus **4001** may comprise a camera device **4010.** The camera device **4010** may be disposed in the main body **4020.** The camera device **4010** may photograph a subject. The optical apparatus **4001** may comprise a display **4030.** The display **4030** may be disposed in the main body **4020.** The display **4030** may output any one or more of a video and an image photographed by the camera device **4010.** The display **4030** may be disposed on a first surface of the main body **4020.** The camera device **4010** may be disposed on any one or more of a first surface of the main body **4020** and a second surface opposite to the first surface.

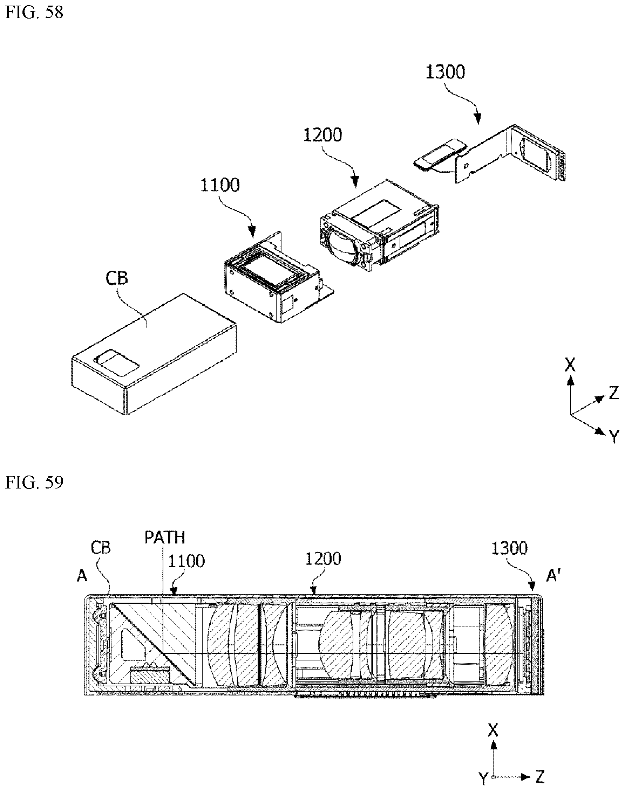

FIG. 57 is a perspective view of a camera module according to a second embodiment of the present invention; FIG. 58 is an exploded perspective view of a camera module according to a second embodiment of the present invention; and FIG. 59 is a view viewed from **A-A'** in FIG. 57.

Referring to FIGS. 57 and 58, the camera module **1000** according to an embodiment may comprise a cover **CB,** a first camera actuator **1100,** a second camera actuator **1200,** and a circuit board **1300.** Here, the first camera actuator **1100** may be used as a first actuator, and the second camera actuator **1200** may be interchangeably used as a second actuator.

The cover **CB** may surround the first camera actuator **1100** and the second camera actuator **1200.** The coupling force between the first camera actuator **1100** and the second camera actuator **1200** may be improved by the cover **CB.**

Furthermore, the cover **CB** may be made of a material that blocks electromagnetic waves. Accordingly, the first camera actuator **1100** and the second camera actuator **1200** inside the cover **CB** can be easily protected.

In addition, the first camera actuator **1100** may be an optical image stabilizer (OIS) actuator.

The first camera actuator **1100** may comprise a fixed focal length lens disposed in a predetermined lens barrel (not shown). The fixed focal length lens may also be referred to as "single focal length lens" or "short lens".

The first camera actuator **1100** may change a path of light. As an example, the first camera actuator **1100** may vertically change a light path through an internal optical member (For example, a mirror). With this configuration, even if the thickness of the mobile terminal is reduced, magnification, auto focusing (AF), and OIS functions can be performed by disposing a lens configuration larger than the thickness of the mobile terminal inside the mobile terminal through a change in the optical path.

The second camera actuator **1200** may be disposed at a rear end of the first camera actuator **1100.** The second camera actuator **1200** may be coupled to the first camera actuator **1100.** And mutual coupling can be made by various methods.

In addition, the second camera actuator **1200** may be a zoom actuator or an auto focus (AF) actuator. For example, the second camera actuator **1200** may support one or a plurality of lenses and perform an auto focusing function or a zoom function by moving the lenses according to a control signal from a predetermined control unit.

The circuit board **1300** may be disposed at a rear end of the second camera actuator **1200.** The circuit board **1300** may be electrically connected to the second camera actuator **1200** and the first camera actuator **1100.** In addition, the number of circuit boards **1300** may be plural.

Such a circuit board **1300** may be connected to the second housing of the second camera actuator **1200** and may have an image sensor. Furthermore, a base part comprising a filter may be seated on the circuit board **1300.** Descriptions about this will be given later.

A camera module according to an embodiment may comprise a single or a plurality of camera modules. For example, the plurality of camera modules may comprise a first camera module and a second camera module.

And the first camera module may comprise a single or a plurality of actuators. For example, the first camera module may comprise a first camera actuator **1100** and a second camera actuator **1200.**

The second camera module may comprise an actuator (not shown) disposed in a predetermined housing (not shown) and capable of driving a lens unit. The actuator may be a voice coil motor, a micro actuator, a silicon actuator, and the like, and may be applied in various ways such as an electrostatic method, a thermal method, a bimorph method, an electrostatic force method, and the like, but is not limited thereto. In addition, in this specification, a camera actuator may be referred to as an actuator or the like. In addition, a camera module composed of a plurality of camera modules may be mounted in various electronic devices such as mobile terminals.

Referring to FIG. 59, a camera module according to an embodiment may comprise a first camera actuator **1100** performing an OIS function and a second camera actuator **1200** performing a zooming function and an AF function.

Light may be incident into the camera module through an opening positioned on an upper surface of the first camera actuator **1100.** That is, the light may be incident into the first camera actuator **1100** along an optical axis direction (For example, an X-axis direction), and the light path may be changed in a vertical direction (For example, a Z-axis direction) through the optical member. The light may pass through the second camera actuator **1200** and be incident to the image sensor **IS** positioned at one end of the second camera actuator **1200 (PATH).**

In this specification, the bottom surface means one side surface in a first direction. In addition, the first direction is an X-axis direction in the drawing and may be used interchangeably with a second axis direction. The second direction is a Y-axis direction in the drawing and may be used interchangeably with the first-axis direction. The second direction is a direction perpendicular to the first direction. In addition, a third direction is a Z-axis direction in the drawing, and may be used interchangeably with the third axis direction. It is a direction perpendicular to both the first direction and the second direction. Here, the third direction (Z-axis direction) corresponds to the direction of the optical axis, and the first direction (X-axis direction) and the second direction (Y-axis direction) are directions perpendicular to the optical axis and can be tilted by the second camera actuator. A detailed description of this will be given later.

In addition, in the following description of the second camera actuator **1200,** the optical axis direction corresponds to the optical path and is the third direction (Z-axis direction), and will be described below with respect to this.

And, by this configuration, the camera module according to the embodiment can improve the spatial limitations of the first camera actuator and the second camera actuator by changing the light path. That is, the camera module according to the embodiment may expand the light path while minimizing the thickness of the camera module in response to the change in the light path. Furthermore, it should be understood that the second camera actuator may provide a high range of magnification by controlling a focus or the like in an extended light path.

In addition, the camera module according to the embodiment can implement OIS through control of the light path through the first camera actuator, and accordingly, it is possible to minimize the occurrence of decentralization or tilt phenomena so that the best optical characteristics can be obtained.

Furthermore, the second camera actuator **1200** may comprise an optical system and a lens driving unit. For example, in the second camera actuator **1200,** at least one or more among a first lens assembly, a second lens assembly, a third lens assembly, and a guide pin may be disposed.

In addition, the second camera actuator **1200** comprises a coil and a magnet to perform a zooming function with high magnification.

For example, the first lens assembly and the second lens assembly may be moving lenses that move through a coil, a magnet, and a guide pin, and the third lens assembly may be a fixed lens, but is not limited thereto. For example, the third lens assembly may perform the function of a focator that forms light at a specific location, and the first lens assembly may perform a variator function of re-forming an image formed in the third lens assembly, which is a light concentrator, at another location. Meanwhile, in the first lens assembly, the distance to the subject or the image distance may change a lot, so that the change in magnification may be large, and the first lens assembly, which is a variable magnification, may play an important role in changing the focal length or magnification of the optical system. On the other hand, the image formed by the first lens assembly, which is a variable magnifier, may be slightly different depending on the location. Accordingly, the second lens assembly may perform a position compensation function for an image formed by the variable magnifier. For example, the second lens assembly may perform a compensator function that serves to accurately form an image formed by the first lens assembly, which is a variable magnifier, at an actual image sensor position. For example, the first lens assembly and the second lens assembly may be driven by electromagnetic force due to an interaction between a coil and a magnet. The above information may be applied to a lens assembly, which will be described later.

Meanwhile, according to the second embodiment of the present invention, when an OIS actuator (For example, a first camera actuator) and an AF or Zoom actuator (For example, a second camera actuator) are disposed, magnetic field interference with an AF or Zoom magnet can be prevented during OIS driving. Since the driving magnet of the first camera actuator **1100** is disposed separately from the second camera actuator **1200,** magnetic field interference between the first camera actuator **1100** and the second camera actuator **1200** can be prevented. In this specification, OIS may be used interchangeably with terms such as handshake correction, optical image stabilization, optical image correction, and shake correction.

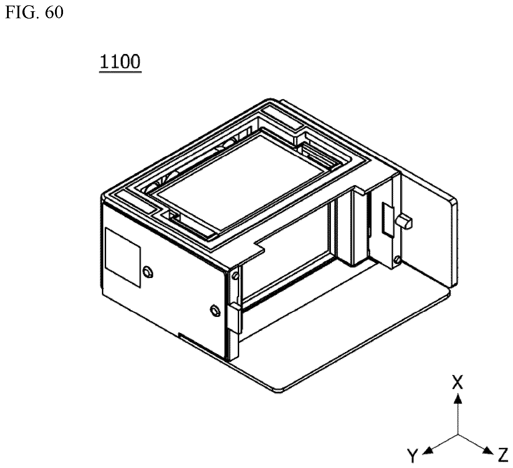

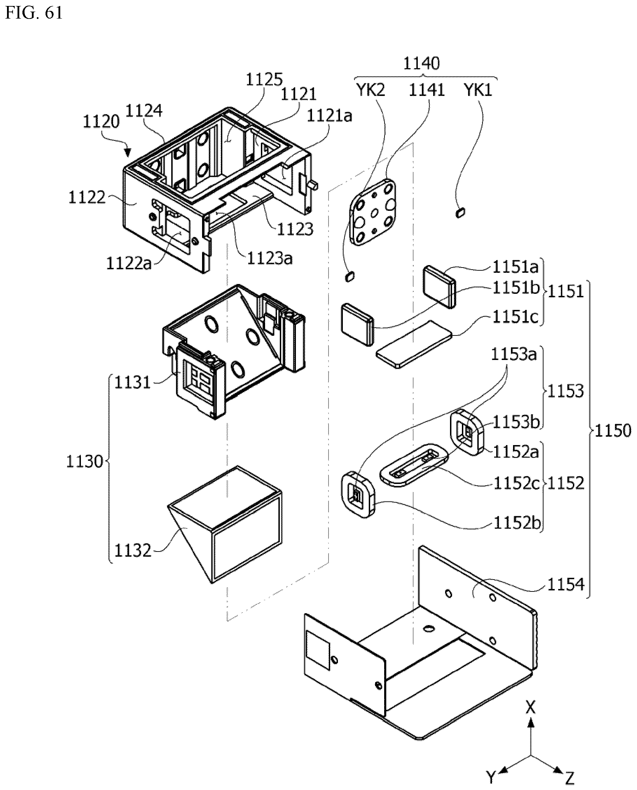

FIG. 60 is a perspective view of a first camera actuator according to a second embodiment of the present invention; and FIG. 61 is an exploded perspective view of a first camera actuator according to a second embodiment of the present invention.

Referring to FIGS. 60 and 61, the first camera actuator **1100** according to an embodiment comprises a shield can (not shown), a first housing **1120,** a mover **1130,** a rotating part **1140,** and a first driving unit **1150.**

The mover **1130** may comprise a holder **1131** and an optical member **1132** being seated on the holder **1131.** The rotating part **1140** comprises a tilting guide unit **1141** and a first yoke **YK1** and a second yoke **YK2** that are disposed to be spaced apart from each other with the tilting guide unit **1141** interposed therebetween and have a coupling force. In addition, the first driving unit **1150** comprises a driving magnet **1151** (For example, a first driving magnet), a driving coil **1152** (For example, a first driving coil), a yoke part (not shown), a Hall sensor unit **1153** and a first substrate unit **1154.**

A shield can (not shown) may be positioned at an outermost side of the first camera actuator **1100** to surround a rotating part **1140** and a first driving unit **1150,** which will be described later.

Such a shield can (not shown) may block or reduce electromagnetic waves generated from the outside. Accordingly, the occurrence of malfunctions in the rotating part **1140** or the first driving unit **1150** may be reduced.

The first housing **1120** may be positioned inside a shield can (not shown). In addition, the first housing **1120** may be positioned inside the first substrate unit **1154,** which will be described later. The first housing **1120** may be fastened by being fitted or aligned with a shield can (not shown).

In this specification, as described above, the third direction (Z-axis direction) corresponds to the direction of an optical axis, and the first direction (X-axis direction) and the second direction (Y-axis direction) are directions perpendicular to the optical axis, and may be tilted by the first camera actuator.

The first housing **1120** may comprise a first housing side portion **1121,** a second housing side portion **1122,** a third housing side portion **1123,** and a fourth housing side portion **1124.**

The first housing side portion **1121** and the second housing side portion **1122** may be disposed to face each other. In addition, the third housing side portion **1123** and the fourth housing side portion **1124** may be disposed between the first housing side portion **1121** and the second housing side portion **1122.**

The third housing side portion **1123** may be in contact with the first housing side portion **1121,** the second housing side portion **1122,** and the fourth housing side portion **1124.** The third housing side portion **1123** may be a bottom surface of the first housing **1120.**

Also, the first housing side portion **1121** may comprise a first housing hole **1121a.** A first coil **1152a,** which will be described later, may be positioned in the first housing hole **1121a.**

In addition, the second housing side portion **1122** may comprise a second housing hole **1122a.** A second coil **1152b,** which will be described later, may be positioned in the second housing hole **1122a.**

The first coil **1152a** and the second coil **1152b** may be coupled to the first substrate unit **1154.** As an embodiment, the first coil **1152a** and the second coil **1152b** may be electrically connected to the first substrate unit **1154** to allow current to flow therethrough. This current is an element of the electromagnetic force that the first camera actuator can tilt with respect to an X-axis.

The third housing side portion **1123** may comprise a third housing hole **1123a.** A third coil **1152c,** which will be described later, may be positioned in the third housing hole **1123a.** The third coil **1152** may be coupled to the first substrate unit **1154.** In addition, a current may flow through the third coil **1152c** electrically connected to the first substrate unit **1154.** This current is an element of the electromagnetic force that the first camera actuator can tilt with respect to a Y-axis.

In addition, the first housing **1120** may comprise an accommodating portion **1125** being formed by the first housing side portion **1121** to the fourth housing side portion **1124.** A mover **1130** may be positioned in the accommodating portion **1125.**

The mover **1130** comprises a holder **1131** and an optical member **1132** being seated on the holder **1131.**

The holder **1131** and the optical member **1132** may be seated in the accommodating portion **1125** of the first housing **1120.** The holder **1131** may comprise a first holder outer side surface to a fourth holder outer side surface corresponding to the first housing side portion **1121,** the second housing side portion **1122,** the third housing side portion **1123,** and the fourth housing side portion **1124,** respectively. Also, the first driving coil **1152** may be positioned in a seating groove formed on an outer surface of the holder **1131.** A detailed description of this will be given later.

The optical member **1132** may be seated on the holder **1131.** To this end, the holder **1131** may have a seating surface, and the seating surface may be formed by an accommodating groove. The optical member **1132** may comprise a reflector being disposed therein. However, it is not limited thereto.

Also, the optical member **1132** may reflect light reflected from the outside (For example, an object) into the camera module. In other words, the optical member **1132** may improve the first camera actuator and the spatial limit of the first camera actuator by changing the path of the reflected light. As a result, it should be understood that the camera module may also provide a high range of magnification while minimizing the thickness thereof by extending the light path.

The rotating part **1140** may comprise: a tilting guide unit **1141;** a first yoke **YK1** having a coupling force with the tilting guide unit **1141;** and a second yoke **YK2** positioned inside the tilting guide unit **1141** or the housing (particularly, the fourth housing side portion). However, the first yoke **YK1** and the second yoke **YK2** are positioned inside the mover **1130,** the tilting guide unit **1141,** and the first housing **1120,** so that a coupling force among the first housing **1120,** the tilting guide unit **1141,** and the mover **1130** may be provided.

The tilting guide unit **1141** may be coupled with the mover **1130** and the first housing **1120,** as described above. Such a tilting guide unit **1141** may be disposed adjacent to an optical axis. Thus, the actuator according to the embodiment can easily change the light path according to the tilt of the first and second axes, which will be described later.

The tilting guide unit **1141** may comprise a first protruding portion being disposed spaced apart from each other in a first direction (X-axis direction) and a second protruding portion being disposed spaced apart from each other in a second direction (Y-axis direction). In addition, the first protruding portion and the second protruding portion may be protruded in opposite directions. A detailed description of this will be given later.

The first yoke **YK1** may be positioned within the outer side surface of the holder **1131.** For example, the first yoke **YK1** may be positioned on an outer side surface of the fourth holder of the holder **1131.** With this configuration, the tilting guide unit **1141** can be pressed between the holder **1131** and the first housing **1120** by the magnetic force (For example, attractive force) between the first yoke **YK1** and the second yoke **YK2.** Thus, the tilting guide unit **1141** and the holder **1131** in the first housing **1120** may be spaced apart from the bottom surface of the housing in the accommodating portion **1125.** That is, the tilting guide unit **1141** and the holder **1131** may be coupled to the first housing **1120.** However, as described above, the first yoke **YK1** and the second yoke **YK2** may be magnets having different or the same polarities, or may be yokes and the like, and may be made of a material having attractive or repulsive force to each other.

The first driving unit **1150** comprises a driving magnet **1151,** a driving coil **1152,** a yoke part (not shown), a Hall sensor unit **1153,** and a first substrate unit **1154.** The first driving unit **1150** may move, rotate, or tilt the mover **1130.**

The driving magnet **1151** may comprise a plurality of magnets. As an example, the driving magnet **1151** may comprise a first magnet **1151a,** a second magnet **1151b,** and a third magnet **1151c.**

The first magnet **1151a,** the second magnet **1151b,** and the third magnet **1151c** may be positioned on an outer side surface of the holder **1131,** respectively. Also, the first magnet **1151a** and the second magnet **1151b** may be positioned to face each other. The third magnet **1151c** may be positioned on the bottom surface of the holder **1131,** that is, on an outer side surface of the third holder. A detailed description of this will be given later.

The driving coil **1152** may comprise a plurality of coils. As an embodiment, the driving coil **1152** may comprise a first coil **1152a,** a second coil **1152b,** and a third coil **1152c.**

The first coil **1152a** may be positioned to correspond to the first magnet **1151a.** That is, the first coil **1152a** may face the first magnet **1151a.** Accordingly, the first coil **1152a** may be positioned in the first housing hole **1121a** of the first housing side portion **1121** as described above.

In addition, the second coil **1152b** may be positioned to correspond to the second magnet **1151b.** That is, the second coil **1152b** may be disposed to face the second magnet **1151b.** Accordingly, the second coil **1152b** may be positioned in the second housing hole **1122a** of the second housing side portion **1122** as described above.

In addition, the first coil **1152a** may be positioned to face the second coil **1152b.** That is, the first coil **1152a** may be symmetrically positioned with respect to the second coil **1152b** in a first direction (X-axis direction). This may be equally applied to the first magnet **1151a** and the second magnet **1151b.** That is, the first magnet **1151a** and the second magnet **1151b** may be symmetrically positioned with respect to a first direction (X-axis direction). In addition, the first coil **1152a,** the second coil **1152b,** the first magnet **1151a,** and the second magnet **1151b** may be disposed to be overlapped with at least partially in the second direction (Y-axis direction). With this configuration, the X-axis tilting can be accurately performed without tilting to one side by the electromagnetic force between the first coil **1152a** and the first magnet **1151a** and the electromagnetic force between the second coil **1152b** and the second magnet **1151b.**

The third coil **1152c** may be positioned to correspond to the third magnet **1151c.** For example, the third coil **1152c** may be positioned in the third housing hole **1123a** of the third housing side portion **1123.** The third housing hole **1123a** may have a different area from the first housing hole and the second housing hole. Accordingly, Y-axis tilting through the third coil **1152c** can be easily performed.

Also, the third coil **1152c** may be positioned at a bisector between the first coil **1152a** and the second coil **1152b.** With this configuration, Y-axis tilting can be performed in a balanced manner without tilting to one side by the electromagnetic force being generated by the current flowing through the third coil **1152c.**

A yoke part (not shown) may be positioned between the driving magnet **1151** and the holder **1131.** The yoke part (not shown) is positioned on an outer side surface of the first holder and an outer side surface of the second holder of the holder **1131** to facilitate coupling of the driving magnet to the holder **1131.** For example, a yoke part (not shown) may be disposed in a seating groove positioned on an outer side surface of the holder and may have an attractive force with the driving magnet **1151.** That is, the yoke part (not shown) may improve coupling force between the driving magnet **1151** and the holder **1131.**

The Hall sensor unit **1153** may comprise a plurality of Hall sensors. As an embodiment, the Hall sensor unit **1153** may comprise a first Hall sensor **1153a** and a second Hall sensor **1153b.** The first Hall sensor **1153a** may be positioned inside or outside the first coil **1152a** or the second coil **1152b.** The first Hall sensor **1153a** may detect a magnetic flux change inside the first coil **1152a** or the second coil **1152b.** Accordingly, the first Hall sensor **1153a** may perform position sensing of the first and second magnets **1151a** and **1151b.** In addition, the second Hall sensor **1153b** may be positioned inside or outside the third coil **1152c.** The second Hall sensor **1153b** may detect the position of the third coil **1152c.** The first camera actuator according to the embodiment may control X-axis or Y-axis tilt through this. The Hall sensor unit or Hall sensor may comprise a plurality of sensors.

The first substrate unit **1154** may be positioned below the first driving unit **1150.** The first substrate unit **1154** may be electrically connected to the driving coil **1152** and the Hall sensor unit **1153.** For example, current is applied to the driving coil **1152** through the first substrate unit **1154,** and accordingly, the mover **1130** may be tilted in an X-axis or a Y-axis. For example, the first substrate unit **1154** may be coupled with the driving coil **1152** and the Hall sensor unit **1153** through SMT. However it is not limited to this method.

The first substrate unit **1154** is positioned between a shield can (not shown) and the first housing **1120** and may be coupled with the shield can and the first housing **1120.** The coupling method may be variously made as described above. Also, through the coupling, the driving coil **1152** and the Hall sensor unit **1153** may be positioned within the outer side surface of the first housing **1120.**

Such a first substrate unit **1154** may comprise a circuit board such as a rigid printed circuit board (rigid PCB), a flexible printed circuit board (flexible PCB), a rigid printed circuit board (rigid flexible PCB), and the like with wiring patterns that can be electrically connected. However, it is not limited to these types.

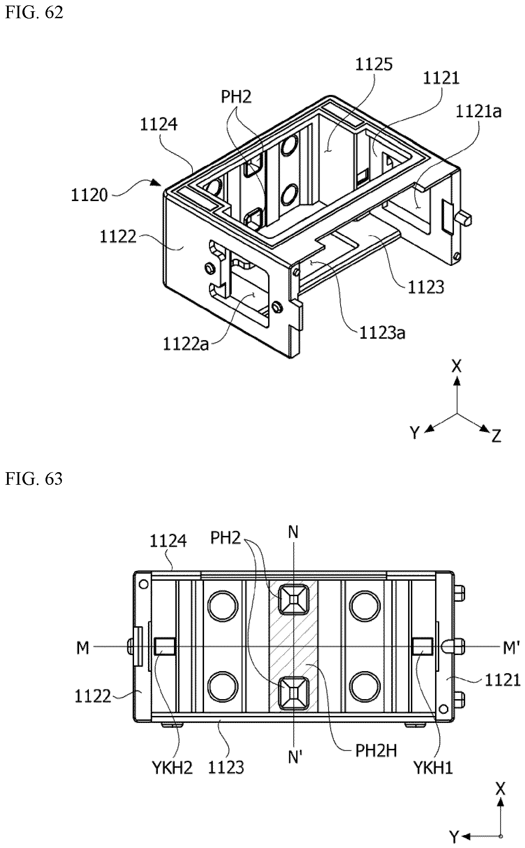

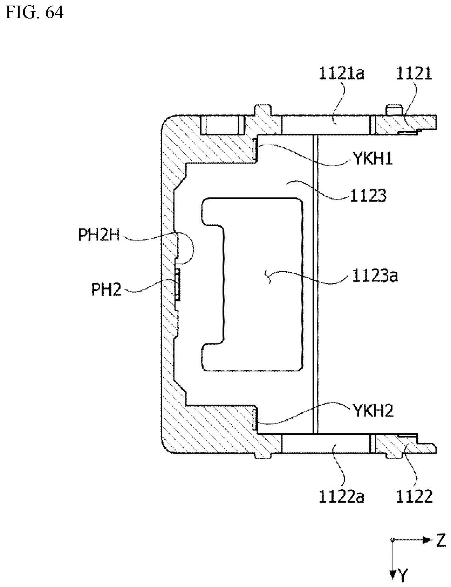

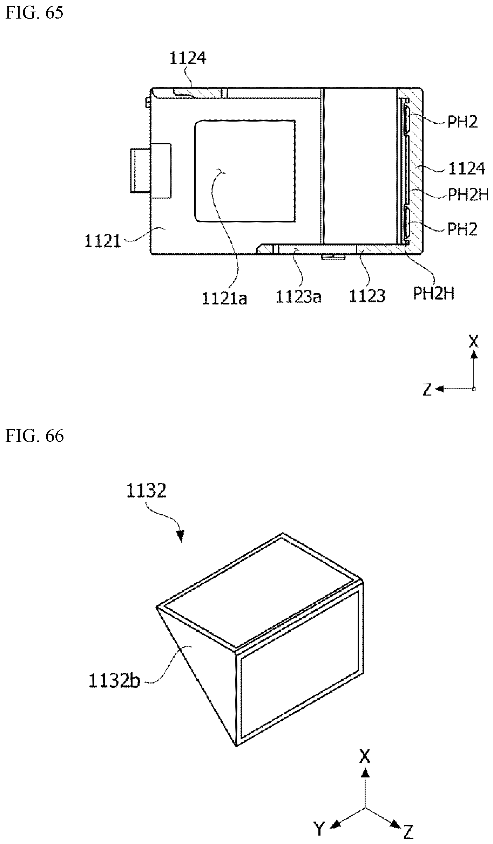

FIG. 62 is a perspective view of a first housing in a first camera actuator according to a second embodiment of the present invention; FIG. 63 is a side view of a first housing in a first camera actuator according to a second embodiment of the present invention; FIG. 64 is a cross-sectional view viewed from **M-M'** in FIG. 63; and FIG. 65 is a cross-sectional view viewed from **N-N'** in FIG. 63.

Referring to FIG. 62, the first housing **1120** may comprise a first housing side portion **1121,** a second housing side portion **1122,** a third housing side portion **1123,** and a fourth housing side portion **1124.**

The first housing side portion **1121** and the second housing side portion **1122** may be disposed to face each other. In addition, the third housing side portion **1123** and the fourth housing side portion **1124** may be disposed between the first housing side portion **1121** and the second housing side portion **1122.**

The third housing side portion **1123** may be in contact with the first housing side portion **1121,** the second housing side portion **1122,** and the fourth housing side portion **1124.** The third housing side portion **1123** may be a bottom surface of the first housing **1120.**

Also, the first housing side portion **1121** may comprise a first housing hole **1121a.** A first coil **1152a,** which will be described later, may be positioned in the first housing hole **1121a.**

In addition, the second housing side portion **1122** may comprise a second housing hole **1122a.** A second coil **1152b,** which will be described later, may be positioned in the second housing hole **1122a.**

Furthermore, the second housing side portion **1122** or the first housing side portion **1121** may comprise a control element groove. As an embodiment, the second housing side portion **1122** may comprise a control element groove. In addition, a driver, a control element, a processor, and the like electrically connected to the substrate may be positioned in the control element groove. Or, a circuit board of the first camera actuator may be positioned on an outer side surface of the first housing side portion **1121** or the second housing side portion **1122,** and the circuit board may be connected to the control element.

Also, the first coil and the second coil may be coupled with the first substrate unit. In an embodiment, the first coil and the second coil may be electrically connected to the first substrate unit so that current may flow. This current is a component of the electromagnetic force that the first camera actuator can tilt with respect to an X-axis.

In addition, the third housing side portion **1123** may be disposed between the first housing side portion **1121** and the second housing side portion **1122.** The third housing side portion **1123** may be a bottom portion of the first housing **1120.** A third coil is positioned in the third housing hole **1123a** of the third housing side portion **1123,** and a current flowing through the third coil is an element of electromagnetic force capable of tilting the first camera actuator relative to a Y-axis.

In addition, the fourth housing side portion **1124** may comprise second protrusion grooves **PH2** being symmetrically disposed with respect to the center.

Looking further at FIGS. 63 to 65, the second protrusion groove **PH2** is plural, and the second protruding portion of the tilting guide unit can be seated. In this specification, it is explained that a plurality of first protrusion grooves **PH1** is overlapped with each other in a second direction (Y-axis direction), and a plurality of second protrusion grooves is overlapped with each other in a first direction (X-axis direction). However, when the positions of the first protruding portion and the second protruding portion are changed the positions of the first protruding portion and the second protruding portion may also be interchanged corresponding to the positions of the first protruding portion and the second protruding portion. Thus, in the first camera actuator according to an embodiment, the housing and the holder may each comprise a different one of a first protrusion groove in which the first protruding portion is seated and a second protrusion groove in which the second protruding portion is seated.

Furthermore, a second additional groove **PH2H** surrounding the second protrusion groove **PH2** may be positioned outside the second protrusion groove **PH2.** The second additional groove **PH2H** may be positioned on an inner side surface of the fourth housing side portion **1124.** Furthermore, the second additional groove **PH2H** may surround the second protrusion groove **PH2** positioned inside the fourth housing side portion **1124.** With this configuration, a lubricating member for seating the second protruding portion of the tilting guide unit can be positioned inside the second protrusion groove **PH2.** At this time, a lubricating member (For example, grease) may overflow due to impact between the second protruding portion and the second protrusion groove **PH2.** The second additional groove **PH2H** can accommodate the overflowing lubricating member. Thus, even if the lubricating member overflows due to collision, it may not move to the tilting guide unit. Therefore, the tilting guide unit and the housing may not be connected by the lubrication member. Therefore, the rotational driving of the tilting guide unit can be accurately performed without being hindered by the lubrication member.

In addition, the first housing **1120** may comprise an accommodating portion **1125** being formed by the first to fourth housing side portions **1121** to **1124.** A mover **1130** may be positioned in the accommodating portion **1125.**

Furthermore, the first housing **1120** or the first camera actuator may comprise a yoke groove. The yoke groove may comprise a first yoke groove **YKH1** and a second yoke groove **YKH2.** Furthermore, as described above, the yoke part may be disposed in the yoke groove. For example, the first yoke **YK1** may be positioned in the first yoke groove **YKH1**. The second yoke **YK2** may be positioned in the second yoke groove **YKH2.** Accordingly, the first yoke **YK1** and the second yoke **YK2** may be positioned inside the first housing **1120.** In other words, the first yoke **YK1** and the second yoke **YK2** may be coupled to the first housing **1120.**

A first yoke groove **YKH1** may be positioned inside the first housing hole **1121a** of the first housing side portion **1121.** A second yoke groove **YKH2** may be positioned inside the second housing hole **1122a** of the second housing side portion **1122.** The first yoke groove **YKH1** and the second yoke groove **YKH2** may be positioned between the first housing hole **1121a** and the second housing hole **1122a.** Furthermore, the first yoke groove **YKH1** may not be overlapped with the first housing hole **1121a** in an optical axis direction (Z-axis direction). Similarly, the second yoke groove **YKH2** may not be overlapped with the second housing hole **1122a** in an optical axis direction. Accordingly, the first yoke groove **YKH1** may not be overlapped with the first coil in an optical axis direction. Also, the second yoke groove **YKH2** may not be overlapped with the second coil in an optical axis direction.

With this configuration, the first yoke may not be overlapped with the first coil along an optical axis direction. Furthermore, the second yoke may not be overlapped with the second coil along an optical axis direction. Accordingly, the influence of the first and second coils from the first and second yokes can be minimized. Thus, accurate tilt driving by the first and second coils can be performed.

Furthermore, a third housing hole **1123a** may be positioned between the first yoke groove **YKH1** and the second yoke groove **YKH2.** The first yoke groove **YKH1** and the second yoke groove **YKH2** may be symmetrically disposed with respect to the third housing hole **1123a.** Accordingly, the influence of the third coil positioned in the third housing hole **1123a** from the first yoke groove **YKH1** and the second yoke groove **YKH2** can be minimized.

Furthermore, the first yoke groove **YKH1** and the second yoke groove **YKH2** may be positioned on an optical axis direction side with respect to the second protrusion groove **PH2** or the second additional groove **PH2H.** Also, the first yoke groove **YKH1** and the second yoke groove **YKH2** may not be overlapped with an optical axis direction with respect to the second protrusion groove **PH2** or the second additional groove **PH2H.**

FIG. 66 is a perspective view of an optical member of a first camera actuator according to a second embodiment of the present invention.

The optical member **1132** may be seated on a holder. The optical member **1132** may be a right angle prism as a reflecting unit, but is not limited thereto. For example, the optical member **1132** may comprise various optical elements that change the path of light.

As an embodiment, the optical member **1132** may have a protrusion (not shown) on a portion of an outer side surface. The optical member **1132** can be easily coupled to the holder through a protrusion (not shown). In addition, the holder may be coupled with the optical member **1132** by having a groove or protrusion.

In addition, the bottom surface **1132b** of the optical member **1132** may be seated on a seating surface of the holder. Accordingly, the bottom surface **1132b** of the optical member **1132** may correspond to the seating surface of the holder. As an embodiment, the bottom surface **1132b** may be made of an inclined surface in the same manner as the holder is seated. Accordingly, it is possible to prevent the optical member **1132** from being separated from the holder at the same time when the prism moves according to the movement of the holder.

In addition, a groove or protrusion is formed on the bottom surface **1132b** of the optical member **1132** and a bonding member is applied so that the optical member **1132** can be coupled with the holder. Or, the holder may be coupled to the optical member **1132** by applying a bonding member to the groove or protrusion of the holder.

In addition, as described above, the optical member **1132** may have a structure capable of reflecting light reflected from the outside (For example, an object) into the camera module. As an embodiment, the optical member **1132** may consist of a single mirror. In addition, the optical member **1132** may improve spatial limitations of the first camera actuator and the second camera actuator by changing the path of the reflected light. As such, it should be understood that the camera module may provide a high range of magnification by extending the light path while minimizing the thickness. In addition, it should be understood that the camera module comprising the camera actuator according to the embodiment may provide a high range of magnification by extending an optical path while minimizing the thickness.

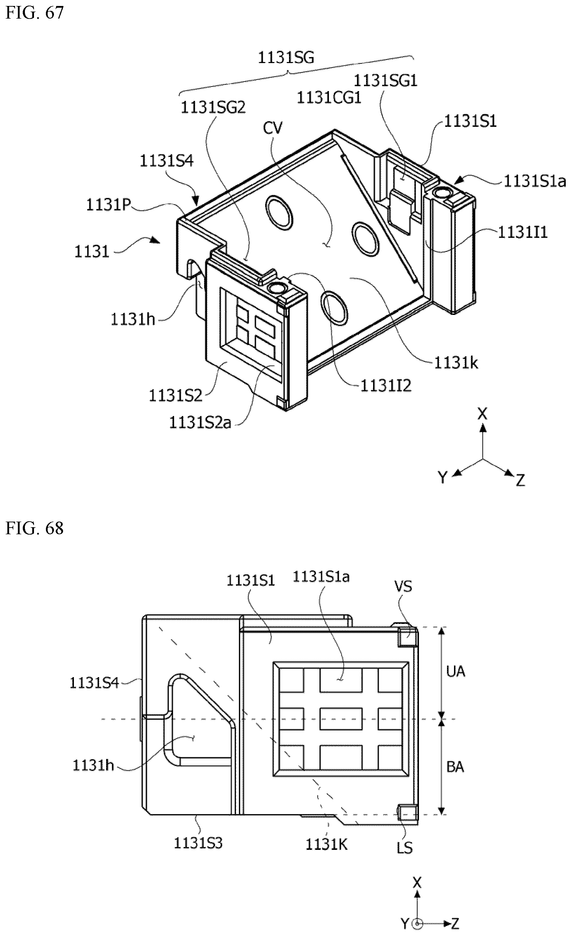

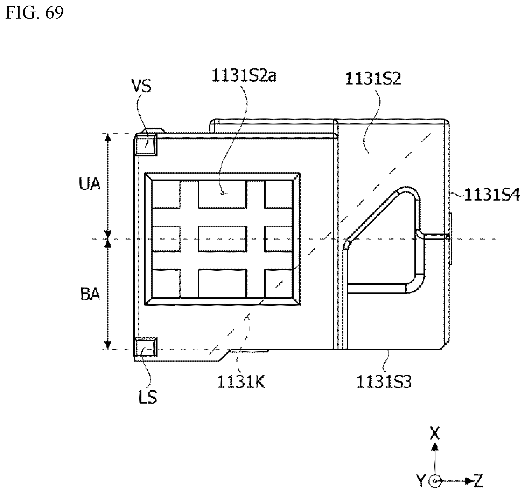

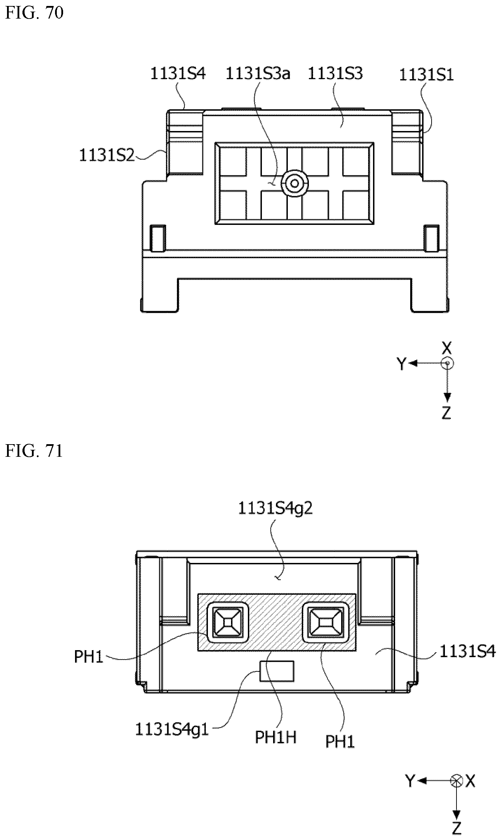

FIG. 67 is a perspective view of a holder according to a second embodiment of the present invention; FIG. 68 is a side view of a holder according to a second embodiment of the present invention; FIG. 69 is another side view of a holder according to a second embodiment of the present invention; FIG. 70 is a bottom view of a holder according to a second embodiment of the present invention; and FIG. 71 is another side view of a holder according to a second embodiment of the present invention.

Referring to FIGS. 67 to 71, the holder **1131** according to an embodiment may comprise a seating surface **1131k** on which an optical member is seated. The seating surface **1131k** may be an inclined surface. In addition, the holder **1131** may comprise a jaw portion (not shown) on the seating surface **1131k.** A jaw portion (not shown) in the holder **1131** may prevent movement of the optical member **1132.** Furthermore, the seating surface **1131k** may comprise a plurality of grooves, and a bonding member may be applied to the grooves. Thus, the optical member can be easily coupled to the seating surface **1131k.** At this time, the optical member may be bonded to the bonding member at the edge of the seating surface **1131k.** Or, the optical member may be coupled with a bonding member inside the holder groove **1131SG** of the holder **1131.** Accordingly, a bottom surface or a reflective surface of an optical member may be spaced apart from the seating surface **1131k** of the holder **1131** by a predetermined distance. For example, the seating surface **1131k** of the holder **1131** may have a space apart from the reflective surface of the optical member except for the edge. Also, the holder **1131** according to an embodiment may comprise a cavity **CV.** The cavity **CV** may be positioned between a first holder outer side surface **1131S1** and a second holder outer side surface **1131S2,** which will be described later. An optical member may be seated in the cavity **CV.**

The holder **1131** may comprise a holder hole **1131h** penetrating at least a portion of the holder **1131** in a second direction (Y-axis direction). The holder hole **1131h** is symmetrical with the control element hole in a second direction (Y-axis direction), so that the heat dissipation efficiency of the heat generated from the control element can be enhanced. Furthermore, since the weight of the holder **1131** is reduced by the holder hole **1131h,** driving efficiency for an X-axis or a Y-axis tilt of the mover can be enhanced. Furthermore, a space in which the first yoke groove and the second yoke groove are formed may be secured through the holder hole **1131h.**

In addition, the holder **1131** may comprise a plurality of outer side surfaces. For example, the holder **1131** may comprise a first holder outer side surface **1131S1,** a second holder outer side surface **1131S2,** a third holder outer side surface **1131S3,** and a fourth holder outer side surface **1131S4.**

The first holder outer side surface **1131S1** may be positioned to face the second holder outer side surface **1131S2.** That is, the first holder outer side surface **1131S1** may be disposed symmetrically with the second holder outer side surface **1131S2** with respect to a first direction (X-axis direction).

The first holder outer side surface **1131S1** of the first holder may face the side portion **1121** of the first housing. Also, the second holder outer side surface **1131S2** of the second holder may face the second housing side portion **1122.**

In addition, the first holder outer side surface **1131S1** may comprise a first seating groove **1131S1a.** The second holder outer side surface **1131S2** of the second holder may comprise a second seating groove **1131S2a.** The first seating groove **1131S1a** and the second seating groove **1131S2a** may be disposed symmetrically with respect to the first direction (X-axis direction).

Also, a first magnet may be disposed in the first seating groove **1131S1a,** and a second magnet may be disposed in the second seating groove **1131S2a.** Corresponding to the positions of the first seating groove **1131S1a** and the second seating groove **1131S2a,** the first magnet and the second magnet may also be disposed symmetrically with respect to the first direction (X-axis direction).

As described above, due to the positions of the first and second seating grooves and the first and second magnets, the electromagnetic force induced by the magnets is the same on the first holder outer side surface **S1231S1** and the second holder outer side surface **1131S2** can be provided on the same axis. For example, the region (For example, the portion with the strongest electromagnetic force) being applied on the first holder outer side surface **S1231S1** and the region (For example, the portion with the strongest electromagnetic force) being applied on the second holder outer side surface **S1231S2** may be positioned on an axis parallel to the second direction (Y-axis direction). Thus, X-axis tilting can be accurately performed.

The third holder outer side surface **1131S3** is in contact with the first holder outer side surface **1131S1** and the second holder outer side surface **1131S2,** and may be an outer side surface extending in the second direction (Y-axis direction) from the first holder outer side surface **1131S1** and the second holder outer side surface **1131S2.** In addition, the third holder outer side surface **1131S3** may be positioned between the first holder outer side surface **1131S1** and the second holder outer side surface **1131S2.**

The third holder outer side surface **1131S3** may be a bottom surface of the holder **1131.** The third holder outer side surface **1131S3** may face the third housing side portion.

In addition, the third holder outer side surface **1131S3** may comprise an extension stopper (not shown) being extended downward. Accordingly, it is possible to set limits on the range in which the holder **1131** moves in an Y-axis tilt or in a first direction (X-axis direction) or moves up and down within the housing, and at the same time, damage and the like caused by the movement of the holder **1131** can be prevented.

Also, the third holder outer side surface **1131S3** may comprise a third seating groove **1131S3a.** A third magnet may be disposed in the third seating groove **1131S3a.** For example, the area of the third seating groove **1131S3a** may be different from the areas of the first seating groove **1131S1a** and the second seating groove **1131S2b.** The area of the third seating groove **1131S3a** may be larger than the areas of the first seating groove **1131S1a** and the second seating groove **1131S2b.** Accordingly, rotation in a first direction (X-axis direction) or tilt in a second direction (Y-axis direction) can be easily performed through the third magnet disposed in the third seating groove **1131S3a**.

The fourth holder outer side surface **1131S4** is in contact with the first holder outer side surface **1131S1** and the second holder outer side surface **1131S2,** and may be an outer side surface being extended in a first direction (X-axis direction) from the third holder outer side surface **1131S3.** In addition, the fourth holder outer side surface **1131S4** may be positioned between the first holder outer side surface **1131S1** and the second holder outer side surface **1131S2.** The fourth holder outer side surface **1131S4** may be disposed on the third holder outer side surface **1131S3.**

The fourth holder outer side surface **1131S4** may be positioned to face the first surface of the tilting guide unit.

The fourth holder outer side surface **1131S4** may comprise first protrusion grooves **PH1** being disposed spaced apart in a first direction (X-axis direction) about the center of the fourth holder outer side surface. A first protruding portion of the tilting guide unit may be seated in the first protrusion groove **PH1.** The holder **1131** may be rotated in an X-axis direction or tilted in a Y-axis with respect to the first protruding portion. Furthermore, the holder **1131** may be rotated in a Y-axis direction or tilted in an X-axis with respect to the second protruding portion.

As described above, the number of first protrusion grooves **PH1** is plural, and may be overlapped in a second direction (Y-axis direction). Accordingly, when the mover is tilted in a Y-axis tilt or rotated in a first direction (X-axis direction), it can be performed accurately without tilting to one side. As an embodiment, the OIS function can be performed accurately.

Furthermore, a first additional groove **PH1H** surrounding the first protrusion groove **PH1** may be positioned outside the first protrusion groove **PH1.** The first additional groove **PH1H** may be positioned on the fourth holder outer side surface **1131S4.** Furthermore, the first additional groove **PH1H** may surround the first protrusion groove **PH1** positioned on the fourth holder outer side surface **1131S4.** With this configuration, a lubricating member for seating the first protruding portion of the tilting guide unit in the first protrusion groove **PH1** may be positioned. At this time, the lubricating member (For example, grease) may overflow due to impact between the second protruding portion and the first protrusion groove **PH1.** The first additional groove **PH1H** can accommodate the overflowing lubrication member. Thus, even if the lubricating member overflows due to collision, it may not move to the tilting guide unit. Therefore, the tilting guide unit and the housing may not be connected by the lubrication member. Therefore, the rotational drive of the tilting guide unit can be accurately performed without being hindered by the lubrication member.

Furthermore, the first yoke groove and the second yoke groove may be positioned on an optical axis direction side with respect to the first protrusion groove **PH1** or the first additional groove **PH1H**. Also, the first yoke groove and the second yoke groove may not be overlapped in an optical axis direction with respect to the first protrusion groove **PH1** or the first additional groove **PH1H**.

In addition, the fourth holder outer side surface **1131S4** may further comprise outer side surface grooves being disposed spaced apart from each other in a first direction (X-axis direction) with respect to the first additional groove **PH1H**. The outer side surface groove may comprise a first outer side surface groove **1131S4g1** and a second outer side surface groove **1131S4g2.**

The first outer side surface groove **1131S4g1** is disposed above the first additional groove **PH1H**, and the second outer side surface groove **1131S4g2** may be disposed below the first additional groove **PH1H**. That is, the first outer side surface groove **1131S4g1** may be disposed above the second outer side surface groove **1131S4g2.**

The first outer side surface groove **1131S4g1** and the second outer side surface groove **1131S4g2** may be disposed at end portions of the fourth holder outer side surface **1131S4** in a vertical direction. With this configuration, the first outer side surface groove **1131S4g1** and the second outer side surface groove **1131S4g2** can avoid the impact between the housing and the holder for the two-axis tilting of the holder **1131.** Thus, the reliability of the holder **1131** can be enhanced.

In addition, in the holder **1131** according to the embodiment, the area of the first outer side surface groove **1131S4g1** may be different from the area of the second outer side surface groove **1131S4g2.** For example, the area of the first outer side surface groove **1131S4g1** on the plane **XY** may be smaller than the area of the second outer side surface groove **1131S4g2** on the plane **XY.** Therefore, the cross-sectional area of the holder **1131** on the plane **XY** decreases as the holder **1131** moves toward an optical axis with respect to the seating surface **1131k,** and the cross-sectional area of the cavity increases toward the optical axis, and therefore, the rigidity, durability, and the like of the holder **1131** according to the area of the outer side surface grooves **1131S4g1** and **1131S4g2** of the fourth holder outer side surface **1131S4** may be maintained.

Furthermore, the holder **1131** according to an embodiment may further comprise stoppers **VS** and **LS.** The stopper may come into contact with the first holder outer side surface **1131S1** and the second holder outer side surface **1131S2.**

These stoppers may comprise an upper stopper **VS** being disposed on a bottom surface of the cavity **CV** and a lower stopper **LS** being disposed at a lower portion of the bottom surface of the cavity **CV.** In an embodiment, the bottom surface of the cavity **CV** may correspond to the seating surface **1131k.** That is, the cavity may be surrounded by the first holder outer side surface **1131S1,** the second holder outer side surface **1131S2,** and the seating surface **1131k.**

In the stopper according to an embodiment, each of the upper stopper **VS** and the lower stopper **LS** may be positioned at an end portion in a third direction (Z-axis direction) or an optical axis direction in the first holder outer side surface **1131S1** and the second holder outer side surface **1131S2.** Furthermore, the upper stopper **VS** and the lower stopper **LS** may have the same or different cross-sectional areas or volumes on a plane **XZ.**

As an embodiment, the upper stopper **VS** and the lower stopper **LS** may be disposed spaced apart from each other in a first direction (X-axis direction). As an embodiment, the first holder outer side surface **1131S1** and the second holder outer side surface **1131S2** may comprise an upper region **UA** and a lower region **BA** bisected in a first direction (X-axis direction). For example, the upper region **UA** may be positioned above the lower region **BA.** The upper stopper **VS** may be positioned in the upper region **UA.** That is, the upper stopper **VS** may be in contact with the upper region **UA** and overlapped in a second direction (Y-axis direction). Also, the lower stopper **LS** may be positioned in the lower region **BA.** In addition, the lower stopper **LS** may be in contact with the lower region **BA** and overlapped in the second direction (Y-axis direction). For example, the upper stopper **VS** may be disposed to be overlapped with the second region **S2** and the upper region **UA** in a second direction (Y-axis direction). Also, the lower stopper **VS** may be positioned to be overlapped with the second region **S2** and the lower region **BA** in a second direction (Y-axis direction). Accordingly, the upper stopper **VS** may be overlapped with an optical member in a second direction (X-axis direction).

In addition, as an embodiment, the lower stopper **LS** may be disposed closer to the third holder outer side surface **1131S3** than the upper stopper **VS.** And the area being overlapped with the cavity or optical member in a second direction (Y-axis direction) in the upper region **UA** may be larger than the area being overlapped with the cavity **CV** or optical member in a second direction (Y-axis direction) in the lower region **BA.** Accordingly, the amount of deformation due to impact may be greater in the upper region **UA** than in the lower region **BA** as it travels toward an end portion. In other words, the amount of deformation due to impact at an end portion of the lower region **BA** may be smaller than that of the upper region **UA.**

The upper stopper **VS** and the lower stopper **LS** may be extended from end portions of the first holder outer side surface **1131S1** and the second holder outer side surface **1131S2** in directions opposite to the third direction.

In addition, the upper stopper **VS** and the lower stopper **LS** may be extended inward or toward the cavity **CV.** With this configuration, when the holder **1131** tilts in a second direction (Y-axis direction) or tilts in a first direction, damages due to impact between the holder and the housing can be suppressed through the upper stopper **VS** and the lower stopper **LS.**

It may comprise a plurality of groove inner side surfaces. For example, the holder **1131** may comprise a first holder inner side surface **113111** and a second holder inner side surface **1131I2** being in contact with the cavity **CV** or the seating surface **1131k.**

The first holder inner side surface **1131I1** and the second holder inner side surface **1131I2** may be disposed to face each other in a second direction (Y-axis direction). For example, the first holder inner side surface **1131I1** and the second holder inner side surface **1131I2** may be disposed to face each other without an optical member or in the holder **1131.** In addition, a cavity **CV** may be positioned between the first holder inner side surface **1131I1** and the second holder inner side surface **1131I2.**

Furthermore, the holder **1131** according to an embodiment may comprise a holder groove **1131SG.** The number of holder grooves **1131SG** may be plural, and the prevention portion may be seated. In addition, the holder groove **1131SG** may be disposed on at least one of the first holder inner side surface **1131I1** and the second holder inner side surface **1131I2.** For example, the holder groove **1131SG** may comprise a first holder groove **1131SG1** and a second holder groove **1131SG2.** The first holder groove **1131SG1** may be disposed on the first holder inner side surface **1131I1,** and the second holder groove **1131SG2** may be disposed on the second holder inner side surface **1131I2.**

In addition, the first holder groove **1131SG1** and the second holder groove **1131SG2** may be overlapped in a second direction (Y-axis direction). Also, the first holder groove **1131SG1** and the second holder groove **1131SG2** may be symmetrically disposed with respect to an optical member or a first direction (X-axis direction).

Accordingly, when at least a portion of the prevention portion is positioned in the first holder groove **1131SG1** and the second holder groove **1131SG2,** it is possible to prevent the tilting guide unit from falling out between the housing and the mover by the prevention portion.

The first holder groove **1131SG1** and the second holder groove **1131SG2** may be disposed in the upper region **UA.** Thus, the prevention portion of the cover can be easily positioned in the first holder groove **1131SG1** and the second holder groove **1131SG2.**

In addition, the holder according to an embodiment may comprise the holder groove **1131SG** and adjacent bonding grooves **1131CG1** and **1131CG2.** The bonding grooves **1131CG1** and **1131CG2** may be disposed adjacent to the holder groove **1131SG** in an optical axis direction. For example, the bonding grooves **1131CG1** and **1131CG2** may be overlapped with each other at least a portion of the holder groove **1131SG** in an optical axis direction.

There may be a plurality of junction grooves according to an embodiment, and may comprise a first bonding groove **1131CG1** and a second bonding groove **1131CG2.** Each of the first bonding groove **1131CG1** and the second bonding groove **1131CG2** may be plural. For example, each of the first bonding groove **1131CG1** and the second bonding groove **1131CG2** is symmetrically disposed with respect to a vertical direction or the optical member.

In addition, the first bonding groove **1131CG1** and the second bonding groove **1131CG2** may be disposed on the first holder inner side surface **1131I1** and the second holder inner side surface **1131I2.** In addition, the first bonding groove **1131CG1** and the second bonding groove **1131CG2** may be disposed in the upper region **UA** like the holder groove **1131SG.**

The first bonding groove **1131CG1** and the second bonding groove **1131CG2** may be disposed spaced apart from each other in an optical axis direction, and the holder groove **1131SG** may be disposed between the first bonding groove **1131CG1** and the second bonding groove **1131CG2.**

Also, a bonding member may be applied in the first bonding groove **1131CG1** and the second bonding groove **1131CG2.** Accordingly, since the prevention portion in the holder groove **1131SG** is in contact with the inner side surface of the holder groove **1131SG,** even if an impact is applied to the holder, the coupling between the holder and the optical member can be maintained through the bonding member inside the first and second bonding holes adjacent to the holder groove **1131SG1.** Thus, separation between the holder and the optical member can be prevented.

Furthermore, in the first camera actuator according to an embodiment, the holder **1131** may comprise a holder protruding portion **1131p** being extended upward on an upper surface.

The holder protruding portion **1131p** may be disposed adjacent to the first bonding groove **1131CG1** and the second bonding groove **1131CG2.** For example, the holder protruding portion **1131p** may be disposed along edges of the first bonding groove **1131CG1** and the second bonding groove **1131CG2.** Accordingly, in the holder protruding portion **1131p,** the bonding member applied inside the first bonding groove **1131CG1** and the second bonding groove **1131CG2** may not overflow from the first bonding groove **1131CG1** and the second bonding groove **1131CG2.**

Furthermore, the holder protruding portion **1131p** may operate as a stopper for tilting in a first direction (X-axis direction) or a second direction (Y-axis direction).

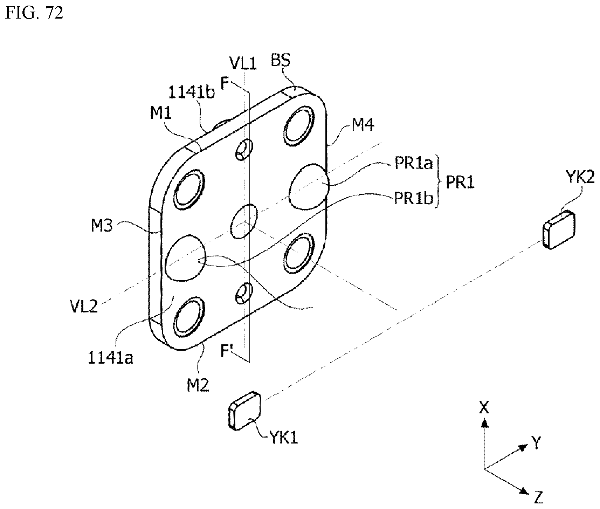

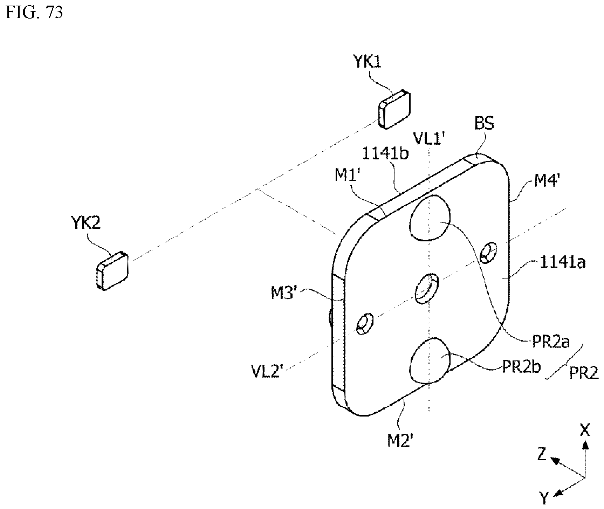

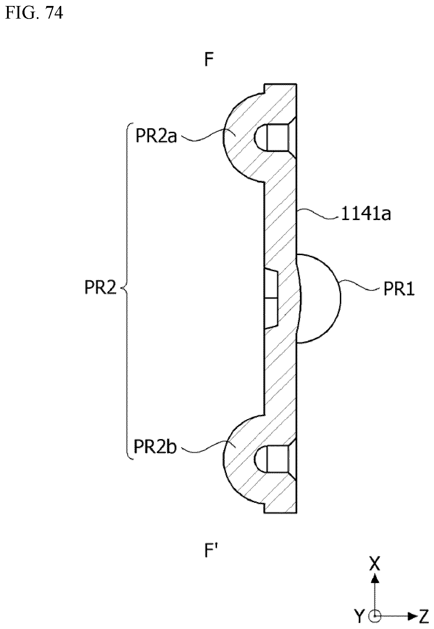

FIG. 72 is a perspective view of a tilting guide unit of a first camera actuator according to a second embodiment of the present invention; FIG. 73 is a perspective view in a direction different from that of FIG. 72; and FIG. 74 is a cross-sectional view viewed from **F-F'** in FIG. 72.

Referring to FIGS. 72 to 74, a rotating part **1140** according to an embodiment may comprise a tilting guide unit **1141** and a yoke part. The yoke part may comprise a first yoke **YK1** and a second yoke **YK2.** The first yoke **YK1** and the second yoke **YK2** may be positioned correspondingly with respect to the tilting guide unit **1141.** For example, the guide unit **1141** may be positioned in a region between the first yoke **YK1** and the second yoke **YK2.** In addition, the first yoke **YK1** and the second yoke **YK2** may provide coupling force among the mover, the tilting guide unit **1141,** and the housing by applying the same contents as described above.

First, the tilting guide unit **1141** may comprise: a base **BS;** a first protruding portion **PR1** being protruded from the first surface **1141a** of the base **BS;** and a second protruding portion **PR2** being protruded from the second surface **1141b** of the base **BS.** In addition, depending on the structure, the first protruding portion and the second protruding portion may have opposite surfaces, but will be described with reference to the drawings hereinafter. In addition, the first protruding portion **PR1** and the second protruding portion **PR2** may be formed integrally or separately from the base **BS,** and as shown in the drawing, the first protruding portion **PR1** and the second protruding portion **RP2** may have a spherical shape or a hemispherical shape like a ball.

First, the base **BS** may comprise a first surface **1141a** and a second surface **1141b** facing the first surface **1141a.** That is, the first surface **1141a** may be spaced apart from the second surface **1141b** in a third direction (Z-axis direction), and it may be an outer side surface facing each other or facing each other inside the tilting guide unit **1141.** The first surface **1141a** is positioned facing the fourth holder outer side surface (or the fourth housing side portion), and the second surface **1141b** may be positioned to face the fourth holder outer side surface (or the fourth housing side portion).

The first surface **1141a** and the second surface **1141b** may comprise a plurality of holes or grooves, and the weight of the tilting guide unit **1141** may be reduced through the holes or grooves.

The tilting guide unit **1141** may comprise a first protruding portion **PR1** being extended to one side on the first surface **1141a.** According to an embodiment, the first protruding portion **PR1** may be protruded from the first surface **1141a** toward the fourth holder outer side surface. The first protruding portion **PR1** is plural, and may comprise a first-first protruding portion **PR1a** and a first-second protruding portion **PR1b.**

The first-first protruding portion **PR1a** and the first-second protruding portion **PR1b** may be positioned side by side in a second direction (Y-axis direction). In other words, the first-first protruding portion **PR1a** and the first-second protruding portion **PR1b** may be overlapped in a second direction (Y-axis direction). In addition, in an embodiment, the first-first protruding portion **PR1a** and the first-second protruding portion **PR1b** may be bisected by a virtual line being extended in a second direction (Y-axis direction).

In addition, the first-first protruding portion **PR1a** and the first-second protruding portion **PR1b** have curvatures, and may be, for example, in the shape of a hemisphere. Furthermore, in the present specification, the first protruding portion and the second protruding portion may refer to a hemispherical protrusion or a ball seated in a groove. Also, the first-first protruding portion **PR1a** and the first-second protruding portion **PR1b** may be in contact with the first protrusion groove of the holder at a point most spaced apart from the first surface **1141a** of the base **BS.**

In addition, an align groove (not shown) may be positioned on the first surface **1141a.** An alignment groove (not shown) may be disposed on one side of the first surface **1141a** to provide an assembly position or assembly direction of the tilting guide unit **1141** during an assembly process.

In addition, the tilting guide unit **1141** may comprise a second protruding portion **PR2** being extended to one side on the second surface **1141a.** According to an embodiment, the second protruding portion **PR2** may be protruded toward the fourth housing side portion from the second surface **1141b.** The second protruding portion **PR2** is plural, and may comprise a second-first protruding portion **PR2a** and a second-second protruding portion **PR2b** in an embodiment.

The second-first protruding portion **PR2a** and the second-second protruding portion **PR2b** may be positioned side by side in a first direction (X-axis direction). That is, the second-first protruding portion **PR2a** and the second-second protruding portion **PR2b** may be overlapped in a first direction (X-axis direction). In addition, in an embodiment, the second-first protruding portion **PR2a** and the second-second protruding portion **PR2b** may be bisected by a virtual line being extended in a first direction (X-axis direction).

The second-first protruding portion **PR2a** and the second-second protruding portion **PR2b** may have a curvature, and for example, may be in the shape of a hemisphere. Further, the second-first protruding portion **PR2a** and the second-second protruding portion **PR2b** maybe in contact with the second protrusion groove of the side portion of the fourth housing at a point spaced apart from the second surface **1141b** of the base **BS.**

The first-first protruding portion **PR1a** and the first-second protruding portion **PR1b** may be positioned in a region between the second-first protruding portion **PR2a** and the second-second protruding portion **PR2b.** According to an embodiment, the first-first protruding portion **PR1a** and the first-second protruding portion **PR1b** may be positioned at the center of the separation space between the second-first protruding portion **PR2a** and the second-second protruding portion **PR2b** in a first direction. Due to this configuration, the first camera actuator according to an embodiment may cause the Y-axis tilt angle to have the same range with respect to a Y-axis. In other words, the tilting guide unit **1141** may provide the same range in which the holder can tilt in Y-axis (For example, positive/negative range) with respect to the first-first protruding portion **PR1a** and the first-second protruding portion **PR1b.**

In addition, the second-first protruding portion **PR2a** and the second-second protruding portion **PR2b** may be positioned in a region between the first-first protruding portion **PR1a** and the first-second protruding portion **PR1b** in a second direction. According to an embodiment, the second-first protruding portion **PR2a** and the second-second protruding portion **PR2b** may be positioned at the center of the separation space between the first-first protruding portion **PR1a** and the first-second protruding portion **PR1b** in a second direction. Due to this configuration, the actuator according to an embodiment may provide the same range in which the holder can tilt in X-axis (For example, positive/negative range) with respect to the X-axis. In other words, the tilting guide unit **1141** may provide the same range in which the holder can tilt in X-axis (For example, positive/negative range) with respect to the second-first protruding portion **PR2a** and the second-second protruding portion **PR2b.**

Specifically, the first surface **1141a** may comprise a first outer side line **M1,** a second outer side line **M2,** a third outer side line **M3,** and a fourth outer side line **M4.** The first outer side line **M1** and the second outer side line **M2** may face each other, and the third outer side line **M3** and the fourth outer side line **M4** may face each other. Also, a third outer side line **M3** and a fourth outer side line **M4** may be positioned between the first outer side line **M1** and the second outer side line **M2.** Further, the first outer side line **M1** and the second outer side line **M2** are perpendicular to a first direction (X-axis direction), but the third outer side line **M3** and the fourth outer side line **M4** may be perpendicular to a first direction (X-axis direction).

At this time, the first protruding portion **PR1** may be positioned on the second virtual line **VL2.** Here, the first virtual line **VL1** is a line that bisects the first outer side line **M1** and the second outer side line **M2.** Also, the second virtual line **VL2** is a line that bisects the third outer side line **M3** and the fourth outer side line **M4.** Or, the first and third virtual lines **VL1** and **VL1'** are lines that bisect the base **BS** in a second direction (Y-axis direction). The second and fourth virtual lines **VL2** and **VL2'** are lines that bisect the base **BS** in a first direction (X-axis direction). Also, the first center point **C1** may be an intersection of the first virtual line **VL1** and the second virtual line **VL2.** Or, it may be a point corresponding to the center of gravity according to the shape of the tilting guide unit **1141.**

Accordingly, the tilting guide unit **1141** can easily perform Y-axis tilt through the first protruding portion **PR1.** In addition, since the tilting guide unit **1141** performs the Y-axis tilt with respect to the second virtual line **VL2,** rotational force can be uniformly applied to the tilting guide unit **1141.** Accordingly, the X-axis tilt can be precisely performed and the reliability of the device can be improved.

In addition, the first-first protruding portion **PR1a** and the first-second protruding portion **PR1b** may be formed symmetrically with respect to the first virtual line **VL1** and the second virtual line **VL2.** Or, the first-first protruding portion **PR1a** and the first-second protruding portion **PR1b** may be symmetrically positioned with respect to the first central point **C1.** With this configuration, when tilting the Y-axis, the supporting force being supported by the first protruding portion **PR1** can be equally applied to the upper and lower sides with respect to the second virtual line **VL2.** Thus, the reliability of the tilting guide unit can be improved.

In addition, the second surface **1141b** may comprise a fifth outer side line **M1',** a sixth outer side line **M2',** a seventh outer side line **M3',** and an eighth outer side line **M4'.** The fifth outer side line **M1'** and the sixth outer side line **M2'** may face each other, and the seventh outer side line **M3'** and the eighth outer side line **M4'** may face each other. The seventh outer side line **M3'** and the eighth outer side line **M4'** may be positioned between the fifth outer side line **M1'** and the sixth outer side line **M2'.** The fifth outer side line **M1'** and the sixth outer side line **M2'** are perpendicular to a first direction (X-axis direction), but the seventh outer side line **M3'** and the eighth outer side line **M4'** may be parallel to a first direction (X-axis direction).

In addition, since the tilting guide unit **1141** performs the X-axis tilt with respect to the third virtual line **VL1',** rotational force can be uniformly applied to the tilting guide unit **1141.** Accordingly, the X-axis tilt can be precisely performed and the reliability of the device can be improved.

In addition, the second-first protruding portion **PR2a** and the second-second protruding portion **PR2b** may be symmetrically disposed on the fourth virtual line **VL2'** on the third virtual line **VL1'.** Or, the second-first protruding portion **PR2a** and the second-second protruding portion **PR2b** may be symmetrically positioned with respect to the second central point **C1'.** With this configuration, when tilting the X-axis, the supporting force being supported by the second protruding portion **PR2** can be equally applied to the upper and lower sides of the tilting guide unit with respect to the third virtual line **VL1'.** Thus, the reliability of the tilting guide unit can be improved. Here, the third virtual line **VL1'** is a line that bisects the fifth outer side line **M1'** and the sixth outer side line **M2'.** The fourth virtual line **VL2'** is a line that bisects the seventh outer side line **M3'** and the eighth outer side line **M4'.** And the second central point **C1'** may be the intersecting point of the third virtual line **VL1'** and the fourth virtual line **VL2'.** Or, it may be a point corresponding to the center of gravity according to the shape of the tilting guide unit **1141.**

However, the above configuration is an example, and the tilting guide unit **1141** may be formed in various shapes for X-axis tilt or Y-axis tilt.

Also, the first yoke **YK1** and the second yoke **YK2** may have the same length in a first direction. For example, the length of the first yoke **YK1** in a first direction may be equal to the length of the second yoke **YK2** in a first direction. Accordingly, the attractive force between the holder **1131** and the housing may be equally applied to both sides of the tilting guide unit **1141.** As a result, the force applied to the tilting guide unit **1141** is uniformly generated with respect to the tilting guide unit, so that rotation by the tilting guide unit can be accurately performed.

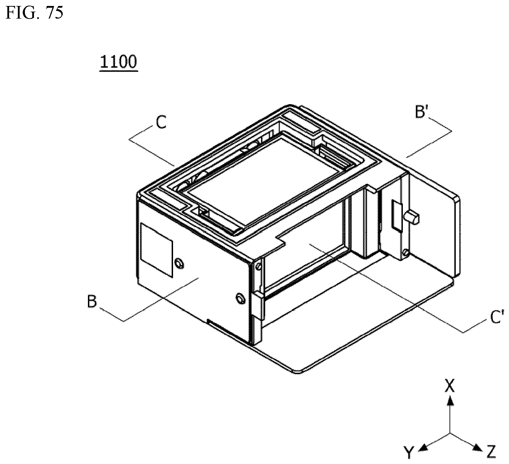

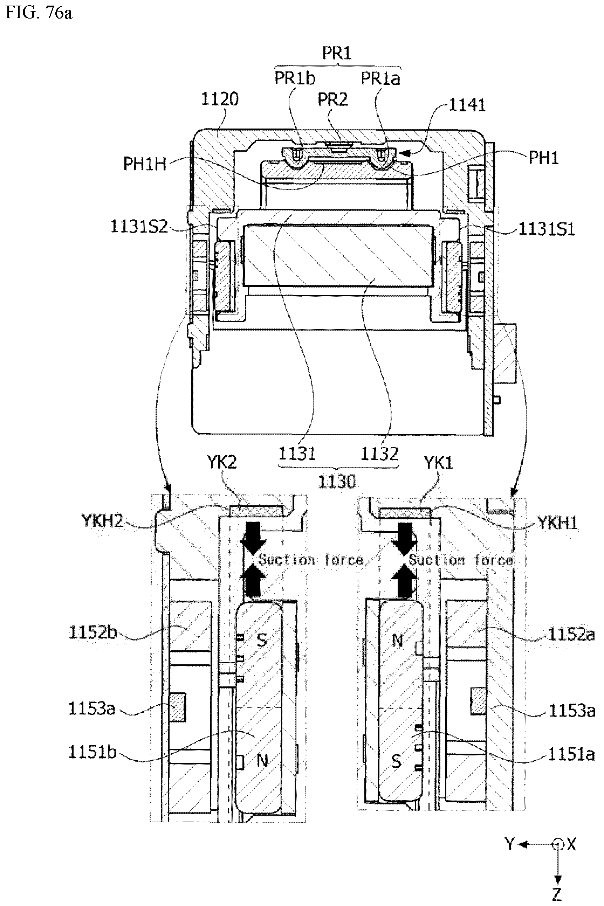

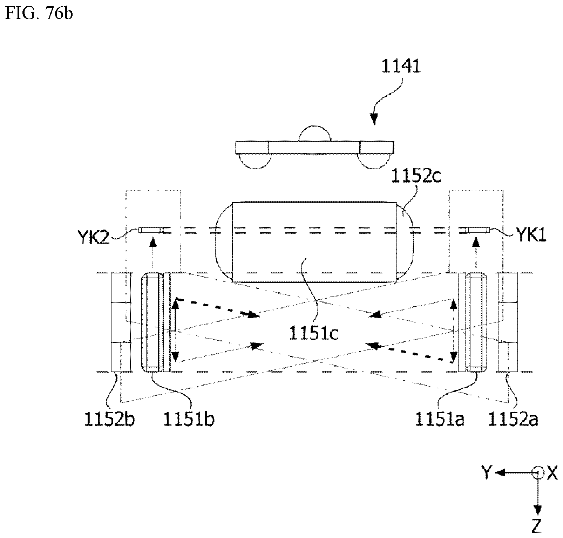

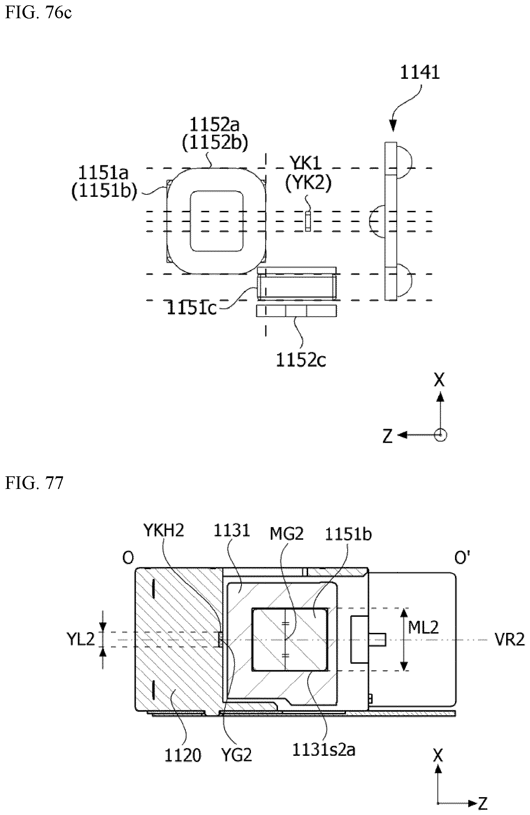

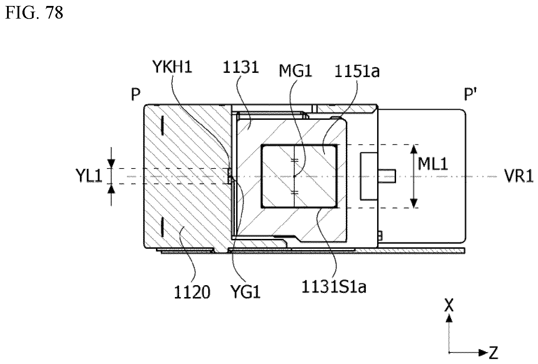

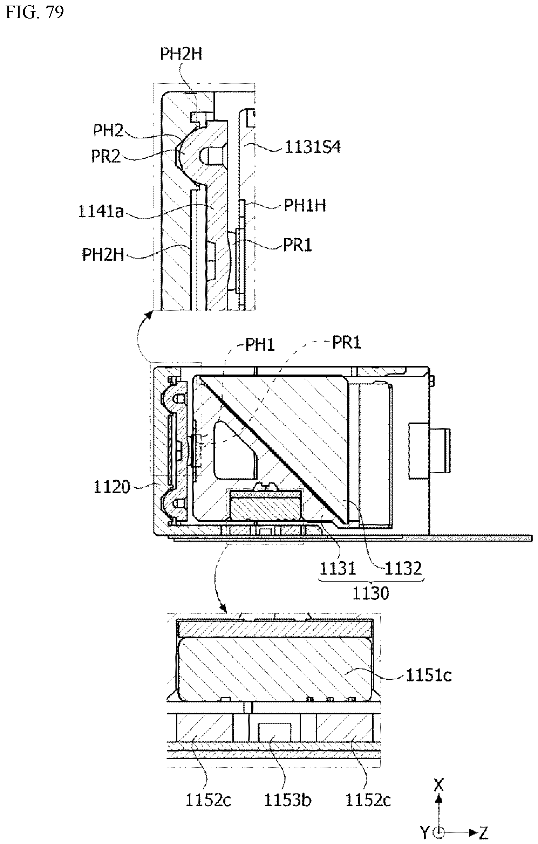

FIG. 75 is a perspective view of a first camera actuator according to a second embodiment of the present invention; FIG. 76a is a view viewed from **B-B'** in FIG. 75; FIG. 76b is a plan view of some components of a first camera actuator; FIG. 76c is a side view of a portion of a first camera actuator; FIG. 77 is a view viewed from **O-O'** in FIG. 76a; FIG. 78 is a view viewed from **P-P'** in FIG. 76a; and FIG. 79 is a view viewed from **C-C'** in FIG. 75.

Referring to FIGS. 75 to 79, the first coil **1152a** is positioned on the side portion 1121 of the first housing, and the first magnet **1151a** may be positioned on the first holder outer side surface **1131S1** of the holder **1131.** Accordingly, the first coil **1152a** and the first magnet **1151a** may be positioned to face each other. The first magnet **1151a** may be at least partially overlapped with the first coil **1152a** in a second direction (Y-axis direction). Furthermore, the first magnet **1151a** may be coupled to a coupling yoke positioned inside the first seating groove of the first holder outer side surface **1131S1.** Furthermore, a bonding member may be additionally applied inside the first seating groove. Similarly, the second magnet **1151b** may be coupled to a coupling yoke positioned in the second seating groove of the second holder outer side surface **1131S2.** In addition, a bonding member may be additionally applied in the second seating groove. This may be equally applied to the third magnet and the third seating groove.

In addition, the second coil **1152b** may be positioned on the second housing side portion **1122,** and the second magnet **1151b** may be positioned on the second holder outer side surface **1131S2** of the holder **1131.** Accordingly, the second coil **1152b** and the second magnet **1151b** may be positioned to face each other. The second magnet **1151b** may at least partially be overlapped with the second coil **1152b** in a second direction (Y-axis direction).

In addition, the first coil **1152a** and the second coil **1152b** are overlapped in a second direction (Y-axis direction), and the first magnet **1151a** and the second magnet **1151b** may be overlapped in a second direction (Y-axis direction). With this configuration, the electromagnetic force applied to the outer side surface of the holder (first holder outer side surface and second holder outer side surface) is positioned on a parallel axis in a second direction (Y-axis direction), so that the X-axis tilt can be performed accurately and precisely.

In addition, the second protruding portions **PR2a** and **PR2b** of the tilting guide unit **1141** are positioned inside the second protrusion groove **PH2** of the first housing **1120** and may be in contact with the second protrusion groove **PH2.** Also, when the X-axis tilt is performed, the second protruding portions **PR2a** and **PR2b** may be reference axes (or rotation axes) of the tilt. Accordingly, the tilting guide unit **1141** and the mover **1130** may move left and right.

In addition, the contact point between the second protruding portion **PR2** and the fourth housing side portion **1124** and the center of the second protrusion groove **PH2** may be overlapped in a third direction (Z-axis direction) or may be positioned on an axis parallel to a third direction. Accordingly, the actuator according to an embodiment may enhance the accuracy of X-axis tilt through the second protruding portion **PR2.**

And, as described above, the first Hall sensor **1153a** may be positioned outside for electrical connection and coupling with the substrate unit **1154.** Furthermore, the number of Hall sensors may be plural, and may be positioned inside the first to third coils. However, it is not limited to these locations.

In addition, the third coil **1152c** may be positioned in the third housing side portion **1123,** and the third magnet **1151c** may be positioned on the third holder outer side surface **1131S3** of the holder **1131.** The third coil **1152c** and the third magnet **1151c** may be overlapped at least partially in a first direction (X-axis direction). Accordingly, the strength of the electromagnetic force between the third coil **1152c** and the third magnet **1151c** can be easily controlled.

As described above, the tilting guide unit **1141** may be positioned on the fourth holder outer side surface **1131S4** of the holder **1131.**

Further referring to FIGS. 76b and 76c, in a first camera actuator according to an embodiment, yoke parts **YK1** and **YK2** may be positioned in a region between the tilting guide unit **1141** and any one of the side surface magnets. For example, the yoke may be positioned in a region between the tilting guide unit **1141** and any one of the first magnet **1151a** and the second magnet **1151b.** As an embodiment, the third yoke **1152c** and the third magnet **1152c** may be positioned at a lower portion of the first yoke **YK1** and the second yoke **YK2.** Furthermore, the tilting guide unit **1141** may be overlapped with the third magnet **1151c** in an optical axis or a third direction (Z-axis direction). The tilting guide unit **1141** may or may not be overlapped with the third coil **1152c** in a third direction.

Furthermore, a third magnet **1151c** and a third coil **1152c** may be positioned between the first yoke **YK1** and the second yoke **YK2.** However, as described above, the third yoke **1152c** and the third magnet **1152c** may be positioned at a lower portion of the first yoke **YK1** and the second yoke **YK2.** Accordingly, the first yoke **YK1** and the second yoke **YK2** may not be overlapped with the third yoke **1152c** and the third magnet **1152c** in a second direction.

Unlike this, each of the first yoke **YK1** and the second yoke **YK2** may be overlapped with each of the first magnet **1151a** and the second magnet **1151b** in a third direction in order to form a force (For example, attractive force) with the first magnet **1151a** and the second magnet **1151b.**

And along the optical axis direction or the third direction (Z-axis direction), the first and second yokes **YK1** and **YK2** or the third coil (or magnet) may be positioned between the tilting guide unit **1141** and the first and second coils (or first and second magnets).

Furthermore, a first protruding portion of the tilting guide unit may be positioned between the first yoke **YK1** and the second yoke **YK2.** The center of the first protruding portion may be positioned on an axis in the same optical axis direction as the center of the yoke parts **YK1** and **YK2.** For example, the distance between the centers of the yoke parts **YK1** and **YK2** and the third coil **1152c** in a first direction (X-axis direction) can be the same as the distance between the yoke parts **YK1** and **YK2** and the center of the first protruding portion in a first direction (X-axis direction). Or, the centers of the yoke parts **YK1** and **YK2** (For example, bisect in a first direction) and the center of the first protruding portion (For example, bisect in a first direction) may be positioned on the same plane **YZ.**

Furthermore, the first yoke **YK1** and the second yoke **YK2** do not overlap with the optical member in an optical axis direction or a third direction. For example, a virtual line connecting the first yoke and the second yoke and the optical member may be overlapped. However, the optical member **1132** may be positioned between the first yoke **YK1** and the second yoke **YK2.** In addition, the optical member may be positioned between the first magnet **1151a** and the second magnet **1151b** and may be overlapped with the first magnet **1151a** and the second magnet **1151b** in a second direction. This may be equally applied to the first and second coils.

And, as will be described later, OIS implementation can be performed while the mover **1130** is rotated at a second angle **θ2** in a Y-axis direction by the second electromagnetic force between the first and second magnets **1151a** and **1151b** and the first and second coils **1152a** and **1152b (Y1** -> **Y1b).** At this time, the attractive force between the yoke part **YK1** and the first and second magnets **1151a** and **1151b** may act. Furthermore, there may be a difference in relative force depending on the rotation direction of the mover. For example, when rotating in one direction, a composite force may act on the second magnet in a direction opposite to the direction of an optical axis, and a composite force may act on the first magnet in an optical axis direction. Further, when rotating in the other direction, a composite force may act on the second magnet in a direction of an optical axis, and a composite force may act on the first magnet in a direction opposite to the direction of an optical axis.

Further referring to FIGS. 77 and 78, in the tilting guide unit **1141,** the first protruding portion **PR1** may be seated in the first protrusion groove **PH1** of the fourth holder outer side surface **1131S4.** In the tilting guide unit **1141,** the second protruding portion **PR2** may be seated in the second protrusion groove **PH2** of the fourth housing side portion. In addition, an attractive force is generated between the first yoke **YK1** and the first magnet **1151a.** In addition, an attractive force is generated between the second yoke **YK2** and the second magnet **1151b.** The attractive force between the yoke and the magnet may be the attractive force between the holder 1131 and the first housing **1120.** Accordingly, the tilting guide unit **1141** between the fourth holder outer side surface **1131S4** and the fourth housing side portion may be pressed by the holder **1131** and the first housing **1120.** In this way, the position of the tilting guide unit **1141** can be maintained. In other words, even when the tilting guide unit **1141** rotates, the tilting guide unit **1141** may not be dropped off from the holder and the housing. In this way, the first and second magnets **1151a** and **1151b** may simultaneously provide a driving force for tilting the holder **1131** in an X direction or rotating in the second direction and a suction force between the first and second yokes **YK1** and **YK2.** Thus, the yoke or magnet may not be disposed inside the tilting guide unit **1141** or adjacent to the tilting guide unit **1141.** Therefore, it is possible to easily provide a suction force for maintaining the position of the tilting guide unit even without an additional magnet.

As an embodiment, the yoke part may be disposed adjacent to the magnet and not be overlapped with the tilting guide unit **1141.** For example, the first yoke **YK1** may be disposed adjacent to the first magnet **1151a.** Also, the second yoke **YK2** may be disposed adjacent to the second magnet **1151b.** In addition, the first yoke **YK1** and the second yoke **YK2** may not be overlapped with the tilting guide unit **1141** along the optical axis direction (Z-axis direction).

Accordingly, the first yoke **YK1** and the second yoke **YK2** may be disposed outside the tilting guide unit **1141.** Furthermore, the first yoke **YK1** and the second yoke **YK2** may be symmetrically disposed with respect to the tilting guide unit, the optical member **1132,** and the holder **1131.** With this configuration, the suction force by the first yoke **YK1** and the second yoke **YK2** can be uniformly applied between the holder **1131** and the first housing **1120.** That is, by the first yoke **YK1** and the second yoke **YK2,** the X-axis tilt of the holder **1131** and the optical member **1132** can be accurately achieved without tilting to one side.

Also, the first yoke **YK1** and the second yoke **YK2** may be positioned between the tilting guide unit **1141** and the first and second magnets **1151a** and **1151b.** For example, the first yoke **YK1** may be positioned in a region between the tilting guide unit **1141** and the first magnet **1151a.** The second yoke **YK2** may be positioned in a region between the tilting guide unit **1141** and the second magnet **1151b.**

The first yoke **YK1** may be positioned to correspond to the first magnet **1151a.** The second yoke **YK2** may also be positioned to correspond to the second magnet **1151b.**

As an embodiment, the first yoke **YK1** may be overlapped with the first magnet **1151a** along an optical axis direction (Z-axis direction). Also, the first yoke **YK1** may not be overlapped with the first coil **1152a** along an optical axis direction. In other words, the first yoke **YK1** may be misaligned with the first coil **1152a** in an optical axis direction.

In addition, the second yoke **YK2** may be overlapped with the second magnet **1151b** along an optical axis direction (Z-axis direction). Also, the second yoke **YK2** may not be overlapped with the second coil **1152b** along an optical axis direction. In other words, the second yoke **YK2** may be misaligned with the second coil **1152b** in an optical axis direction.

With this configuration, the first yoke **YK1** can minimize interference with the first coil **1152a** and provide maximum suction force with the first magnet **1151a.** In addition, the second yoke **YK2** may also minimize interference with the second coil **1152b** and provide maximum suction force with the second magnet **1151b.**

Furthermore, the first magnet **1151a** and the second magnet **1151b** are symmetrically disposed inside the holder **1131,** and the first yoke **YK1** and the second yoke **YK2** may be symmetrically disposed with respect to the holder **1131.** Thus, when the tilting guide unit **1141** performs the X-axis tilt, accurate driving can be achieved without tilting to one side.

Furthermore, the centers **YG1** and **YG2** of the first and second yokes **YK1** and **YK2** may correspond to the centers **MG1** and **MG2** of the first and second magnets **1151a** and **1151b.** For example, the centers **YG1** and **YG2** of the first yoke **YK1** and the second yoke **YK2** may pass through the first bisector **VR1** in a first direction of the first yoke **YK1** or the second yoke **YK2.** In addition, the centers **MG1** and **MG2** of the first and second magnets **1151a** and **1151b** may pass through the second bisector **VR2** in a first direction of the first and second magnets **1151a** and **1151b.**

That is, the first yoke **YK1** and the first magnet **1151a** may be bisected in a first direction (X-axis direction) with respect to the first bisector **VR1.** Also, the second yoke **YK2** and the second magnet **1151b** may be bisected in a first direction (X-axis direction) with respect to the second bisector **VR2.** Accordingly, the suction force between the first and second yokes **YK1** and **YK2** and the first and second magnets **1151a** and **1151b** may not affect the Y-axis tilt.

Furthermore, the lengths **YL1** and **YL2** of the first and second yokes **YK1** and **YK2** in a first direction may be different from or identical to the lengths **ML1** and **ML2** of the first and second magnets **1151a** and **1151b** in a first direction. As an embodiment, the lengths **YL1** and **YL2** of the first and second yokes **YK1** and **YK2** in a first direction may differ from the lengths **ML1** and **ML2** of the first and second magnets **1151a** and 1151b in a first direction. Specifically, the lengths **YL1** and **YL2** of the first and second yokes **YK1** and **YK2** in a first direction may be smaller than the lengths **ML1** and **ML2** of the first and second magnets **1151a** and **1151b** in a first direction. Accordingly, rotation of the tilting guide unit **1141** and the mover **1130** can be easily performed with respect to the first housing that is fixed.

Furthermore, in a first camera actuator according to an embodiment, the first magnet **1151a** and the first yoke **YK1** may be disposed between the first coil **1152a** and the optical member **1132.** Furthermore, the first yoke **YK1** and the second yoke **YK2** may be disposed outside the optical member **1132.** Specifically, the first yoke **YK1** and the second yoke **YK2** may not be overlapped with the optical member **1132** in an optical axis direction. In other words, the first yoke **YK1** and the second yoke **YK2** may be misaligned with the optical member **1132** along an optical axis direction.

In addition, the second magnet **1151b** and the second yoke **YK2** may be disposed between the second coil **1152b** and the optical member **1132.** Thus, the yoke for generating the suction force may not be positioned on the center of the mover **1130** or the center of the second protrusion groove. Therefore, even if the suction force is non-uniform with respect to the center of the mover **1130** or the center of the second protrusion groove, it is possible to easily adjust the first yoke **YK1** and the second yoke **YK2.**

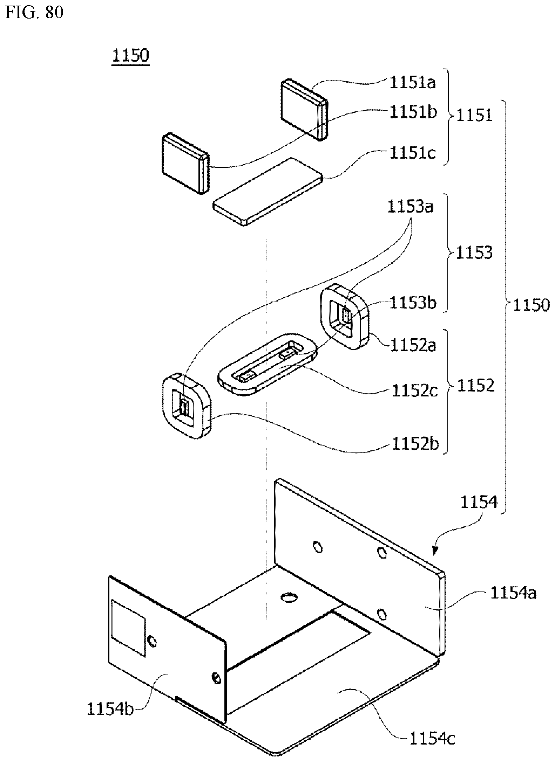

FIG. 80 is a diagram illustrating a first driving unit of a first camera actuator according to a second embodiment of the present invention

Referring to FIG. 80, a first driving unit **1150** comprises a driving magnet **1151,** a driving coil **1152,** a Hall sensor unit **1153,** and a substrate unit **1154.**

In addition, as described above, the driving magnet **1151** may comprise a first magnet **1151a,** a second magnet **1151b,** and a third magnet **1151c** providing driving force by electromagnetic force. The first magnet **1151a,** the second magnet **1151b,** and the third magnet **1151c** may be positioned on an outer side surface of the holder **1131,** respectively.

In addition, the driving coil **1152** may comprise a plurality of coils. As an embodiment, the driving coil **1152** may comprise a first coil **1152a,** a second coil **1152b,** and a third coil **1152c.**

The first coil **1152a** may be positioned facing the first magnet **1151a.** Accordingly, the first coil **1152a** may be positioned in the first housing hole **1121a** of the first housing side portion **1121** as described above. In addition, the second coil **1152b** may be positioned facing the second magnet **1151b.** Accordingly, the second coil **1152b** may be positioned in the second housing hole **1122a** of the second housing side portion **1122** as described above.

The first camera actuator according to an embodiment can provide the best optical properties by controlling the rotation of the mover **1130** in a first axis (X-axis direction) or a second axis (Y-axis direction) by the electromagnetic force between the driving magnet **1151** and the driving coil **1152,** thereby minimizing the occurrence of a decent or tilt phenomenon when implementing OIS.

In addition, according to embodiment, by implementing OIS through the tilting of the guide unit **1141** of the rotating part **1140** being disposed between the first housing **1120** and the mover **1130,** the size limitation of the actuator is resolved, so that an ultra-slim and subminiature camera actuator and a camera module comprising the same can be provided.

The substrate unit **1154** may comprise a first substrate side portion **1154a,** a second substrate side portion **1154b,** and a third substrate side portion **1154c.**

The first substrate side portion **1154a** and the second substrate side portion **1154b** may be disposed to face each other. Also, the third substrate side portion **1154c** may be positioned between the first substrate side portion **1154a** and the second substrate side portion **1154b.**

In addition, the first substrate side portion **1154a** may be positioned between the first housing side portion and the shield can, and the second substrate side portion **1154b** may be positioned between the second housing side portion and the shield can. In addition, the third substrate side portion **1154c** may be positioned between the third housing side portion and the shield can, and may be a bottom surface of the substrate unit **1154.**

The first substrate side portion **1154a** may be coupled to and electrically connected to the first coil **1152a.** In addition, the first substrate side portion **1154a** may be coupled to and electrically connected to the first Hall sensor **1153a.**

The second substrate side portion **1154b** may be coupled to and electrically connected to the second coil **1152b.** In addition, it should be understood that the second substrate side portion **1154b** may be coupled to and electrically connected to the first Hall sensor.

The third substrate side portion **1154c** may be coupled to and electrically connected to the third coil **1152c.** In addition, the third substrate side portion **1154c** may be coupled to and electrically connected to the second Hall sensor **1153b.**

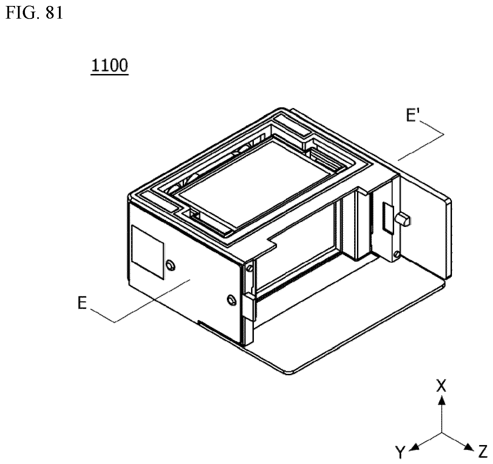

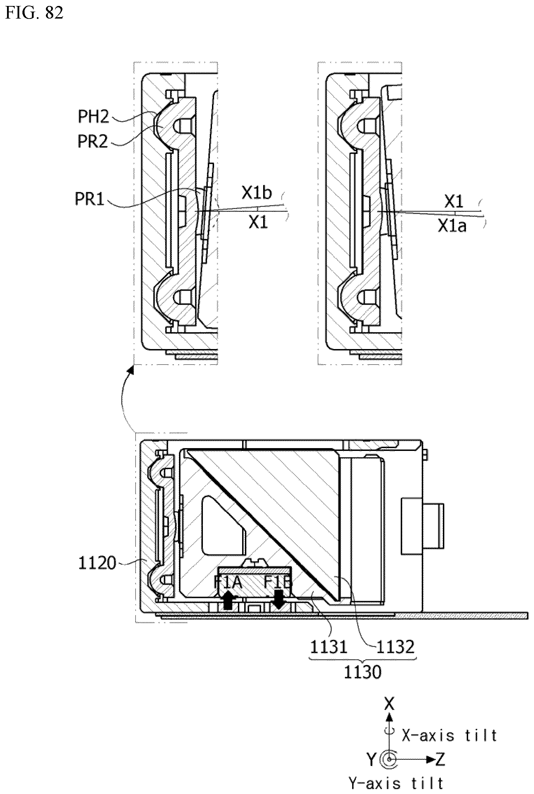

FIG. 81 is a perspective view of a first camera actuator according to a second embodiment of the present invention; and FIG. 82 is a view viewed from **D-D'** in FIG. 81.

Referring to FIGS. 81 and 82, Y-axis tilt may be performed. That is, OIS can be implemented by rotating in a first direction (X-axis direction).

As an embodiment, the third magnet **1151c** being disposed at a lower portion of the holder **1131** may tilt or rotate the mover **1130** in a first direction (X-axis direction) by forming electromagnetic force with the third coil **1152c.**

Specifically, the tilting guide unit **1141,** the first housing **1120,** and the mover **1130** may be coupled to one another by the first yoke **YK1** and the second yoke **YK2.** In addition, a plurality of first protruding portions **PR1** may be spaced apart from each other in a second direction (Y-axis direction) to support the mover **1130.** In addition, the tilting guide unit **1141** can be rotated in a first direction (X-axis direction) or tilted along the Y-axis using the first protruding portion **PR1** being protruded toward the holder (in particular, the fourth holder outer side surface) as a reference axis (or rotation axis).

For example, OIS may be implemented as the mover **1130** is rotating in an X-axis direction (From **X1** to **X1a)** at a first angle **θ1** by the first electromagnetic forces **F1A** and **F1B** between the third magnet **1151c** disposed in a third seating groove and the third coil unit **1152c** disposed on a side portion of the third substrate.

Conversely, OIS may be implemented as the mover **1130** is rotating in an opposite direction to X-axis direction (From **X1** to **X1b)** at a first angle **θ1** by the first electromagnetic forces **F1A** and **F1B** between the third magnet **1151c** disposed in the third seating groove and the third coil unit **1152c** disposed on the side portion of the third substrate.

The first angle **θ1** may be ±1° to ±3°. However, it is not limited thereto.

Hereinafter, in a first camera actuator according to various embodiments, the electromagnetic force may move the mover by generating force in the direction described, or may move the mover in the direction described even if force is generated in another direction. That is, the direction of the described electromagnetic force means the direction of the force generated by the magnet and the coil to move the mover. For example, the first electromagnetic forces **F1A** and **F1B** may act in a third direction or in a direction opposite to the third direction.

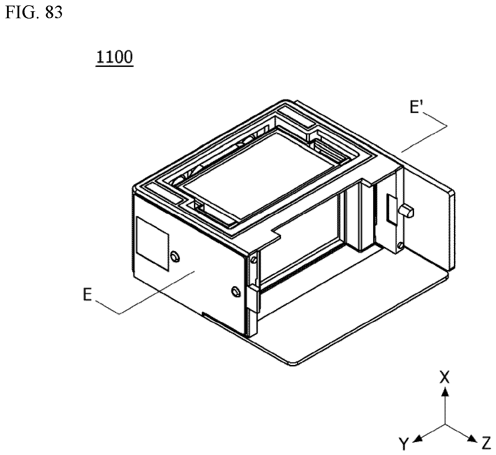

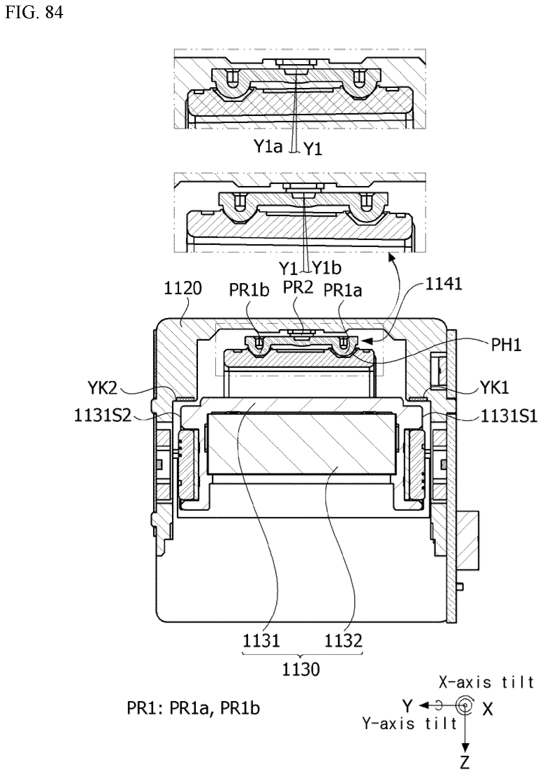

FIG. 83 is a perspective view of a first camera actuator according to a second embodiment of the present invention; and FIG. 84 is a view viewed from **E-E'** in FIG. 83.

Referring to FIGS. 83 to 84, OIS implementation may be performed as the mover **1130** is tilting or rotating in a Y-axis direction.

As an embodiment, the first magnet **1151a** and the second magnet **1151b** being disposed on the holder **1131** form electromagnetic force with the first coil **1152a** and the second coil **1152b,** respectively, so that the tilting guide unit and the mover **1130** can be tilted or rotated in a second direction (Y-axis).

Components being tilted in a first direction or a second direction in a first camera actuator according to an embodiment may be different from each other.

Specifically, the housing and the mover **1130** may be coupled to each other by the second yoke **YK2** inside the tilting guide unit **1141.** And, as described above, the plurality of second protruding portions **PR2** may be spaced apart in a first direction (X-axis direction) to support the tilting guide unit and the mover **1130.** In addition, the second-first protruding portion and the second-second protruding portion may be supported by the first housing **1120** by being in contact with the first housing **1120.**

In addition, the tilting guide unit **1141** may rotate or tilt the second protruding portion **PR2** being protruded toward the housing **1120** in a first direction (X-axis direction) as a reference axis (or rotation axis).

For example, OIS may be implemented as the mover **1130** is rotating in a Y-axis direction (From **Y1** to **Y1a)** at a second angle **θ2** by the second electromagnetic forces **F2A** and **F2B** between the first and second magnets **1151a** and **1151b** disposed in the first seating groove and the first and second coil units **1152a** and **1152b** disposed on the side portions of the first and second substrates. In addition, OIS may be implemented as the mover **1130** is rotating in a Y-axis direction (From **Y1** to **Y1b)** at a second angle **θ2** by the second electromagnetic forces **F2A** and **F2B** Between the first and second magnets **1151a** and **1151b** disposed in the first seating groove and the first and second coil units **1152a** and **1152b** disposed on the side portions of the first and second substrates. The second angle **θ2** may be between ±1° and 3°. However, it is not limited thereto.

In addition, as described above, the electromagnetic force by the first and second magnets **1151a** and **1151b** and the first and second coils **1152a** and **1152b** may act in a third direction or in a direction opposite to the third direction. For example, electromagnetic force is generated in a third direction (Z-axis direction) in the left side portion of the mover **1130,** and may act in an opposite direction to a third direction (Z-axis direction) in the right side portion of the mover **1130.** Accordingly, the mover **1130** may rotate with respect to a first direction. Or, it may move along a second direction.

As such, a second actuator according to an embodiment moves the mover **1130** in a first direction (X-axis direction) or a second direction (Y-axis direction) by the electromagnetic force between the driving magnet in the holder and the driving coil being disposed in the first housing. By controlling the rotation, it is possible to minimize the occurrence of a decent or tilt phenomenon when implementing OIS and to provide the best optical characteristics. In addition, as described above, 'Y-axis tilt' means rotating or tilting in a first direction (X-axis direction), and 'X-axis tilt' means rotating or tilting in a second direction (Y-axis direction).

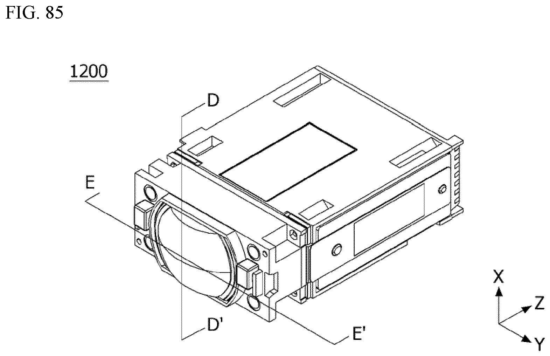

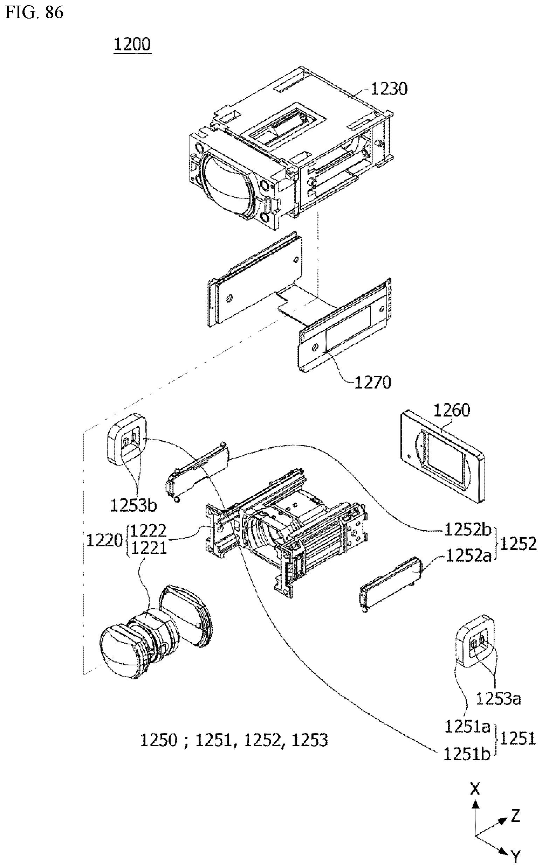

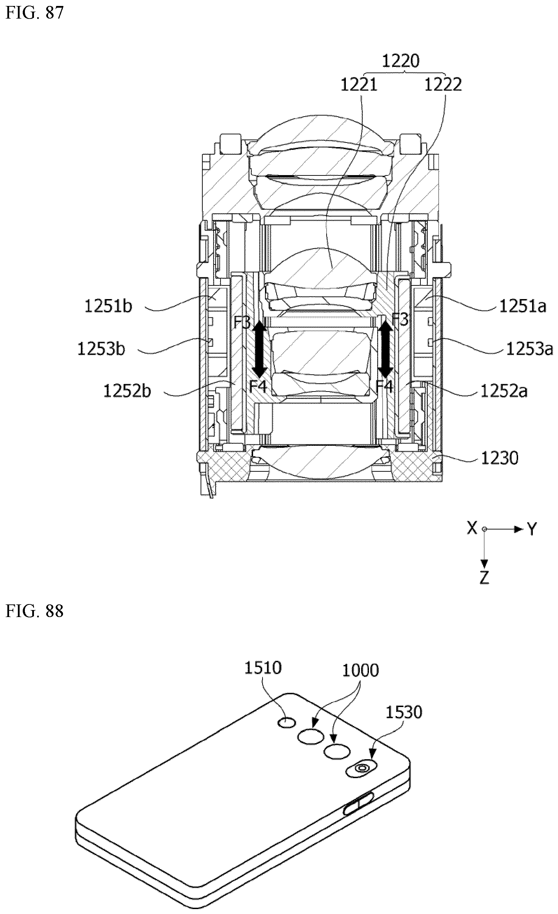

FIG. 85 is a perspective view of a second camera actuator according to a second embodiment of the present invention; FIG. 86 is an exploded perspective view of a second camera actuator according to a second embodiment of the present invention; and FIG. 87 is a cross-sectional view viewed from **E-E'** in FIG. 85.

Referring to FIGS. 85 to 87, a second camera actuator **1200** according to an embodiment may comprise a lens unit **1220,** a second housing **1230,** a second driving unit **1250,** a base unit (not shown) and a second substrate unit **1270.** Furthermore, the second camera actuator **1200** may further comprise a second shield can (not shown), an elastic part (not shown), and a bonding member (not shown). Furthermore, the second camera actuator **1200** according to the embodiment may further comprise an image sensor **IS.**

The second shield can (not shown) positioned in one region (For example, outermost) of the second camera actuator **1200,** may be positioned to surround components, which will be described later, a lens unit **1220,** a second housing **1230, an** elastic part (not shown), a second driving unit **1250,** a base unit (not shown), a second substrate unit **1270,** and an image sensor **IS.**

Such a second shield can (not shown) may block or reduce electromagnetic waves generated from the outside. Accordingly, the occurrence of malfunctions in the second driving unit **1250** may be reduced.

The lens unit **1220** may be positioned in a second shield can (not shown). The lens unit **1220** may move in a third direction (Z-axis direction). Accordingly, the above-described AF function may be performed.

Specifically, the lens unit **1220** may comprise a lens assembly **1221** and a bobbin **1222.**

The lens assembly **1221** may comprise one or more lenses. In addition, the number of lens assemblies **1221** may be plural, but will be described below with respect to one.

The lens assembly **1221** is coupled to the bobbin **1222** and may move in a third direction (Z-axis direction) by electromagnetic force generated from the fourth magnet **1252a** and the second magnet **1252b** coupled to the bobbin **1222.**

The bobbin **1222** may comprise an opening region surrounding the lens assembly **1221.** Also, the bobbin **1222** may be coupled to the lens assembly **1221** by various methods. In addition, the bobbin **1222** may comprise a groove on a side surface, and may be coupled to the fourth magnet **1252a** and the second magnet **1252b** through the groove. A bonding member or the like may be applied to the groove.

In addition, the bobbin **1222** may be coupled with an elastic part (not shown) at an upper end and a rear end. Thus, the bobbin **1222** may be supported by an elastic part (not shown) while moving in a third direction (Z-axis direction). That is, while the position of the bobbin **1222** is maintained, it may be maintained in a third direction (Z-axis direction). The elastic part (not shown) may be made of a leaf spring.

The second housing **1230** may be disposed between the lens unit **1220** and a second shield can (not shown). Also, the second housing **1230** may be disposed to surround the lens unit **1220.**

A hole may be formed in a side portion of the second housing **1230.** A fourth coil **1251a** and a fifth coil **1251b** may be disposed in the hole. The hole may be positioned to correspond to the groove of the bobbin **1222** described above.

The fourth magnet **1252a** may be positioned to face the fourth coil **1251a.** In addition, the second magnet **1252b** may be positioned to face the fifth coil **1251b.**

The elastic part (not shown) may comprise a first elastic member (not shown) and a second elastic member (not shown). A first elastic member (not shown) may be coupled to an upper surface of the bobbin **1222.** The second elastic member (not shown) may be coupled to a lower surface of the bobbin **1222.** In addition, the first elastic member (not shown) and the second elastic member (not shown) may be formed as leaf springs as described above. In addition, the first elastic member (not shown) and the second elastic member (not shown) may provide elasticity for the movement of the bobbin **1222.**

The second driving unit **1250** may provide driving forces **F3** and **F4** for moving the lens unit **1220** in a third direction (Z-axis direction). Such a second driving unit **1250** may comprise a driving coil **1251** and a driving magnet **1252.**

The lens unit **1220** may move in a third direction (Z-axis direction) by the electromagnetic force formed between the driving coil **1251** and the driving magnet **1252.**

The driving coil **1251** may comprise a fourth coil **1251a** and a fifth coil **1251b.** The fourth coil **1251a** and the fifth coil **1251b** may be disposed inside a hole formed in a side portion of the second housing **1230.** Also, the fourth coil **1251a** and the fifth coil **1251b** may be electrically connected to the second substrate unit **1270.** Accordingly, the fourth coil **1251a** and the fifth coil **1251b** may receive current or the like through the second substrate unit **1270.**

The driving magnet **1252** may comprise a fourth magnet **1252a** and a fifth magnet **1252b.** The fourth magnet **1252a** and the fifth magnet **1252b** may be disposed in the aforementioned groove of the bobbin **1222** and may be positioned to correspond to the fourth coil **1251a** and the fifth coil **1251b.**

A base unit (not shown) may be positioned between the lens unit **1220** and the image sensor **IS.** Components such as a filter may be fixed to the base unit (not shown). In addition, a base unit (not shown) may be disposed to surround the image sensor **IS.** With this configuration, since the image sensor **IS** is free from foreign substances, the reliability of the device can be improved.

In addition, the second camera actuator may be a zoom actuator or an auto focus (AF) actuator. For example, the second camera actuator may support one or a plurality of lenses and perform an autofocusing function or a zooming function by moving the lens according to a predetermined control signal from a control unit.

And the second camera actuator may be a fixed zoom or continuous zoom. For example, the second camera actuator may provide the movement of the lens assembly **1221.**

Furthermore, the second camera actuator may comprise a plurality of lens assemblies. For example, in the second camera actuator, at least one or more among a first lens assembly (not shown), a second lens assembly (not shown), a third lens assembly (not shown), and a guide pin (not shown) may be disposed. In this regard, the above description may be applied. Accordingly, the second camera actuator may perform a high-magnification zooming function through the driving unit. For example, the first lens assembly (not shown) and the second lens assembly (not shown) may be moving lenses that move through a driving unit and a guide pin (not shown), and the third lens assembly (not shown) may be a fixed lens, but is not limited thereto. For example, the third lens assembly (not shown) may perform the function of a focator that forms light at a specific location, and the first lens assembly (not shown) may perform a variator function of re-forming an image formed in a third lens assembly (not shown), which is a focator, to another location. Meanwhile, in the first lens assembly (not shown), the distance to the subject or the image distance may be greatly changed, so that the magnification change may be large, and a first lens assembly (not shown) serving as a variator may play an important role in changing the focal length or magnification of an optical system. Meanwhile, a point formed by a first lens assembly (not shown), which is a variator, may be slightly different depending on a location. Accordingly, the second lens assembly (not shown) may perform a position compensation function for an image formed by the variator. For example, the second lens assembly (not shown) can perform compensator function that serves for accurately imaging the image points imaged in the first lens assembly (not shown), which is a variator, at the actual image sensor position.

The image sensor **IS** may be positioned inside or outside the second camera actuator. As an embodiment, as illustrated, the image sensor **IS** may be positioned inside the second camera actuator. The image sensor **IS** may receive light and convert the received light into an electrical signal. In addition, the image sensor **IS** may comprise a plurality of pixels in an array form. Also, the image sensor **IS** may be positioned on an optical axis.

FIG. 88 is a perspective view of a mobile terminal to which a camera module according to a second embodiment of the present invention is applied.

As illustrated in FIG. 88, the mobile terminal **1500** of an embodiment may comprise a camera module **1000,** a flash module **1530,** and an autofocus device **1510** provided on the rear surface.

The camera module **1000** may comprise an image photographing function and an auto focus function. For example, the camera module **1000** may comprise an auto focus function utilizing images.

The camera module **1000** processes an image frame of a still image or a moving image obtained by an image sensor in a photographing mode or a video call mode.

The processed image frame may be displayed on a prepared display unit and may be stored in a memory. A camera (not shown) may also be disposed on the front surface of the mobile terminal body.

For example, the camera module **1000** may comprise a first camera module **1000** and a second camera module **1000,** and the first camera module **1000A** may implement OIS along with an AF or zoom function.

The flash module **1530** may comprise a light emitting element emitting light therein. The flash module **1530** may be operated by camera operation of the mobile terminal or user's control.

The autofocus device **1510** may comprise one of the packages of a surface light emitting laser device as a light emitting unit.

The autofocus device **1510** may comprise an autofocus function using a laser. The auto-focus device **1510** may be mainly used in a condition in which an auto-focus function using an image of the camera module **1000** is degraded, for example, in proximity of 10 m or less or a dark environment.

The autofocus device **1510** may comprise: a light emitting unit comprising a vertical cavity surface emitting laser (VCSEL) semiconductor device; and a light receiving unit such as a photodiode that converts light energy into electrical energy.

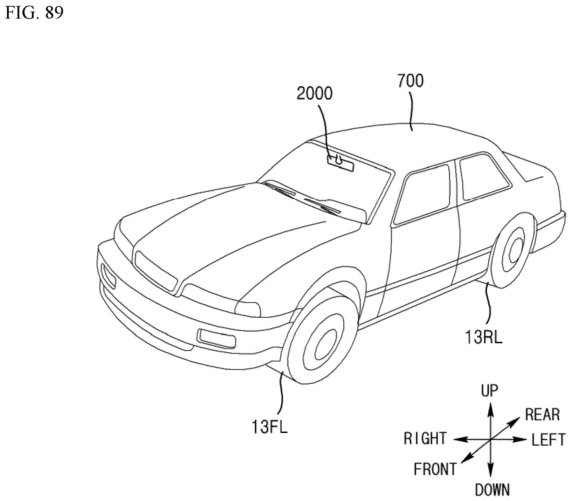

FIG. 89 is a perspective view of a vehicle to which a camera module according to a second embodiment of the present invention is applied.

For example, FIG. 89 is an external view of a vehicle equipped with a vehicle driving assistance device to which the camera module **1000** according to an embodiment is applied.

Referring to FIG. 89, a vehicle **700** of an embodiment may comprise wheels **13FL** and **13FR** rotating by a power source and a prepared sensor. The sensor may be the camera sensor **2000,** but is not limited thereto.

The camera **2000** may be a camera sensor to which the camera module **1000** according to an embodiment is applied. The vehicle **700** of an embodiment may acquire image information through the camera sensor **2000** that photographs a front side image or a peripheral image, determines a lane unidentified situation using the image information, and may create a virtual lane when the lane is not identified.

For example, the camera sensor **2000** may obtain a front side image by photographing the front side of the vehicle **700,** and a processor (not shown) may obtain image information by analyzing an object comprised in the front side image.

For example, when objects such as lanes, adjacent vehicles, driving obstacles, and indirect road markings such as median strips, curbs, and roadside trees are photographed in an image photographed by the camera sensor **2000,** the processor detects these objects and may comprise them in the image information. At this time, the processor may acquire distance information to the object detected through the camera sensor **2000** to further supplement the image information.

The image information may be information about an object photographed in an image. The camera sensor **2000** may comprise an image sensor and an image processing module.

The camera sensor **2000** may process a still image or moving image being obtained by an image sensor (For example, CMOS or CCD).

The image processing module may process a still image or moving image acquired through an image sensor, extract necessary information, and transmit the extracted information to a processor.

At this time, the camera sensor **2000** may comprise a stereo camera to enhance object measurement accuracy and further secure information such as a distance between the vehicle **700** and the object, but is not limited thereto.

Hereinafter, with reference to the accompanying drawings, a camera device according to an embodiment and an optical apparatus comprising the same will be described as follows. For convenience of description, the camera device according to the embodiment is described using a Cartesian coordinate system (x, y, z), but it may be described using another coordinate system, and the embodiment is not limited thereto. In each diagram, an X-axis and a Y-axis may mean directions perpendicular to a Z-axis, which is the direction of an optical axis **OA**. In addition, the Z-axis direction, which is the optical axis OA direction, may be referred to as a 'first direction', the X-axis direction may be referred to as a 'second direction', and the Y-axis direction may be referred to as a 'third direction'. In addition, the Y-axis may be referred to as a "first axis", the Y-axis direction may be referred to as a "first axis direction"; the X-axis may be referred to as a "second axis", and the X-axis direction may be referred to as a "second axis direction". For example, the optical axis direction may be the direction of the optical axis or a direction parallel to the optical axis.

In addition, the expression "terminal" hereinafter may be expressed by replacing it with a pad, an electrode, or a conductive layer.

In addition, hereinafter, "code value" may be expressed by replacing it with data or a digital value.

In addition, in an embodiment, in the coupling between the protrusion and the hole for coupling the two components with each other, either component may be a coupling protrusion (or coupling hole), and the remaining other side may be a coupling hole (or coupling protrusion) corresponding thereto.

A camera device according to an embodiment may perform a handshake correction function, an auto focusing function, and a zoom function. The 'handshake correction function' may be a function of moving the lens in a direction perpendicular to the optical axis direction or tilting the lens with respect to the optical axis to offset vibration (or movement) caused by the user's handshake. In addition, the 'auto focusing function' may be a function of automatically focusing on a subject by moving a lens in an optical axis direction according to a distance of the subject in order to obtain a clear image of the subject in the image sensor. The 'zoom function' may be a zooming function for taking pictures by increasing or decreasing the magnification of a distant subject through a zoom lens.

Hereinafter, "camera device" may be expressed by replacing it with a "camera", "camera module", "imaging device" or "photographing device".

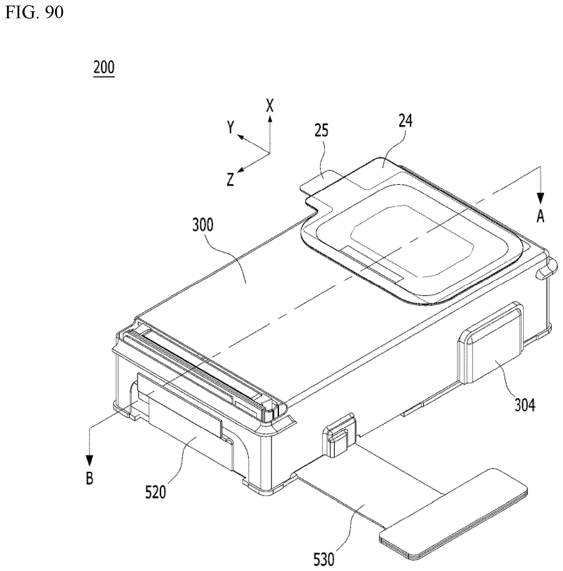

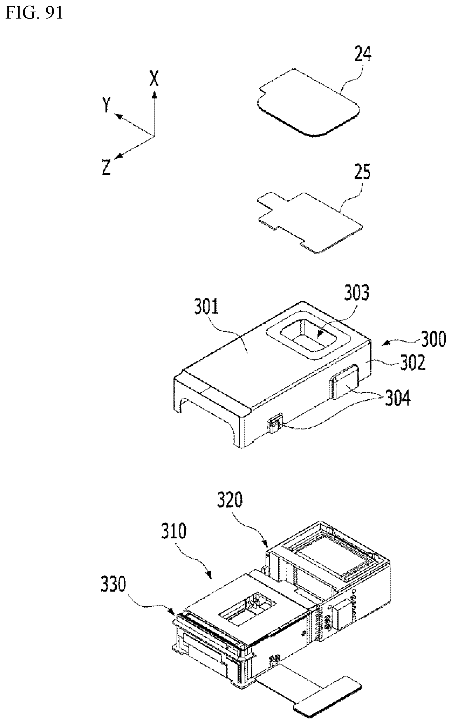

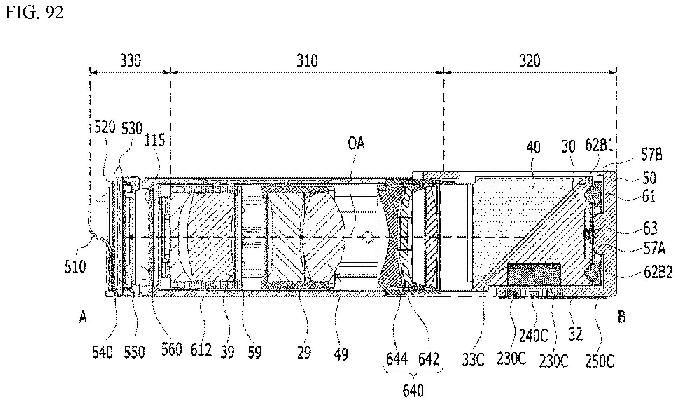

FIG. 90 is a perspective view of a camera device **200** according to a third embodiment of the present invention; FIG. 91 is an exploded perspective view of a camera device **200** of FIG. 90; and FIG. 92 is a cross-sectional view of a camera device in the direction **A-B** of FIG. 90.

Referring to FIGS. 90 to 92, the camera device **200** may comprise a first actuator **310,** a second actuator **320,** and an image sensing unit **330.**

The second actuator **320** may move the optical member **40,** thereby performing an optical image stabilizer (OIS) operation for performing handshake correction, and may be expressed by replacing it with a "second driving unit" or "OIS driving unit".

The second actuator **320** may change the path of light. For example, the second actuator **320** may comprise an optical member **40** that changes a path of light. The second actuator **320** may be expressed by replacing it with an optical path changing unit.

The first actuator **310** may move the lens assemblies **312** and **313** in a direction of an optical axis, thereby performing an auto focusing and/or zooming function, and may be expressed by replacing it with a "first driving unit" or "AF and zoom driving unit". The first actuator **310** may be referred to as a "second actuator", and the second actuator **320** may be referred to as a "first actuator".

For example, the first actuator **310** may be disposed at a rear end of the second actuator **320** and may be coupled with the second actuator **320.** For example, the first actuator **310** may be disposed between the second actuator **320** and the image sensing unit **330.**

The image sensing unit **330** receives and detects light passing through the optical member **40** of the second actuator **320** and the lens assemblies **311, 312,** and **313** of the first actuator **310** and detects the light to convert it into an electrical signal.

The camera device **200** may further comprise a cover member **300.** The cover member **300** may have a box shape comprising an upper plate **301** and a side plate **302** and may have an open lower portion. The cover member **300** may accommodate the first actuator **310,** the second actuator **320,** and the image sensing unit **330.** An opening **303** or a hole exposing the incident surface of the optical member **40** may be formed in the upper plate **301** of the cover member **300.**

In addition, the camera device **200** may further comprise a bracket (not shown) for accommodating the first actuator **310,** the second actuator **320,** and the image sensing unit **330.** The bracket may have holes or penetrating holes for accommodating the first actuator **310,** the second actuator **320,** and the image sensing unit **330.** At least one opening may be formed in a side portion or side surface of the bracket.

At least one protrusion **304** being coupled to at least one opening of the bracket may be formed on the side plate **302** of the cover member **300.** At least one protrusion 304 may be protruded from the side plate **302** in a direction perpendicular to the optical axis (For example, Y-axis direction).

The cover member **300** may be formed of a metal plate material, but is not limited thereto, and may be formed of a plastic or resin material. In addition, the cover member 300 may be made of a material that blocks electromagnetic waves.

The camera device **200** may further comprise a protective film **24** being disposed on the upper plate **301** of the cover member **300** and covering the opening **303** of the cover member **300.** The protective film **24** may be formed of a light-transmitting material, may prevent foreign substances from entering the camera device **200,** and may protect the optical member **40** from impact or the like. In addition, the camera device **200** may further comprise a protective tape **25** being disposed between the protective film **24** and the upper plate **301** and attaching the protective film **24** to the upper plate **301.** For example, the protective tape **25** may be formed of a light-transmitting material.

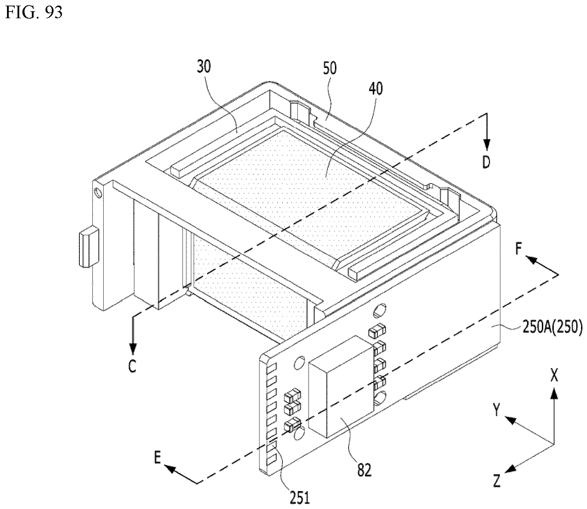

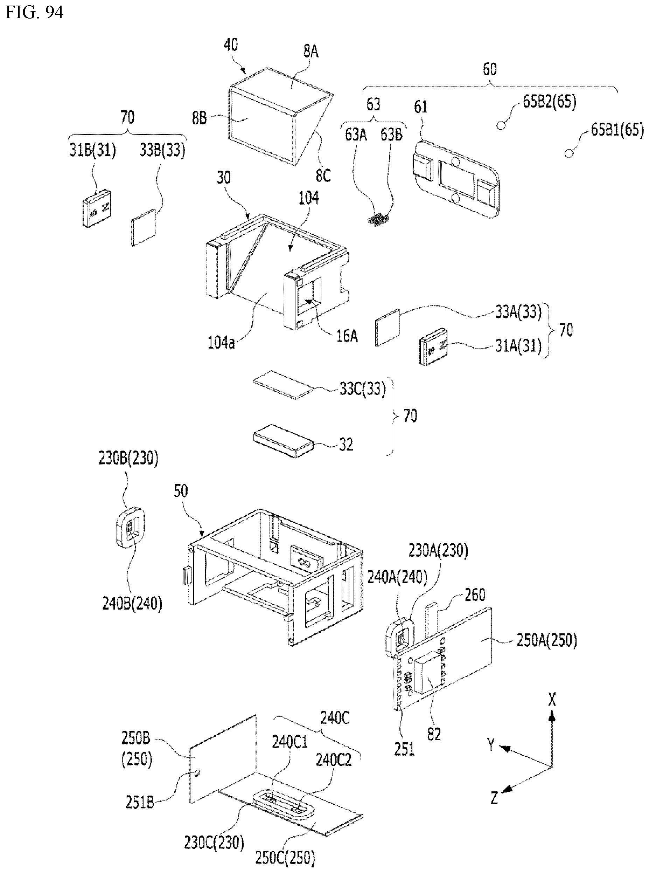

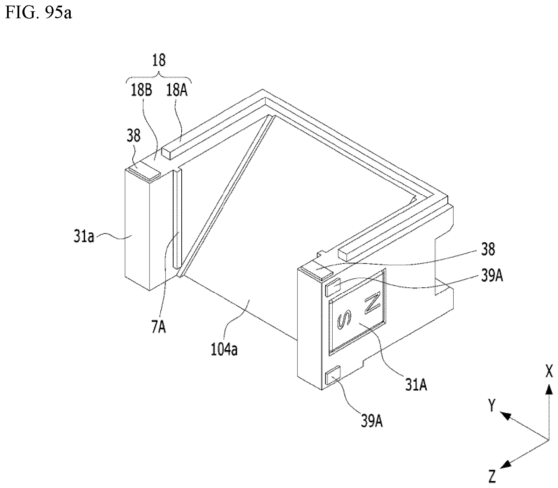

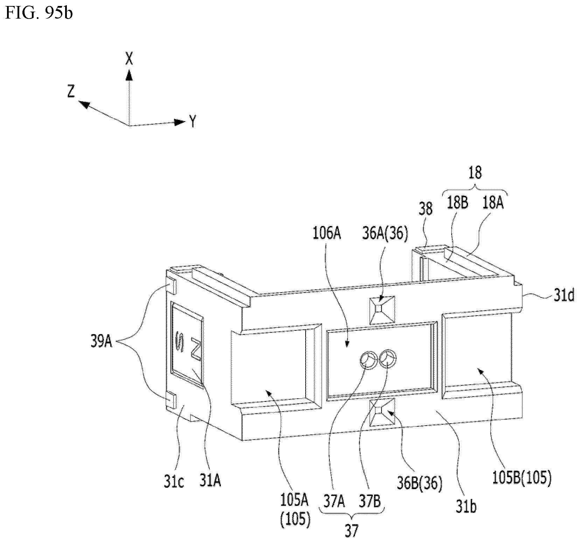

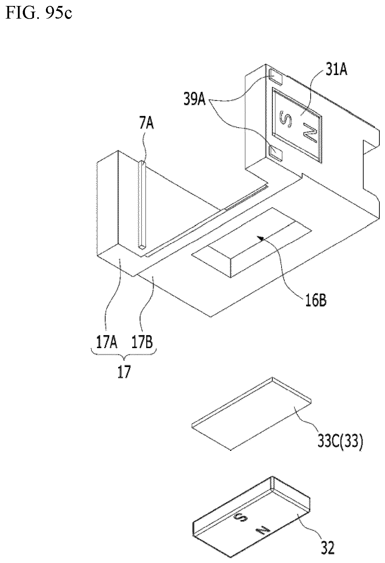

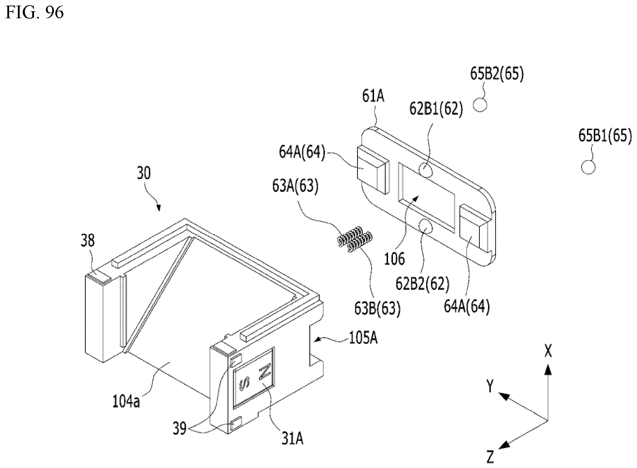

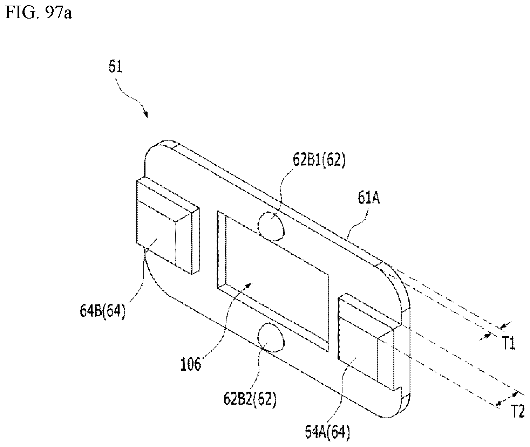

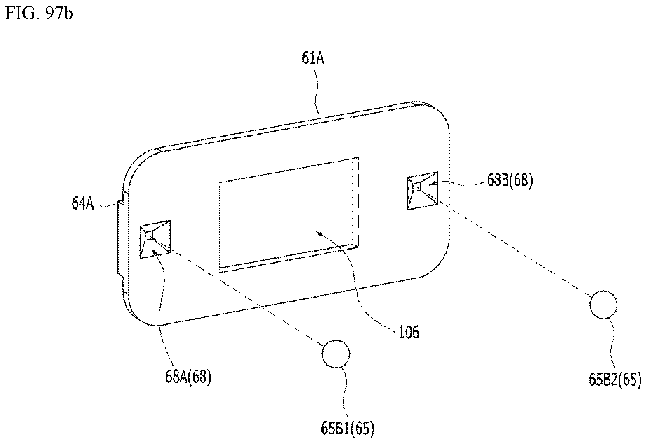

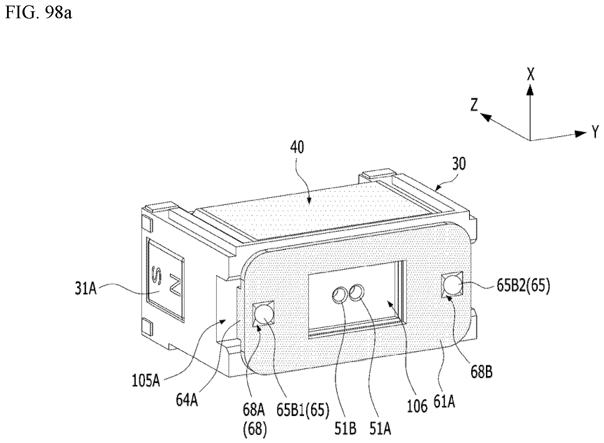

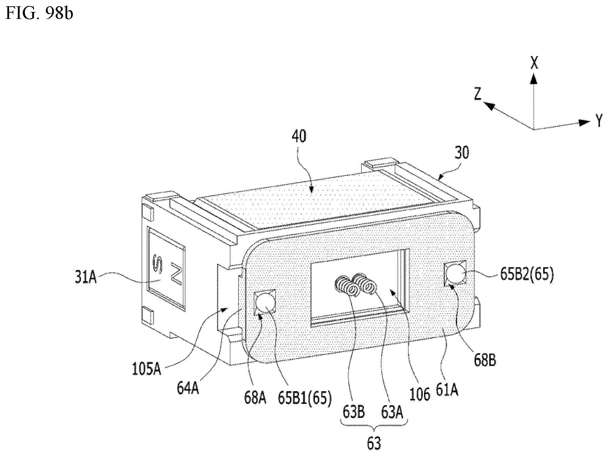

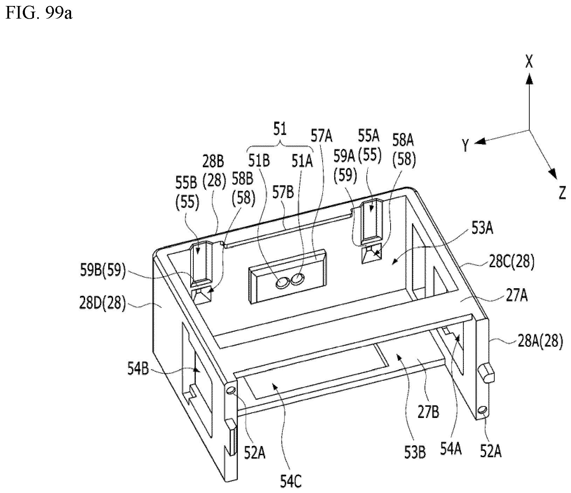

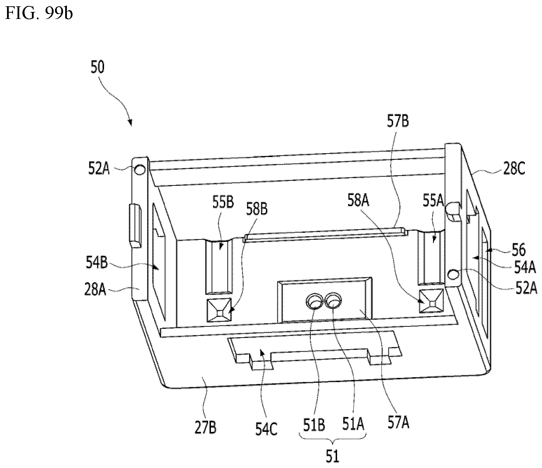

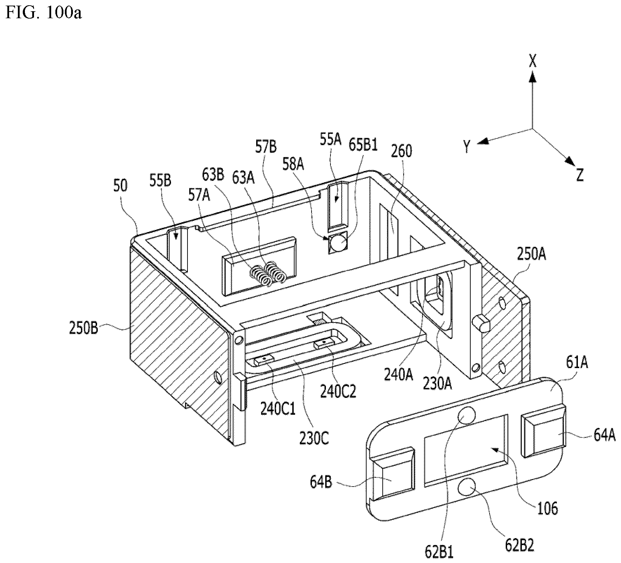

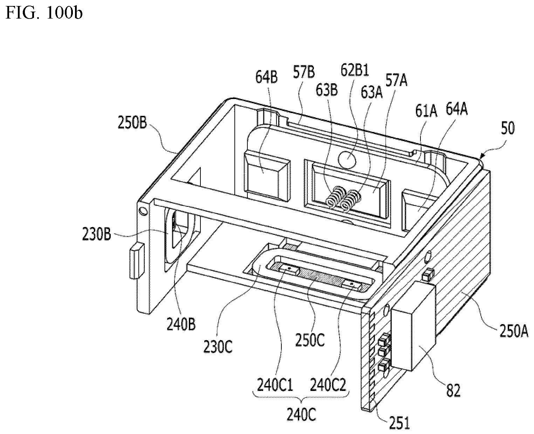

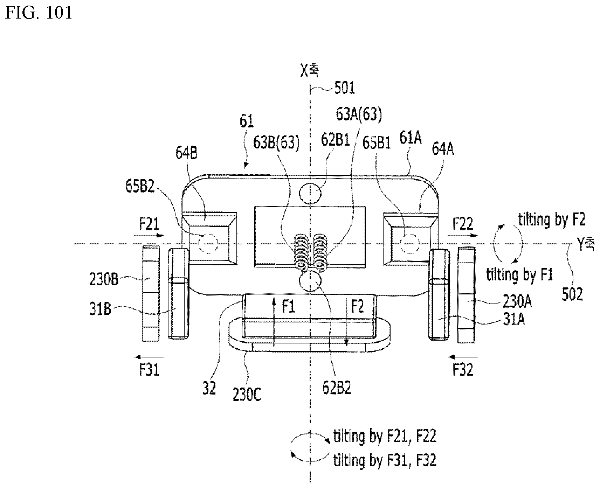

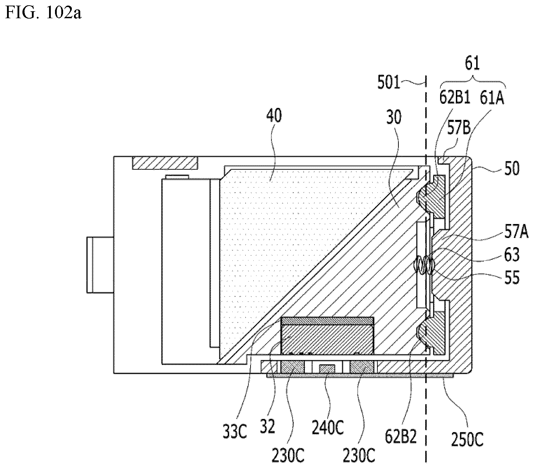

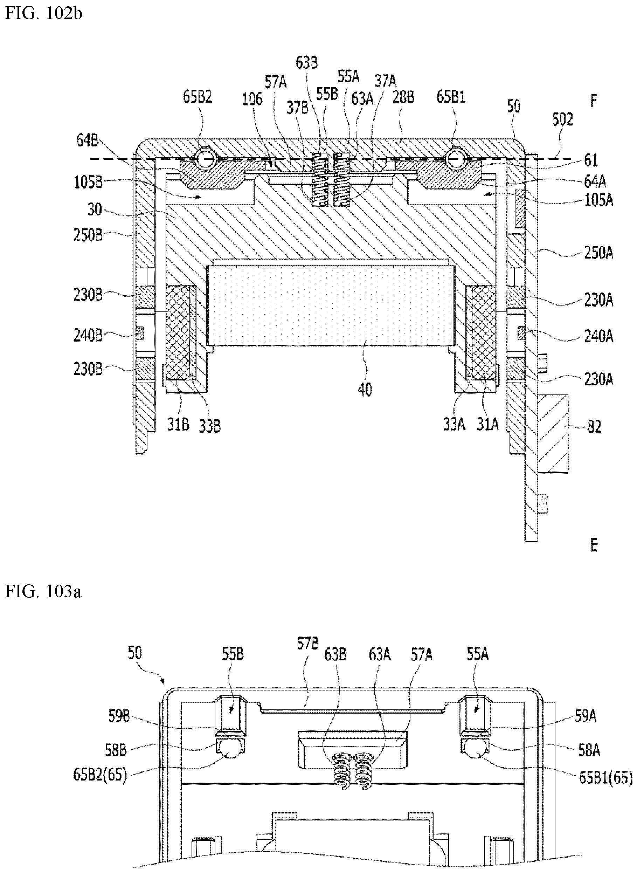

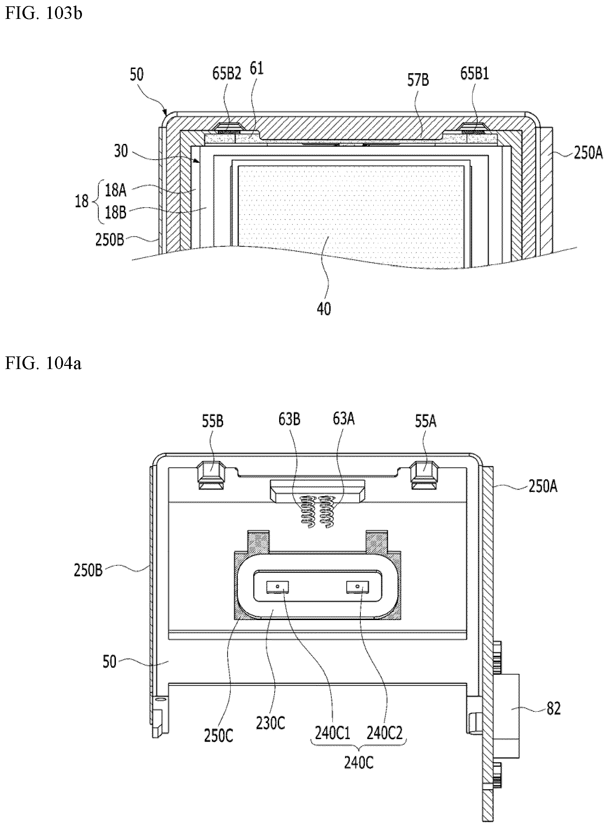

FIG. 93 is a perspective view of the second actuator **320** illustrated in FIG. 90; FIG. 94 is an exploded perspective view of a second actuator **320;** FIG. 95a is a front perspective view of a holder **30** of FIG. 94; FIG. 95b is a rear perspective view of a holder **30;** FIG. 95c is a bottom perspective view of a holder **30;** FIG. 96 is an exploded perspective view of a holder **30,** driving plate **61,** and elastic member **63;** FIG. 97a is a first perspective view of the driving plate **61;** FIG. 97b is a second perspective view of a driving plate **61;** FIG. 98a is a perspective view of a holder **30,** an optical member **40,** a driving plate **61,** and a rolling member **65;** FIG. 98b is a perspective view of an elastic member **63** coupled to the holder **30** of FIG. 98a; FIG. 99a is a first perspective view of a housing **50;** FIG. 99b is a second perspective view of a housing **50;** FIG. 100a is a perspective view of a housing **50,** a circuit board **250,** a coil **230,** a position sensor **240,** an elastic member **63,** a driving plate **61,** and a rolling member 65; FIG. 100b is a perspective view of the driving plate **61** of FIG. 100a coupled to a housing **50;** FIG. 101 is a diagram for explaining the movement of the driving plate **61** and the electromagnetic force according to the interaction between the magnets **31A, 31B,** and **32** and the first to third coil units **230A** to **230C;** FIG. 102a is a cross-sectional view of a second actuator **320** in the **C-D** direction of FIG. 93; FIG. 102b is a cross-sectional view of a second actuator **320** in the **E-F** direction of FIG. 93; FIG. 103a is an enlarged view of a part of a housing **50,** a rolling member **65,** and an elastic member; and FIG. 103b is a partially enlarged view of a second actuator **320.**

Referring to FIGS. 93 to 103b, the second actuator **320** may comprise an optical member **40** and a second driving unit **70.** The optical member **40** may change the path of light so that the light passing through the opening **303** of the cover member **300** is incident to the first actuator **310.** The second driving unit **70** may rotate the optical member **40** by a preset angle in a direction perpendicular (For example, the X-axis direction or the Y-axis direction) to the optical axis direction (For example, a Z-axis direction).

The optical member **40** may comprise a reflector capable of changing a traveling direction of light. For example, the optical member **40** may be a prism that reflects light, but is not limited thereto and may be a mirror in another embodiment.

The optical member **40** may be disposed in the holder **30.** The optical member 40 may change the light path of the incident light to an optical axis parallel to the central axis (for example, Z-axis) of the lens unit to change the incident light into parallel light; and the parallel light may pass through the first lens assembly **640,** the second lens assembly **622,** and the third lens assembly **624** to reach the image sensor **540.**

Referring to FIG. 94, for example, the optical member **40** may comprise an incident surface **8A** and an exit surface **8B,** and reflects light incident on the incident surface **8A** to exit through the exit surface **8B.** For example, the optical member **40** may be a right angle prism comprising an incident surface **8A,** a reflective surface **8C,** and an exit surface **8B.** For example, the interior angle between the incident surface **8A** and the exit surface **8B** may be a right angle.

In addition, for example, each of the first interior angle between the incident surface **8A** and the reflective surface **8C** and the second interior angle between the exit surface **8B** and the reflective surface **8C** may be 30 degrees to 60 degrees. For example, each of the first interior angle and the second interior angle may be 45 degrees, but is not limited thereto. In addition, due to the optical path change by the optical member **40,** the thickness of the camera device **200** in a direction perpendicular to the incident surface **8A** of the optical member **40** can be reduced, and as a result, the thickness of the mobile device or terminal **200A** on which the camera device **200** is mounted may be reduced.

For example, the second actuator **320** comprises a housing **50,** a holder **30** being disposed inside the housing **50,** an optical member **40** being disposed inside the holder **30,** and a support part **60** being disposed between the holder **30** and the housing **50.**

Referring to FIGS. 94 and 95a to 95c, the holder **30** may comprise a seating portion **104** on which the optical member **40** is disposed or mounted. The seating portion **104** may have a groove shape and may comprise a mounting surface **104a** (or a seating surface) for disposing the reflective surface **8C** of the optical member **40.** For example, the mounting surface **104a** may be an inclined surface inclined with respect to an optical axis direction.

For example, an adhesive for attaching the optical member **40** may be disposed on the mounting surface **104a** of the holder **30,** and, for example, at least one groove (not shown) may be formed on the mounting surface **104a** for accommodating an adhesive.

For example, the holder **30** may comprise: a first opening exposing the incident surface **8A** of the optical member **40;** and a second opening exposing the exit surface **8B** of the optical member **40.** For example, the first opening may be disposed on an upper side of the holder **30,** and the second opening may be disposed on one side surface (front outer side surface **31a**) of the holder **30** facing the lens assembly (For example, **311**) of the first actuator **310.** The exit surface **8B** of the optical member **40** mounted on the holder **30** may be disposed to face the lens assembly **311** of the first actuator **310.**

Referring to FIG. 95a, the upper surface **18** of the holder **30** may comprise: a first surface **18A;** and a second surface **18B** having a step in a second direction (For example, X-axis direction) with the first surface **18A.** The first surface **18A** may be adjacent to or positioned adjacent to the rear outer side surface **31b** of the holder **30,** and the second surface **18B** may be adjacent to or positioned adjacent to the front outer side surface **31a** of the holder **30.** The second surface **18B** may be positioned lower than the first surface **18A.** For example, the second surface **18B** may be positioned closer to the lower surface **19** of the holder **30** than the first surface **18A.**

Since the second surface **18B** has a step difference with the first surface **18A,** when the holder **30** tilts in a second direction (for example, the X-axis direction) or rotates by a predetermined angle, the spatial interference between the holder **30** and the housing **50** can be prevented.

For example, at least one stopper **38** may be formed on an upper surface (For example, the second surface **18B**) of the holder **30.** The stopper **38** may be a protrusion or protruding portion being protruded upward from an upper surface (For example, a second surface **18B**) of the holder **30.** For example, a stopper **38** may be formed on an upper surface of each of the first and second side portions of the holder **30.** Tilt or rotation of the holder **30** in a second direction may be limited by the stopper **38.** For example, the height of the upper surface of the stopper **38** may be lower than or equal to the height of the first surface **18A.**

The holder **30** may comprise side portions (or outer side surfaces) **31c** and **31d** facing each other or positioned opposite to each other. For example, the seating portion **104** may be positioned between the two side portions **31c** and **31d** of the holder **30.** For example, the two side portions **31c** and **31d** may be positioned opposite or facing each other in a third direction (For example, a Y-axis direction).

For example, the front outer side surface **31a** of the holder **30** is referred to as an outer side surface of the first side portion of the holder **30,** the rear outer side surface **31b** of the holder **30** is referred to as an outer side surface of the second side portion of the holder **30,** the side portion **31c** of the holder **30** is referred to as a third side portion of the holder **30,** and the side portion **31d** of the holder **30** is referred to as a fourth side portion **31d** of the holder **30.**

For example, at least one stopper **39A** may be formed on the third and fourth side portions **31c** and **31d** of the holder **30.** The stopper **39A** may be a protrusion or protruding portion being protruded from an outer surface of each of the third and fourth side portions **31c** and **31d** of the holder **30.** Tilt or rotation of the holder **30** in a third direction may be limited by the stopper **39A.**

The holder **30** may comprise at least one protruding portion **7A** being formed on an inner side surface of at least one of the side portions **31c** and **3d.** The protruding portion **7A** may prevent the optical member **30** from separating out of the second opening of the holder **30.** For example, at least a portion of the exit surface **8B** of the optical member **30** may be supported or contacted by the protruding portion **7A** of the holder **30.**

Referring to FIG. 95c, the lower surface **17** of the holder **30** may comprise: a first surface **17A;** and a second surface **17B** having a step with the first surface **17A** in a second direction (For example, an X-axis direction). The first surface **17A** may be adjacent to or adjacent to the front outer side surface **31a** of the holder **30,** and the second surface **17B** may be positioned adjacent to or in contact with the rear outer side surface **31b** of the holder **30.** The first surface **17A** may be positioned lower than the second surface **17B.** For example, the second surface **17B** may be positioned closer to the upper surface **18** of the holder **30** than the first surface **17A.**

Since the second surface **17B** of the lower surface **17** of the holder **30** has a step difference with the first surface **17A,** When the holder **30** tilts or rotates by a preset angle in a second direction (For example, an X-axis direction), the spatial interference between the holder **30** and the second OIS coil **230C** may be prevented.

The holder **30** may comprise: a first seating groove **16A** (see FIG. 94) for disposing or seating the first OIS magnet **31;** and a second seating groove **16B** (see FIG. 95c) for disposing or seating the second OIS magnet **32.**

For example, the first seating groove **16A** may be formed on an outer side surface of each of the third and fourth side portions **31c** and **31d** of the holder **30.** For example, the first seating groove **16A** may have a shape of a groove recessed from an outer side surface of each of the third and fourth side portions **31c** and **31d** of the holder **30.**

For example, the second seating groove **16B** may be formed on the lower surface **17** (For example, the second surface **17B**) of the holder **30.** For example, the second seating groove **16B** may be in the form of a groove recessed from the lower surface **17** (For example, the second surface **17B**) of the holder **30.**

Referring to FIG. 95b, the holder **30** may comprise groove **106A** being formed on the outer side surface **31b** (or rear outer side surface) of the holder **30** so as to correspond to, face, or overlap with the protruding portion **57A** of the housing **50.** The groove **106A** may be disposed at the center of the outer side surface **31b** of the holder **30** and may be a shape being recessed from the outer side surface **31b.** For example, at least a portion of the protruding portion **57A** of the housing **50** may be disposed inside the groove **106A** of the holder **30.**

In addition, the holder **30** may comprise a groove **105** being formed on the outer side surface **31b** (or rear outer side surface) of the holder **30** to correspond to, face, or overlap with the protruding portion **64** of the driving plate **61.** For example, the groove **105** may be recessed from the outer side surface **31b** of the holder **30.**

For example, the holder **30** may comprise: a first groove **105A** facing or overlapping with the first protruding portion **64A** of the driving plate **61;** and a second groove **105B** facing or overlapping with the second protruding portion **64B** of the driving plate **61.** For example, at least a portion of the first protruding portion **64A** of the driving plate **61** may be disposed inside the first groove **105A** of the holder **30,** and at least a portion of the second protruding portion **64B** of the driving plate **61** may be disposed inside the second groove **105B** of the holder **30.** For example, the groove **106A** of the holder **30** may be positioned between the first groove **105A** and the second groove **105B** of the holder **30.**

Referring to FIG. 95b, the holder **30** may comprise a groove **36** that corresponds to, faces, or overlaps with a protrusion (or "front protrusion" **62**) of the driving plate **61.** The groove **36** may be formed on the outer side surface **31b** of the holder **30** and may be a shape recessed from the outer side surface **31b** of the holder **30.** For example, the number of grooves **36** may be the same as the number of protrusions **62** of the driving plate **61,** and may be one or more.

For example, the holder **30** may comprise: a first groove **36A** corresponding to the first protrusion **62B1** of the driving plate **61;** and a second groove **36B** corresponding to the second protrusion **62B2** of the driving plate **61.**

For example, the two grooves **36A** and **36B** of the holder **30** may be disposed spaced apart from each other in a second direction. For example, the arrangement direction of the holes **36A** and **36B** may be the same as the arrangement direction of the protrusions of the driving plate **61.**

For example, the first groove **36A** may comprise a bottom surface and a plurality of side surfaces. For example, each of the plurality of side surfaces of the first groove **36A** may have the same area. In another embodiment, the area of at least one of the plurality of side surfaces of the first groove **36A** may be different from the area of at least one of the plurality of side surfaces of the first groove **36A.** For example, the bottom surface of the first groove **36A** may be rectangular or elliptical, but is not limited thereto.

For example, the second groove **36B** may comprise a bottom surface and a plurality of side surfaces. The second groove **36B** may have the same shape as the first groove **36A.** In another embodiment, side surfaces of any one of the first groove and the second groove may be the same, and at least one of the side surfaces of the remaining other one of the first groove and the second groove may have a different area.

The second groove **36B** may comprise a bottom surface and a plurality of side surfaces. Each of the plurality of side surfaces of the second groove **36B** may have the same shape and, for example, the same area. In FIG. 95b, the number of side surfaces of the second groove **36B** is four, but is not limited thereto, and may be five or more in other embodiments. For example, the bottom surface of the second groove 36B may be square or circular, but is not limited thereto.

A protruding portion or a step may be formed around the first groove **36A** and the second groove **36B.** The protruding portion may be protruded from the rear outer side surface **31b**. A lubricant may be disposed between the protrusions **61B1** and **61B2** and the first and second grooves **36A** and **36B.** The protruding portion formed around the first groove **36A** and the second groove **36B** can prevent lubricant from overflowing.

The holder **30** may comprise at least one stopper (not shown) being formed on the rear outer side surface **31b.** For example, the stopper of the holder **30** may be in the form of a protrusion or protruding portion being protruded from the rear outer side surface **31b.**

The holder **30** may comprise a groove **37** for accommodating or supporting a portion of the elastic member **63.** For example, the number of grooves **37** may be the same as the number of elastic units **63A** and **63B** of the elastic member **63.**

For example, the groove **37** may be formed on a bottom surface of the groove **106A** of the holder **30.** For example, the groove **37** may be a shape recessed from the bottom surface of the groove **106A** of the holder **30.** For example, the groove **37** may comprise a first groove **37A** corresponding to or opposite to the first elastic unit **63A** and a second groove **37B** corresponding to or opposite to the second elastic unit **63B.** For example, the first groove **37A** and the second groove **37B** may be disposed spaced apart from each other.

In another embodiment, at least one of the groove **106A** or the protruding portion **57A** of the housing **50** may be omitted, the groove **37** may be a shape recessed from the rear outer side surface **31b** of the holder **30,** and the groove **51** may be recessed from the inner side surface of the second side portion **28B** of the housing **50.**

For example, when viewing the rear outer side surface **31b** from the front, the groove **37** may be disposed between the two grooves **36A** and **36B** of the holder **30.**

The housing **50** may be disposed inside the cover member **300.** For example, an adhesive or a shield member may be disposed between the housing **50** and the cover member **300,** and the housing **50** may be coupled or fixed to the cover member **300.** The holder **30** may be disposed inside the housing **50.** The housing **50** may accommodate the holder **30** therein, and may expose the incident surface **8A** and the exit surface **8B** of the optical member **40** disposed in the holder **30.**

Referring to FIGS. 99a and 99b, for example, the housing **50** may comprise a first opening **53A** (or a first hole) for exposing the incident surface **8A** of the optical member **40** and a second opening **53B** (or a second hole) for exposing the exit surface **8B** of the optical member **40.**

The housing **50** may comprise an upper portion **27A,** a lower portion **27B,** and a side portion **28** being disposed between the upper portion **27A** and the lower portion **27.** For example, a side portion of the housing **50** may comprise a plurality of side portions **28A** to **28D.**

The upper portion **27A** and the lower portion **27B** of the housing **50** may face each other in a second direction (For example, an X-axis direction) or may be positioned opposite to each other. For example, the housing **50** may comprise: a first side portion **28A,** a second side portion **28B,** a third side portion **28C,** and a fourth side portion **28D.**

**28C** may be expressed as "first side portion", **28D** may be expressed as "second side portion", **28B** may be expressed as "third side portion", and **28D** may be expressed as "fourth side portion", and in another embodiment, the side portions of the housing **50** may be expressed in various distinguishable forms.

For example, the first side portion **28A** of the housing **50** may be disposed to face or face the lens assembly **311** of the first actuator **310.** The first opening **53A** may be formed in the upper portion **27A,** and the second opening **53B** may be formed in the first side portion **28A.**

The second side portion **28B** may be positioned to face the first side portion **28A** in a first direction or at an opposite side of the first side portion **28A.** The third side portion **28C** and the fourth side portion **28D** may be disposed between the first side portion **28A** and the second side portion **28D,** and positioned to face each other in a third direction (For example, a Y-axis direction) or may be positioned at an opposite side thereof. For example, the third side portion **28C** may connect one end of the first side portion **28A** and one end of the second side portion **28B,** and the fourth side portion **28D** may connect the other end of the first side portion **28A** and the other end of the second side portion **28B.**

For example, the housing **50** may comprise: a first hole **54A** being formed in the third side portion **28C** to seat or dispose the first OIS coil unit **230A;** a second hole **54B** being formed in the fourth side portion **28D** to seat or dispose the second OIS coil unit **230B;** and a third hole **54C** being formed in the lower portion **27B** to seat or dispose the third OIS coil unit **230C.** For example, each of the first to third holes **54A** to **54C** is in the form of a penetrating hole, but is not limited thereto, and may be in the form of a groove in another embodiment.

In addition, in the third side portion **28C** (or the fourth side portion **28D**) of the housing **50,** a groove **56** (or a penetrating hole) for disposing or seating the second driver **260** may be formed. For example, the groove **56** may be formed spaced apart from the first hole **54A.**

In another embodiment, the housing **50** may comprise at least one coupling protrusion (not shown) being formed on at least one of the third side portion **28C,** the fourth side portion **28D,** and the lower portion **28b,** and the circuit board **250** may comprise a hole to be coupled with at least one coupling protrusion.

The second side portion **28B** of the housing **50** may comprise a groove **58** that corresponds to, faces, or overlaps with the groove of the driving plate **61** (or the mounting groove **68**). The number of grooves **58** may be the same as the number of grooves **68** of the driving plate **61** or the same as the number of rolling members **65.**

For example, the housing **50** may comprise two grooves **58A** and **58B** being formed spaced apart from each other in the second side portion **28B.** For example, the two grooves **58A** and **58B** of the housing **50** may be disposed spaced apart from each other in a third direction. The description of the grooves **36A** and **36B** of the holder **30** may be applied or inferred to the grooves **58A** and **58B** of the housing **50.**

For example, the protruding portion **57A** of the housing **50** may be disposed between two grooves **58A** and **58B** of the housing **50.** In addition, groove **51** of housing **50** may be disposed between two grooves **58A** and **58B** of housing **50.**

For example, the housing **50** may comprise: a groove **58A** corresponding to, opposite to, or overlapping with the first groove **68A** of the driving plate **61;** and a groove **58B** corresponding to, opposite to, or overlapping with the second groove **68B** of the driving plate **61.**

In addition, unlike those shown in the drawings, in another embodiment, the grooves **36A** and **36B** of the holder **30** may be disposed spaced apart in a third direction (For example, a Y-axis direction), the protrusions **62B1** and **62B2** of the driving plate **61** may be disposed spaced apart from each other in a third direction, the grooves **58A** and **58B** of the housing **50** may be disposed spaced apart in a second direction (For example, an X-axis direction), and the two elastic units **65B1** and **65B2** may be disposed spaced apart from each other in a second direction.

For example, the housing **50** may comprise a protruding portion **57A** formed on the second side portion **28B** to correspond to, face, or overlap with the groove **106A** of the holder **30** or the opening **106** of the driving plate **61.**

Referring to FIG. 99a, for example, the protruding portion **57A** may be protruded from an inner side surface of the second side portion **28B** of the housing **50** toward the second opening **53B** of the first side portion **28A.**

The housing **50** may comprise a groove **51** for accommodating or supporting another portion of the elastic member **63.** The groove **51** may be formed in the protruding portion **57A** of the housing **50.** The thickness of the first region of the second side portion **28B** of the housing **50** where the protruding portion **57A** is formed may be larger than the thickness of the second region of the second side portion **28B** of the housing **50** in which the protruding portion **57A** is not formed. In this way, by making the thickness of the first region larger than that of the second region, it is possible to secure the depth of the groove **55** for stably supporting the elastic units **63A** and **63B,** and it is possible to enhance the durability of the housing **50,** and as a result, it is possible to prevent the housing **50** from being broken or damaged by the force being applied from the elastic units **63A** and **63B.**

For example, the number of grooves **51** may be the same as the number of elastic units **63A** and **63B** of the elastic member **63.** In addition, for example, the shape of the groove **51** may be a shape that is easy to accommodate the elastic units **63A** and **63B.** For example, when viewing the groove **51** from the front, the groove **51** may have a circular shape, an oval shape, a polygonal shape, for example, a rectangular shape.

For example, the groove **51** may be formed on a side surface of the protruding portion **57A** of the housing **50** facing the rear outer side surface **31b** of the holder **30.** For example, the groove **51** may be a shape recessed into the side surface of the protruding portion **57A** of the housing **50.**

For example, the groove **51** may comprise a first groove **51A** corresponding to or opposite to the first elastic unit **63A** and a second groove **51B** corresponding to or opposite to the second elastic unit **63B.** For example, the first groove **51A** and the second groove **51B** may be disposed spaced apart from each other.

For example, when viewing the inner side surface of the second side portion **28B** of the housing **50** from the front, the protruding portion **57A** may be positioned between the two grooves **58A** and **58B.** In addition, for example, when viewing the inner side surface of the second side portion **28B** of the housing **50** from the front, the grooves **55A** and **55B** may be disposed between the two grooves **58A** and **58B** of the housing **50.**

For example, when viewing the inner side surface of the second side portion **28B** of the housing **50** in an optical axis direction (For example, a Z-axis direction), the grooves **55A** and **55B** of the housing **50** may be overlapped with the opening **106** of the driving plate **61.**

In another embodiment, the protruding portion **57A** of the housing **50** may be omitted, and the grooves **55A** and **55B** may be a shape recessed from an inner side surface of the second side portion **28B** of the housing **50.**

The housing **50** may comprise a guide groove **55.** The guide groove **55** may be formed in the second side portion **28B** of the housing **50.** For example, the guide groove **55** may be formed on an inner side surface of the second side portion **28B** of the housing **50.** When inserting or placing the rolling member **65** between the groove **58** of the housing **50** and the groove **68** of the driving plate **61,** the guide groove **55** may be a passage for guiding insertion or movement of the rolling member **65.**

For example, the rolling member **65** can move along the guide groove **55** and can be inserted and disposed in a space between the groove **58** of the housing **50** and the groove **68** of the driving plate **61.**

For example, the guide groove **55** may comprise: a first guide groove **55A** being disposed on the groove **58A** of the housing **50;** and a second guide groove **55B** being disposed on the groove **58B** of the housing **50.**

For example, the length of the guide groove **55** in a second direction may be longer than the length of the groove **58** in a second direction. In another embodiment, the length of the guide groove **55** in a second direction may be less than or equal to the length of the groove **58** in a second direction.

An opening may be formed at an upper portion of the guide groove **55** to allow the rolling member **65** to be inserted. For example, the guide groove **55** may comprise an opening that opens from an upper surface of the housing **50.** The guide groove **55** may be formed to be formed spaced apart from the groove **58** of the housing **50.** For example, at least a portion **59** of the housing **50** may be disposed between the guide groove **55** and the groove **58.**

For example, the guide groove **55** may comprise a chamfer shape or the shape of a step.

For example, a partition wall **59** may be disposed between the bottom surface of the guide groove **55** and the bottom surface of the groove **58.** For example, the housing **50** may comprise: a first partition wall **59A** being disposed between the bottom surface of the first guide groove **55A** and the bottom surface of the groove **58A;** and a second partition wall **59B** being disposed between the bottom surface of the second guide groove **55B** and the bottom surface of the groove **58B.** The partition wall **59** may serve to prevent the rolling member **65** from being separated from the groove **58** of the housing **50** and the groove **68** of the driving plate **61.** In other embodiments, the partition wall **59** may be omitted, and the groove **58** and the guide groove **55** may be connected or communicated with each other.

For example, the thickness of the partition wall **59** or the distance between the bottom surface of the guide groove **55** and the bottom surface of the groove **58** may be smaller than the diameter of the rolling member **65.** This is because if the thickness of the partition wall **59** or the distance between the bottom surface of the guide groove **55** and the bottom surface of the groove **58,** it may not be easy to insert the rolling member **65** between the groove **58** of the housing **50** and the groove **68** of the driving plate **61.** In another embodiment, the guide groove **55** may be connected to or communicate with the groove **58** of the housing **50.**

For example, the depth of the groove **58** of the housing **140** may be smaller than the depth of the guide groove **55.** The depth of the groove **58** may be the depth of the bottom of the groove **58,** and the depth of the guide groove **55A** may be the depth of the bottom of the guide groove **55.** In another embodiment, the depth of the groove **58** of the housing **140** may be greater than or equal to the depth of the guide groove **55.**

For example, the upper surface of the protruding portion **57A** may be positioned closer to the bottom surface of the groove **51** of the housing **140** than the inner side surface of the second side portion **28B** of the housing **140.** In addition, an upper surface of the protruding portion **57A** may be positioned closer to an inner side surface of the second side portion **28B** of the housing **140** than the bottom surface of the guide groove **55** of the housing **140.**

Referring to FIGS. 103a and 103b, the housing **50** may comprise a protruding portion **57B** being disposed on the driving plate **61** and being protruded from the second side portion **28B.** For example, the protruding portion **57B** may be protruded from the inner side surface of the second side portion **28B** in an optical axis direction or in a first direction. For example, the protruding portion **57B** may be a protruding portion of the upper surface or a portion of the upper end of the second side portion **28B.** For example, the protruding portion **57B** may be in contact with the upper end of the inner side surface of the second side portion **28B** or the upper surface of the second side surface **28B.**

The protruding portion **57B** may face or overlap with the driving plate **61** in a second direction (for example, an X-axis direction). For example, at least a portion of the protruding portion **57B** may face or overlap with the body **61A** of the driving plate **61** in a second direction (For example, an X-axis direction). Due to this, the protruding portion **58B** can prevent the driving plate **61** from being separated from the first opening **53A** of the housing **50** due to an external impact. The protruding portion **57B** may be expressed by replacing it with a "step", "blocking portion", "protrusion", or "separation prevention portion".

Next, the support part **60** will be described.

The support part **60** is disposed between the holder **30** and the housing **50** and may support the holder **30** against the housing **50.** The support part **60** may comprise a drive plate **61** being disposed between the holder **30** and the housing **50.** The support part **60** may comprise a rolling member **65** being disposed between the driving plate **61** and the housing **50.** In addition, the support part **60** may comprise an elastic member **63** connecting the holder **30** and the housing **50.**

The driving plate **61** may also be expressed by replacing it with "mover", "mover plate", "drive plate", "plate", "turn plate", "tilting plate", "moving plate", or "support plate". The driving plate **61** may be disposed between the holder **30** and the housing **50,** at least a portion of the driving plate **61** may be in contact with the holder **30,** and at least another portion of the driving plate **61** may be in contact with the housing **50.**

For example, the driving plate **61** may be disposed between the rear outer side surface **31b** of the holder **30** and the second side portion **28B** of the housing **50,** and may support the holder **30** against the housing **50.**

Referring to FIGS. 97a and 97b, the driving plate **61** may comprise a protrusion **62** being coupled to or in contact with the holder **30.** For example, the number of protrusions **62** may be one or more. For example, the driving plate **61** may comprise two protrusions **62B1** and **62B2.** For example, the protrusions **61B1** and **61B2** may be arranged spaced apart from each other in a second direction.

At least a portion of the protrusion **62** of the driving plate **61** may be inserted or disposed inside the groove **36** of the holder **30.** For example, at least a portion of each of the protrusions **62B1** and **62B2** of the driving plate **61** may be inserted into or disposed in a corresponding one of the grooves **36A** and **36B** of the holder **30.** In another embodiment, the protrusions of the driving plate **61** may be arranged spaced apart in a third direction.

The driving plate **61** may comprise a groove **68** in which the rolling member **65** is disposed. For example, the driving plate **61** may comprise grooves **68A** and **68B** in which the ball members **65B1** and **65B2** are disposed. For example, the grooves **68A** and **68B** may be disposed spaced apart in a third direction, and in another embodiment, the grooves of the driving plate for disposing the ball members may be disposed spaced apart in a second direction. The description of the opening **58** of the housing **50** may be applied or inferred to the groove **68** of the driving plate **61.**

The driving plate **61** may comprise an opening **106** that corresponds to, opposes, or overlaps with the protruding portion **57A** of the housing **50.** The opening **106** may be disposed at a position corresponding to the protruding portion **57A** of the housing **50** to avoid spatial interference with the protruding portion **57A.** In addition, the opening **106** may be formed to avoid spatial interference between the elastic member **63** and the driving plate **61.**

For example, the opening **106** of the driving plate **61** may be a penetrating hole. For example, the opening **106** may penetrate through the driving plate **61** in a first direction (Z-axis direction) or an optical axis direction.

For example, at least a portion of the opening **106** of the driving plate **61** may comprise a shape corresponding to that of the protruding portion **57A** of the housing **50.** For example, the opening **106** may comprise a circular shape, an elliptical shape, a polygonal shape, and a rectangular shape.

For example, each of the length in a horizontal direction and the length in a vertical direction of the opening **106** may be larger than the diameter of protrusion **62B1** or **62B2** of driving plate **61.** For example, the length of the opening **106** in a transverse direction may be larger than the length in a transverse direction of the protruding portion **64A** or **64B** of the driving plate **61.** In another embodiment, the length of the opening **106** in a transverse direction may be less than or equal to the length in a transverse direction of the protruding portion **64A** or **64B** of the driving plate **61.**

For example, the length of the opening **106** in a longitudinal direction may be greater than the length of the protruding portion **64A** or **64B** of the driving plate **61** in a longitudinal direction. In another embodiment, the length of the opening **106** in a longitudinal direction may be smaller than or equal to the length of the protruding portion **64A** or **64B** of the driving plate **61** in a longitudinal direction.

For example, the opening **106** may be positioned between the protruding portions **64A** and **64B** of the driving plate **61** and between the protrusions **62B1** and **62B2.**

For example, the protrusion **62** may be disposed on the front (or first surface) of the driving plate **61,** and the groove **68** may be disposed on a rear surface (or second surface) of the driving plate **61.** The rear and front surfaces of the driving plate **61** may be the surfaces being positioned opposite to each other in a first direction or an optical axis direction. For example, the bottom surface of the driving plate **61** may be a surface facing the rear outer side surface **31b** of the holder **30,** and a rear surface of the driving plate **61** may be a surface facing the inner side surface of the second side portion **28B** of the housing **50.**

The driving plate **61** may comprise a protruding portion **64** being formed on a front surface (or first surface) of the driving plate **61.** The protruding portion **64** may correspond to the groove **68** of the driving plate **61.**

Referring to FIG. 97A, since the thickness **T1** of the driving plate **61** is too thin to form the groove **68** for accommodating the rolling member **65,** a groove **68** having a predetermined depth may be formed by forming the protruding portion **64** on a front surface of the driving plate **61.** In addition, the protruding portion **64** may serve to prevent the region of the driving plate **61** in which the groove **68** is formed from being damaged or deformed by impact. For example, the thickness (or protruding height) of the protruding portion **64** may be greater than the thickness of the body **61A** of the driving plate **61.** In another embodiment, **T2** may be equal to or smaller than **T1.**

For example, driving plate **61** may comprise: a body **61A;** protrusions **62** (**62B1** and **62B2**) being protruded from a front surface of the body **61A;** and a groove **68** being formed on a rear surface of the body **61A.**

For example, each of the protrusions **62B1** and **62B2** may have a curved shape, a hemispherical shape, a dome shape, a triangular pyramid shape, a conical shape, or a polyhedral shape, but is not limited thereto.

In another embodiment, instead of the protrusions **62B1** and **62B2,** grooves (or front grooves) may be formed on a front surface of the driving plate, and instead of the grooves **36A** and **36B,** protrusions for coupling with the front groove of the driving plate may be formed on the holder.

For example, the driving plate **61** may be an injection molding product. For example, the driving plate **61** may be made of plastic, resin, or ceramic material. In another embodiment, the driving plate **61** may be made of metal, for example, or SUS material. In addition, the driving plate **61** may be a non-magnetic material. In another embodiment, the driving plate may be a magnetic material.

The rolling member **65** may be disposed between the rear surface of the driving plate **61** and the housing **50,** and may come into contact with the driving plate **61** and the housing **50.** For example, the rolling member **65** may be a member that performs rolling motion. For example, the rolling member **65** may be a "ball", a "ball member", or a "ball bearing".

At least a part of the rolling member **65** may be in contact with a rear surface of the driving plate **61,** and at least another portion of the rolling member **65** may be in contact with an inner side surface of the second side portion **28B** of the housing **50.**

For example, at least a portion of the rolling member **65** can be inserted or disposed inside the groove **68** of the driving plate **61;** and at least another portion of the rolling member **65** may be inserted or disposed inside the groove **58** of the housing **50.**

Compared to the protrusions **62B1** and **62B2** of the driving plate **61,** since the rolling member **65** performs a rolling motion, the frictional force can be relatively reduced so that the suppression ratio can be increased and the current consumption can be reduced, thereby enhancing the OIS driving performance. For example, the degree of performance of OIS feedback control can be measured by the suppression ratio. For example, the suppression ratio can be defined as the log value (20log(Y)) of the ratio (Y=OUTPUT/INPUT) of the output signal (For example, OUTPUT) of the OIS position sensor **240** and the input signal (For example, INPUT) applied to the OIS coil **230.**

One end of the elastic member **63** may be coupled to the holder **30,** and the other end of the elastic member **63** may be coupled to the housing **50.** For example, one end of the elastic member **63** may be coupled to the protruding portion **57A** of the housing **50,** and the other end of the elastic member **63** may be coupled to the second side portion **28B** of the holder **30.**

For example, one end of the elastic member **63** may be inserted or disposed inside the groove **51** of the housing **50,** and may be coupled to or fixed to the groove **51** of the housing **50.** The other end of the elastic member **63** may be inserted or disposed inside the groove **37** of the holder **30,** and may be coupled with the groove **37** of the holder **30.** One end of the elastic member **63** may be coupled to the groove **51** of the housing **50** by an adhesive, and the other end of the elastic member **63** may be coupled to the groove **37** of the holder **30.**

The elastic member **63** may be a pulling member that pulls the holder **30** and the housing **50** to each other. For example, the holder **30** may be pressed against the housing **50** by the pulling force of the elastic member **63,** and thus the holder **30** may be supported.

The elastic member **63** may comprise at least one elastic unit **63A** or **63B.** For example, the number of elastic units may be one or more. For example, the elastic member **63** may comprise two elastic units **63A** and **63B** disposed spaced apart from each other in a third direction. For example, the number of elastic units disposed spaced apart from each other in a third direction may be two or more.

In another embodiment, the elastic member **63** may comprise two elastic units disposed spaced apart from each other in a second direction. For example, the number of elastic units being disposed spaced apart from each other in a second direction may be two or more. In another embodiment, the elastic member may comprise only one elastic unit.

For example, the elastic units **63A** and **63B** may be springs, coil springs, suspension wires, or leaf springs. For example, the elastic units **63A** and **63B** may be made of metal.

Referring to FIGS. 98a, 98b, and 100b, at least a portion of the protruding portion **57A** of the housing **50** may be inserted or disposed inside the opening **106** of the driving plate **61.**

The elastic member **63** may pass through the opening **106** of the driving plate **61.** For example, at least a portion of the elastic member **63** in a second direction may overlap with the driving plate **61.** For example, the elastic units **63A** and **63B** may penetrate through the opening **106** of the driving plate **61** or avoid the body **61A** of the driving plate **61.**

For example, when viewing the driving plate **61** from the front, the elastic member **63** may be disposed inside an outer circumferential surface of the driving plate **61.** In addition, when viewing the driving plate **61** from the front, the elastic member **63** may overlap with the opening **106** of the driving plate **61.**

Next, the second driving unit **70** will be described.

The second driving unit **70** tilts the holder **30** in a second direction or a third direction or rotates it by a preset angle.

The second driving unit **70** may comprise an OIS magnet **31** and an OIS coil **230.** The OIS magnet can be expressed by replacing it with "magnet" or "magnet unit", and an OIS coil may be expressed by replacing it with a "coil body", a "coil" or a "coil unit". In addition, the second driving unit **70** may comprise an OIS position sensor unit **240** and a first substrate unit **250.**

The OIS magnet **31** may be disposed on the holder **30.** For example, the OIS magnet **31** may comprise the first OIS magnets **31A** and **31B** and the second OIS magnet **32.**

For example, the first OIS magnet may comprise: a first magnet unit **31A** being disposed on the third side portion **31c** of the holder **30;** and a second magnet unit **31B** disposed on the fourth side portion **31d** of the holder **30.** For example, the first magnet unit **31A** may face or overlap with the second magnet unit **31B** in a third direction. For example, the first magnet unit **31A** may be disposed inside the first seating groove **16A** of the third side portion **31c** of the holder **30,** and the second magnet unit **31B** may be disposed inside the first seating groove **16A** of the fourth side portion **31d** of the holder **30.**

The second OIS magnet may comprise a third magnet unit **32** being disposed on the lower surface **17** of the holder **30.** The third magnet unit **32** may be disposed inside the second seating groove **16B** of the holder **30.**

Each of the first to third magnet units **31A, 31B,** and **32** may be a monopole magnetized magnet having one N pole and one S pole, but is not limited thereto, and in another embodiment, it may be a positively magnetized magnet having two N poles and two S poles. In another embodiment, at least one of the first to third magnet units **31A, 31B,** and **32** may be unipolar magnetized magnets, and the others may be bipolar magnetized magnets.

The OIS coil **230** may be disposed in the housing **50.** For example, the **OIS** coil may be disposed corresponding to or facing the OIS magnet **31.**

For example, the OIS coil **230** may comprise: first OIS coils **230A** and **230B** corresponding to, opposite to, or overlapping with the first OIS magnets **31A** and **31B** in a third direction; and a second OIS coil **230C** corresponding to, facing, or overlapping with the second OIS magnet **32** in a second direction.

For example, the first OIS coil may comprise: a first OIS coil unit **230A** corresponding to, opposite to, or overlapping with the first magnet unit **31A** in a third direction; and a second OIS coil unit **230B** corresponding to, facing, or overlapping the second magnet unit **31B** in a third direction. For example, the second OIS coil may comprise a third OIS coil unit **230C** that corresponds to, faces, or overlaps with the third magnet unit **32** in a second direction.

For example, the first OIS coil unit **230A** may be disposed in the third side portion **28C** (For example, the first hole **34A**) of the housing **50;** the second OIS coil unit **230B** may be disposed in the fourth side portion **28D** (For example, the second hole **54B**) of the housing **50;** and the third OIS coil unit **230C** may be disposed at the lower portion **28B** of the housing **50** (For example, the third hole **54C**).

For example, the first OIS coil unit **230A** may have a closed curve or ring shape comprising a hollow or hole. The first OIS coil unit **230A** may be implemented in the form of a coil ring wound in a clockwise or counterclockwise direction with respect to a third axis parallel to the third direction.

The second OIS coil unit **230B** may have a closed curve or ring shape comprising a hollow or hole. The second OIS coil unit **230B** may be implemented in the form of a coil ring wound in a clockwise or counterclockwise direction with respect to a third axis parallel to the third direction.

The third OIS coil unit **230C** may have a closed curve or ring shape comprising a hollow or hole. The third OIS coil unit **230C** may be implemented in the form of a coil ring wound in a clockwise or counterclockwise direction with respect to a second axis parallel to the second direction.

Referring to FIG. 101, first electromagnetic forces **F21, F22, F31,** and **F32** may be generated by the interaction between the first OIS magnets **31A** and **31B** and the first OIS coils **230A** and **230B.** That is, the first electromagnetic force may be generated by the interaction between the first magnet unit **31A** and the first OIS coil unit **230A** and the interaction between the second magnet unit **31B** and the second OIS coil unit **230B.** For example, the first-first electromagnetic forces **F22** and **F32** may be generated by the interaction between the first magnet unit **31A** and the first OIS coil unit **230A;** the first-second electromagnetic forces **F21** and **F31** may be generated by the interaction between the second magnet unit **31B** and the second OIS coil unit **230B;** and the first electromagnetic force may comprise the first-first electromagnetic forces **F22** and **F32** and the first-second electromagnetic forces **F21** and **F31.**

In addition, the second electromagnetic forces **F1** and **F2** may be generated by the interaction between the second OIS magnet **32** and the third OIS coil unit **230C.**

For example, the OIS moving unit (For example, holder **30**) may be tilted with respect to the vertical axis **501** (For example, X-axis) by the first electromagnetic forces **F21, F22, F31,** and **F32.** Or, for example, by the first electromagnetic forces **F21, F22, F31,** and **F32,** the OIS moving unit (For example, holder **30**) may rotate by a predetermined angle using the vertical axis **501** (For example, X-axis) as a rotation axis.

For example, the vertical axis **501** may be a straight line passing through the protrusions **62B1** and **62B2** of the driving plate **61** and parallel to the X-axis. In another embodiment having ball members instead of the protrusions **62B1** and **62B2,** the vertical axis **501** may be a straight line passing through the ball member instead of the protrusions **62B1** and **62B2.**

For example, the vertical axis **501** may be a straight line passing through the center of the driving plate **61** and parallel to the X-axis. For example, the vertical axis **501** may be expressed as a "first rotation axis".

The OIS moving unit may be tilted with respect to the horizontal axis **502** (For example, the X-axis) by the second electromagnetic forces **F1** and **F2.** Or, by the second electromagnetic forces **F1** and **F2,** the OIS moving unit may be rotated by a predetermined angle with the horizontal axis **502** (For example, X-axis) as a rotation axis. For example, the horizontal axis **502** may be a straight line passing through the rolling member (For example, the ball members **65B1** and **65B2**). For example, the horizontal axis **502** may be a straight line passing through the center of the driving plate **61** and parallel to the Y-axis. For example, the horizontal axis **502** may be expressed as a "second rotation axis". The horizontal axis **502** and the vertical axis **501** may be perpendicular to each other.

At this time, the OIS movable unit may comprise a holder **30.** Or, the OIS movable unit may further comprise, for example, OIS magnets **31A, 31B,** and **32** and the yoke **33** being coupled to or mounted on the holder **30.** In addition, the OIS movable unit may further comprise a driving plate **61.**

In another embodiment, any one of the first and second OIS magnet units **31A** and **31B** may be omitted, and the OIS coil corresponding to the omitted magnet unit may also be omitted.

In another embodiment, the OIS moving unit (For example, the holder **30**) may be tilted with respect to the horizontal axis by the electromagnetic force due to the interaction between the first OIS magnets **31A** and **31B** and the first OIS coils **230A** and **230B;** and the OIS moving unit (For example, the holder **30**) may be tilted with respect to a vertical axis by the electromagnetic force due to the interaction between the second OIS magnet **32** and the third OIS coil unit **230C.**

The camera device **200** may further comprise yokes **33** (**33A**, **33B,** and **33C**) being disposed on the OIS magnets **31** and **32.**

For example, the yoke **33** may comprise: a first yoke **33A** being disposed in the first magnet unit **31A;** a second yoke **33B** being disposed in the second magnet unit **31B;** and a third yoke **33C** being disposed on the third magnet unit **32.**

For example, the first yoke **33A** may be disposed inside the first seating groove **16A** of the third side portion **31c** of the holder **30.** For example, the first yoke **33A** may be disposed inside the first magnet unit **31A.** The second yoke **33B** may be disposed inside the first seating groove **16A** of the fourth side portion **31d** of the holder **30.** For example, the second yoke **33B** may be disposed inside the second magnet unit **31B.** The third yoke **33C** may be disposed inside the second seating groove **16B** of the holder **30.** The third yoke **33C** may be disposed inside the third magnet unit **32.** The first yoke **33A** and the second yoke **33B** may increase the first electromagnetic force, and the third yoke **33C** may increase the second electromagnetic force.

The first substrate unit **250** may be disposed in the housing **50.** For example, the first substrate unit **250** may be coupled with the housing **50.** The first substrate unit **250** may be electrically connected to the OIS coil **230** and may provide a driving signal to the OIS coil **230.**

For example, the first OIS coil unit **230A** and the second OIS coil unit **230B** may be connected in series to each other, and the first substrate unit **250** may provide a first driving signal to the first and second OIS coil units **230A** and **230B** connected in series. In addition, the first substrate unit **250** may provide the second driving signal to the third **OIS** coil unit **230C.**

The first substrate unit **250** may comprise: a first circuit board 250A disposed on the third side portion **28C** of the housing **50;** a second circuit board **250B** being disposed on the fourth side portion **28D** of the housing **50;** and a third circuit board **250C** being disposed on the lower portion **27B** of the housing **50.**

In FIG. 94, although the first circuit board **250A** appears to be spaced apart from the third circuit board **250C,** the first to third circuit boards **250A** to **250C** may be one integral board and may be electrically connected to each other. In another embodiment, at least one of the first to third circuit boards may not be integral with the others, and may be electrically connected to each other.

The first circuit board **250A** may comprise a plurality of terminals **251.** The OIS coil units **230A, 230B,** and **230C** may be electrically connected to the first substrate unit **250.**

The first OIS coil unit **230A** may be disposed or mounted on the first circuit board **250A,** the second OIS coil unit **230B** may be disposed or mounted on the second circuit board **250B,** and the third OIS coil unit **230C** may be disposed or mounted on the third circuit board **250C.**

For example, the first OIS coil unit **230A** may be disposed or mounted on a first surface of the first circuit board **250A,** and a plurality of terminals **251** may be disposed on a second surface of the first circuit board **250A.** The first surface of the first circuit board **250A** may be a surface facing an outer side surface of the third side portion **28C** of the housing **50.** The second surface of the first circuit board **250A** may be a surface opposite to the first surface of the first circuit board **250A.**

The first substrate unit **250** may comprise a bent portion connecting between the second circuit board **250B** and the third circuit board **250C** and between the first circuit board **250A** and the third circuit board **250C.** For example, the second OIS coil unit **230B** may be disposed or mounted on a first surface of the second circuit board **250B.** The first surface of the second circuit board **250B** may be a surface facing the outer side surface of the fourth side portion **28C** of the housing **50.** For example, the third OIS coil unit **230C** may be disposed or mounted on a first surface of the third circuit board **250C.** The first surface of the third circuit board **250C** may be a surface facing an outer surface of the lower portion **28B** of the housing **50.**

The first substrate unit **250** may comprise at least one of a rigid printed circuit board (Rigid PCB), a flexible printed circuit board (Flexible PCB), and a rigid printed circuit board (Rigid Flexible PCB). In addition, the first substrate unit **250** may comprise a wiring pattern for electrically connecting components disposed on the first to third circuit boards **250A, 250B,** and **250C** and the plurality of terminals **251.**

The camera device **200** may further comprise a gyro sensor **82** being disposed on the first substrate unit **250.** For example, the gyro sensor **82** may be a 2-axis, 3-axis, or 5-axis gyro sensor or an angular velocity sensor.

The camera device **200** may further comprise a second driver **260** being disposed on the first substrate unit **250.** For example, the second driver **260** may be disposed or mounted on the first circuit board **250A.** For example, the second driver **260** may be disposed in the housing **50.** For example, the second driver **260** may be disposed or mounted on a first surface of the first circuit board **250A** of the housing **50.**

The second driver **260** may be electrically connected to the first OIS coils **230A** and **230B** and the second OIS coil **230C.** In addition, the second driver **260** may be electrically connected to the first OIS position sensors **240A** and **240B** and the second OIS position sensor **240C.**

For example, the second driver **260** may provide a driving signal to each of the first OIS position sensors **240A** and **240B** and the second OIS position sensor **240C,** and receive a first output signal of the first OIS position sensors **240A** and **240B** and a second output signal of the second OIS position sensor **240C.**

In addition, for example, the second driver **260** may supply a first driving signal (For example, driving current or driving voltage) to the first OIS coils **230A** and **230B,** and feedback-control the first driving signal using the first output signals of the first OIS position sensors **240A** and **240B.**

In addition, For example, the second driver **260** may supply a second driving signal (For example, driving current or driving voltage) to the second OIS coil **230C,** and feedback-control the second driving signal using the second output signal of the second OIS position sensor **240C.** For example, the second driver **260** may be expressed by replacing it with an "OIS driver", driver IC", or "OIS control unit".

The OIS position sensor unit **240** detects the position of the OIS movable unit in a second direction and/or a third direction according to the movement of the OIS movable unit, and outputs an output signal according to the detected result. The OIS position sensor unit **240** may be expressed by replacing it with a "second position sensor unit".

The OIS position sensor unit **240** may comprise a plurality of position sensors.

For example, the OIS position sensor unit **240** may comprise first OIS location sensors **240A** and **240B** and a second OIS position sensor **240C.**

At least some of the first OIS position sensors **240A** and **240B** may correspond to, face, or overlap with the first OIS magnet **31** in a third direction. The first OIS position sensors **240A** and **240B** may detect the first OIS magnet **31** or the strength of the magnetic field of the first OIS magnet **31.**

For example, the first OIS position sensor may comprise: a first sensor **240A** being disposed or mounted on a first circuit board **250A;** and a second sensor **240B** being disposed or mounted on the first substrate **250-1** of the second circuit board **240B.** For example, the first sensor **240A** may be disposed in a hollow (or hole) of the first OIS coil unit **230A,** and the second sensor **240B** may be disposed in a hollow (or hole) of the second OIS coil unit **230B.** For example, each of the first sensor **240A** and the second sensor **240B** may be a Hall sensor comprising first and second input terminals and first and second output terminals.

For example, the first and second input terminals of the first sensor **240A** and the first and second input terminals of the second sensor **240B** may be connected in parallel, and the second driver **260** may supply driving signals or power to first and second input terminals connected in parallel to the first and second sensors **240A** and **240B.**

For example, the first and second output terminals of the first sensor **240A** and the first and second output terminals of the second sensor **240B** may be connected in series; a first output signal may be outputted from both ends of the serially connected first and second output terminals of the first and second sensors **240A** and **240B;** and the first output signal may be transmitted to the second driver **260.**

At least a portion of the second OIS position sensor **240C** may correspond to, face, or overlap with the second OIS magnet **32** in a second direction. The second OIS position sensor **240C** may detect the second OIS magnet **32** or the strength of the magnetic field of the second OIS magnet **32.**

For example, the second OIS position sensor **240C** may comprise a third sensor **240C1** and a fourth sensor **240C2** being disposed or mounted on the third circuit board **250C.** The third sensor **240C1** and the fourth sensor **240C2** may face or overlap with the third OIS magnet **32** in a second direction. For example, the third sensor **240C1** and the fourth sensor **240C2** may be disposed to be spaced apart from each other in a third direction. For example, the third sensor **240C1** and the fourth sensor **240C** may be disposed in a hollow (or hole) of the third OIS coil unit **230C.**

For example, each of the third sensor **240C1** and the fourth sensor **240C2** may be a Hall sensor comprising first and second input terminals and first and second output terminals.

For example, the first and second input terminals of the third sensor **240C1** and the first and second input terminals of the fourth sensor **240B** may be connected in parallel, and the second driver **260** may supply driving signals or power to first and second input terminals connected in parallel to the third and fourth sensors **240C1** and **240C2.** For example, the first and second output terminals of the third sensor **240C1** and the first and second output terminals of the fourth sensor **240C2** may be connected in series; a second output signal may be outputted from both ends of the serially connected first and second output terminals of the third and fourth sensors **240C1** and **240C2;** and the second output signal may be transmitted to the second driver **260.**

In another embodiment, the output terminals of the first and second sensors may be independent of each other without being connected, and may output independent output signals. In addition, the output terminals of each of the third and fourth sensors may be independent of each other without being connected, and may output independent output signals.

In another embodiment, the first OIS position sensor may comprise one position sensor (For example, a Hall sensor or a driver IC comprising a Hall sensor) and may transmit an output of one position sensor to the driver **260.**

The second OIS position sensor may comprise one position sensor (for example, a Hall sensor or a driver IC comprising a Hall sensor) and transmit an output of one position sensor to the driver **260.**

FIGS. 104a to 104d are diagrams for explaining an assembly sequence of the second actuator **320.**

Referring to FIG. 104a, the elastic member **63** is coupled to the housing **50** to which the first substrate unit assembly is coupled. At this time, the "first substrate unit assembly" may be the one in which an OIS coil **230,** an OIS position sensor **240,** a driver **260,** and a motion sensor **82** are coupled to or mounted on the first substrate unit **250.**

The elastic member **63** is coupled to the housing **50.** For example, one end of the elastic member **63** may be coupled to the groove **51** of the housing **50** by an adhesive.

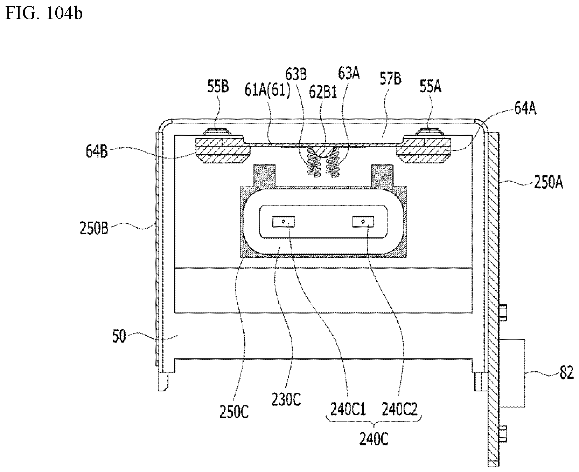

Referring to FIG. 104b, the driving plate **61** is disposed in the housing **50.** For example, at least a portion of the protruding portion of the housing **50** may be inserted or disposed inside the opening **106** of the driving plate **61.**

Referring to FIG. 104b, the shortest separation distance between the first coil spring **63A** and the second coil spring **63B** may be smaller than the separation distance between the first guide groove **55A** and the second guide groove **55B.**

In addition, for example, the shortest separation distance between the first coil spring **63A** and the second coil spring **63B** may be smaller than the separation distance between the third sensor **240C1** and the fourth sensor **240C2.**

In addition, for example, the separation distance between the third sensor **240C1** and the fourth sensor **240C2** may be smaller than the separation distance between the first guide groove **55A** and the second guide groove **55B.**

In addition, for example, the separation distance between the third sensor **240C1** and the fourth sensor **240C2** may be smaller than the separation distance between the first ball member **65B1** and the second ball member **65B2.**

In addition, for example, referring to FIGS. 97a and 97b, the separation distance between the first protrusion **62B1** and the second protrusion **62B2** of the driving plate **61** may be smaller than the separation distance between the first ball member **65B1** and the second ball member **65B2.**

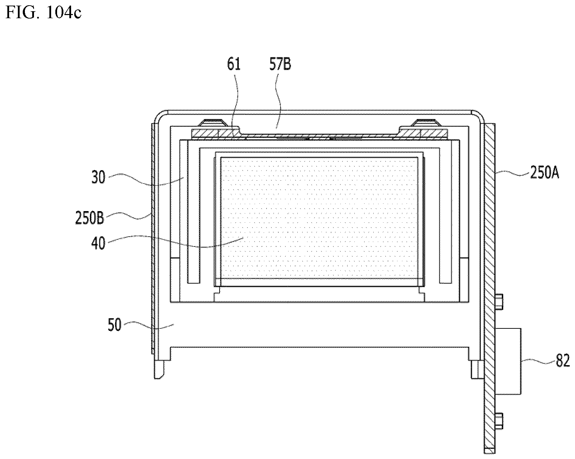

Referring to FIG. 104c, a "holder assembly" is disposed inside the housing **50** such that the elastic member **63** is coupled with the holder **30.** For example, the other end of the elastic member **63** may be coupled to the groove **37** of the holder **30** by an adhesive.

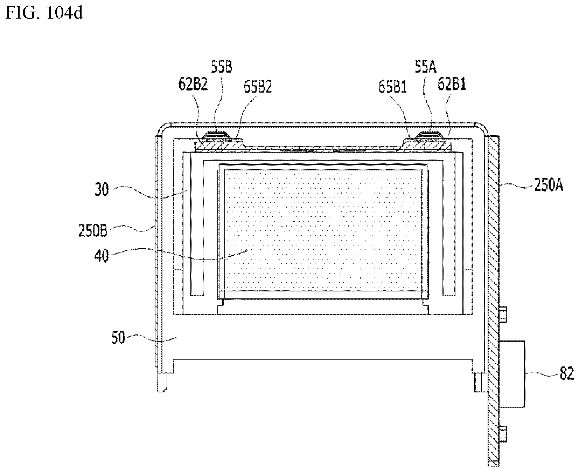

Referring to FIG. 104d, the rolling member **65** is inserted and disposed between the housing **50** and the driving plate **61.**

When the rolling member 65 is pushed along the guide groove 55 between the inner side surface of the second side portion **28B** of the housing **50** and the rear surface of the driving plate **61,** the rolling member **65** may be disposed or seated in the groove **58** of the housing **50** beyond the partition wall **59.**

For example, the diameter of the rolling member **65** may be greater than the distance between the guide groove **55** and the rear surface of the driving plate **61.** In addition, for example, the diameter of the rolling member **65** may be larger than the distance (for example, the shortest distance) between the groove **68** of the driving plate **61** and the groove **58** of the housing **50.** For example, the diameter of the rolling member **65** may be greater than the distance between the bottom of the groove **68** of the driving plate **61** and the bottom of the groove **58** of the housing **50.**

When the rolling member **65** continues to move downward along the guide groove **55,** the rolling member **65** can be seated or disposed between the groove **58** of the housing **50** and the groove **68** of the driving plate **61** beyond the partition wall **59.** The separation of the rolling member **65** out of the groove **58** of the housing **50** can be prevented by the partition wall **59.** The guide groove **55** can minimize damage to the elastic member **63** when the rolling member **65** is assembled, and may serve to prevent the elastic member **63** from being deformed.

The elastic member **63** can be stretched or expanded by the rolling member **65.** The expanded elastic member **63** may generate an elastic restoring force to restore the original shape, and the "holder assembly" may be brought into close contact with the housing **50** by this elastic restoring force. That is, the holder assembly (for example, the holder **30**) can press the driving plate **61** and the housing **50** by the elastic restoring force, and due to this, the holder assembly can be supported.

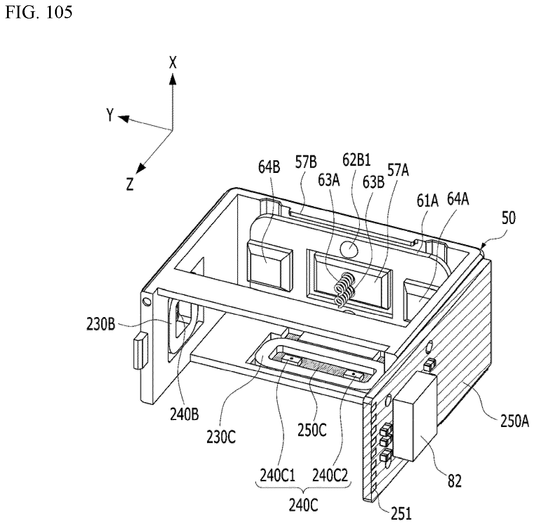

FIG. 105 shows the arrangement of elastic units **63A** and **63B** according to another embodiment.

Referring to FIG. 105, the elastic member **63** may comprise a plurality of elastic units **63A** and **63B.** The plurality of elastic units **63A** and **63B** may be disposed spaced apart from each other in a second direction (X-axis direction). For example, the distance between two neighboring elastic units may be the same. In FIG. 105, the number of elastic units is two, but in other embodiments, the number of elastic units may be three or more.

For example, in another embodiment, the housing **140** may comprise a plurality of rows (For example, two) being formed in the protruding portion **57A** and grooves in the form of a matrix with multiple (For example, two) columns, and matrix-shaped elastic members corresponding to the matrix-shaped grooves may be provided.

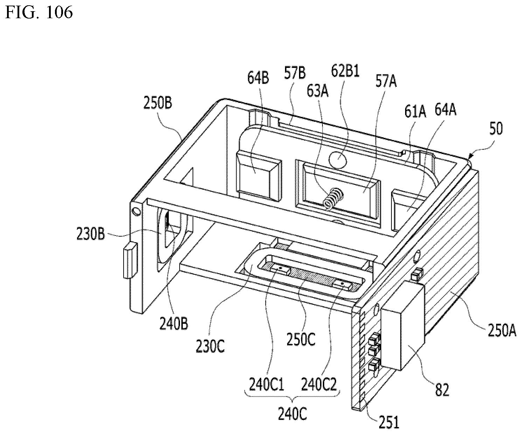

FIG. 106 shows the arrangement of elastic members according to another embodiment.

Referring to FIG. 106, the elastic member **63** may comprise only one elastic unit **63A.** For example, the elastic unit **63A** may be positioned in the center or central region of the protruding portion **57A** of the housing **50.** In another embodiment, the center of the elastic unit **63A** may not match or be aligned with the center of the protruding portion **57A.**

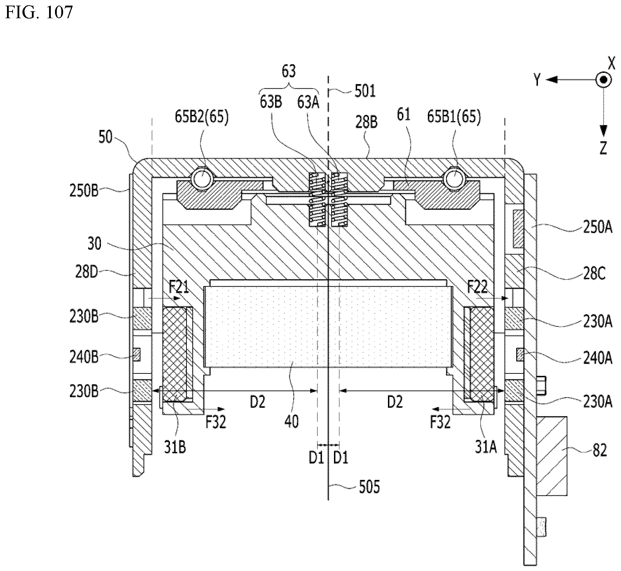

FIG. 107 is a cross-sectional view for explaining a relationship between an arrangement position of an elastic member **63** and an OIS driving force according to an embodiment.

FIGS. 101 and 107, the "holder assembly" can be supported on the housing **50** by the elastic member **63,** and the holder assembly can be tilted about the first rotation axis **501** as an axis by the first electromagnetic force **F21, F22, F31,** and **F32** caused by the interaction between the first OIS magnets **31A** and **31B** and the first OIS coils **230A** and **230B**,.

The moment of the holder assembly is proportional to the separation distance between the source of the elastic restoring force and the source generating the electromagnetic force. For example, the source of the elastic restoring force may be the elastic member **63,** and the source generating the electromagnetic force may be the first OIS coils **230A** and **230B.**

The magnitude of the first electromagnetic force may be reduced to obtain a predetermined moment value when the separation distance between the elastic member **63** and the source generating the electromagnetic force increases. Even with a small electromagnetic force, the holder assembly can be tilted about the first rotation axis **501** as an axis, power consumption for OIS driving can be reduced, and performance of OIS driving can be enhanced.

In order to increase the moment of such a holder assembly, an embodiment has a structure in which the separation distance between the elastic member **63** and the first OIS coils **230A** and **230B,** which are sources of electromagnetic force, is increased.

For example, the elastic member **63** may be disposed closer to the first rotation axis **501** than to the first OIS coils **230A** and **230B.** For example, the separation distance between the elastic member **63** and the first rotation axis **501** may be smaller than the separation distance between the elastic member **63** and the first OIS coils **230A** and **230B.**

For example, the elastic member **63** may be disposed closer to the center of the driving plate **61** than to the first OIS coils **230A** and **230B.** For example, the separation distance between the center of the elastic member **63** and the driving plate **61** may be smaller than the separation distance between the elastic member **63** and the first OIS coils **230A** and **230B.**

For example, the elastic member **63** may be disposed closer to the center of the driving plate **61** than the edge or periphery of the driving plate **61.** For example, the separation distance between the elastic member **63** and the center of the driving plate **61** may be smaller than the separation distance between the elastic member **63** and the edge or periphery of the driving plate **61.**

In FIG. 107, in order to compare the separation distance on the YZ plane, a straight line passing through the first rotation axis **501** and parallel to a first direction (Z-axis direction) is defined as a reference line **505.** For example, the reference line **505** may be a straight line parallel to a direction from the second side portion **28B** of the housing **50** toward the holder **30** and passing through the center of the driving plate **61.** Or, the reference line **505** may be a straight line parallel to a direction from the second side portion **28B** of the housing **50** toward the holder **30** and passing through the center of the second side portion **28B** of the housing **50.** Or, the reference line **505** may be a straight line parallel to a direction from the second side portion **28B** of the housing **50** toward the driving plate **61** and passing through the center of the driving plate **61.** For example, the reference line **505** may be parallel to an optical axis **OA**.

The elastic member **63** may be disposed closer to the reference line **505** than the first OIS coils **230A** and **230B.** For example, the separation distance **D1** between the elastic member **63** and the reference line **505** may be smaller than the separation distance **D2** between the first OIS coils **230A** and **230B** and the reference line **505.**

For example, **D1** may be the distance between the reference line **505** and the center line of the elastic member **63.** For example, the center line of the elastic member **63** may be a straight line parallel to a first direction and passing through the center of the elastic member **63** (see dotted lines on the left and right sides of the reference line illustrated in FIG. 107. In another embodiment, **D1** may be the shortest separation distance between the reference line **505** and the elastic member **63.**

For example, **D2** may be a distance between the center line of the first OIS coils **230A** and 230B and the elastic member **63.** In another embodiment, **D2** may be the shortest separation distance between the first OIS coils **230A** and **230B** and the elastic member **63.**

In addition, for example, the shortest separation distance between the first coil spring **63A** and the second coil spring **63B** may be smaller than the separation distance between the first coil spring **63A** and the ball member **65B1.**

In addition, for example, the shortest separation distance between the first coil spring **63A** and the second coil spring **63B** may be smaller than the separation distance between the second coil spring **63B** and the ball member **65B2.**

In addition, for example, the shortest separation distance between the first coil spring **63A** and the second coil spring **63B** may be smaller than the separation distance between the first ball member **65B1** and the second ball member **65B2.**

The elastic member **63** may be disposed closer to the reference line **505** than the third side portion **28C** (or the fourth side portion **28D**) of the housing **50.** For example, the separation distance between the elastic member **63** and the reference line **505** may be smaller than the separation distance between the third side portion **28C** (or the fourth side portion **28D**) of the housing **50** and the reference line **505.**

The elastic member **63** may be disposed closer to the center line of the housing **50** than the third side portion **28C** (or the fourth side portion **28D**) of the housing **50.** The center line of the housing **50** may be a straight line parallel to a first direction (Z-axis direction) and having the same separation distance from each of the third side portion **28C** and the fourth side portion **28D.**

The elastic member **63** may be disposed closer to the reference line **505** than the third side portion **31c** (or the fourth side portion **31d**) of the holder **30.** For example, the separation distance between the elastic member **63** and the reference line **505** may be smaller than the separation distance between the third side portion **31c** (or the fourth side portion **31d**) of the holder **30** and the reference line **505.**

The elastic member **63** may be disposed closer to the reference line **505** than the first OIS magnets **31A** and **31B.** For example, the separation distance between the elastic member **63** and the reference line **505** may be smaller than the separation distance between the first OIS magnets **31A** and **31B** and the reference line **505.**

The elastic member **63** may be disposed adjacent to the first rotation axis **501** for tilting the X-axis of the first actuator **320.** The elastic member **63** may serve as a pivot for the X-axis tilting of the holder assembly with reference to the first rotation axis **501.**

The holder assembly may be tilted using the protrusions **62B1** and **62B2** of the driving plate **61** as the first rotation axis **501,** and this is referred to as "X-axis tilting". The holder assembly may be tilted using the ball members **65B1** and **65B2** as the second rotation axis **502,** and this is referred to as "Y-axis tilting".

In another embodiment, instead of the protrusions **62B1** and **62B2** of the driving plate **61,** a groove corresponding to, facing to, or overlapping with the groove **36** of the holder **30** may be formed on the front surface of the driving plate **61,** and a separate ball member may be disposed between the groove **36** of the holder **30** and the groove formed on the front surface of the driving plate **61.**

In general, since the frictional force when using a ball member is smaller than the frictional force when using the protrusion of the drive plate, the embodiment uses a separate ball member for Y-axis tilting, or separate ball members for X-axis tilting and Y-axis tilting. By using each of them, power consumption for OIS driving can be reduced and OIS performance can be enhanced.

In addition, as described above, the elastic member **63** is disposed away from the first OIS coils **230A** and **230B,** which are sources of electromagnetic force, and disposed close to the first rotation axis **501,** so that the embodiment can reduce power consumption and enhance the performance of OIS driving.

Referring to FIG. 101, in order to increase the moment of the holder assembly for Y-axis tilting, the embodiment has a structure in which the separation distance between the elastic member **63** and the second OIS coil **230C,** which is a source of electromagnetic force, is increased.

For example, the elastic member **63** may be disposed closer to the second rotation axis **502** than to the second OIS coils **230A** and **230B.** For example, a separation distance between the elastic member **63** and the second rotation axis **502** may be smaller than a separation distance between the elastic member **63** and the second OIS coil **230C.**

In addition, for example, the elastic member **63** may be disposed closer to the second rotation axis **502** than the second OIS magnet **32.** For example, a separation distance between the elastic member **63** and the second rotation axis **502** may be smaller than the separation distance between the elastic member **63** and the second OIS coil **230C.**

As described above, by disposing the elastic member **63** away from the second OIS coil **230C,** which is a source of electromagnetic force, and disposing it close to the second rotation axis **502,** the embodiment can reduce power consumption for driving the OIS and enhance the performance of OIS driving.

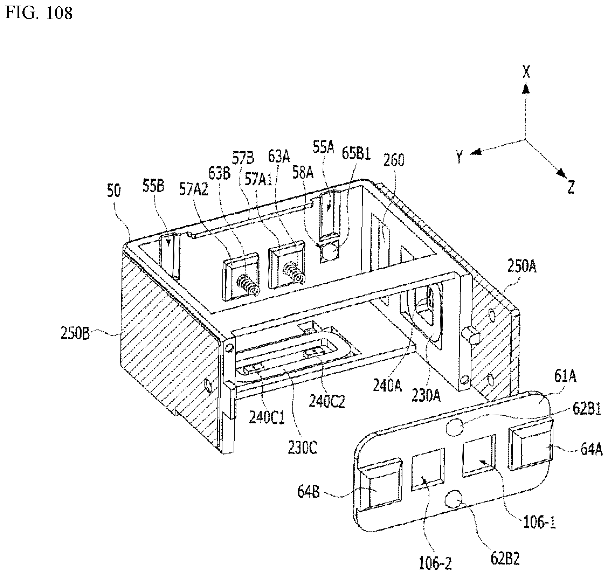

FIG. 108 shows protruding portions **57A1** and **57A2** and a driving plate **611** of the housing **50** according to another embodiment. FIG. 108 may be a modified embodiment of the protruding portion **57A** and the driving plate **61** in FIG. 100b.

In FIG. 100b, two elastic units **63A** and **63B** are disposed on one protruding portion **57,** and the drive plate 61 comprises one opening **106** corresponding to one protruding portion **57,** however, in FIG. 108, the housing **50** may comprise a plurality of protruding portions **57A1** and **57A2** corresponding to the plurality of elastic units **63A** and **63B,** respectively. For example, the plurality of protruding portions **57A1** and **57A2** may be disposed spaced apart from each other in a third direction. FIG. 108 illustrates two protruding portions, but in another embodiment, the housing may comprise three or more protruding portions.

In another embodiment, the housing **140** may comprise a plurality of protruding portions being spaced apart in a second direction (X-axis direction), and in each protruding portion, a groove for coupling, inserting, or disposing a portion of one elastic member may also be formed.

In another embodiment, the housing **140** may comprise protruding portions in the form of a matrix having a plurality of rows (for example, two) and a plurality of rows (for example, two). Matrix-shaped elastic members corresponding to the protruding portions of the shape may be provided.

A groove into which at least a portion of a corresponding one of the elastic units **63A** and **63B** is inserted, coupled, or attached may be formed in each of the plurality of protruding portions **57A1** and **57A2.**

The driving plate **61** may comprise a plurality of openings **106-1** and **106-2** corresponding to, facing, or overlapping with the plurality of protruding portions **57A1** and **57A2.** The number of the plurality of openings **106-1** and **106-2** may be the same as the number of protruding portions **57A1** and **57A2.** The plurality of openings **106-1** and **106-2** may be disposed spaced apart from each other in a third direction. Each of the elastic units **63A** and **63B** may pass through a corresponding any one of the plurality of openings **106-1** and **106-2** of the driving plate **61.**

The third embodiment of the present invention shown in FIG. 108 can reduce the opening area of the driving plate **61,** thereby increasing the rigidity or durability of the driving plate **61.**

In the modified embodiment of FIG. 105, the housing **50** may comprise a plurality of protruding portions being spaced apart in a second direction; the driving plate **61** may comprise a plurality of openings being spaced apart in a second direction and corresponding to a plurality of protruding portions; and the description of FIG. 108 is applied or may be applied mutatis mutandis.

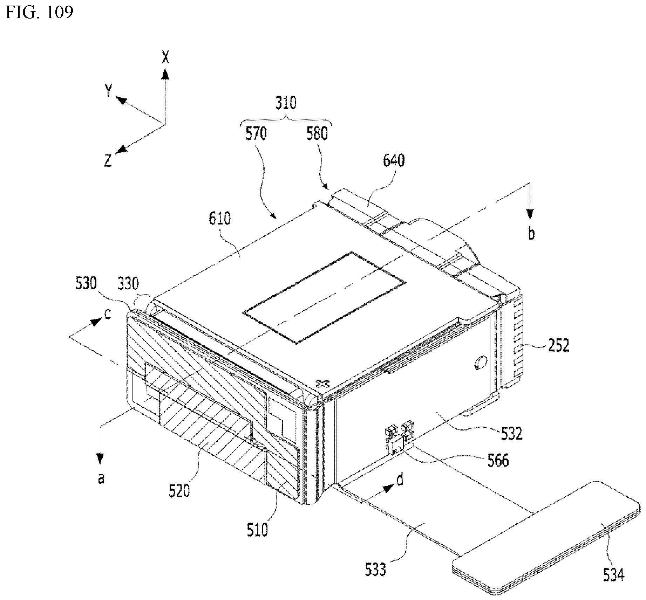

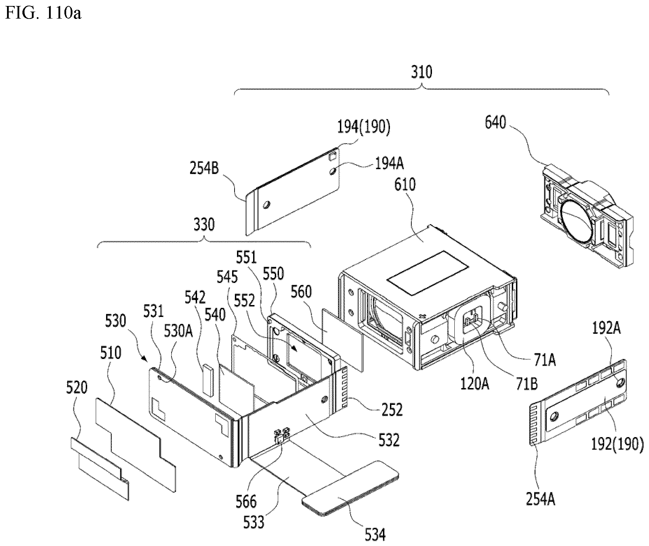

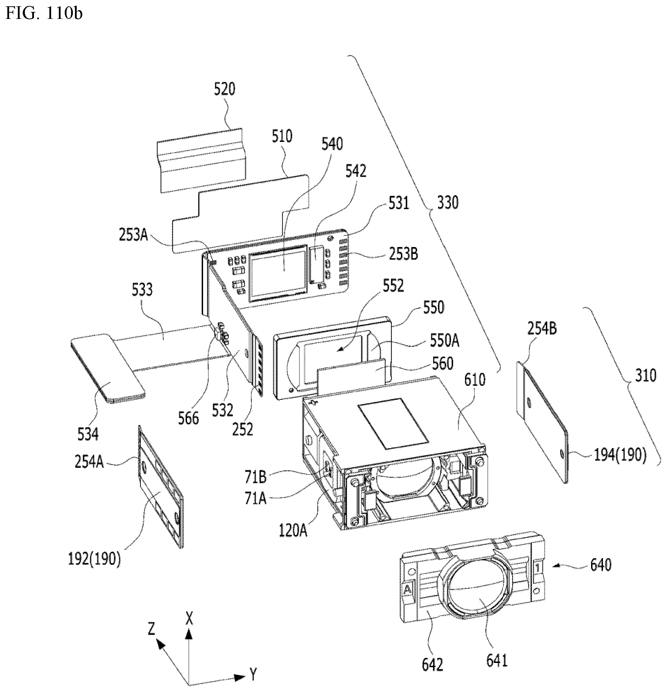

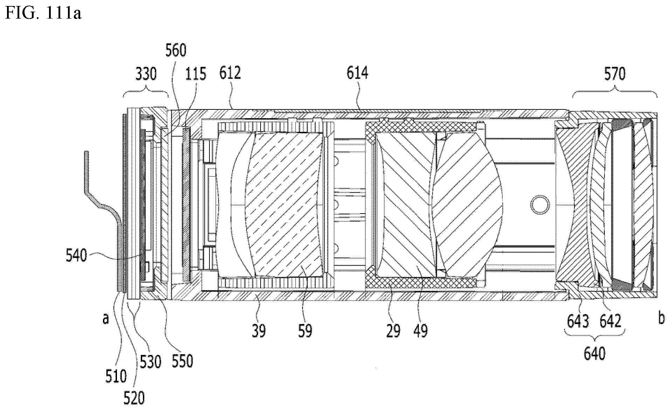

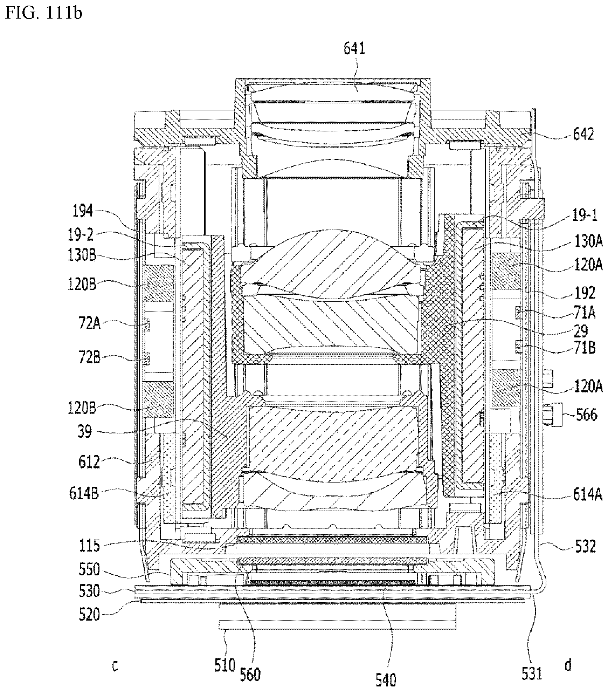

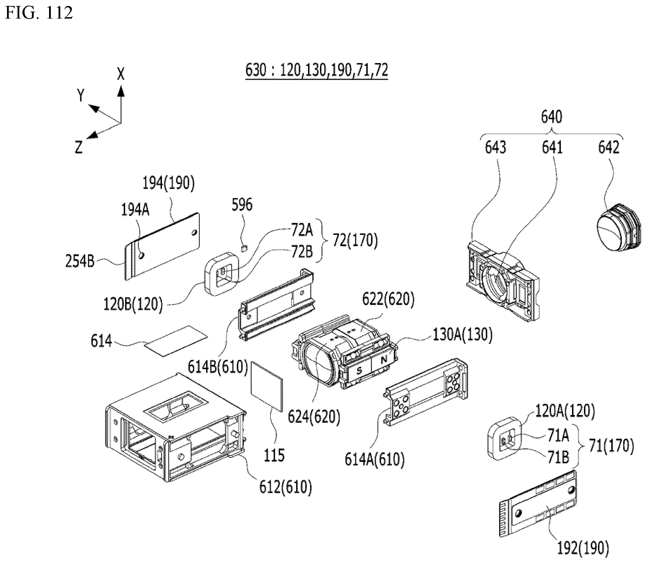

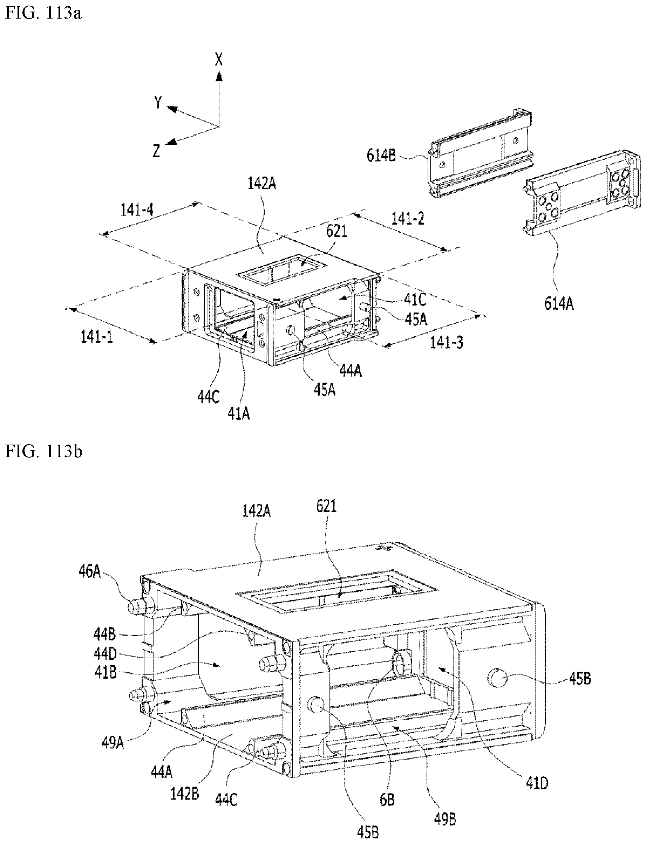

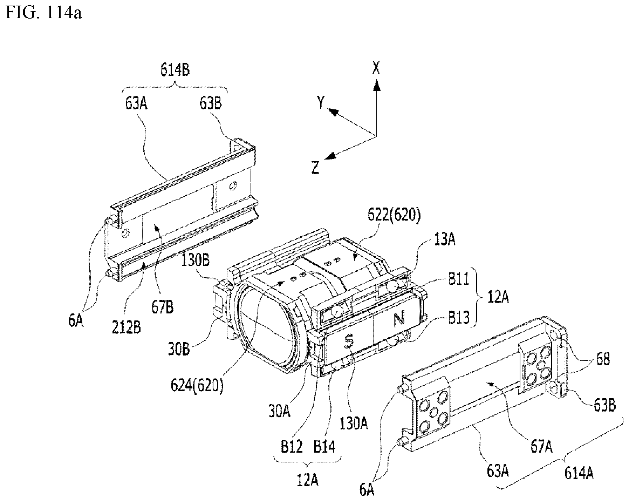

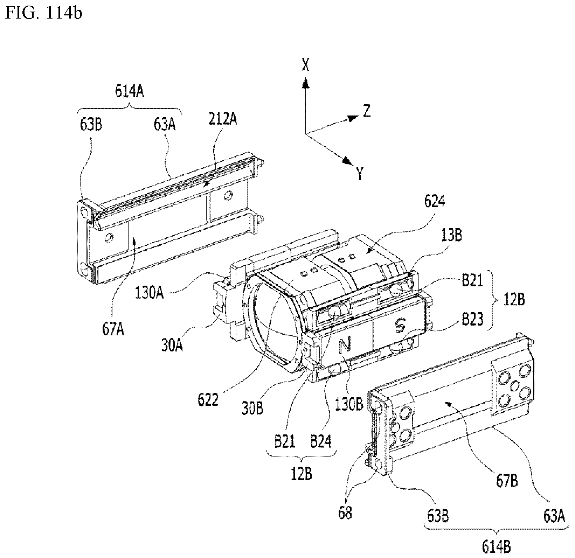

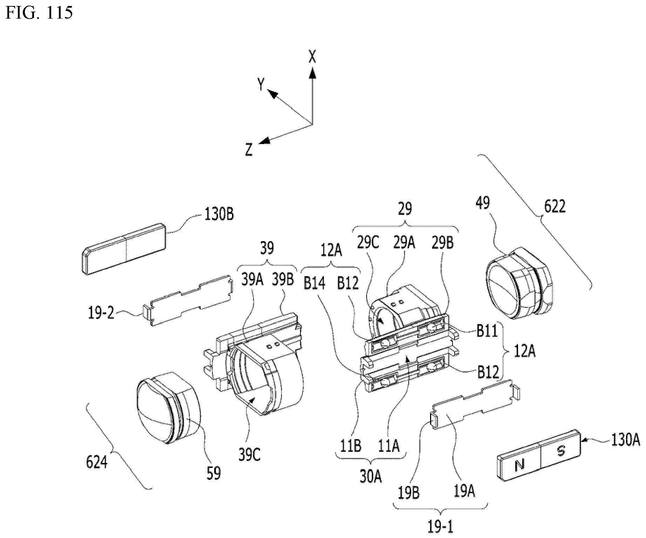

FIG. 109 is a perspective view of a first actuator **310** and an image sensing unit **330** according to a third embodiment of the present invention; FIG. 110a is a first separated perspective view of a first actuator **310** and the image sensing unit **330** of FIG. 109; FIG. 110b is a second separated perspective view of a first actuator **310** and an image sensing unit **330** of FIG. 109; FIG. 111a is a cross-sectional view at line **a-b** in a first actuator **310** and an image sensing unit **330** of FIG. 109; FIG. 111b is a cross-sectional view at line **c-d** in a first actuator **310** and an image sensing unit **330** of FIG. 109; FIG. 112 is an exploded perspective view of a first actuator **310;** FIG. 113a is an exploded perspective view of a second housing **610;** FIG. 113b is a perspective view of a body of a second housing **610;** FIG. 114a is a first perspective view of first and second guide units **614A** and **614B** and a lens part **620;** FIG. 114b is a second perspective view of first and second guide units **614A** and **614B** and a lens part **620;** and FIG. 115 is an exploded perspective view of first and second magnets **130A** and **130B** and a lens unit **620.**

Referring to FIGS. 109 to 115, the first actuator **310** may comprise: a housing **610;** a lens unit **620** being disposed inside the housing **610;** and a first driving unit **630** that moves the lens unit **620** in a first direction (for example, an optical axis direction or a Z-axis direction).

The lens unit **620** may be expressed by replacing it with a "lens assembly". For example, the lens unit **620** may comprise a plurality of lens assemblies.

In FIGS. 109 to 115, the lens unit **620** comprises two lens assemblies **622** and **624,** but is not limited thereto. For example, the second lens assembly **622** and the third lens assembly **623** may be arranged in a first direction.

The first actuator **310** may further comprise a first lens assembly **640** disposed between the lens unit **620** and the second actuator **320.** For example, the first lens assembly **640** may be a fixed lens assembly having a fixed position without moving in an optical axis direction.

The first lens assembly **640** may comprise a first lens array **641** (or a first lens group). For example, the first lens assembly **640** may further comprise a lens barrel **641** being coupled to the first lens array **641.** In addition, the first lens assembly **640** may further comprise a third housing **643** being coupled to the lens barrel **641.** The third housing **643** may be disposed between the housing **610** and the housing **50** and may be coupled to at least one of the housing **610** and the housing **50.**

For example, at least one first coupling hole **643A** for coupling with at least one coupling protrusion **46A** of the housing **610** may be formed on a front surface of the third housing **643.** In addition, a second coupling hole for coupling with at least one coupling protrusion **52A** of the housing **50** may be formed on a rear surface of the third housing **643.**

The first lens assembly **640** is expressed as being comprised in the first actuator **310,** but is not limited thereto, and may be expressed as not being comprised in the first actuator **310.** In other embodiments, the first lens assembly **640** may be omitted.

In addition, in another embodiment, any one of **640, 622,** and **624** may be expressed as a "first lens assembly", the other one of **640, 622,** and **624** may be expressed as a "second lens assembly", and the remaining one of **640, 622** and **624** may be expressed as a "third lens assembly".

For example, in an embodiment, the first lens assembly **640** may be a fixed lens group, and each of the second lens assembly **622** and the third lens assembly **624** may comprise a moving lens group or a lens group.

For example, the first lens assembly **640** may perform a focator function of imaging parallel light at a specific location. In addition, the second lens assembly **622** may perform a variator function of re-imaging an image formed in the first lens assembly **640,** which is a focator, in another location. On the other hand, in the second lens assembly **622,** the distance to the subject or the image distance is greatly changed so that the magnification can be greatly changed, and the second lens assembly **622,** which is a variator, can play an important role in changing the focal length or magnification of the optical system. Meanwhile, a point formed by the second lens assembly **6220,** which is a variator, may be slightly different depending on the location.

In addition, the third lens assembly **624** may perform a position compensation function for an image formed by the variator. For example, the third lens assembly **624** may perform a compensator function of accurately forming an image formed by the second lens assembly **622,** which is a variator, to a pixel of the image sensor **540.**

For example, the second lens assembly **622** may be a zoom lens assembly performing a zooming function, and the third lens assembly **624** may be a focus lens assembly performing a focusing function.

Referring to FIGS. 113a and 113b, the housing **610** may be disposed between the housing **50** and the image sensor unit **330** (for example, the sensor base **550**). The housing **610** may also be expressed by replacing it with "base" or a "holder".

The housing **610** may be disposed inside the cover member **300** and may have a polyhedral (For example, rectangular parallelepiped) shape having a space therein to accommodate the lens unit **620** and the first driving unit **630.**

For example, the housing **610** may comprise: an upper portion **142A** (or upper plate); a lower portion **142B** (or lower plate); and a body **612** comprising a plurality of side portions **141-1** to **141-4** being disposed between the upper portion **142A** and the lower portion **142B.** The upper portion **142A** of the housing **610** may face the upper plate **301** of the cover member **300,** and the side portions **141-1** to **141-4** may face the side plate **302** of the cover member **300.**

The side portions **141-1** to **141-4** may be expressed by replacing them with "side plates" or "side walls." For example, the first side portion **141-1** and the second side portion **141-2** may face each other in a first direction or may be positioned opposite to each other, and the third side portion **141-3** and the fourth side portion **141-3** may face each other in a third direction or may be positioned opposite to each other.

A first opening **41A** (or a first hole) for exposing one end of the lens unit **620** may be formed in the first side portion **141-1** of the housing **610,** and a second opening **41B** (or a second hole) for exposing the other end of the lens unit **620** may be formed in the second side portion **141-2** of the housing **610.**

In addition, a third opening **41C** (or a third hole) for disposing or seating the first coil **120A** may be formed in the third side portion **141-3** of the housing **610,** and a fourth opening **41C** (or a third hole) for disposing or seating the second coil **120B** may be formed in the fourth side portion **141-4** of the housing **610.** Each of the third and fourth openings **41C** and **41D** has a penetrating hole shape, but is not limited thereto, and may also have a groove shape.

At least one first coupling protrusion **45A** being coupled to the first circuit board **192** of the second substrate unit **190** may be formed on the third side portion **141-3** of the housing **610.** For example, at least one first coupling protrusion **45A** may be protruded from an outer side surface of the third side portion **141-3.**

At least one second coupling protrusion **45B** being coupled to the second circuit board **194** of the second substrate unit **190** may be formed on the fourth side portion **141-1** of the housing **610.** For example, at least one second coupling protrusion **45B** may be protruded from the outer side surface of the fourth side portion **141-4.** In addition, at least one third coupling protrusion **46A** may be formed on the second side portion **141-2** of the housing **610.**

The housing **610** may comprise a first guide unit **614A** and a second guide unit **614B.** The first guide unit **614A** may support and guide the second lens assembly **622** when the lens unit **620** moves by a zooming operation. The second guide unit **614B** may support and guide the third lens assembly **624** when the lens unit **620** moves by a zooming operation.

The first guide unit **614A** is disposed between the lens unit **620** and the third side portion **141-3,** and the second guide unit **614b** may be disposed between the lens unit **620** and the fourth side portion **141-4.**

For example, the first guide unit **614A** may be coupled to the third side portion **141-3** of the housing **610,** and the second guide unit **614B** may be coupled to the fourth side portion **141-4** of the housing **610.**

Referring to FIGS. 114a and 114b, the first guide unit **614A** may comprise at least one first guide groove **212A.** The second guide unit **614B** may comprise at least one second guide groove **212B.** Here, the guide groove may be expressed by replacing it with a "rail" or "groove" instead.

For example, each of the first guide unit **614A** and the second guide unit **614B** may comprise a body **63A** and a protruding portion **63B** being extended and protruded from the body **63A.**

For example, the first guide groove **212A** may be formed on an inner side surface of the body **63A** of the first guide unit **614A,** and the second guide groove **212B** may be formed on an inner side surface of the body **63A** of the second guide unit **614B.** At this time, an inner side surface of the body **63A** of each of the first and second guide units **614A** and **614B** may be a surface facing the lens unit **620.**

In FIGS. 114a and 114b, one first guide groove **212A** is formed on a lower side of the inner side surface of the body **63A** of the first guide unit **614A,** and one second guide groove **212B** is formed on an upper side of the inner side surface of the body **63A** of the guide unit **614B,** but is not limited thereto. In another embodiment, a guide groove may be formed on at least one of upper and lower sides of the inner side surface of the body of each of the first and second guide grooves. For example, each of the first and second guide grooves **212A** and **212B** may be continuously formed from the front end to the rear end of the inner side surface of the body **64A.**

The protruding portion **63B** of each of the first guide unit **614A** and the second guide unit **614B** may be protruded by being extended in a direction perpendicular (For example, a third direction) to a direction in which the first and second guide grooves are extended (For example, a first direction). For example, the protruding portion **63B** of the first guide unit **614A** and the protruding portion **63B** of the second guide unit **614B** may be protruded in opposite directions. For example, the protruding portion **63B** may be formed on a rear surface or rear end of each of the first guide unit **614A** and the second guide unit **614B.**

At least one hole **68** to be coupled to the rear end of the body **612** of the housing **610** may be formed in the protruding portion **63B** of each of the first and second guide units **614A** and **614B.** For example, the hole **68** of the protruding portion **63B** may be coupled with the protrusion **46A** of the body **612** of the housing **610.** For example, the coupling protrusion **46A** may pass through the hole **68** of the protruding portion **63B** and be coupled to the first coupling hole **643A** of the third housing **643.**

At least one coupling protrusion **6A** being coupled to the body **612** of the housing **610** may be formed on the front surface or front end of each of the first guide unit **614A** and the second guide unit **614B.** For example, on an inner surface of the body **612** of the housing **610,** a coupling hole **6B** being coupled with the coupling protrusion **6A** of the first and second guide units **614A** and **614B** may be formed (see FIG. 105B).

Referring to FIG. 113b, guide protrusions **44A** to **44D** for guiding the first and second guide units **614A** and **614B** may be formed on an inner surface of the body **612** of the housing **610.** For example, the first guide protrusion **44A** may be disposed on an inner surface of the lower portion **142B** of the housing **610,** and the second guide protrusion **44B** may be disposed on an inner surface of the upper portion **142A** of the housing **610** to correspond to the first guide protrusion **44A** in a second direction. The first guide unit **614A** may be disposed inside the space **49A** between the first and second guide protrusions **44A** and **44B** and the third side portion **141-3** of the housing **610.**

In addition, for example, the third guide protrusion **44C** may be disposed on an inner surface of the lower portion **142B** of the housing **610,** and the fourth guide protrusion **44D** may be disposed on an inner surface of the upper portion **142A** of the housing **610** to correspond to the third guide protrusion **44C** in a second direction. The second guide unit **614B** may be disposed in the space **49B** between the third and fourth guide protrusions **44C** and **44D** and the fourth side portion **141-4** of the housing **610.**

The first and second guide units **614A** and **614B** can be stably coupled to the body of the housing **610** by the first to fourth guide protrusions **44A** to **44D,** and may prevent the first and second guide units **614A** and **614B** from being separated from their original positions or from colliding with the lens unit **620** due to an impact or the like.

The first guide unit **614A** may have a first opening **67A** (or hole) corresponding to, facing, or overlapping with the first magnet **130A.** For example, the first opening **67A** may be positioned between the first magnet **130A** and the first coil **120A.**

The second guide unit **614B** may have a second opening **67B** (or hole) corresponding to, facing, or overlapping with the second magnet **130B.** For example, the first opening **67B** may be positioned between the second magnet **130B** and the second coil **120B.** The electromagnetic force due to the interaction between the first magnet **130A** and the first coil **120A** and the electromagnetic force due to the interaction between the second magnet **130B** and the second coil **120B** can be increased by the first and second openings **67A** and **67B.**

In FIGS. 113a and 113b, although the first and second guide units **614A** and **614B** and the body **612** of the housing **610** are formed as separate injection molding materials, and the separate objects are coupled with each other, but is not limited to this. In another embodiment, the first and second guide units may be formed as a single injection molding material with the body of the second housing.

An opening **621** exposing a portion of the lens unit **620** may be formed in the upper portion **142A** of the body **612** of the housing **610,** and the housing **610** may further comprise a cover **614** covering the opening **621.** In other embodiments, the opening **621** may not be formed and the cover **614** may be omitted.

The lens unit **620** may comprise a second lens assembly **622** moving along the first guide unit **614A** and a third lens assembly **624** moving along the second guide unit **614B.**

Referring to FIGS. 114a, 114b, and 115, the second lens assembly **622** may comprise a first lens holder **29** and a second lens array **49** (or a second lens group) being disposed in the first lens holder **29.** A lens holder may be expressed by replacing it with a "bobbin".

The second lens array **49** may comprise a single lens or a plurality of lenses.

The first lens holder **29** may comprise a first lens barrel **29A** on which the second lens array **49** is disposed and a first support portion **29B** being coupled to the first lens barrel **29A.** For example, the first lens barrel **29A** may have a barrel shape and may comprise an opening **29C** (or a hole) through which the second lens array **49** is coupled.

A first side surface (or first surface) of the first support portion **29B** may be coupled to the first lens barrel **29A.** The first support portion **29B** may correspond to, face, or overlap with the body **63A** of the first guide unit **614A** in a third direction.

A first seating portion **30A** for disposing or seating the first magnet **130A** may be formed on a second side surface (or second surface) of the first support portion **29B.** The second side surface (or second surface) of the first support portion **29B** may be a surface facing the first guide unit **614A,** and may be a surface opposite to a first side surface (or first surface) of the first support portion **29B.**

For example, the first seating portion **30A** may comprise: a first seating surface **11A** being formed in one region (for example, a central region) of the second side surface (or second surface) of the first support portion **29B;** and at least one first support protrusion **11B** being protruded from the first seating surface **11A.** In FIG. 107, the first seating portion **30A** comprises four first support protrusions being formed at four corners of the second side surface of the first support portion **29B,** and the four first support protrusions may support the first magnet **130A.** In another embodiment, the number of first support protrusions of the first seating portion may be one or two or more.

The first support portion **29B** may comprise at least one first groove **13A** (or first guide groove) for accommodating at least a portion of the first rolling member **12A.** For example, the at least one first groove **13A** may correspond to, face, or overlap with the at least one first guide groove **212A** of the first guide unit **614A.**

For example, two first grooves being spaced apart from each other may be formed on the seating surface **11A** of the first seating portion **30A,** and two first grooves being spaced apart from each other may be formed below the seating surface **11B.** In another embodiment, two grooves formed above or below the seating surface **11B** may be connected to each other to form one groove. For example, the number of grooves may match the number of balls **B11** to **B14,** but is not limited thereto.

The third lens assembly **624** may comprise a second lens holder **39** and a third lens array **59** (or a third lens group) being disposed in the second lens holder **39.** The third lens array **59** may comprise a single lens or a plurality of lenses.

A plurality of lenses comprised in each of the second and third lens arrays **49** and **59** may be sequentially disposed or arranged in a first direction. For example, each of the second and third lens arrays **49** and **59** may comprise various types of optical lenses. For example, each of the second and third lens arrays **49** and **59** may comprise at least one of a front lens having positive power and a rear lens having negative power.

The distance between the second lens group and the third lens group in an optical axis direction may be varied by the first driving unit **630.**

The second lens holder **39** may comprise a second lens barrel **39A on** which the third lens array **59** is disposed and a second support portion **39B** being coupled to the second lens barrel **39A.** For example, the second lens barrel **39A** may have a barrel shape and may comprise an opening **39C** (or a hole) through which the second lens array **49** is coupled.

A first side surface (or first surface) of the second support portion **39B** may be coupled to the second lens barrel **39A.** The second support portion **39B** may correspond to, face, or overlap with the body 63A of the second guide unit **614B** in a third direction.

A second seating portion **30B** for disposing or seating the second magnet 130B may be formed on a second side surface (or second surface) of the second support portion **39B.** The second side surface (or second surface) of the second support portion **39B** may be a surface facing the second guide unit **614B,** and may be a surface opposite to the first side surface (or first surface) of the second support portion **39B.**

For example, the second seating portion **30B** may comprise: a second seating surface being formed in one region (for example, the central region) of the second side surface (or second surface) of the second support portion **39B;** and at least one second support protrusion being protruded from the second seating surface. Description of the first seating surface **11A** and the first support protrusion **11B** of the first support portion **29B** may be applied or applied mutatis mutandis to the second seating surface and the second support protrusion of the second support portion **29B.**

The second support portion **39B** may comprise at least one second groove **13B** (or second guide groove) for accommodating at least a portion of the second rolling member **12B.** For example, the at least one second groove **13B** may correspond to, face, or overlap with the at least one second guide groove **212B** of the second guide unit **614B.** Description of the first groove **13A** of the first support portion **30A** may be applied or applied mutatis mutandis to the second groove **13B** of the second support portion **30B.**

Each of the first and second guide grooves **212A** and **212B** and the first and second grooves **13A** and **13B** may have a V or U shape, but is not limited thereto, and may be a shape in which two or more points come into contact with the balls **B11** to **B14** and **B21** to **B24.** By the first and second guide grooves **212A** and **212B** and the first and second grooves **13A** and **13B,** when the second and third lens assemblies **622** and **624** move, decenter or tilt may be prevented. Due to this, since the alignment between the pluralities of lens arrays is well matched, the change in the angle of view or defocusing is prevented so that the image quality or resolution of the camera device **200** can be remarkably enhanced.

The first actuator **310** may further comprise rolling members **12A** and **12B** being disposed between the housing **610** and the lens unit **620.** For example, the rolling members **12A** and **12B** may be disposed between the guide units **614A** and **614B** of the housing **610** and the grooves **13A** and **13B** of the support portions **39A** and **39B** of the lens unit **620.**

A rolling member may be expressed by replacing it with a "ball member", "ball" or "ball bearing." For example, the rolling members **12A** and **12B** may comprise at least one ball.

The rolling members **12A** and **12B** may be in contact with the housing **610** and the lens unit **620** and may support the lens unit **620.** When the lens unit **620** moves in a first direction, the rolling members **12A** and **12B** perform a rolling motion between the lens unit **620** and the housing **610,** thereby reducing the friction between the lens unit **620** and the housing **610.** That is, by the rolling motion of the rolling members **12A** and **12B,** the lens unit **620** becomes in contact with the rolling members **12A** and **12B,** and may be moved in a first direction along the first and second guide units **614A** and **614B.**

For example, the rolling member may comprise a first rolling member **12A** and a second rolling member **12B.** The first rolling member **12A** may be disposed between the first guide unit **614A** of the housing **610** and the second lens assembly **622** (for example, the first support portion **29B**). The second rolling member **12B** may be disposed between the second guide unit **614B** of the housing **610** and the third lens assembly **624** (for example, the second support portion **39B**).

The first rolling member **12A** may comprise a plurality of balls **B11** to **B14,** and the second rolling member **12B** may comprise a plurality of balls **B21** to **B24.** Each of the balls **B11** to **B14** and **B221** to **B24** may be made of metal, plastic, or resin, but is not limited thereto. Each of the balls **B11** to **B14** and **B221** to **B24** may have a circular shape and may have a diameter of a sufficient size to support the movement of the lens unit **620.**

Next, the first driving unit **630** will be described.

The first driving unit **630** may move the second lens assembly **622** in a first direction and may move the third lens assembly **624** in a first direction. For example, the first driving unit **630** may move at least one lens group, for example, the second lens group or the third lens group, in a first direction or an optical axis direction.

The first driving unit **630** may comprise a magnet **130** being disposed in the lens unit **620** and a coil **120** being disposed in the housing **610.** For example, the magnet **130** may comprise a first magnet **130A** being disposed in the second lens assembly **622** and a second magnet **130B** being disposed in the third lens assembly **624.**

For example, the first magnet **130A** may be disposed in the first lens holder **29** of the second lens assembly **622,** and the second magnet **130B** may be disposed in the second lens holder **39** of the third lens assembly **624.** For example, the first magnet **130A** may be disposed in the first seating portion **30A** of the first support portion **29B** of the first lens holder **29,** and the second magnet **130B** may be disposed in the second seating portion **30B** of the second support portion **39B** of the second lens holder **39.**

For example, each of the first and second magnets **130A** and **130B** may be a monopole magnetized magnet comprising one N pole and one S pole. In another embodiment, each of the first and second magnets **130A** and **130B** may be a two pole magnetized magnet comprising two N poles and two S poles.

The coil **120** may comprise: a first coil **120A** that corresponds to, faces, or overlaps with the first magnet **130A** in a third direction and is disposed in the third side portion **142-3** of the housing **610;** and a second **coil 120B** that corresponds to, faces, or overlaps with the second magnet **130B** in a third direction and is disposed in the fourth side portion **142-4** of the housing **610.**

For example, each of the first **coil 120A** and the second coil **120B** may have a closed curve or ring shape having a hollow (or hole). For example, each of the first coil **120A** and the second coil **120B** may be coiled in a clockwise or counterclockwise direction with respect to (or centered on) a third axis parallel to a third direction.

For example, the N pole and S pole of the first magnet **130A** may be disposed to face the first **coil 120A** and the N pole and S pole of the second magnet **130B** may be disposed to face the second coil **120B.** For example, the hollow or hole of each of the first and second coils **120A** and **120B** may face the first and second magnets **130A** and **130B** in a third direction.

A first driving signal (For example, a first current) may be applied to the first coil **120A,** and a second driving signal (For example, a second current) may be applied to the second **coil 120B.**

The first lens assembly **622** may be moved in a first direction by the electromagnetic force generated by the interaction between the first coil **120A** and the first magnet **130A.** In addition, the second lens assembly **624** may be moved in a first direction by the electromagnetic force generated by the interaction between the second coil **120B** and the second magnet **130B.**

The movement of each of the first lens assembly **622** and the second lens assembly **624** may be controlled by controlling the first driving signal and the second driving signal. As the movement of each of the first lens assembly **622** and the second lens assembly **624** is controlled, the position (or displacement) of each of the first lens assembly **622** and the second lens assembly **624** may be controlled, and due to this, zooming and auto focusing of the camera device **200** may be performed.

Referring to FIG. 115, the first driving unit **630** may further comprise a first yoke **19-1** being disposed on the first lens holder **29** and a second yoke **19-2** being disposed on the second lens holder **39.** The first yoke **19-1** may increase the electromagnetic force due to the interaction between the first magnet **130A** and the first coil **120A,** and the second yoke **19-2** may increase electromagnetic force due to interaction between the second magnet **130B** and the second coil **120B.** A driving force for moving the lens unit **620** may be enhanced by the first and second yokes **19-1** and **19-2,** thereby reducing power consumption.

For example, the first yoke **19-1** may be disposed between the first magnet **130A** and the first lens holder **29,** and the second yoke **19-2** may be disposed between the second magnet **130B** and the second lens holder **39.** For example, the first yoke **19-1** may be disposed in the first seating portion **30A** of the first support portion **29B,** and the second yoke **19-2** may be disposed in the second seating portion **30B** of the second support portion **39B.**

For example, the first yoke **19-1** may comprise: a first portion **19A** facing the first magnet **130A** in a third direction and being disposed on the first seating surface **11A;** and a second portion **19B** being extended from at least one of one end and the other end of the first portion **19A.** For example, the second part **19B** may comprise: a second-first portion supporting one end of the first magnet **130A;** and a second-second portion supporting the other end of the first magnet **130A.**

The first driving unit **630** may further comprise a second substrate unit **190** being electrically connected to the first coil **120A** and the second coil **120B.** For example, the second substrate unit **190** may be a printed circuit board.

The second substrate unit **190** may be disposed in the housing **610.** For example, the second substrate unit **190** may comprise: a first circuit board **192** being disposed on the third side portion **142-3** of the housing; and a second circuit board **194** being disposed on the fourth side portion **142-4** of the housing **610.** For example, the first circuit board **192** may comprise at least one hole **192A** for coupling with at least one first coupling protrusion **45A** of the housing **610,** and the second circuit board **194** may comprise at least one hole **194A** to be coupled with at least one second coupling protrusion **45B** of the housing **610.**

The first **coil 120A** may be disposed or mounted on a first surface of the first circuit board **192.** At this time, the first surface of the first circuit board **192** may be a surface facing the third side portion **142-3** of the housing **610** in a third direction. The second coil **120B** may be disposed or mounted on a first surface of the second circuit board **194.** At this time, the first surface of the second circuit board **194** may be a surface facing the fourth side portion **142-4** of the housing **610** in a third direction.

The first circuit board **192** may be electrically connected to the first coil **120A.** For example, two pads being electrically connected to the first coil **120A** may be formed on the first surface of the first circuit board **192.** In addition, the first circuit board **192** may comprise a plurality of terminals **254A.** For example, the plurality of terminals **254A** may be formed on a second surface of the first circuit board **192.** For example, the second surface of the first circuit board **192** may be the opposite surface of the first surface of the first circuit board **192.** For example, two terminals among the plurality of terminals **254A** may be electrically connected to two pads of the first circuit board **192** being connected to the first coil **120A,** and may be electrically connected to the first coil **120A.**

The second circuit board **194** may be electrically connected to the second coil **120B.** For example, two pads being electrically connected to the second **coil 120B** may be formed on a first surface of the second circuit board **194.** In addition, the second circuit board **194** may comprise a plurality of terminals **254B.**

For example, the plurality of terminals **254b** may be formed on a second surface of the second circuit board **194.** For example, the second surface of the second circuit board **194** may be the opposite surface of the first surface of the circuit board **192.** Although the terminal **254b** cannot be seen in detail in FIG. 112, terminals **254B** may be formed on a second surface of the second circuit board **194** in the same form as the terminals **254a** of the first circuit board **192.**

For example, two among the plurality of terminals **254B** may be electrically connected to two pads of the second circuit board **194** being connected to the second coil **120B,** and may be electrically connected to the second coil **120B.**

The second driving unit **70** may comprise a first position sensor unit **170** for performing feedback driving for precise zooming and AF operations.

The first position sensor unit **170** may comprise: a first position sensor unit **71** for detecting the position or displacement of the second lens assembly **622;** and a second position sensor unit **72** for detecting the position or displacement of the third lens assembly **624.**

For example, the first position sensor unit **71** may be disposed or mounted on the first circuit board **192** and may be electrically connected to the first circuit board **192.** The second position sensor unit **72** may be disposed or mounted on the second circuit board **194** and may be electrically connected to the second circuit board **194.**

For example, the first position sensor unit **71** may be disposed or mounted on a first surface of the first circuit board **192,** and the second position sensor unit **72** may be disposed or mounted on a first surface of the second circuit board **194.** For example, the first position sensor unit **71** may be disposed in a hollow of the first coil **120A,** and the second position sensor unit **72** may be disposed in a hollow of the second coil **120B.**

For example, the first position sensor unit **71** may face or overlap with the first magnet **130A** in a third direction. For example, the first position sensor unit **71** may be disposed at an opposite side of the first magnet **130A.**

The strength of the magnetic field of the first magnet **130A** may be detected. For example, the first position sensor unit **71** may detect the movement of the first magnet **130A** in an optical axis direction.

The second position sensor unit **72** may face or overlap with the second magnet **130B** in a third direction. For example, the second position sensor unit **72** may be disposed at an opposite side of the second magnet **130B.**

The strength of the magnetic field of the second magnet **130B** may be detected. For example, the second position sensor unit **72** may detect the movement of the second magnet **130B** in an optical axis direction.

For example, the first position sensor unit **71** may comprise a first sensor **71A** and a second sensor **71B.** For example, each of the first and second sensors **71A** and **71B** may be a Hall sensor. For example, the first sensor **71A** and the second sensor **71B** may be disposed spaced apart from each other in a first direction.

For example, the second position sensor unit **72** may comprise a third sensor **72A** and a fourth sensor **72B.** For example, each of the third and fourth sensors **72A** and **72B** may be a Hall sensor. For example, the third sensor **72A** and the fourth sensor **72B** may be disposed spaced apart from each other in a first direction.

In FIG. 112, each of the first position sensor unit **71** and the second position sensor unit **72** comprises two sensors, but in another embodiment, each of the first position sensor unit and the second position sensor unit may comprise one sensor, and at this time, one sensor may be a Hall sensor or a driver IC containing a Hall sensor.

The camera device **200** may comprise a memory **596** being disposed in the second substrate unit **190.** For example, the memory **596** may be a non-volatile memory, for example, an electrically erasable PROM (EEPROM).

For example, the memory **596** may be disposed or mounted on the second circuit board **194** and may be electrically connected to the second circuit board **194.** For example, the memory **596** may store data necessary for driving the driving unit. At this time, driving unit may comprise at least one of the first driving unit **630** and the second driving unit **70.** For example, the memory **596** may store at least one of: data of the first position sensor unit **71** corresponding to the movement range of the second lens group; and data of the second position sensor unit **72** corresponding to the movement range of the third lens group.

At this time, the data of the first position sensor unit **71** may be data (or reference code value) related to the output of the first position sensor unit **71** corresponding to the movement range of the second lens group acquired through calibration. In addition, the data of the second position sensor unit **72** may be data (or reference code value) related to the output of the second position sensor unit **72** corresponding to the movement range of the third lens group acquired through calibration.

In addition, the memory **596** may store data of the first OIS position sensors **240A** and **240B** corresponding to the second axis (X-axis) tilting range of the OIS movable unit. At this time, the data of the first OIS position sensor **240A** and **240B** may be a reference code value related to the output of the first OIS position sensors **240A** and **240B** corresponding to the tilting range of the second axis (X-axis) of the OIS movable unit obtained through calibration.

In addition, the memory **596** may store data of the second OIS position sensor **240C** corresponding to the third axis (Y-axis) tilting range of the OIS movable unit. At this time, the data of the second OIS position sensor **240C** may be a reference code value related to the output of the second OIS position sensor **240C** corresponding to the third axis (Y-axis) tilting range of the OIS movable unit obtained through calibration. For example, the memory **596** may be electrically connected to at least one terminal among the plurality of terminals **254B** of the second circuit board **194.**

The camera device 200 may further comprise a temperature sensor **566** being disposed on the second substrate unit **190.** For example, the temperature sensor **566** measures the camera device **200** or the temperature around the camera device **200** and may output temperature information according to the measured result.

Referring to FIG. 112, the first actuator **310** may further comprise a glass **115** being disposed in front of the lens unit **620.** For example, the glass **115** may be disposed inside the housing **610** to cover the first opening **41A** of the housing **610,** protect the lens unit **620,** and prevent foreign substances from entering the second housing.

The image sensing unit **330** may comprise an image sensor **540** for receiving and detecting light passing through the optical member **40** of the second actuator **320** and the lens assemblies **311, 312,** and **313** of the first actuator **310** and converting the detected light into an electrical signal.

For example, the image sensor **540** may comprise an imaging region for detecting light. Here, the imaging region may be expressed by replacing it with an effective region, a light-receiving region, or an active area. For example, an imaging region may comprise a number of pixels from which an image is formed.

The image sensing unit **330** may comprise a third substrate unit **530** being electrically connected to the image sensor **540.** The third substrate unit **530** may be disposed spaced apart from the housing **610.** For example, the third substrate unit **530** may be expressed by replacing it with a sensor substrate unit.

With respect to the housing **610,** the first substrate unit **250** may be disposed in front of the housing **610,** and the third substrate unit **530** may be disposed in the rear of the housing **610,** and the second substrate unit **190** may be disposed at the side of the housing **610.**

For example, the second substrate unit **190** may be disposed on a first side (for example, left or right) of the housing **610.** For example, the first circuit board **192** may be disposed on a first side of the housing **610,** and the second circuit board **192** may be disposed on a third side of the housing **610.** The third substrate unit **530** may be disposed on a second side (for example, rear) of the housing **610.** In addition, the first substrate unit **250** may be disposed on a fourth side of the housing **610.** The first side and the third side may be positioned opposite each other, and the second side and the fourth side may be positioned opposite each other.

The third substrate unit **530** may comprise a first substrate **531** on which the image sensor **540** is disposed or mounted. For example, the image sensor **540** may be disposed on a first surface of the first substrate **531,** and the first surface of the first substrate **531** may be a surface facing the first actuator **310** or the lens unit **620.** The first substrate **531** may be expressed by replacing it with a "sensor substrate".

The first substrate **531** may comprise a plurality of first terminals **253A** and a plurality of second terminals **253B.** For example, the plurality of first terminals **253A** may be disposed between the image sensor **540** and the first end portion of the first substrate **531,** and the plurality of second terminals **253B** may be disposed between the image sensor **540** and the second end portion of the first substrate **531.** The first end portion may be positioned at an opposite side of the second end portion.

For example, the plurality of first terminals **253A** may correspond to, face, or overlap with the plurality of terminals **254A** of the first circuit board **192** in a first direction, and may be electrically connected to the plurality of terminals **254A** of the first circuit board **192** by solder or conductive adhesive.

For example, to facilitate solder bonding, the end portion (or first end) or terminal portion of the first circuit board **192** where the plurality of terminals **254A** are formed may comprise a bent or curved portion. For example, the terminal portion of the first circuit board **192** on which the plurality of terminals **254A** are formed may be an inwardly curved or bent inclined portion.

For example, the plurality of second terminals **253B** may correspond to, face, or overlap with the plurality of terminals **254B** of the second circuit board **194** in a first direction, and may be electrically connected to the plurality of terminals **254B** of the second circuit board **194** by solder or conductive adhesive.

For example, to facilitate solder bonding, the end portion (or first end) or terminal portion of the second circuit board **194** on which the plurality of terminals **254B** is formed may comprise a bent or curved portion. For example, the terminal portion of the second circuit board **194** on which the plurality of terminals **254B** is formed may be an inwardly curved or bent inclined portion.

The third substrate unit **530** may comprise a second substrate **532** being connected to the first substrate **531** and extended in a first direction. The second substrate **532** may comprise a plurality of terminals **252.** The first substrate unit **250** may be electrically connected to the third substrate unit **530.** For example, the plurality of terminals **252** of the second substrate **532** may be electrically connected to the plurality of terminals **251** of the first circuit board **250A** of the first substrate unit **250** by a conductive adhesive or solder.

For example, referring to FIGS. 109, 110a, and 110b, the second board **532** may be disposed to face the first circuit board **192** in a third direction, and may be disposed on a second surface of the first circuit board **192.** For example, the third substrate unit **530** may comprise a bent portion between the first substrate **532** and the second substrate **532.**

The third substrate unit **530** may comprise a connector **534** comprising a port or socket for electrical connection with an external device. For example, the port or socket may be formed on at least one of an upper portion (upper surface) or a lower portion (lower surface) of the connector.

In addition, the third substrate unit **530** may further comprise a third substrate **533** connecting the second substrate **532** and the connector **534** to each other. The third substrate unit **530** may be a printed circuit board. For example, each of the first to third substrates **531, 532,** and **533** may comprise at least one of a rigid substrate and a flexible substrate.

In another embodiment, at least one of the second board **532** and the connector **534** may be omitted, and the port or socket may be formed on the first board. In another embodiment, the port or socket may be formed on at least one of the first to third substrates.

The image sensing unit **330** may further comprise a first driver **542** disposed on the third substrate unit **530.** The first driver **542** may be disposed or mounted on the first board **531.** For example, the first driver **542** may be disposed between the image sensor **540** and the plurality of second terminals **253B.** Each of the first driver **542** and the second driver **260** may be expressed by replacing it with a "control unit". In addition, for example, each of the first and second drivers **542** and **260** may comprise a storage unit or memory.

The third substrate unit **530** may comprise a circuit element, a passive element, an active element, or a circuit pattern.

The image sensing unit **330** may further comprise: a sensor base **550** being disposed between the third substrate unit **530** and the first actuator; and a filter **560** being disposed on sensor base **550.** For example, the sensor base **550** may be disposed between the first substrate **531** of the third substrate unit **530** and the housing **610.**

The sensor base **550** may be coupled, attached, or fixed to the first surface of the first substrate **531** by the adhesive **545.** A lower portion or lower surface of the sensor base **550** may be coupled to a first surface of the first substrate **531** by the adhesive **545.**

For example, at least one coupling protrusion **551** may be formed on a bottom surface or a lower end of the sensor base **550,** and at least one hole **530A** for coupling with at least one coupling protrusion **551** may be formed in the first substrate **531.**

The sensor base **550** may comprise a seating portion **550A** for disposing or seating the filter **610** thereon. For example, the seating portion **550A** may be formed on a first surface of the sensor base **550.** The first surface of the sensor base **550** may be a surface facing the housing **610** in a first direction. For example, the seating portion **500A** may be in the form of a recess, cavity, or hole depressed from the first surface of the sensor base **550,** but is not limited thereto. In another embodiment, the seating portion may be in the form of a protruding portion being protruded from the first surface of the sensor base **550.** The sensor base **550** may be expressed by replacing it with a "holder".

The filter **560** is disposed on the seating portion **550A** of the sensor base **550.** For example, the seating portion **550A** of the sensor base **550** may comprise an inner side surface and a bottom surface, and the filter **560** may be disposed on the bottom surface of the seating portion **500A** of the sensor base **550.**

The sensor base **550** may comprise an opening **552** (or a penetrating hole) so that light passing through the filter **560** may be incident to the image sensor **540.** The opening **552** may correspond to, face, or overlap with the image sensor **550** (for example, an imaging region). For example, the opening **552** may be formed on the bottom surface of the seating portion **550A.** The area of the opening **552** may be smaller than the area of the upper or lower surface of the filter **560,** but is not limited thereto.

The filter **560** may serve to block light of a specific frequency band from entering the image sensor **540** from light passing through the lens unit **620.** For example, the filter **560** may be an infrared cut filter, but is not limited thereto. For example, the filter **560** may be disposed parallel to an X-Y plane perpendicular to the first direction. For example, the filter **560** may be attached to a bottom surface of the seating portion **550A** of the sensor base **550** by an adhesive member (not shown) such as UV epoxy. The filter **560** and the image sensor **540** may be disposed spaced apart from each other so as to face each other in a first direction.

The image sensing unit **330** may further comprise a reinforcing member **510** being disposed on the third substrate unit **530.** For example, the reinforcing material **510** may be disposed on a second surface of the first substrate **531,** and the second surface of the first substrate **531** may be a surface opposite to the first surface of the first substrate **531.**

The reinforcing member **510** may be formed of a conductive material having high thermal conductivity, for example, a metal material. For example, the reinforcing material **510** may be formed of SUS, aluminum, or the like, but is not limited thereto.

In addition, the reinforcing member **510** may also serve as a ground to protect the camera device **200** from electrostatic discharge protection (ESD) by being electrically connected to the ground terminal of the third substrate unit **530.**

The image sensing unit **330** may further comprise a heat dissipation member **520** disposed on or attached to the reinforcing member **510.** For example, the heat dissipation member **52** may be attached to at least one of the first substrate **531** and the reinforcing member **510** and may perform a heat dissipation function.

The third embodiment of the present invention of FIGS. 109 to 115 comprises a zoom lens assembly **622** performing a zoom function and a focus lens assembly **624** performing an auto focus function, but in other embodiments, the zoom lens assembly **622** may be omitted and may comprise a focus lens assembly **624.** For example, the first actuator according to another embodiment may be a fixed zoom actuator that performs an auto focus function.

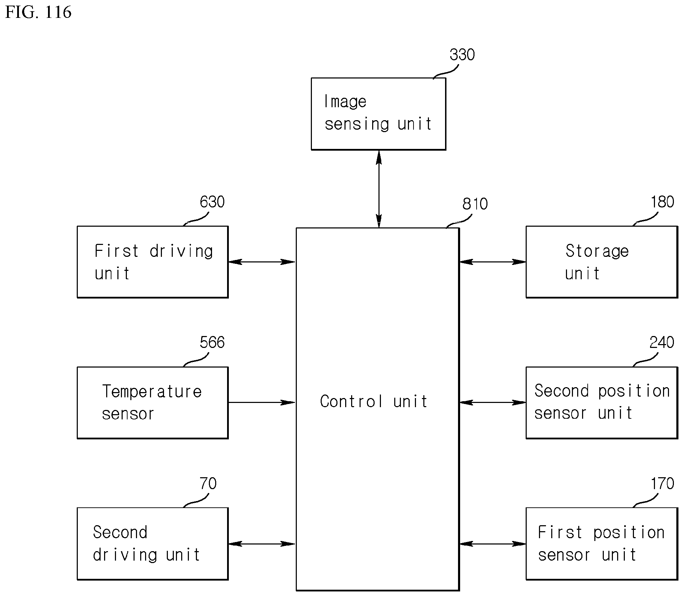

FIG. 116 is a functional block diagram of a camera device **200** according to a third embodiment of the present invention.

Referring to FIG. 116, the camera device **200** may comprise: a first driving unit **630;** a second driving unit **70;** a first position sensor unit **170;** a second position sensor unit **240;** a storage unit **180;** an image sensing unit **600;** and a control unit **810.**

The first driving unit **630** receives the first driving signal, applies the received first driving signal to the first coil **120A,** and moves the second lens assembly **622** in a first direction by the interaction between the first **coil 120A** and the first magnet **130A.**

In addition, the first driving unit **630** receives the second driving signal, applies the received second driving signal to the second coil **120B,** and moves the third lens assembly **624** in a first direction by the interaction between the second coil **120B** and the second magnet **130B.**

The second driving unit **70** receives the first OIS driving signal, applies the received first OIS driving signal to the first OIS coils **230A** and **230B,** and rotates the OIS moving unit (For example, holder **30**) by the interaction between the first OIS coils **230A** and **230B** and the first OIS magnets **31A** and **31B** by a preset angle about the second axis (For example, X-axis) as a rotation axis.

In addition, the second driving unit **70** receives the second OIS driving signal, applies the received second OIS driving signal to the second OIS coil **230C,** and rotates the OIS moving unit (For example, holder **30**) by the interaction between the second OIS coil **230C** and the second OIS magnet **32** by a preset angle about the third axis (For example, Y-axis) as a rotation axis.

The second driving unit **70** can be moved by the movement of the holder **30** coupled with the optical member **40** on a plane (For example, XY-plane) in which the path of light incident to the optical member **40** is perpendicular to a first axis (optical axis or Z-axis), and accordingly, an image being formed on the image sensor **540** can be moved in a X-axis direction or/and the Y-axis direction. That is, by controlling the movement of the holder **30,** in an embodiment, blurring of an image or shaking of a video caused by shaking of a camera device when photographing an image or photographing a video by a user's handshake can be corrected.

The first position sensor unit **170** receives the first driving signal **DI1** and supplies the received first driving signal **DI1** to the first sensor **71A** and the second sensor **71B.** The first position sensor unit **170** receives the second driving signal **DI2** and supplies the received second driving signal **DI2** to the third sensor **72A** and the fourth sensor **72B.**

The first position sensor unit **170** detects the displacement of the second lens assembly **622** and outputs a first output signal **V1** according to the detection result. In addition, the first position sensor unit **170** detects the displacement of the third lens assembly **624** and outputs a second output signal **V2** according to the detection result.

The second position sensor unit **240** supplies a driving signal to each of the first sensor **240A,** the second sensor **240B,** and the second OIS position sensor **240C** of the first OIS position sensor.

The first OIS position sensors **240A** and **240B** may detect the displacement of the holder **30** in a third axis direction and output an output signal according to the detected result. The second **OIS** position sensor **240C** may detect the displacement of the holder **30** in a second axis direction and output an output signal according to the detected result.

The storage unit **180** stores data required to operate the camera device **200.** The storage unit **180** may be expressed by replacing it with a "memory" instead. For example, the storage unit **180** may store information on a zoom position and a focus position for each distance from a subject.

For example, the storage unit **180** may store the first reference code value (or data) of the first output signal **V1** of the first position sensor unit **71** corresponding to the movement range (or stroke range or displacement) of the second lens assembly **622.** In addition, the storage unit **180** may store the second reference code value (or data) of the second output signal **V2** of the second position sensor unit **72** corresponding to the movement range (or stroke range or displacement) of the third lens assembly **624.** The first and second reference code values may be values previously stored in the storage unit **180** through calibration.

The storage unit **180** may be a separate component from the control unit **810,** but is not limited thereto, and may be comprised in the control unit **810** in another embodiment. For example, the storage unit **180** may be comprised in at least one of the first driver **542** and the second driver **260.**

For example, the camera device **200** may be accurately focused based on the target position of the second lens assembly **622** and the target position of the third lens assembly **624.**

The image sensing unit **330** may comprise an image sensor **540** that converts light reflected from a subject into an electrical signal. For example, the image sensor **540** may comprise a light receiving unit that receives light and converts it into an electrical signal, and an analog-to-digital converter that converts the converted electrical signal into a digital signal. In addition, for example, the image sensor **540** may further comprise an image signal processor that performs signal processing on digital signals.

The control unit **810** controls the overall operation of the camera device **200.** For example, in order to provide an anti-shake function, an auto focus function, and a magnification function, the control unit **200** may control the first position sensor unit **170** and the second position sensor unit **240** and may drive the driving unit **630** and the second driving unit **70.** For example, the control unit **810** may comprise a first driver **542** and a second driver **260.** For example, each of the first driver **542** and the second driver **260** may comprise at least one of an analog-to-digital converter, an amplifier, a PID controller, or a memory.

The first driver **542** receives an output signal of the first position sensor unit **170,** generates a first code value according to a result of analog-to-digital conversion of the received output signal, and may control the driving signal being applied to the first coil **120** of the first driving unit **630** based on the result of comparing the generated first code value and the first target value. For example, the first target value may be a reference code value corresponding to a target zoom position of the second lens assembly **622.**

The second driver **260** receives output signals of the first OIS position sensors **240A** and **240B** of the second position sensor unit **240,** generates a second code value according to a result of analog-to-digital conversion of the received output signal, and may control the first driving signal being applied to the first OIS coils **230A** and **230B** of the second driving unit **70** based on the result of comparing the generated second code value and the second target value.

In addition, the second driver **260** receives the output signal of the second OIS position sensor **240C** of the second position sensor unit **240,** generates a third code value according to the result of analog-to-digital conversion of the received output signal, and may control the second driving signal being applied to the second OIS coil **230C** of the second driving unit **70** based on the result of comparing the generated third code value and the third target value.

For example, the second target value may be a reference code value (or data) related to the output of the first OIS position sensors **240A** and **240B** corresponding to the target tilting position of the second axis (X-axis) of the OIS movable unit of the second actuator **320.** In addition, for example, the third target value may be a reference code value (or data) for the output of the second OIS position sensor **240C** corresponding to a third axis (Y-axis) tilting position of the OIS movable unit of the second actuator **320.** The reference code value (or data) for the output of each of the first OIS position sensors **240A** and **240B** and the second OIS position sensor **240C** may be preset through calibration and stored in the storage unit **180.**

The camera device **200** may further comprise a temperature sensor **566** for temperature compensation. The temperature sensor **566** may output temperature information according to a result of measuring the temperature of the camera device **200.**

Temperature information of the temperature sensor **566** may be used for temperature compensation for a focusing operation of the third lens assembly **624.** For example, the storage unit **180** may store a compensation value corresponding to temperature information.

For example, since the second lens assembly **622** responsible for zooming moves according to the magnification set by a user, it may perform the temperature compensation for the third lens assembly **624** responsible for auto focusing in a state (or condition) in which the position of the second lens assembly **622** is fixed.

In addition, for example, the control unit **810** receives temperature information from the temperature sensor **566,** acquires a compensation value for temperature compensation corresponding to the received temperature information, and a driving signal of the second coil **120B** of the third lens assembly **624** may be controlled based on the acquired compensation value. Due to this, in an embodiment, an accurate auto focusing operation reflecting temperature compensation can be performed.

In addition, the camera device **200** according to an embodiment forms an image of an object in space using reflection, refraction, absorption, interference, diffraction, and the like, which are characteristics of light, and may be comprised in an optical apparatus (optical instrument) aimed at increasing the visual power of the eye, recording and reproducing an image by a lens, or optical measurement, propagation or transmission of an image, and the like. For example, the optical apparatus according to an embodiment is a mobile phone, a mobile phone, a smart phone, a portable smart device, a digital camera, a laptop computer, a digital broadcasting terminal, a personal digital assistants (PDA), a portable multimedia player (PMP), navigation, and the like, but is not limited thereto, and any device for photographing images or photos is possible.

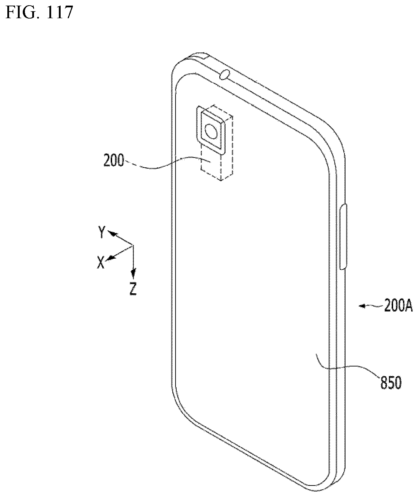

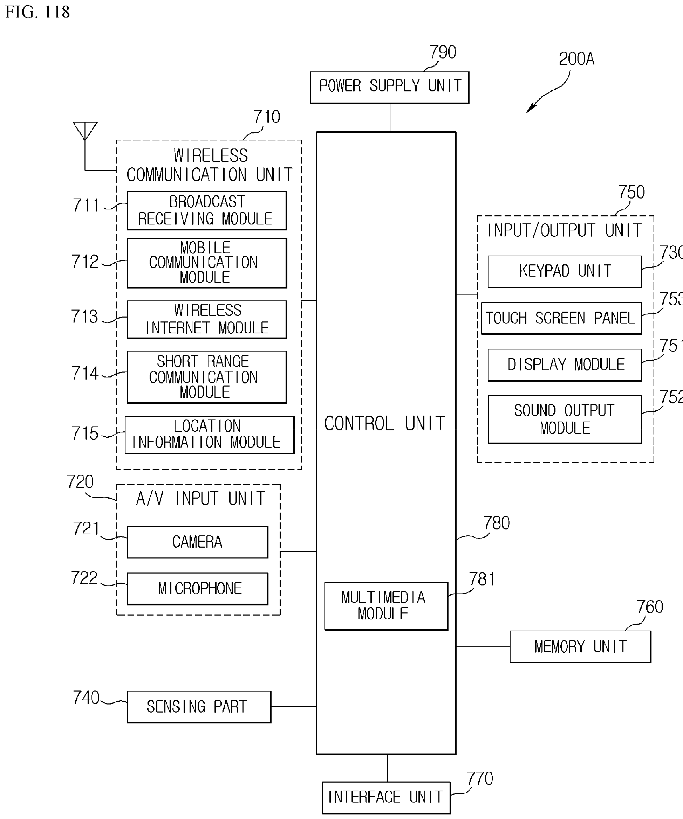

FIG. 117 is a perspective view of an optical apparatus **200A** according to a third embodiment of the present invention; and FIG. 118 illustrates a configuration diagram of the optical apparatus **200A** illustrated in FIG. 117.

Referring to FIGS. 117 and 118, an optical apparatus **200A,** hereinafter referred to as a portable "terminal", may comprise: a body **850;** a wireless communication unit **710;** an A/V input unit **720;** a sensing unit **740;** an input/output unit **750;** a memory unit **760;** an interface unit **770;** a control unit **780;** and a power supply **790.**

The body **850** is in the form of a bar, but is not limited thereto, and may be of various structures such as slide type, folder type, swing type, swivel type, and the like in which two or more sub-bodies are coupled to be relatively movable.

The wireless communication unit **710** may comprise one or more modules enabling wireless communication between the terminal **200A** and a wireless communication system or between the terminal **200A** and a network in which the terminal **200A** is positioned. For example, the wireless communication unit **710** can be configured to comprise a broadcast reception module **711,** a mobile communication module **712,** a wireless Internet module **713,** a short-range communication module **714,** and a location information module **715.**

The A/V input unit **720** is for audio signal or video signal input, and may comprise a camera **721,** a microphone **722,** and the like.

The camera **721** may comprise the camera device **200** according to an embodiment.

The sensing unit **740** may generate a sensing signal for controlling the operation of the terminal **200A** by detecting the current state of the terminal **200A,** such as the open/closed state of the terminal **200A,** the location of the terminal **200A,** whether or not there is a user contact, the direction of the terminal **200A,** and the acceleration/deceleration of the terminal **200A.** For example, when the terminal **200A** is in the form of a slide phone, whether the slide phone is opened or closed may be detected. In addition, it is responsible for sensing functions related to whether or not power is supplied to the power supply unit **790,** and whether or not the interface unit **770** is connected to an external device.

The input/output unit **750** is for generating an input or output related to visual, auditory, or tactile sense. The input/output unit **750** may generate input data for controlling the operation of the terminal **200A** and, in addition, may display information processed by the terminal **200A.**

The input/output unit **750** may comprise a keypad unit **730,** a display module **751,** a sound output module **752,** and a touch screen panel **753.** The keypad unit **730** may generate input data by keypad input.

The display module **751** may comprise a plurality of pixels whose color changes according to an electrical signal. For example, the display module **751** may comprise at least one among a liquid crystal display, a thin film transistor liquid crystal display, an organic light emitting diode, a flexible display, and a 3D display.

The audio output module **752** outputs audio data received from the wireless communication unit **710** in a call signal reception mode, a call mode, a recording mode, a voice recognition mode, or a broadcast reception mode, or may output audio data stored in the memory unit **760.**

The touch screen panel **753** may convert a change in capacitance generated due to a user's touch on a specific area of the touch screen into an electrical input signal.

The memory unit **760** may store programs for processing and controlling the control unit **780,** and may temporarily store an input/output data (For example, phone book, message, audio, still image, photo, video, and the like). For example, the memory unit **760** may store an image photographed by the camera **721,** for example, a photo or video.

The interface unit **770** serves as a passage through which an external device connected to the terminal **200A** is connected. The interface unit **770** receives data from an external device or receives power and transmits it to each component inside the terminal **200A,** or transmits data inside the terminal **200A** to an external device. For example, the interface unit **770** comprises a wired/wireless headset port, an external charger port, a wired/wireless data port, a memory card port, a port connecting a device having an identification module, an audio input/output (I/O) port, a video input/output (I/O) port, an earphone port, and the like.

The control unit **780** may control overall operations of the terminal **200A.** For example, the control unit **780** may perform related control and processing for voice calls, data communications, video calls, and the like.

The control unit **780** may comprise a multimedia module **781** for playing multimedia. The multimedia module **781** may be implemented inside the control unit **780** or may be implemented separately from the control unit **780.**

The control unit **780** may perform pattern recognition processing capable of recognizing a handwriting input or a drawing input performed on the touch screen as a character and an image, respectively.

The power supply unit **790** may receive external power or internal power under the control of the control unit **780** to supply power required for operation of each component.

The camera device **200** is disposed on the body **850** of the portable terminal **200A** so that the incident surface **8A** of the optical member **40** may be disposed parallel to one surface (For example, the rear or front surface) of the body **850.** For example, the second actuator **320,** the first actuator **310,** and the image sensing unit **330** may be arranged from the upper end to the lower end of the body **850** of the portable terminal **200A.** In another embodiment, the camera device may be rotated 90 degrees in the arrangement of FIG. 117. That is, the second actuator **320,** the first actuator **310,** and the image sensing unit **330** may be arranged in a direction from the first side surface of the body **850** of the portable terminal **200A** to the second side surface. Through this arrangement, when the camera device **200** is mounted on the portable device **200A,** space limitations can be reduced and the degree of freedom in the design of the portable device can be enhanced.

Although the first to third embodiments of the present invention have been separately described above, some components of the first to third embodiments may be replaced with each other. That is, some components of the first embodiment may be replaced with corresponding components of one or more of the second and third embodiments. Some components of the second embodiment may be replaced with a corresponding one or more of the first embodiment and the third embodiment. Some components of the third embodiment may be replaced with corresponding components of one or more of the first and second embodiments.

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

## Claims

1. A reflective member driving device comprising:
a housing;
a holder disposed in the housing;
a reflective member disposed on the holder;
a moving plate disposed between the housing and the holder;
a coil and a magnet configured to move the holder with respect to the housing; and
an elastic member connecting the housing and the holder,
wherein the moving plate is disposed on a first portion of the housing, and
wherein the elastic member is disposed at an opposite side of the moving plate based on the first portion of the housing and directly coupled to the holder.

2. The reflective member driving device of claim 1, wherein the housing comprises a first surface facing a first direction,
wherein the holder comprises a protruding portion protruding in the first direction, and
wherein the elastic member is coupled to the first surface of the housing and the protruding portion of the holder.

3. The reflective member driving device of claim 2, wherein the protruding portion of the holder is protruded to an opposite side of the moving plate based on the first portion of the housing.

4. The reflective member driving device of claim 1, wherein the elastic member comprises an outer portion coupled to the housing, an inner portion coupled to the holder, and a connecting portion connecting the outer portion and the inner portion,
wherein an optical axis of a light incident on the reflective member is a first optical axis,
wherein an optical axis of a light emitted from the reflective member is a second optical axis, and
wherein the inner portion is disposed inner than the outer portion at a cross section cut by an imaginary plane comprising the first optical axis and the second optical axis.

5. The reflective member driving device of claim 4, wherein, in the cross section, the inner portion is disposed outer than the moving plate.

6. The reflective member driving device of claim 2, wherein the housing comprises a hole penetrating the housing in the first direction, and
wherein the protruding portion of the holder passes through the hole of the housing.

7. The reflective member driving device of claim 2, wherein the protruding portion of the holder comprises a first protruding portion disposed at one side of the first portion of the housing and a second protruding portion disposed at the other side of the first portion of the housing, and
wherein the elastic member is coupled with each of the first protruding portion and the second protruding portion.

8. The reflective member driving device of claim 7, wherein the first protruding portion of the holder comprises a first surface facing the first direction and a protrusion formed on the first surface of the first protruding portion, and
wherein the elastic member comprises a hole coupled with the protrusion.

9. The reflective member driving device of claim 8, wherein the protrusion of the first protruding portion of the holder comprises a first protrusion and a second protrusion spaced apart from each other, and
wherein the elastic member comprises a first portion coupled with the first protrusion, a second portion coupled with the second protrusion, and a third portion connecting the first portion and the second portion.

10. A reflective member driving device comprising:
a housing;
a holder disposed in the housing;
a reflective member disposed on the holder;
a moving plate disposed between the housing and the holder;
a coil and a magnet configured to move the holder with respect to the housing; and
an elastic member connecting the housing and the holder,
wherein the moving plate is pressed between the holder and the housing by the elastic member.
